(19) Europäisches Patentamt
European Patent Office
Office européen des brevets

(11) EP 2 360 935 A1

(12) # EUROPEAN PATENT APPLICATION
published in accordance with Art. 153(4) EPC

(43) Date of publication:
**24.08.2011 Bulletin 2011/34**

(21) Application number: **09817452.7**

(22) Date of filing: **28.09.2009**

(51) Int Cl.:
***H04N 13/04*** *(2006.01)* ***H04N 5/91*** *(2006.01)*

(86) International application number:
**PCT/JP2009/004950**

(87) International publication number:
**WO 2010/038409 (08.04.2010 Gazette 2010/14)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.09.2008 US 101324**

(71) Applicant: **Panasonic Corporation**
**Kadoma-shi**
**Osaka 571-8501 (JP)**

(72) Inventor: **The designation of the inventor has not yet been filed**

(74) Representative: **Patel, Nikesh et al**
**A.A. Thornton & Co.**
**235 High Holborn**
**London WC1V 7LE (GB)**

(54) **REPRODUCTION DEVICE, RECORDING MEDIUM, AND INTEGRATED CIRCUIT**

(57) Disclosed is a playback device capable of seamlessly playing back 3D and 2D videos. The playback device plays back 3D video streams including a base-view video stream and a dependent-view video stream. When performing stereoscopic playback using the 3D video streams, the playback device outputs picture data pieces obtained by decoding the base-view video stream and the dependent-view video stream to a display device. When performing 2D playback using the 3D video streams, the playback device outputs each of picture data pieces obtained by decoding the base-view video stream to the display device twice in succession. This way, an output frame rate at which the 2D playback is performed matches an output frame rate at which the stereoscopic playback is performed.

FIG.40

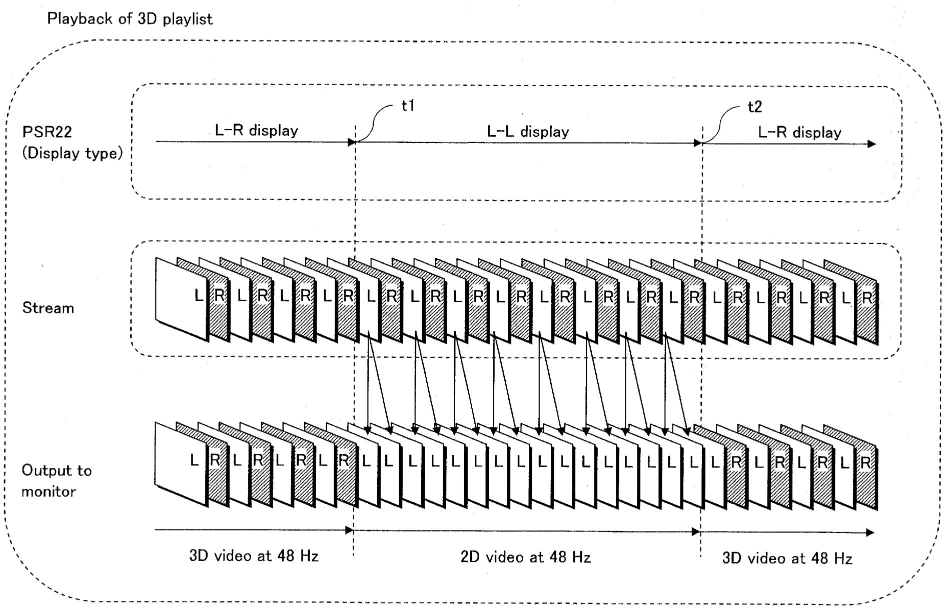


EP 2 360 935 A1

## Description

### [Technical Field]

The present invention belongs to a technical field relating to technology for playing back 2D/3D videos.

### [Background Art]

Recent years have witnessed an increase in the number of movie theaters that offer stereoscopic viewing of 3D videos. Due to this trend, there has been a demand for optical discs having recorded thereon high-quality 3D videos.
An optical disc having recorded thereon 3D video must possess playback compatibility with a playback device that is capable of playing back only optical discs having recorded thereon 2D videos (hereafter, "a 2D playback device"). If a 2D playback device cannot play back 3D video recorded on an optical disc as 2D video, it will be necessary to manufacture two types of discs, namely a 3D disc and a 2D disc, of the same content. This could be a costly process. Accordingly, it is desired that an optical disc having recorded thereon 3D video be played back as 2D video on a 2D playback device, and as 2D or 3D video on a playback device that is capable of playing back both 2D and 3D videos (hereafter, "a 2D/3D playback device").
Prior art for securing playback compatibility between a playback device and an optical disc having recorded thereon 3D video includes the technology disclosed in PLT 1 indicated below.
With a single optical disc that possesses such playback compatibility, a 2D/3D playback device can play back and present both 2D and 3D videos to a viewer (hereafter, the term "viewer" is used interchangeably with the term "user").

### [Citation List]

[Patent Literature]

[Patent Literature 1]
Japanese Patent Publication No. 3935507

### [Summary of Invention]

### [Technical Problem]

A wide band is required to transmit 3D video from one device to another. In view of this, a 2D/3D playback device and a display device are often connected to each other in compliance with the High Definition Multimedia Interface (HDMI) standard that allows data transmission using a wide band. Such devices that are connected to one another in compliance with the HDMI standard exchange data when they have established synchronization with one another. In order to change a frame rate at which a video signal is output, these devices need to re-establish synchronization with one another; that is to say, during their attempt to re-establish such synchronization, a video output is ceased.
During playback of 3D video, a 24 Hz left-view video and a 24 Hz right-view video are output to the display device. An entirety of the 3D video is thereby output at 48 Hz frame rate. On the other hand, during playback of 2D video, only a 24 Hz left-view video is output to a display device. Therefore, when a 2D/3D playback device switches to playback of 2D video during playback of 3D video, the 2D/3D playback device needs to re-establish synchronization with the display device if they are connected to each other using the HDMI connection. This gives rise to the problem that the start of playback of the 2D video is delayed.
In view of the above problem, the present invention aims to provide a playback device and a recording medium that enable seamless playback of 2D/3D videos.

### [Solution to Problem]

In order to achieve the above aim, the present invention provides a playback device for playing back 3D video streams including a base-view video stream and a dependent-view video stream, wherein (i) when performing stereoscopic playback using the 3D video streams, the playback device outputs first picture data pieces and second picture data pieces to a display device, the first picture data pieces and the second picture data pieces being obtained by decoding the base-view video stream and the dependent-view video stream, respectively, and (ii) when performing 2D playback using the 3D video streams, the playback device outputs each of the first picture data pieces to the display device at least twice in succession.

**[Advantageous Effects of Invention]**

When performing 2D playback using the 3D video streams, the playback device of the present invention structured in the above manner outputs, to the display device, each of picture data pieces obtained by decoding the base-view video stream at least twice in succession. This way, the output frame rate at which the 2D playback is performed matches the output frame rate at which stereoscopic

**playback is performed.**

Accordingly, even if playback of the 3D video streams (stereoscopic playback) is switched to the 2D playback, there is no need for the playback device and the display device to re-establish synchronization with each other as required by the HDMI standard. This enables the playback device to perform seamless playback.

**[Brief Description of Drawings]**

FIG. 1A shows usage of a recording medium and a playback device, and FIGs. 1B and 1C show 3D glasses 400;
FIG. 2 illustrates a user's face on the left side, and videos showing objects, namely skeletons of a dinosaur, on the right side;
FIG. 3 exemplarily shows inner structures of left- and right-view video streams for realizing stereoscopic viewing;
FIG. 4 shows an inner structure of a multilayer optical disc;
FIG. 5 shows an application format of an optical disc configured using a file system;
FIG. 6 is a flowchart of processing procedures of a recording method;
FIGs. 7A and 7B illustrate the structure of a video stream;
FIG. 8 shows the structure of decode switch information;
FIGs. 9A and 9B illustrate decode counters;
FIGs. 10A and 10B show how a video stream is stored in a PES packet sequence and converted into TS packets and source packets;
FIG. 11 schematically shows how a plurality of streams are multiplexed to form an AV stream;
FIG. 12 shows internal structures of extents that are obtained by executing a recording method;
FIG. 13 shows a relationship between the extents and an AV stream file;
FIG. 14 shows an internal structure of a clip information file;
FIG. 15 shows a stream attribute information set included in the clip information file;
FIGs. 16A and 16B each show an entry map table included in the clip information file;
FIG. 17 shows how entry points are registered in an entry map;
FIGs. 18A and 18B each show relationships between entry maps and GOPs;
FIG. 19 illustrates the structure of 3D metadata;
FIG. 20 shows playlists in none of which 2D playitems and 3D playitems coexist;
FIG. 21 shows the 3D playlist shown in FIG. 20, which additionally includes another subpath;
FIGs. 22A and 22B each show a case where 2D and 3D videos coexist in one content;
FIG. 23 illustrates the structure that enables seamless connection between 2D and 3D videos that coexist in one content;
FIG. 24 shows the structure of a playlist that enables seamless connection between 2D playitems and 3D playitems;
FIG. 25 shows a data structure of playlist information;
FIG. 26 shows an internal structure of a SubPath information table;
FIG. 27 shows playback sections defined by left and right views;
FIG. 28A shows a stream selection table, and FIG. 28B shows structural elements that are common to stream entries;
FIG. 29 shows the 3D playlist shown in FIG. 20, into which left-view/right-view identification information has been additionally written;
FIG. 30 shows two pieces of playlist information which differently define left-, right- and central-images;
FIG. 31 shows the structure of a 2D/3D playback device;
FIG. 32 shows the internal structures of a system target decoder 4 and a plane memory set 5a;
FIG. 33 shows an internal structure of a plane composition unit;
FIG. 34 shows how the PG plane is composited;
FIG. 35 schematically shows how a plane is displayed to the user after being cropped and superimposed with use of the offset values;
FIG. 36 shows the internal structures of a register set 10 and a playback control engine 7b;
FIG. 37 is a flowchart according to which a display type value is set to a PSR 22;
FIG. 38 shows a data structure for switching between playback of a 2D playlist and playback of a 3D playlist;
FIG. 39 shows a flowchart according to which the operation of switching between playback of a 2D playlist and playback of a 3D playlist is performed;
FIG. 40 illustrates a method of seamlessly switching between an L-R display type for 3D video and an L-L display type;
FIG. 41 is a flowchart of switch control performed by a switch 62 in the plane composition unit;
FIG. 42 shows the structure of a primary video decoder 31 that allows seamlessly switching between 3D video playback and 2D video playback;
FIG. 43 is the second drawing illustrating roles of playback statuses that allow seamlessly switching between 3D video playback and 2D video playback;
FIG. 44 illustrates playback status applied to playback sections in which 2D video is played back;
FIG. 45 shows a modified entry map;
FIG. 46 schematically shows relationships between entry points and AV streams pertaining to Modification 2;
FIG. 47 shows the structure of a primary video decoder in a playback device of Second Embodiment;
FIG. 48 illustrates a method of, when a picture of right-eye video is damaged, playing back a corresponding picture of 2D/left-eye video in replacement of the damaged picture;
FIG. 49 illustrates a method of, when a picture of right-eye video is damaged, playing back a picture of right-eye video that immediately precedes the damaged picture;
FIG. 50 illustrates a method of, when a picture of right-eye video is damaged, playing back a picture of right-eye video that immediately precedes the damaged picture, paired with a picture of left-eye video that immediately precedes a damaged picture counterpart;
FIG. 51 illustrates a method of, when a picture of right-eye video is damaged, supplementing the damaged picture with a black picture or the like;
FIG. 52 illustrates a method of, when a picture of right-eye video is damaged, supplementing the damaged picture and a damaged picture counterpart of 2D-left-eye video with black pictures or the like;
FIG. 53 illustrates a method of, when a picture of right-eye video is damaged, supplementing the damaged picture with a picture generated from a damaged picture counterpart of left-eye video and a picture of the right-eye video that immediately precedes the damaged picture;
FIG. 54 illustrates pause processing performed during 2D video playback;
FIGs. 55A and 55B each illustrate pause processing performed during 3D video playback;
FIG. 56 illustrates the plane composition unit that enables pause processing during 3D video playback;
FIG. 57 illustrates GOP structures of still images;
FIGs. 58A and 58B each illustrate special playback of 3D video;
FIGs. 59A and 59B each illustrate the structure for simplifying special playback of 3D video;
FIG. 60 shows an internal structure of the playback device; and
FIG. 61 illustrates how depth information, which is utilized by a video encoder, is created.

## [Description of Embodiments]

## [First Embodiment]

The following describes embodiments of a playback device comprising means for solving the aforementioned problem, with reference to the accompanying drawings. First, the principle of stereoscopic viewing is briefly discussed below.

In general, the right eye has a slightly different view of an object than the left eye, due to the difference in the locations of the right and left eyes. This binocular disparity enables a human to recognize an object seen by his/her eyes as a 3D object. Stereoscopic display can be realized by taking advantage of the binocular disparity of a human, i.e., by causing the viewer to visually recognize 2D images as if they are stereoscopic images.

More specifically, by alternately displaying, in a short time span, a 2D right-eye image and a 2D left-eye image which offer different visual perceptions to the right and left eyes of the viewer in a similar manner as the binocular disparity does, the viewer sees these images as if they are displayed in 3D.

This short time span should be a time period during which such alternate display of the 2D right-eye image and the 2D left-eye image can give a human the illusion of stereoscopic display. There are two methods to realize stereoscopic viewing. The first method utilizes a holography technique. The second method utilizes images that create binocular disparity effects (hereafter, "parallax images"), and is referred to as the "parallax image method".

The first method, which utilizes the holography technique, is characterized in that it can create stereoscopic images of an object in such a manner that the viewer visually recognizes the three-dimensionality of the created stereoscopic images in the same way as he/she would visually recognize the three-dimensionality of the actual object. However, although a technical theory has already been established in the field of holography, it is extremely difficult to create and play back holograms of video using the current technology, because doing so requires use of (i) a computer that can perform an enormous amount of operations to create holograms of the video in real time, and (ii) a display device whose resolution is high enough to be able to draw thousands of linear materials in a distance of 1 mm. For this reason, there are almost no practical examples of holography that are commercially used.

The second method, namely the parallax image method, is beneficial in that stereoscopic viewing can be realized only by preparing right-eye video and left-eye video that give different perspectives to the right and left eyes. Technically speaking, the issue of the second method is how each of the right-eye and left-eye images can be presented only to the corresponding eye. In view of this, the second technique has already been implemented in various technical formats, one of which is an alternate-frame sequencing scheme.

With the alternate-frame sequencing scheme, left-eye video and right-eye video are displayed alternately in the time axis direction. Due to the afterimage effect, each left scene is overlapped with the corresponding right scene in the viewer's brain. As a result, the viewer visually recognizes an entirety of the left and right scenes as stereoscopic video.

FIG. 1A shows usage of a recording medium and a playback device. As shown in FIG. 1A, a home theater system is composed of a BD-ROM 100, which is one example of a recording medium, a playback device 200, a television 300, 3D glasses 400, and a remote control 500. They are all provided to a user for use.

The BD-ROM 100 provides the above home theater system with, for example, movies.

The playback device 200, which is connected to the television 300, is a 2D/3D playback device that plays back the BD-ROM 100.

The playback device 200 is connected to the television 300 in compliance with the HDMI standard.

The television 300 provides the user with an interactive operating environment by displaying a movie being played back, a menu, and the like. The display device 300 of the present embodiment realizes stereoscopic viewing by the user wearing the 3D glasses 400. However, if the display device 300 utilizes a lenticular lens, then the display device 300 can realize stereoscopic viewing without the user wearing the 3D glasses 400. The display device 300 utilizing the lenticular lens simultaneously arranges a left-eye picture and a right-eye picture next to each other on the screen. A lenticular lens having a semicircular shape is attached to the surface of the screen of the display device 300 is. Via this lenticular lens, the left eye converges only to pixels constituting the left-eye picture, and the right eye converges only to pixels constituting the right-eye picture. Stereoscopic viewing can be realized by the left and right eyes thus seeing two parallax pictures.

The 3D glasses 400 are composed of liquid crystal shutter glasses and allow the user to view parallax images using an alternate-frame sequencing scheme or a polarizing glass scheme. A pair of parallax images includes (i) an image to be presented to the right eye and (ii) an image to be presented to the left eye. Stereoscopic viewing is realized when the right and left eyes of the user only see the right-eye and left-eye pictures, respectively. FIG. 1B shows the state of the 3D glasses 400 during display of a left-eye image. At the moment of displaying a left-eye image on the screen, the 3D glasses 400 make the liquid crystal shutter glass over the left eye transparent, while darkening the liquid crystal shutter glass over the right eye. FIG. 1C shows the state of the 3D glasses 400 during display of a right-eye image. At the moment of displaying a right-eye image on the screen, the 3D glasses 400 perform the reverse operation, i.e., make the liquid crystal shutter glass over the right eye transparent, while darkening the liquid crystal shutter glass over the left eye.

The remote control 500 is a device that receives operations relating to a multilayer GUI from the user. To receive such user operations, the remote control 500 is composed of: (i) a menu button for calling a menu constituting the GUI; (ii) arrow buttons for moving a focus for selecting one of GUI components constituting the menu; (iii) a select button that confirms selection of one of the GUI components constituting the menu; (iv) a return button for returning to the upper layer of the multilayer menu; and (v) number buttons.

This concludes the description of usage of the recording medium and the playback device.

In the present embodiment, a method of recording parallax images used for stereoscopic viewing on an information recording medium is described.

With the parallax image method, video to be presented to the right eye and video to be presented to the left eye are separately prepared. Here, stereoscopic viewing can be realized by making the right-eye and left-eye pictures visible only to the right and left eyes, respectively. The left side of FIG. 2 shows the user's face, and the right side of FIG. 2 shows objects, namely the skeletons of a dinosaur, which are respectively seen by the left and right eyes. By alternating the operations of making the liquid crystal shutter glass darkened and transparent over each eye, each left-eye image is overlapped with the corresponding right-eye images in the viewer's brain due to the afterimage effect. As a result, the user visually recognizes existence of 3D video at a point where the lines of sight of the two eyes meet.

Of parallax images, images to be presented to the left eye are referred to as left-eye images (L images), and images to be presented to the right eye are referred to as right-eye images (R images). Video comprising left-eye pictures (L images) is referred to as a left-view video, and video comprising right-eye pictures (R images) is referred to as a right-view video. Video streams obtained by digitalizing and compression encoding the left- and right-view videos are referred to as a left-view video stream and a right-view video stream, respectively.

FIG. 3 exemplarily shows internal structures of the left- and right-view video streams for realizing stereoscopic viewing.

The second row of FIG. 3 shows an internal structure of the left-view video stream, which includes a plurality of picture data pieces, such as 11, P2, Br3, Br4, P5, Br6, Br7, and P9. These picture data pieces are decoded in accordance with Decode Time Stamps (DTSs). The first row of FIG. 3 shows left-eye images. These left-eye images are played back by playing back the decoded picture data pieces 11, P2, Br3, Br4, P5, Br6, Br7, and P9 in accordance with PTSs, i.e., in the following order: 11, Br3, Br4, P2, Br6, Br7, and P5. Of the pictures shown in FIG. 3, a picture on which intra-picture predictive encoding is performed (i.e., a picture that can be independently encoded without using a reference picture) is called an I-picture. Note, encoding is performed on a per-picture basis, and a picture encompasses both a frame and a field. A picture on which inter-picture predictive encoding is performed by referring to another picture that has already been processed is called a P-picture. A picture on which inter-picture predictive encoding is performed by simultaneously referring to two other pictures that have already been processed is called a B-picture. A B-picture that is referred to by another picture is called a Br-picture. Here, a frame of a frame structure, or a field of a field structure, is referred to as a video access unit.

The fourth row of FIG. 3 shows an internal structure of the left-view video stream, which includes a plurality of picture data pieces, such as P1, P2, B3, B4, P5, B6, B7, and P8. These picture data pieces are decoded in accordance with DTSs. The third row of FIG. 3 shows right-eye images. These right-eye images are played back by playing back the decoded picture data pieces P1, P2, B3, B4, P5, B6, B7, and P8 in accordance with PTSs, i.e., in the following order: P1, B3, B4, P2, B6, B7, and P5. Note, in a case where the stereoscopic playback is performed using the alternate-frame sequencing scheme, a pair of left-eye and right-eye images that are assigned the same PTS is displayed such that the display of one of them is delayed by a time period that is equivalent to half of an interval between PTSs (hereafter, this time period is referred to as a "3D display delay").

The fifth row of FIG. 3 shows how the state of the 3D glasses 400 changes. As shown in this fifth row, the shutter glass over the right eye is darkened during display of a left-eye image, and the shutter glass over the left eye is darkened during display of a right-eye image.

The above left- and right-view video streams are compressed by using inter-picture predictive encoding which utilizes correlated characteristics of different visual perspectives, in addition to inter-picture predictive encoding which utilizes correlated characteristics of pictures in the time direction. Each picture of the right-view video stream is compressed by referring to a corresponding one of pictures of the left-view video stream which is assigned the same display time.

For example, the first P-picture of the right-view video stream refers to an I-picture of the left-view video stream. A B-picture of the right-view video stream refers to a Br-picture of the left-view video stream. The second P-picture of the right-view video stream refers to a P-picture of the left-view video stream.

Methods of compressing video by utilizing such correlated characteristics of different visual perspectives include Multiview Video Coding (MVC), which is an amendment to the H.264/MPEG-4 AVC standard. In July 2008, the Joint Video Team (JVT), which is a cooperative project between the ISO/IEC MPEG and the ITU-T VCEG, completed formulation of the amendment to the H.264/MPEG-4 AVC standard called Multiview Video Coding (MVC). The MVC is the standard intended to collectively encode images that show different visual perspectives. As the MVC enables predictive encoding by utilizing not only similarities between images in the time direction but also similarities between different visual perspectives, the MVC can improve compression efficiency as compared to when images that show different visual perspectives are each compressed individually.

Of the left- and right-view video streams that have been compression encoded using the MVC, a video stream that can be independently decoded is referred to as a "base-view video stream". On the other hand, of the left- and right-view video streams, a video stream that (i) has been compression encoded based on its inter-frame correlated characteristics with respect to picture data pieces constituting the base-view stream, and (ii) can be decoded after the base-view stream has been decoded, is referred to as a "dependent-view stream".

Described below is creation of a recording medium, i.e., manufacturing of the recording medium.

FIG. 4 shows an internal structure of a multilayer optical disc.

The first row of FIG. 4 shows a BD-ROM, which is a multilayer optical disc. The second row of FIG. 4 shows, in a laterally drawn-out form, spiraling tracks of the recording layers. The spiraling tracks of the recording layers are considered to be one continuous volume area. The volume area is composed of (i) a lead-in on the inside of the BD-ROM, (ii) a lead-out on the outside of the BD-ROM, and (iii) recording areas of first, second and third recording layers provided between the lead-in and the lead-out. These recording areas of the first, second and third recording layers constitute one continuous local address space.

The volume area is divided into a plurality of access units to which a series of consecutive numbers are assigned beginning from the first access unit. An optical disc can be accessed via each access unit. These consecutive numbers are called logical addresses. Data can be read out from the optical disc by designating the logical addresses. Basically, in the case of a read-only disc such as the BD-ROM 100, sectors having consecutive logical addresses are physically arranged on the optical disc consecutively. That is, data of such sectors having consecutive logical addresses can be read out without the seek processing. However, at a boundary between recording layers, data of such sectors cannot be read out consecutively even if their logical addresses are consecutive.

File system management information is recorded in the volume area immediately after the lead-in area. The file system management information is followed by a partition area to be managed by the file system management information. The file system is a system that expresses data on the disc in units called directories and files. In the case of the BD-ROM 100, the file system is recorded in a Universal Disc Format (UDF). A file system called FAT or NTFS is used in an ordinary personal computer (PC) to express data recorded in the hard disk using a directory/file structure, thus improving usability. The file system used on the BD-ROM 100 makes it possible to read logical data recorded on the BD-ROM 100 in the same manner as an ordinary PC, using a directory/file structure.

Of accessible files in the file system, a file storing AV streams obtained by multiplexing video streams and audio streams are called "AV stream files", and a file storing general data other than the AV streams is called "a non-AV file".

Elementary streams, representative examples of which include video and audio streams, are first converted into Packetized Elementary Streams (PESs) to which PES headers are assigned, and then converted into TS packets. Thereafter, the elementary streams are multiplexed. A file multiplexed in units of these TS packets is called a "transport stream file".

Meanwhile, a file generated by (i) converting PES streams (results of converting elementary streams) into pack sequences and (ii) multiplexing the pack sequences is called a "program stream file". This program stream file is different from the transport stream file.

An AV stream file recorded on a BD-ROM, a BD-RE and a BD-R is the former file, namely the transport stream file. An AV stream file recorded on a DVD-Video, a DVD-RW, a DVD-R and a DVD-RAM is the latter file, namely the program stream file, and is also called a Video Object.

The fourth row of FIG. 4 shows contents stored in a partition area managed using the file system. The partition area stores (i) extents constituting an AV stream file and (ii) extents constituting a non-AV file, which is a file other than the AV stream file.

Extents are formed on a plurality of sectors that are physically continuous in the partition area. The partition area is an area accessed by the file system and includes an "area in which file set descriptor is recorded", an "area in which end descriptor is recorded", a "ROOT directory area", a "BDMV directory area", a "JAR directory area", a "BDJO directory area", a "PLAYLIST directory area", a "CLIPINF directory area", and a "STREAM directory area". The following explains these areas.

The "file set descriptor" includes a logical block number (LBN) that indicates a sector in which the file entry of the ROOT directory is recorded, among directory areas. The "end descriptor" indicates an end of the file set descriptor.

Next is a detailed description of the directory areas. The above-described directory areas have an internal structure in common. That is to say, each of the "directory areas" is composed of a "file entry", "directory file", and "file recording area of lower file".

The "file entry" includes a "descriptor tag", an "ICB tag", and an "allocation descriptor".

The "descriptor tag" is a tag that indicates the entity having the descriptor tag is a file entry.

The "ICB tag" indicates attribute information concerning the file entry itself.

The "allocation descriptor" includes a logical block number (LBN) that indicates a recording position of the directory file. This concludes the description of the file entry. Next is a detailed description of the directory file.

The "directory file" includes a "file identification descriptor of lower directory" and "file identification descriptor of lower file".

The "file identification descriptor of lower directory" is information that is referenced to access a lower directory that belongs to the directory file itself, and is composed of identification information of the lower directory, the length of the directory name of the lower directory, a file entry address that indicates the logical block number of the block in which the file entry of the lower directory is recorded, and the directory name of the lower directory.

The "file identification descriptor of lower file" is information that is referenced to access a file that belongs to the directory file itself, and is composed of identification information of the lower file, the length of the lower file name, a file entry address that indicates the logical block number of the block in which the file entry of the lower file is recorded, and the file name of the lower file.

The file identification descriptors of the directory files of the directories indicate the logical blocks in which the file entries of the lower directory and the lower file are recorded. By tracing the file identification descriptors, it is therefore possible to reach from the file entry of the ROOT directory to the file entry of the BDMV directory, and reach from the file entry of the BDMV directory to the file entry of the PLAYLIST directory. Similarly, it is possible to reach the file entries of the JAR directory, BDJO directory, CLIPINF directory, and STREAM directory.

The "file recording area of lower file" is an area in which the substance of the lower file that belongs to a directory is recorded. A "file entry" of the lower file and one or more "extents" are recorded in the "file recording area of lower file".

The "file entry" includes a "descriptor tag", an "ICB tag", and an "allocation descriptor".

The "descriptor tag" is a tag that indicates the entity having the descriptor tag is a file entry. The tag is classified into a file entry descriptor, a space bit map descriptor, and the like. In the case of the file entry, "261" indicating the file entry is described in the descriptor tag.

The "ICB tag" indicates attribute information concerning the file entry itself.

The "allocation descriptor" includes a logical block number (LBN) that indicates a recording position of an extent that constitutes a lower file belonging to a directory. The allocation descriptor includes data indicating an extent length, and a logical block number that indicates a recording position of an extent. Here, when the higher two bits of the data indicating the extent length are set to "0", it is indicated that the extent is an assigned and recorded extent; and when the higher two bits are set to "1", it is indicated that the extent is an assigned and unrecorded extent. When they are set to "0", it is indicated that the extent is an extent that continues from the allocation descriptor. When a lower file belonging to a directory is sectioned into a plurality of extents, the file entry has a plurality of allocation descriptors for each extent.

By referring to the allocation descriptors of the above-described file entries, it is possible to recognize addresses of extents constituting an AV stream file and a non-AV file.

For example, the AV stream file is a file recording area that exists in the directory area of the directory to which the file belongs. It is possible to access the AV stream file by tracing the file identification descriptors of the directory files, and the allocation descriptors of the file entries.

FIG. 5 shows an application format of an optical disc configured using the file system.

A BDMV directory has recorded therein data such as AV contents and management information to be recorded on the BD-ROM. Below the BDMV directory exist the following five sub-directories: a "PLAYLIST directory"; a "CLIPINF directory"; a "STREAM directory"; a "BDJO directory"; and a "JAR directory. The BDMV directory includes two types of files, "index.bdmv" and "MovieObj ect.bdmv".

The "index.bdmv" (fixed file name) stores an index table that shows (i) title numbers of a plurality of titles that can be played back from the BD-ROM, and (ii) program files (BD-J objects or movie objects) each defining a corresponding one of the titles. The index table is management information relating to an entirety of the BD-ROM. Once the disc has been loaded in the playback device, the playback device first reads the index.bdmv to uniquely acknowledge the disc. The index table is the highest level table defining the title structures including all titles, a top menu, and FirstPlay that are to be recorded on the BD-ROM. The index table designates the program file to be executed first from among general titles, a top menu title, and a FirstPlay title. Each time a title or a menu is called, the playback device in which BD-ROM has been loaded refers to the index table, to execute a predetermined program file. Here, the FirstPlay title is set by a content provider, and indicates a program file to be executed automatically when the disc is loaded in the playback device. The top menu title designates a movie object or a BD-J object to be called when a command indicating "Return to Menu" or the like is executed according to a user operation received via the remote control. The index.bdmv contains Initial_output_mode information as information relating to stereoscopic viewing. This Initial_output_mode information defines the initial state in which an output mode of the playback device should be in when the index.bdmv is loaded. The Initial_output_mode information can be configured to define an output mode desired by the manufacturer of the BD-ROM.

The "MovieObject.bdmv" (fixed file name) stores one or more movie objects. A movie object is a program file defining control procedures that the playback device should follow during an operation mode (HDMV mode) controlled by a command interpreter. The movie object includes a mask flag indicating, when the user has executed one or more commands and menu/title calls with respect to the GUI, whether these calls should be masked.

The "BDJO" directory includes a program file with the extension bdjo ("xxxxx.bdjo" where "xxxxx" is variable and the extension "bdjo" is fixed). This program file stores a BD-J object defining control procedures that the playback device should follow during an operation mode (BD-J mode) controlled by a Java® virtual machine, which is a byte code interpreter. The BD-J object contains an "application management table" for causing the playback device to perform application signaling whose life cycle falls into each title. The application management table contains (i) "application identifiers" that each identify an application to be executed when the title of the corresponding BD-J object becomes a current title, and (ii) "control codes". Especially, an application whose life cycle is defined by the application management table is called a "BD-J application". When a control code is set to AutoRun, it means that the corresponding application should be executed automatically after having been loaded onto a heap memory. When a control code is set to Present, it means that the corresponding application should be executed once it has been called by another application after having been loaded in the heap memory. Meanwhile, some of the BD-J applications do not cease their operations even if the corresponding titles have been completed. Such BD-J applications are called "title unboundary applications".

An actual Java® application is the Java@ archive file (YYYYY.jar) stored in the JAR directory below the BDMV directory.

An application is, for example, a Java® application containing one or more xlet programs that have been loaded onto a heap area (also called a work memory) of the virtual machine. An application is composed of such one or more xlet programs and data loaded onto the work memory.

The "PLALIST directory" contains a playlist information file with the extension mpls ("xxxxx.mpls" where "xxxxx" is variable and the extension "mpls" is fixed).

A "playlist" defines playback sections along the time axis of an AV stream, and represents a playback path defined by logically specifying the playback order of these playback sections. The "playlist" defines (i) which AV stream (s) should be played back, (ii) which part of the AV stream(s) should be played back, and (iii) in what order the scenes of the AV stream(s) should be played back. The playlist information file stores playlist information defining such a playlist. AV playback can be started by the Java® application, which is used for playback control, instructing the Java® virtual machine to generate a Java® Media Framework (JMF) player instance that plays back the playlist information. The JMF player instance is the actual data to be generated into the heap memory of the virtual machine based on a JMF player class.

The "CLIPINF" directory contains a clip information file with the extension clpi ("xxxxx.clpi" where "xxxxx" is variable and the extension "clpi" is fixed).

The "STREAM" directory stores an AV stream file that is in compliance with the format xxxxx.m2ts ("xxxxx" is variable and the extension "m2ts" is fixed).

An AV stream file in the STREAM directory is a digital stream in the MPEG-2 transport stream (TS) format, and is generated by multiplexing a plurality of elementary streams, such as a video stream, an audio stream, and a graphics stream.

The AV stream file contains a "left-view AV stream", which is a group of packets storing various types of PES streams for left-view playback, such as packets storing a left-view video stream, packets storing a graphics stream for the left view, and packets storing an audio stream to be played back together with these streams. When the left-view AV stream includes a base-view video stream and enables 2D playback, this left-view AV stream is referred to as a "2D/ left-view video stream". In the following description, the left-view video stream is the base-view video stream, and the left-view AV stream including the left-view video stream is the 2D/left-view AV stream, unless stated otherwise.

The AV stream file also contains a "right-view AV stream", which is a group of packets storing various types of PES streams for right-view playback, such as source packets storing a right-view video stream, source packets storing a graphics stream for the right view, and source packets storing an audio stream to be played back together with these streams.

Clip information files in the CLIPINF directory are pieces of information that show, in one to one correspondence with AV stream files, details of the AV stream files indicating, for example, types of packets constituting the AV stream files. Each clip information file is read out by memory prior to playback of the corresponding AV stream file, and is referenced within the playback device while the corresponding AV stream file is being played back.

This concludes the description of the internal structure of the recording medium. The following describes a method of creating the recording medium shown in FIGs. 4 and 5, i.e., configuration of the recording medium shown in FIGs. 4 and 5.

The recording method of the present embodiment encompasses not only real-time recording (i.e., creating the aforementioned AV stream file and non-AV file in real time, and directly writing the created files into the volume area), but also pre-format recording (i.e., muss-producing optical discs by preparing the entire bitstreams to be recorded into the volume area, creating the master based on the prepared bitstreams, and performing press processing on the master). The recording medium of the present embodiment can also be identified by the recording method utilizing the real-time recording and the recording method utilizing the pre-format recording.

FIG. 6 is a flowchart of processing procedures of a recording method.

Step S301 is a process of determining the title structure of the BD-ROM, and thus generating title structure information. Using a tree structure, the title structure information defines a relationship between units of playback on the BD-ROM, e.g., a relationship between a title, a movie object, a BD-J object and a playlist. More specifically, the title structure information is generated as follows. First, the following nodes are defined: (i) a node corresponding to the "disc name" of the BD-ROM to be created; (ii) a node corresponding to the "title" that can be played back from Index.bdmv of the BD-ROM; (iii) a node corresponding to the "movie object" or "BD-J object" constituting the title; and (iv) a node corresponding to the "playlist" that is played back from the movie object or BD-J object. Then, by connecting these nodes by branches, the relationship between the title, the movie object, the BD-J object and the playlist is defined.

Step S302 is a process of importing a video, audio, still images and subtitle information to be used for the title.

Step S303 is a process of creating BD-ROM scenario data by performing, on the title structure information, editing processing according to the user operation received via GUI. The BD-ROM scenario data is information for causing the playback device to play back an AV stream on a per-title basis. In the case of the BD-ROM, a scenario is information defined as the index table, the movie object, or the playlist. The BD-ROM scenario data includes material information constituting the stream, information showing playback sections and a playback path, menu screen arrangement, and information showing transition from the menu.

Step S304 is encode processing. A PES stream is acquired by performing the encode processing based on the BD-ROM scenario data.

Step S305 is multiplex processing that is performed in accordance with the BD-ROM scenario data. An AV stream is acquired by multiplexing the PES stream in Step S305.

Step S306 is a process of acquiring a database that is used for recording data on the BD-ROM. Here, the database is a general term referring to the above-described index table, movie object, playlist, BD-J object, etc. that are defined on the BD-ROM.

In Step S307, a Java® program, the AV stream acquired by the multiplex processing, and the BD-ROM database are input. Then, an AV stream file and a non-AV file are created in a file system format compliant with the BD-ROM.

Steps S308 is a process of writing, from among data to be recorded on the BD-ROM, a non-AV file onto the BD-ROM. S309 is a process of writing, from among data to be recorded on the BD-ROM, an AV stream file onto the BD-ROM.

The multiplex processing of Step S305 includes (i) a first conversion process of converting a video stream, an audio stream and a graphics stream into a PES stream, then converting the PES stream into a transport stream, and (ii) a second conversion process of converting each TS packet constituting the transport stream into a source packet. The multiplex processing of Step S305 thus multiplexes a source packet sequence constituting a video, audio and graphics.

In Step S309, namely the process of writing the AV stream file, the source packet sequence is written into consecutive areas of the recording medium as AV stream file extents.

The following streams are written onto the recording medium.

(I) Video Stream

A video stream includes primary and secondary videos of a movie. Here, the primary video represents ordinary video to be displayed on the full screen as parent images during the Picture in Picture display. The secondary video represents video to be displayed in a small inset window during the Picture in Picture display. There are two types of primary video: a left-view video and a right-view video. Similarly, there are two types of secondary video: a left-view video and a right-view video.

The video stream is encoded and recorded by using, for example, MVC (described above), MPEG-2, MPEG-4 AVC and SMPTE VC-1.

(II) Audio Stream

An audio stream is the primary audio of a movie. The audio stream is compression encoded and recorded by using, for example, Dolby AC-3, Dolby Digital Plus, MLP, DTS, DTS-HD, and a linear PCM. There are two types of audio streams: a primary audio stream and a secondary audio stream. The primary audio stream is output as the primary audio when playback is performed together with audio mixing. The secondary audio stream is output as the secondary audio when playback is performed together with audio mixing.

(III) Presentation Graphics Stream

A Presentation Graphics (PG) stream presents graphics (e.g., movie subtitles and animated characters) to be displayed in close synchronization with pictures. Individual PG streams are provided in one to one correspondence with a plurality of different languages, such as English, Japanese, and French.

A PG stream is composed of a sequence of functional segments, namely a Presentation Control Segment (PCS), a Pallet Definition Segment (PDS), a Window Definition Segment (WDS) and an Object Definition Segment (ODS). The ODS is a functional segment that defines subtitles from among graphics objects.

The WDS is a functional segment that defines the bit size of graphics objects on the screen. The PDS is a functional segment that defines colors to be presented when drawing graphics objects. The PCS is a functional segment that defines page control during display of subtitles. Examples of such page control include Cut-In/Out, Fade-In/Out, Color Change, Scroll, and Wipe-In/Out. Page control defined by the PCS enables various display effects, one example of which is to display a new subtitle while gradually deleting a previous subtitle.

To playback the graphics stream, a graphics decoder executes the following processing in a pipeline: (i) decoding an ODS that belongs to a certain unit of display, and writing its graphics objects into an object buffer, and (ii) writing, in plane memory, graphics objects acquired by decoding an ODS that belongs to a preceding unit of display. The above-mentioned close synchronization can be established by making hardware operate to the fullest extent to execute these processing.

Other than the PG stream, a text subtitle (textST) stream is also one of the streams that present subtitles. The textST stream is not multiplexed on the AV stream file. The textST stream expresses contents of the subtitles in character codes. According to the BD-ROM standard, a pair of the PG stream and the textST stream is referred to as a "PGTextST stream".

(IV) Interactive Graphics Stream

An Interactive Graphics (IG) stream is a graphics stream that realizes interactive control via a remote control. The interactive control defined by the IG stream is compatible with interactive control performed on the DVD playback device. The IG stream is composed of a plurality of functional segments, namely an Interactive Composition Segment (ICS), a Palette Definition Segment (PDS), and an Object Definition Segment (ODS). The ODS is a functional segment that defines graphics objects. Buttons on the interactive screen are drawn by aggregation of such graphics objects. The PDS is a functional segment that defines colors to be presented when drawing graphics objects. The ICS is a functional segment for causing a state change, or more specifically, for changing a state of each button in accordance with a user operation. The ICS includes button commands, each of which is to be executed when selection of the corresponding button is confirmed. The interactive graphics stream represents the interactive screen that is formed by arranging GUI components on the screen.

A video stream is composed of a plurality of Groups of Pictures (GOPs). Editing of and random access to video are made possible by performing encode processing on a per-GOP basis.

FIG. 7A shows relationships between pictures, or more specifically, how pictures are stored in GOPs. The first row of FIG. 7A shows relationships between a picture sequence of a left-view video stream and GOPs. The second row of FIG. 7A shows relationships between a picture sequence of a right-view video stream and GOPs. In FIG. 7A, a picture of the left-view video stream and a picture of the right-view video stream that are assigned the same display time are vertically aligned with each other. In the left- and right-view video streams, each GOP starts with an I-picture. During playback of stereoscopic video, the first picture of each GOP in the right-view video stream is displayed paired with the first I-picture of the corresponding GOP in the left-view video stream. The first picture of each GOP in the right-view stream is assigned the same display time as the first I-picture of the corresponding GOP in the left-view video stream.

FIG. 7B shows the structure of a GOP. A GOP is composed of one or more video access units. A video access unit is a unit of storing encoded data of a picture. In the case of the frame structure, the video access unit stores data of one frame. In the case of the field structure, the video access unit stores data of one field.

The first video access unit of a GOP is composed of a sequence header, a picture header, supplementary data, and compressed picture data, and stores data of an I-picture. A sequence header stores information that is commonly shared within the GOP, such as resolution, a frame rate, an aspect ratio, and a bit rate. A frame rate, resolution, and an aspect ratio stored in a sequence header of each GOP in the right-view video stream are respectively the same as a frame rate, resolution and an aspect ratio stored in a sequence header of the corresponding GOP in the left-view video stream. The picture header stores information indicating a method of encoding an entirety of the picture and the like. The supplementary data represents additional information that is not essential in decoding the compressed picture data. Examples of such additional information include character information on closed captions to be displayed on the TV screen in synchronization with video, and time code information. The compressed picture data is picture data that has been compression encoded. Video access units other than the first video access unit of a GOP are each composed of a picture header, supplementary data, and compressed picture data.

Contents of the sequence header, picture header, supplementary data, and compressed picture data are configured in different manners depending on the method with which video is encoded. For example, when the video is encoded using MPEG-4 AVC, the sequence header, picture header and supplementary data correspond to a Sequence Parameter Set (SPS), a Picture Parameter Set (PPS) and Supplemental Enhancement Information (SEI), respectively.

FIG. 8 shows decode switch information added to each video access unit of the left- and right-view video streams. The video decoder performs decode processing while switching between video access units of the left-view video stream and video access units of the right-view video stream. An ordinary video decoder can identify a video access unit to be decoded next in accordance with the time shown by DTS assigned to each video access unit. However, there are still a number of video decoders that advance the decode processing independently of DTSs. In such a case, each video access unit of a video stream desirably contains information for identifying a video access unit to be decoded next. The decode switch information shown in FIG. 8 supports the processing of switching between video access units.

The upper row of FIG. 8 shows the structure of the decode switch information. The lower row of FIG. 8 shows a data structure of a video access unit. In each video access unit, the decode switch information is stored in a certain area within the supplementary data (when the video is encoded using MPEG-4 AVC, the decode switch information is stored in an SEI).

The decode switch information is composed of a subsequent access unit type, a subsequent access unit size, and a decode counter.

The subsequent access unit type is information showing whether the video access unit to be decoded next is of the left-view video stream or the right-view video stream. When the subsequent access unit type shows a value "1", it means the video access unit to be decoded next is of the left-view video stream. When the subsequent access unit type shows a value "2", the video access unit to be decoded next is of the right-view video stream. When the subsequent access unit type indicates a value "0", it means that the current video access unit is the last video access unit of the stream.

The subsequent access unit size is information showing a size of the video access unit to be decoded next. If the size of the video access unit to be decoded next is unknown, then it is required to identify the size of this video access unit by analyzing its structure when extracting this video access unit of an undecoded state from a corresponding buffer. However, with the aid of the subsequent access unit size, the video decoder can identify the size of the subsequent video access unit without analyzing its structure. This simplifies the processing of extracting a picture of an undecoded state from a corresponding buffer.

In a case where the first I-picture of a GOP in the left-view video stream is assigned a decode counter "0", the video access units of the left- and right-view video streams following this I-picture are assigned decode counters that successively increment in the order in which they are decoded, as shown in FIG. 9A.

Use of such information (the decode counters) makes it possible to perform proper processing to resolve an error that arises when a video access unit cannot be read for some reason. For example, assume a case where the third video access unit of the left-view video stream (Br-picture) cannot be read due to a reading error as shown in FIG. 9A. In this case, if the decode counters are not assigned to the video access units, the third access unit of the right-view video stream (B-picture) refers to the third video access unit of the left-view video stream. This may result in decoding of an image with noise (erroneous decoding). Contrarily, if the value of the decode counter assigned to the second video access unit of the right-view video stream (P-picture) has been stored, the value of the decode counter assigned to the subsequent video access unit can be predicted, with the result that the decoder can perform proper processing to resolve the error. In the example of FIG. 9A, the decode counter assigned to the second video access unit of the right-view video stream (P-picture) shows a value "4", and this decode counter "4" should be followed by a decode counter "5". However, the decode counter assigned to the next readable video access unit, namely the fourth video access unit of the left-view video stream (P-picture), shows a value "7". The video decoder can thereby judge that one video access unit has been skipped. Accordingly, upon judging that the third video access unit of the right-view video stream (B-picture) has no picture to refer to, the video decoder can, for example, skip the decoding of this video access unit.

Alternatively, as shown in FIG. 9B, a sequence of decode counters may be self-contained on a per-stream basis. In this case too, when the video access unit that has been decoded most recently is of the left-view video stream, it is possible to predict that the decode counter assigned to the subsequent video access unit would be the same as the decode counter assigned to the video access unit that has been decoded most recently. On the other hand, when the video access unit that has been decoded most recently is of the right-view video stream, it is possible to predict that the decode counter assigned to the subsequent video access unit would be obtained by adding one to the decode counter assigned to the video access unit that has been decoded most recently. This also makes it possible to perform proper processing to resolve the error.

FIG. 10A illustrates in further detail how a video stream is stored in a PES packet sequence. In FIG. 10A, the first row shows a video frame sequence of the video stream, the second row shows a PES packet sequence, and the third row shows a TS packet sequence obtained by converting the PES packet sequence. As shown by arrows yg1, yg2, yg3 and yg4, the I-picture, B-picture and P-picture, which represent Video Presentation Units constituting the video stream, are each divided and stored in a payload of the corresponding PES packet. Each PES packet has a PES header storing a Presentation Time-Stamp (PTS) that indicates a display time of the corresponding picture, and a Decode Time Stamp (DTS) that indicates a decoding time of the corresponding picture.

<TS Packet Sequence>

FIG. 10B shows the format of the TS packets ultimately written in the AV stream. In FIG. 10B, the first row shows a TS packet sequence, the second row shows a source packet sequence, and the third row shows the AV stream.

As shown in the first row of FIG. 10B, each TS packet is a fixed-length packet consisting of a 4-byte "TS header" carrying information such as PID identifying the stream, and a 184-byte "TS payload" storing data. Each of the above-described PES packets is divided and stored in the corresponding TS payload.

As shown in the second row of FIG. 10B, each TS packet is given a 4-byte TP_extra_header, i.e., converted into a 192-byte source packet, and then written in the AV stream. Information such as Arrival_Time_Stamp (ATS) is written in the TP_extra_header. The ATS shows a transfer start time at which the corresponding TS packet is to be transferred to a PID filter. The source packets are arranged in the AV stream as shown in the third row of FIG. 10B. The numbers incrementing from the head of the AV stream are called Source Packet Numbers (SPNs).

<Multiplexing ofAV Stream>

FIG. 11 schematically shows how a left-view AV stream is multiplexed. Firstly, the left-view video stream and an audio stream (the first row) are each converted into a PES packet sequence (the second row). Each PES packet sequence is then converted into a source packet sequence (the third row). In a similar manner, a left-view presentation graphics stream and a left-view interactive graphics stream (the seventh row) are each converted into a PES packet sequence (the sixth row). Each PES packet sequence is converted into a source packet sequence (the fifth row). The source packets constituting the video, audio and graphics, which have been obtained in the above manner, are arranged in order of their ATSs. This is because the read buffer should read in the source packets in accordance with their ATSs. The source packets thus arranged in order of their ATSs make up the left-view AV stream. This left-view AV clip to be recorded on the recording medium is designed such that its size would not cause underflow in the read buffer.

A group of source packets whose ATSs are consecutive on the Arrival Time Clock (ATC) time axis is called an ATC sequence. A group of source packets whose DTSs and PTSs are consecutive on the System Time Clock (STC) time axis is called an STC sequence.

FIG. 12 shows extents obtained by executing the recording method. The first row of FIG. 12 shows extents constituting the AV stream file, namely EXT_L[i], EXT_L[i+1], EXT_R[i], and EXT_R[i+1].

The second row of FIG. 12 shows a source packet sequence belonging to each extent.

In each of the extents shown in the first row, groups of source packets constituting the right-view AV stream and groups of source packets constituting the left-view AV stream are interleaved. This interleaved arrangement shown in FIG. 12 denotes that the source packet groups constituting the right-view AV stream and the source packet groups constituting the left-view AV stream are regularly recorded as individual extents, in the following order: "a right-view source packet group", "a left-view source packet group", "a right-view source packet group", "a left-view source packet group", and so on.

Here, each of the variables "i", "i+1", etc. included in the brackets indicates the numerical order in which the corresponding extent is played back. According to the numerical orders indicated by the variables shown in FIG. 12, the two extents with the variable "i", namely EXT_L[i] and EXT_R[i], are played back simultaneously, while the two extents with the variable "i+1", namely EXT_L[i+1] and EXT_R[i+1], are played back simultaneously.

The sizes of the extents EXT_L[i] and EXT_R[i] are expressed as SEXT_L[i] and SEXT_R[i], respectively.

The following explains how these sizes SEXT_Land SEXT_R are determined. The playback device has two buffers, namely a right-view read buffer and a left-view read buffer. The extents shown in FIG. 12 are supplied to the video decoder by the right-view read buffer reading right-view extents and the left-view read buffer reading left-view extents, alternately. Accordingly, the sizes SEXT_L and SEXT_R need to be determined in consideration of time periods for which the right- and left-view read buffers become full, respectively. More specifically, given that the transfer rate to the right-view read buffer is Rmax1, the capacity of the right-view read buffer must be determined so that the following relationship is satisfied:

Capacity of Right-View Read Buffer = Rmax1 $\times$ "Time Period for which Left-View Read Buffer Becomes Full, Including Jump Time Period(s)"

Here, a jump has the same meaning as a disc seek. This is because a BD-ROM has a limited number of consecutive areas that can be secured as recording areas, and the left-view and right-view video streams are not necessarily recorded on the BD-ROM right next to each other; that is, there are cases where the left-view video stream is recorded in an area that is distant from the area in which the right-view video stream is recorded on the BD-ROM.

The following discusses the "Time Period for which Left-View Read Buffer Becomes Full, Including Jump Time Period(s)". A TS packet is accumulated in the left-view read buffer at a transfer rate of Rud - Rmax2, which denotes a difference between (i) the output rate Rmax2, at which the left-view read buffer performs an output, and (ii) the input rate Rud, at which the left-view read buffer receives an input. Accordingly, the time period for which the left-view read buffer becomes full is RB2/(Rud - Rmax2). RB2 denotes the capacity of the left-view read buffer.

In order for the left-view read buffer to read data, it is necessary to take into consideration (i) a jump time period (T jump) required to jump from the right-view AV stream to the left-view AV stream, and (ii) a jump time period (T jump) required to jump from the left-view AV stream to the right-view AV stream. For this reason, a time period (2 $\times$ T jump + RB2/(Rud - Rmax2)) is required to accumulate data in the left-view read buffer.

Given that the transfer rate to the right-view read buffer is Rmax1, all the source packets in the right-view read buffer need to be output at the transfer rate of Rmax1 during the above-described time period for which data is accumulated in the left-view read buffer. Therefore, the capacity RB1 of the right-view read buffer is:

$$RB1 \geq Rmax1 \times \{2 \times T\ jump + RB2/(Rud - Rmax2)\}$$

In a similar manner, the capacity RB2 of the left-view read buffer can be calculated using the following expression:

$$RB2 \geq Rmax2 \times \{2 \times T\ jump + RB1/(Rud - Rmax1)\}$$

A specific memory size of each of the right- and left-view read buffers is equal to or below 1.5 Mbytes. In the present embodiment, the extent sizes SEXT_R and SEXT_L are set to be exactly or substantially equal to the memory sizes of the right- and left-view read buffers, respectively. As the file extents are physically arranged in the above-described manner, the AV stream can be played back seamlessly without the video and audio cut halfway through. This concludes the description of the method of recording the left- and right-view AV streams. Described below are the internal structures of left- and right-view AV streams. More specifically, the following describes the internal structures of the extents EXT_R[i] and EXT_L[i] with reference to the first row of FIG. 12.

The extent EXT_L[i] is composed of the following source packets.

Source packets with a packet ID "0x0100" constitute a Program_map. TS packets with a packet ID "0x1001" constitute a PCR.

Source packets with a packet ID "0x1011" constitute the left-view video stream.
Source packets with packet IDs "0x1220" to "0x123F" constitute the left-view PG stream.
Source packets with packet IDs "0x1420" to "0x143F" constitute the left-view IG stream.
Source packets with PIDs "0x1100" to "0x111F" constitute the audio stream.

The extent EXT_R[i] is composed of the following source packets.

TS packets with a packet ID "0x1012" constitute the right-view video stream. Source packets with packet IDs "0x1240" to "0x125F" constitute the right-view PG stream. Source packets with packet IDs "0x1440" to "0x145F" constitute the right-view IG stream.

In addition to the source packets of each stream (e.g., video, audio and graphics streams), the AV stream also includes source packets of a Program Association Table (PAT), a Program Map Table (PMT), a Program Clock Reference (PCR) and the like. The PAT shows the PID of the PMT used in the AV stream. The PID of the PAT itself is registered as "0x0000". The PMT stores the PIDs of each stream (e.g., video, audio and graphics streams) included in the AV stream file, and attribute information of streams corresponding to the PIDs. The PMT also has various descriptors relating to the AV stream. The descriptors have information such as copy control information showing whether copying of the AV stream file is permitted or not permitted. The PCR stores STC time information corresponding to the ATS showing when the PCR packet is transferred to the decoder, in order to achieve synchronization between an Arrival Time Clock (ATC) that is a time axis of the ATSs, and a System Time Clock (STC) that is a time axis of the PTSs and DTSs.

More specifically, a PMT header is disposed at the top of the PMT. Information written in the PMT header includes the length of data included in the PMT to which the PMT header is attached. A plurality of descriptors relating to the AV stream are disposed after the PMT header. Information such as the described copy control information is listed in the descriptors. After the descriptors is a plurality of stream information pieces relating to the streams included in the AV stream file. Each stream information piece is composed of stream descriptors, each listing information such as a stream type for identifying the compression codec of the stream, a stream PID, or stream attribute information (such as a frame rate or an aspect ratio). The stream descriptors are equal in number to the number of streams in the AV stream file. The following explains how the extents shown in FIG. 12 are used in the file system.

FIG. 13 shows a relationship between the extents and the AV stream file.

In FIG. 13, the first row shows right-view extents and left-view extents, and the second row shows the XXXXX.m2ts, which is the AV stream file of the interleaved format.

Dotted arrows h1, h2, h3, h4 and h5 indicate attribute relationships based on allocation identifiers. In other words, these dotted arrows indicate to which files the extents EXT_R[i], EXT_L[i], EXT_R[i+1] and EXT_L[i+1] belong to, respectively. According to the attribute relationships indicated by the dotted arrows h1, h2, h3, h4 and h5, the extents EXT_R[i], EXT_L[i], EXT_R[i+1] and EXT_L[i+1] are all registered as extents of the XXXXX.m2ts.

This concludes the description of the AV stream file storing the AV stream. A description is now given of a clip information file.

<Clip Information File>

FIG. 14 shows an internal structure of a clip information file. As shown in FIG. 14, a clip information file is management information for an AV stream file. Clip information files are in one to one correspondence with AV stream files. Leading lines chl indicate a close-up of the internal structure of a clip information file. As indicated by the leading lines chl, a clip information file is composed of "clip information", a "stream attribute information set", an "entry map table", and a "3D metadata set".

As indicated by leading lines ch2, the clip information is composed of a "system rate", "playback start time", and "playback end time". The system rate denotes a maximum transfer rate at which each TS packet constituting the AV stream file is transferred to a PID filter of a system target decoder (described later). Intervals between the ATSs included in the AV stream file are each set to be equal to or smaller than the system rate. The playback start time is set to the PTS assigned to the first video frame of the AV stream file. The playback end time is set to a time obtained by adding a per-frame playback interval to the PTS assigned to the last video frame of the AV stream file.

FIG. 15 shows the stream attribute information set included in the clip information file.

In FIG. 15, leading lines ah1 indicate a close-up of the internal structure of the stream attribute information set.

As indicated by the leading lines ah1, the stream attribute information set shows attribution of a PES stream constituted from various types of source packets. More specifically, the stream attribute information set shows: (i) stream attribute information of the left-view video stream constituted from TS packets with a PID "0x1011"; (ii) stream attribute information of the right-view video stream constituted from TS packets with a PID "0x1012"; (iii) stream attribute information of the audio stream constituted from TS packets with a PID "0x1100" or "0x1101"; and (iv) stream attribute information of the PG stream constituted from TS packets with a PID "0x1220" or "0x1221". As indicated by the leading lines ah1, attribute information is registered for each PID of each stream in the AV stream file. The attribute information of each stream has different information depending on the type of the stream. Video stream attribute information carries information including what kind of compression codec the video stream was compressed with, and the resolution, aspect ratio and frame rate of each picture data that compose the video stream. Audio stream attribute information carries information including what kind of compression codec the audio stream was compressed with, how many channels are included in the audio stream, how many languages the audio stream supports, and the sampling frequency. The above information in the video stream attribute information and the audio stream attribute information is used for purposes such as initialization of the decoder before the player performs playback.

A description is now given of video stream attribute information. The codec, frame rate, aspect ratio and resolution included in the left-view video stream attribute information, which corresponds to the PID "0x1011", must match those included in the corresponding right-view video stream attribute information, which corresponds to the PID "0x1012". If the codec included in the left-view video stream attribute information does not match the codec included in the corresponding right-view video stream attribute information, the two video streams cannot refer to each other. Furthermore, in order to playback the two video streams in synchronization with each other as 3D video on the display, the frame rate, aspect ratio and resolution included in the left-view video stream attribution information must match those included in the corresponding right-view video stream attribute information. Otherwise, playback of the two video streams would bring discomfort to the viewer.

The right-view video stream attribute information may further include a flag indicating that it is necessary to refer to the left-view video stream to decode the right-view video stream. The right-view video stream attribute information may also include information indicating the video stream to be referred to when decoding the right-view video stream. By configuring the left-view video stream attribute information and the right-view video stream attribute information in the above manner, a relationship between the two video streams can be judged by a tool for verifying whether data has been created in compliance with a specified format.

FIGs. 16A and 16B show the entry map table included in the clip information file. FIG. 16A shows an overall structure of the entry map table. In FIG. 16A, leading lines eh1 indicate a close-up of the internal structure of the entry map table. As indicated by the leading lines eh1, the entry map table is composed of "entry map header information", an "extent start type", an "entry map for the PID ’0x1011’", an "entry map for the PID ‘0x1012’", an "entry map for the PID ’0x1220’", and an "entry map for the PID ’0x1221 ’".

The "entry map header information" includes information such as PIDs of video streams indicated by the entry maps and the number of entry points indicated by the entry maps.

The "extent start type" shows whether the first one of a plurality of extents arranged is of the left-view video stream or the right-view video stream. With reference to the "extent start type", the 2D/3D playback device can easily judge which one of an extent of the left-view AV stream and an extent of the right-view AV stream it should request a BD-ROM drive to play back first.

The "entry map for the PDI ‘0x1011’", "entry map for the PDI ’0x1012’", "entry map for the PDI ’0x1220’", and "entry map for the PDI ’0x1221’" are respectively entry maps of PES streams composed of different types of source packets. A pair of a PTS and an SPN included in each entry map is called an "entry point". Each entry point has an entry point ID (hereafter, "EP ID"). Starting with the top entry point, which has an EP_ID "0", the entry points have successively incrementing EP_IDs. A pair of the PTS and SPN of the first I-picture of each GOP included in the left-view video stream is registered as each entry point of the let-view video stream. Similarly, a pair of the PTS and SPN of the first picture of each GOP included in the right-view video stream is registered as each entry point of the right-view video stream. Using these entry maps, the player can specify the location of a source packet corresponding to an arbitrary point on the time axis of the video stream. For instance, when performing special playback such as fast forward or rewind, the player can perform processing efficiently without analyzing the AV stream file, by specifying, selecting and playing back the I-picture registered in each entry map. An entry map is created for each video stream multiplexed on the AV stream file. The entry maps are managed according to the PIDs.

In FIG. 16A, leading lines eh2 indicate a close-up of the internal structure of the entry map for the PDI "0x1011". The entry map for the PDI "0x1011" is composed of entry points with EP_IDs "0", "1", "2" and "3". The entry point with the EP_ID "0" shows a correspondence between an is_angle_change flag (set to be "ON"), the SPN "3", and the PTS "80000". The entry point with the EP_ID "1" shows a correspondence between an is_angle_change flag (set to be "OFF"), the SPN "1500", and the PTS "270000".

The entry point with the EP_ID "2" shows a correspondence between an is_angle_change flag (set to be "OFF"), the SPN "3200", and the PTS "360000". The entry point with the EP_ID "3" shows a correspondence between an is_angle_change flag (set to be "OFF"), the SPN "4800", and the PTS "450000". Each is_angle_change flag indicates whether the picture of the corresponding entry point can be decoded independently of this entry point. Each is_angle_change flag is set to be "ON" when the video stream has been encoded using MVC or MPEG-4 AVC and the picture of the corresponding entry point is an IDR picture. On the other hand, each is_angle_change flag is set to be "OFF" when the video stream has been encoded using MVC or MPEG-4 AVC and the picture of the corresponding entry point is a non-IDR picture.

FIG. 16B shows source packets indicated by the entry points in the entry map for the PID "1011" which is shown in FIG. 16A. The entry point with the EP_ID "0" shows a source packet with the SPN "3" in correspondence with the PTS "80000". The entry point with the EP_ID "1" shows a source packet with the SPN "1500" in correspondence with the PTS "270000".

The entry point with the EP_ID "2" shows a source packet with the SPN "3200" in correspondence with the PTS "360000". The entry map with the EP_ID "3" shows a source packet with the SPN "4800" in correspondence with the PTS "450000".

FIG. 17 shows how entry points are registered in each entry map. In FIG. 17, the first row shows a time axis defined by an STC sequence, the second row shows an entry map included in a clip information file, and the third row shows a source packet sequence constituting an ATC sequence. When an entry point designates, from among the ATC sequence, a source packet with the SPN "n1", the PTS shown by this entry point is set to the PTS "t1" in the STC sequence. As a result, in accordance with the time indicated by the PTS "t1", the playback device can randomly access the source packet with the SPN "n1" in the ATC sequence. When an entry point designates, from among the ATC sequence, a source packet with the SPN "n21", the PTS of this entry point is set to the PTS "t21" in the STC sequence. As a result, in accordance with the time indicated by the PTS "t21", the playback device can randomly access the source packet with the SPN "n21" in the ATC sequence.

Using the entry map, the player can specify the location of the AV stream file corresponding to an arbitrary point on the time axis of the video stream. For instance, when performing special playback such as fast forward or rewind, the player can perform processing efficiently without analyzing the AV stream file, by specifying, selecting and playing back the I-picture registered in each entry map.

Assume a case where, from among the first I-picture of a GOP in the left-view video stream and the first I-picture of the corresponding GOP in the right-view video stream, one of them is registered in the corresponding entry map, while the other one is not registered in the corresponding entry map. In this case, when a random access (e.g., jump playback) is performed, it would be difficult to play back the left- and right-view video streams as stereoscopic video. For example, FIG. 18B shows BL1, BL3 and BL5, which are entry points indicating the first I-pictures of GOPs #L1, #L3 and #L5 in the left-view video stream, respectively. Here, an entry point indicating the first picture of a GOP #R3 in the right-view video stream, which corresponds to the GOP #L3, does not exist. Accordingly, if the user wishes to perform jump playback from the BL3, the information on the SPN of the first picture of the GOP #R3 cannot be obtained from the clip information file. As a result, in order to jump to the start of the GOP #L3 during 3D video playback, it is necessary to obtain the first SPN of the first picture of the GOP #R3, by performing data analysis on the SPNs of pictures constituting the GOP #R2 that is indicated by the entry point BR2 and precedes the GOP #R3 in the right-view video stream. This degrades a response of the playback device when performing jump playback.

The above problem can be solved by the structure shown in FIG. 18A. In FIG. 18A, the first I-picture of a GOP in the left-view video stream and the first picture of the corresponding GOP in the right-view video stream are both registered in the corresponding entry maps. This allows obtaining, from the entry maps, both of the first SPN of a GOP in the left-view video stream and the first SPN of the corresponding GOP in the right-view video stream, thus preventing degradation of a response of the playback device when performing jump playback.

This concludes the description of the entry map table. The following is a detailed description of the 3D metadata set.

The 3D metadata set is a group of metadata that defines various information required for stereoscopic playback, and includes a plurality of offset entries. Each PID corresponds to a plurality of offset entries. The offset entries are in one to one correspondence with a plurality of display times. When playing back a PES stream of a certain PID, it is possible to define, for each PID, what offset should be used to perform stereoscopic playback at each display time in the PES stream.

3D metadata is information for adding depth information to 2D images of a presentation graphics stream, an interactive graphics stream, and a secondary video stream. As shown in the upper row of FIG. 19, the 3D metadata set is table information that lists, for each of PIDs of the presentation graphics stream, the interactive graphics stream and the secondary video stream included in the AV stream file, (i) PTSs each showing a display time of the corresponding 3D image and (ii) offset values each showing displacement between the corresponding right and left pixels. An offset value represents the number of pixels in the X-axis direction, and may be a negative value. Information on a pair of a PTS and an offset value shown in one row in the table is referred to as an offset entry. As shown in the lower row of FIG. 19, each offset entry is valid between the PTS of its own and PTS of the next offset entry. For example, when the offset entries #1 and #2 are respectively assigned PTSs "180000" and "270000", the offset value indicated by the offset entry #1 is valid between the PTSs "180000" and "270000". A plane composition unit 5b of the 2D/3D playback device (described later) composites a PG plane, an IG plane and a secondary video plane while shifting data stored in these planes by the corresponding offset value. As a result, parallax images are created. These parallax images add stereoscopic depth to the 2D video. The method of compositing the planes is described in a later section where the description of the plane composition unit 5b is described. Note that although it has been described that 3D metadata is set for each PID, the 3D metadata may be, for example, set for each plane. This can simplify processing of analyzing each 3D metadata in the 2D/3D playback device. Also, depending on the performance of composition processing performed by the 2D/3D playback device, restrictions may be imposed on intervals between offset entries (e.g., restricting each interval to be equal to or longer than one second).

This concludes the description of the clip information file. The following is a detailed description of a playlist information file.

<Playlist Information File>

A playlist shows a playback path of an AV stream file. A playlist is composed of one or more playitems. Each playitem shows a corresponding playback section of an AV stream, and is identified by a corresponding playitem ID. The playitems are listed in the order in which they should be played back in the playlist. A playlist includes entry marks each showing a corresponding playback start point. Each entry mark can be assigned to a playback section defined by the corresponding playitem. Specifically, each entry mark is assigned to a position that could be the playback start point of the corresponding playitem. The entry marks are used for cue playback. For example, chapter playback can be performed by assigning entry marks to the positions that represent start points of chapters in a movie title.
FIG. 20 shows a 2D playlist and a 3D playlist in none of which 2D playitems and 3D playitems coexist. The playlists thus structured would not cause the playback device to switch between different playback environments. The 3D playlist shown in FIG. 20 is composed of a "main path" and one or more "subpaths".

The "main path" is composed of one or more playitems. In the example of FIG. 20, the main path is composed of playitems #1, #2 and #3.

Each "subpath" shows a playback path to be played back together with the main path. Subpaths are assigned IDs (subpath IDs) in the order in which they are registered in the playlist. Subpath IDs are used to identify the subpaths. There are a subpath of the synchronized type and a subpath of the unsynchronized type. The subpath of the synchronized type is played back in synchronization with playback of the main path. The subpath of the unsynchronized type can be played back without being in synchronization with playback of the main path. The types of subpaths are stored as subpath types. Each sub-playitem is composed of one or more sub-playitem information pieces.

Each playitem includes a stream selection table, which is information showing the stream number of an elementary stream whose playback is permitted in the playitem or the corresponding sub-playitem. The playlist information, playitem information, sub-playitem information and stream selection table are described in detail in the later embodiments.

"AV clips #1, #2 and #3" constitute an AV stream that is (i) played back as 2D video, or (ii) played back as a left-view AV stream during 3D video playback.

"AV clips #4, #5 and #6" constitute an AV stream that is played back as a right-view AV stream during 3D video playback.

As shown by the reference numbers rf1, rf2 and rf3, the main path of the 2D playlist refers to the AV clips #1, #2 and #3 that store the left-view AV stream.

The 3D playlist is composed of (i) a main path including the playitems that refer to the left-view AV stream as shown by the reference numbers rf4, rf5 and rf6, and (ii) a subpath including the sub-playitems that refer to the right-view AV stream. More specifically, as shown by the reference numbers rf7, rf8 and rf9, the subpath of the 3D playlist refers to the AV clips #4, #5 and #6 that store the right-view AV stream. This subpath is configured to be synchronized with the main path on the time axis. The 2D and 3D playlists structured in the above manner can share AV clips storing the left-view AV stream. In the 3D playlist structured in the above manner, the left- and right-view AV streams are in correspondence with each other so that they are synchronized with each other on the time axis.

Referring to FIG. 20, the playitem information pieces #1 to #3 in both of the 3D and 2D playlists refer to the same AV clips #1 to #3. Hence, common playlist information can be prepared for both of the 3D and 2D playlists to describe/define the 3D and 2D playlists (see the reference numbers df1 and df2). That is to say, as long as the playlist information is described so as to realize the 3D playlist, the 3D playlist functions as (i) a 3D playlist when the playback device is of the L-R display type, and (ii) a 2D playlist when the playback device is of the L-L display type. By preparing one piece of playlist information that describes both of the 2D and 3D playlists as shown in FIG. 20, the 2D and 3D playlists are each interpreted as a 2D or 3D playlist, depending on the display type of the playback device that interprets this playlist information. This reduces the burden on the authoring staff.

FIG. 21 shows a different version of the 3D playlist shown in FIG. 20. The 3D playlist of FIG. 21 additionally includes another subpath. As opposed to the 3D playlist of FIG. 20 which includes one subpath with the subpath ID "0", the 3D playlist of FIG. 21 additionally includes the second subpath identified by its subpath ID "1". This subpath with the subpath ID "1" refers to AV clips #7, #8 and #9. When there are two or more subpath information pieces, they respectively define a plurality of right-view AV streams that offer different angles at which the right eye of the viewer sees the object. Here, the number of AV clip groups is the same as the number of angles. Subpaths are provided in one to one correspondence with the angles.

In the example of FIG. 21, the right-view AV stream stored in the AV clips #4, #5 and #6 and the right-view AV stream stored in the AV clips #7, #8 and #9 offer different angles at which the right eye of the viewer sees the object. As shown by the reference numbers rf7, rf8 and rf9, the subpath with the subpath ID "0" refers to the AV clips #4, #5 and #6. Meanwhile, as shown by the reference numbers rf10, rf11 and rf12, the subpath with the subpath ID "1" refers to the AV clips #7, #8 and #9. According to the screen size of the display device and the user's preference, the playback device switches between different subpaths to be played back in synchronization with the main path storing the left-view AV stream. This way, the playback device can display stereoscopic video by using parallax images with which the user feels comfortable.

When playlist information is described so as to realize the 3D playlist of FIG. 21, this 3D playlist functions as (i) a 3D playlist when the playback device is of the L-R display type and (ii) a 2D playlist when the playback device is of the L-L display type. By preparing one playlist information describing both of the 2D and 3D playlists as shown in FIG. 21, the 2D and 3D playlists are each interpreted and played back as a 2D or 3D playlist in an appropriate manner, depending on the display type of the playback device that interprets this playlist information. This reduces the burden on the authoring staff.

A description is now given of a playlist in which 2D playitems and 3D playitems coexist. During playback of such a playlist, 2D and 3D playitems must be seamlessly connected with one another.

Content that stores 3D videos does not necessarily consist only of 3D videos. In some contents, 2D and 3D videos coexist. During playback back of such contents, the 2D and 3D videos included therein need to be seamlessly played back. FIG. 22A shows a case where 2D and 3D videos coexist in one content. A playback section #1 is a section in which 3D video is played back (hereafter also called a "3D video playback section"). In the playback section #1, the left- and right-view video streams are both played back, and the left- and right-eye images are displayed alternately. If the left-view video stream is played back at a frame rate of N frames per second, then the right-view video stream will also be played back at a frame rate of N frames per second. As frames of the left- and right-view video stream are displayed alternately, an entirety of the 3D video is played back at a frame rate of N × 2 frames per second (at N × 2 Hz frame rate). On the other hand, a playback section #2 is a section in which 2D video is played back (hereafter also called a "2D video playback section"). In the playback section #2, only the left-view video stream is played back at a frame rate of N frames per second (at N Hz frame rate). In the example of FIG. 22A, playback is performed at a frame rate of 24 frames per second (at 24 Hz frame rate) in the playback section #2. The playback sections #1 and #3 are structured the same, and playback is performed at 24 × 2 Hz frame rate, or 48 Hz frame rate, in the playback sections #1 and #3.

When playing back the playback sections #1, #2 and #3 in this order, playback is not performed at the same frame rate throughout the playback sections #1, #2 and #3. Each time a frame rate is changed, the HDMI connection between the playback device and the television needs to be reset; this causes delay and therefore does not guarantee seamless playback. One method of avoiding this problem is illustrated in FIG. 22B. According to this method, the video that is identical to the video of the left-view video stream is stored/displayed as the video of the right-view video stream even in a 2D video playback section, such as the playback section #5. This way, playback is performed at the same frame rate both in the 2D video playback section and other 3D video playback sections (playback sections #4 and #6). As playback in the playback section #5 is performed at the same frame rate as the frame rate at which 3D video is played back, playing back the playback sections #4, #5 and #6 in this order does not necessitate the stated resetting of the HDMI connection, which is required when switching from one frame rate to another. Thus, the delay caused by the resetting of the HDMI connection can be prevented. However, the playback section #5 structured in the above manner needs to include two video streams, namely the left- and right-view video streams, despite the fact that these streams are displayed as 2D video after all. The drawback of such a playback section #5 is that it contains a larger amount of data—i.e., it takes more time and effort to create data.

In view of the above, the following structure, which is illustrated in FIG. 23, is suggested. Each playback section is assigned a duplicate flag, which is a field for identifying the corresponding playback method. Left- and right-view video streams, from which 3D video is played back, are prepared for each 3D video playback section, whereas only a left-view video stream, from which 2D video is played back, is prepared for each 2D video playback section. The playback device is configured to perform playback using two types of playback methods: (i) a method of "playing back each picture once" (hereafter, "normal playback"); and (ii) a method of "playing back each picture twice" (hereafter, "duplicate playback"). In each playback section, the playback device performs playback processing according to the corresponding field. With the above structure, the duplicate flag assigned to each 3D video playback section indicates "normal playback", and the duplicate flag assigned to each 2D video playback section indicates "duplicate playback". As a result, playback is performed at the same frame rate in both of the 3D and 2D video playback sections. There is hence no need to re-establish synchronization or reset the HDMI connection between the playback device and the display device upon transitioning from one playback section to another, and delay caused by such re-establishment of synchronization or resetting of the HDMI connection can be prevented. This enables the playback device to perform seamless playback. In a case where the duplicate flag assigned to each 3D video playback section and the duplicate flag assigned to each 2D video playback section both indicate "normal playback", the frame rate at which playback is performed in each 3D video playback section is different from the frame rate at which playback is performed in each 2D video playback section. This causes delay when transitioning from one playback section to another, and prevents the playback device from performing seamless playback. However, in such a case, processing load can be reduced during playback of 2D video, especially when the television is configured to suffer processing load (e.g., consume a large amount of power) during high frame rate playback.

In the example of FIG. 23, the duplicate flags assigned to the playback sections #1 and #3 (3D video playback sections) each indicate "normal playback", whereas the duplicate flag assigned to the playback section #2 (2D video playback section) indicates "duplicate playback". Left- and right-view video streams, from which 3D video is played back, are prepared for each of the playback sections #1 and #3, whereas only the left-view video stream, from which 2D video is played back, is prepared for the playback section #2. In the playback sections #1 and #3, the playback device plays back and displays images of the left-view video stream and images of the right-view video stream alternately in an ordinary way. In the playback section #2, however, the playback device plays back and displays each image of the left-view video stream twice.

The following describes a specific data structure of a 3D playlist with reference to FIG. 24. Playitems #1 and #3 of the 3D playlist, which fall within 3D video playback sections, refer to a left-view AV stream storing a left-view video stream. Meanwhile, sub-playitems #1 and #3 to be played back in synchronization with the playitems #1 and #3 refer to a right-view AV stream storing a right-view video stream. A playitem #2, which falls within a 2D video playback section, refers only to the left-view AV stream storing the left-view video stream. The playitems included in the 3D playlist are seamlessly connected to one another according to connection conditions. These playitems are in one to one correspondence with the duplicate flags assigned to the playback sections. A playitem is played back according to "normal playback" when the corresponding duplicate flag indicates "0". On the other hand, a playitem is played back according to "duplicate playback" when the corresponding duplicate flag indicates "1". The playback device performs playback processing with reference to the duplicate flag of each playitem.

Each playitem includes a field for a duplicate flag as shown in FIG. 24. However, instead of such an explicit field, each playitem may include identification information showing "whether or not the corresponding playback section is provided with 2D video", and may be played back using a playback method associated with the identification information. For instance, when a playitem for playing back 2D video is to be played back in synchronization with a sub-playitem that has no AV stream to refer to, the identification information included in this playitem may indicate "duplicate playback". Also, when a playitem for playing back 2D video is to be played back in synchronization with a sub-playitem that refers to a left-view AV stream, the identification information included in this playitem may indicate "duplicate playback". Further, when a playitem for playing back 2D video is to be played back in synchronization with no sub-playitem, the identification information included in this playitem may indicate "duplicate playback".

It is permissible to prohibit coexistence of 2D and 3D playitems in one playlist. This makes it possible to easily avoid the problem of delay caused by changing the frame rate when switching between 2D and 3D videos.
FIG. 25 shows a data structure of playlist information. As shown in FIG. 25, the playlist information includes: "MainPath information", "SubPath information table", "Extension_Data", and "Mark information".

First, a description is given of the MainPath information. Leading lines mp1 indicate a close-up of the internal structure of the MainPath information. As indicated by the leading lines mp1, the MainPath information is composed of a plurality of pieces of PlayItem information, namely PlayItem information #1 through #N. The PlayItem information defines one or more logical playback sections that constitute the MainPath. Leading lines mp2 of FIG. 25 indicate a close-up of the structure of the PlayItem information. As indicated by the leading lines mp2, the PlayItem information is composed of: "Clip_Information_file name" that indicates the file name of the playback section information of the AV stream file to which the IN point and the OUT point of the playback section belong; "Clip_codec_identifier" that indicates the AV stream encoding method; "is_multi_angle" that indicates whether or not the PlayItem is multi angle; "connection_condition" that indicates whether or not to seamlessly connect the current PlayItem and the preceding PlayItem; "ref_to_STC_id[0]" that uniquely indicates the STC_Sequence targeted by the PlayItem; "In_time" that is time information indicating the start point of the playback section; "Out_time" that is time information indicating the end point of the playback section; "UO_mask_table" that indicates which user operation should be masked by the PlayItem; "STN_table"; "left-view/right-view identification information"; "multi_clip_entry"; and "duplicate flag".

The following describes the "STN table", the "left-view/right-view identification information", and the "multi_clip_entry".

The "STN_table (Stream Number_table)" is a table in which logical stream numbers are assigned to pairs of (i) a stream entry including a packet ID and (ii) a stream attribute. The order of the pairs of a stream entry and a stream attribute in the STN_table indicates a priority order of the corresponding streams. This STN_table is provided for 2D playback, and an STN_table for 3D playback is provided independent of this table.

The "left-view/right-view identification information" is base-view video stream specification information that specifies which one of the left-view video stream and the right-view video stream is the base-view video stream. When the left-view/right-view identification information shows "0", it means that the left-view video stream is the base-view video stream. When the left-view/right-view identification information shows "1", it means that the right-view video stream is the base-view video stream.

The "connection_condition" indicates a type of connection between the current playitem and the preceding playitem. When the connection_condition of a playitem is "1", it indicates that a seamless connection between the AV stream specified by the playitem and the AV stream specified by the preceding playitem is not guaranteed. When the connection_condition of a playitem is "5" or "6", it indicates that a seamless connection between the AV stream specified by the playitem and the AV stream specified by the preceding playitem is guaranteed.

When the connection_condition is "5", the STCs between playitems may be discontinuous. That is to say, the video display start time of the start of the starting AV stream of the post-connection playitem may be discontinuous from the video display end time of the end of the ending AV stream of the pre-connection playitem. It should be noted here that the AV streams need to be generated so that the decoding by the system target decoder (described later) does not fail when playback is performed after the AV stream of the post-connection playitem is input into the PID filter of the system target decoder immediately after the AV stream of the pre-connection playitem is input into the PID filter of the system target decoder. Also, there are some limiting conditions. For example, the audio end frame of the AV stream of the pre-connection playitem should overlap, on the playback time axis, with the audio start frame of the post-connection playitem.

When the connection_condition is "6", an AV stream of the pre-connection playitem connected with an AV stream of the post-connection playitem should be playable as one AV clip. That is to say, the STCs and ATCs should be continuous throughout the AV streams of the pre-connection playitem and post-connection playitem.

The "Multi_clip_entry" is information that identifies AV streams representing videos of different angles when a multi-angle section is formed by the playitem.

This concludes the description of the MainPath information. Next, a detailed description is given of the SubPath information table.

FIG. 26 shows the internal structure of the SubPath information table. Leading lines sul of FIG. 26 indicate a close-up of the internal structure of the SubPath information table. As indicated by the leading lines su1, the SubPath information table includes a plurality of pieces of SubPath information, namely SubPath information 1, 2, 3.... m. These pieces of SubPath information are instances that have derived from one class structure, and the pieces of SubPath information have a common internal structure. Leading lines su2 indicate a close-up of the internal structure that is common to the pieces of SubPath information. As indicated by the leading lines su2, each piece of SubPath information includes: SubPath_type that indicates a subpath type; and one or more pieces of SubPlayItem information, namely SubPlayItem information #1 through #M. Leading lines su3 indicate a close-up of the internal structure of SubPlayItem information. As indicated by the leading lines su3, the SubPlayItem information includes "Clip_information_file name", "Clip_codec_identifier", "ref_to_STC_id[0]", "SubPlayItem_ In_time", "SubPlayItem_Out_time", "sync_PlayItem_id", and "sync_start_PTS_of_PlayItem". The following is a description of the internal structure of the SubPlayItem information.

The "Clip_information file_name" is information that, with the file name of Clip information written therein, uniquely specifies a SubClip that corresponds to the SubPlayItem.

The "Clip_codec_identifier" indicates an encoding method of the AV stream file.

The "ref_to_STC_id[0]" uniquely indicates an STC_Sequence that is the target of the SubPlayItem.

The "SubPlayItem_In_time" is information that indicates the start point of the SubPlayItem on the playback time axis of the SubClip.

The "SubPlayItem Out_time" is information that indicates the end point of the SubPlayItem on the playback time axis of the SubClip.

The "sync_PlayItem_id" is information that uniquely specifies, among PlayItems constituting the MainPath, a PlayItem with which the SubPlayItem is to be synchronized. The "SubPlayItem_In_time" is present on the playback time axis of the PlayItem specified by the "sync_PlayItem_id".

The "sync_start_PTS_of_PlayItem" indicates, with the time accuracy of 45 KHz, the position of the start point of the SubPlayItem specified by the SubPlayItem In time, on the playback time axis of the PlayItem specified by the "sync_PlayItem_id".

FIG. 27 shows playback sections defined for the left and right views. FIG. 27 is based on FIG. 17. The second row of FIG. 27 shows a time axis on which In_Time and Out_Time of PlayItem are indicated in correspondence with FIG. 17. Similarly, the first row of FIG. 27 shows a time axis on which In_Time and Out_Time of SubPlayItem are indicated. The third and fourth rows of FIG. 27 also correspond to the second and third rows of FIG. 17, respectively. The I-pictures of the left and right views are located at the same point on the time axis. The description of the data structure of the playlist information ends here.

This concludes the description of the subpath information. Next is a detailed description of the entry mark information.

The entry mark information can be attached to a position within a playback section defined by the playitem. Namely, the entry mark information is attached to a position that can be a playback start point in the playitem, and is used for cue playback. For example, during playback of a movie title, chapter playback is realized when an entry mark is attached to a chapter start position.

This concludes the description of the entry mark information. Next is a detailed description of the extension data.

The extension data is an extension unique to the 3D playlist, and is not compatible with the 2D playlist. The extension data stores STN_table_SSs #1 through #N. Each STN_table_SS corresponds to a different piece of playitem information, and is a table in which logical stream numbers are assigned to pairs of a stream entry and a stream attribute for 3D playback. The order of the pairs of a stream entry and a stream attribute in the STN_table_SS indicates a priority order of the corresponding streams. The stream selection table is constituted from the STN_table in the playitem information and the STN_table_SS in the extension data.

The following describes the stream selection table which is included in the above-described internal structure of the PlayItem information.

FIG. 28A shows the stream selection table. The stream selection table is composed of a plurality of stream entries. As indicated by the parenthesis signs "}", the stream entries are classified into: (i) stream entries that are defined in the STN_table; and (ii) stream entries that are defined in the STN_table_SS.

As the stream entries of the STN_table, the audio/PG/IG for 2D that are playable during 2D playback can be registered. For this reason, the STN_table includes a 2D video stream entry group, a 2D audio stream entry group, a 2D PG stream entry group, and a 2D IG stream entry group, and the packet identifiers of the video, audio, PG, and IG streams can be described in these stream entry groups.

As the stream entries of the STN_table_SS, the audio/PG/IG for 3D that are playable during stereoscopic playback can be registered. For this reason, the STN_table_SS includes a 3D video stream entry group, a 3D audio stream entry group, a 3D PG stream entry group, a 3D IG stream entry group, and stream combination information, and the packet identifiers of the video, audio, PG, and IG streams can be described in these stream entry groups.

FIG. 28B shows the structural elements that are common to the stream entries. As shown in FIG. 28B, each stream entry of the stream selection table includes a "stream selection number", "stream path information", and "stream identification information".

The "stream selection number" is a number assigned to each stream entry in the stream selection table, and is incremented by one in the order starting with the "stream entry 1". The "stream selection number" is used by the playback device to identify each stream.

The "stream path information" is information that indicates an AV stream on which the stream indicated by the stream identification information is multiplexed. For example, when the "stream path information" is "main path", it indicates an AV stream of the playitem; and when the "stream path information" is "subpath ID '1'", it indicates an AV stream of a sub-playitem that corresponds to the playback section of the playitem, in the subpath indicated by the subpath ID.

The "stream identification information" is information such as the PID, and indicates a stream multiplexed on the referenced AV stream file. Attribute information of each stream is also recorded in each stream entry. Here, the attribute information is information that indicates characteristics of each stream. For example, in the case of audio, presentation graphics, or interactive graphics, the attribute information includes a language attribute or the like.

In the STN table SS, the stream entries for the left- and right-view video streams have the same values with respect to, for example, the frame rate, resolution, and video format. For this reason, the stream entry may include a flag that indicates whether the corresponding stream is the left-view video stream or the right-view video stream.

This concludes the description of the stream selection table. Next, a detailed description is given of the left-view/right-view identification information.

It has been presumed in the description that the left view serves as the main view, and the left view is displayed during 2D display. However, alternatively, the right view may serve as the main view. A playlist includes information that indicates which one of the left view and the right view serves as the main view and is displayed during 2D playback. Judgment as to which one of the left view and the right view serves as the main view is determined according to this information. This information is the left-view/right-view identification information.

It is generally considered that a left-view video is generated as 2D video in a studio. However, some may think that it is preferable to create a right-view video as 2D video. Due to this possibility, the left-view/right-view identification information, which indicates which one of the left view and the right view serves as the base view, can be set for each piece of playitem information.

FIG. 29 shows a 3D playlist that is made by adding the left-view/right-view identification information to the 3D playlist shown in FIG. 20. With this information, when the right-view video stream is specified as the base-view video stream, the right-view video stream is input first into the video decoder to obtain non-compressed picture data, even if the right view is specified by the subpath information. Then, motion compensation is performed based on the non-compressed picture data obtained by decoding the right-view video stream. This structure gives flexibility to the selection of which one of the left view and the right view should serve as the base view.

Each stream and the left-view/right-view identification information can be output to the display device, and the display device can use the left-view/right-view identification information to distinguish between the left-view and right-view streams. When the shutter glasses are used, it is necessary to recognize which one of the left-view video and the right-view video is the main video that is to be referenced by the playitem, in order to synchronize the operation of the shutter glasses with the display of the display device. Therefore, switch signals are sent to the shutter glasses so that the glass over the left eye becomes transparent during display of the left-view video while the glass over the right eye becomes transparent during display of the right-view video.

The distinction between the left view and the right view is also necessary even in the naked-eye stereoscopic view method in which the display device has a screen embedded with a prism, such as a lenticular lens. Therefore, the left-view/right-view identification information is also utilized when this method is used.

This concludes the description of the left-view/right-view identification information. The left-view/right-view identification information is provided on the assumption that either the left-view video or the right-view video among the parallax images can be played back as 2D video. However, some parallax images may not be suited for use as 2D images depending on their types.

The following describes left- and right-view images that are not suited for use as 2D images.

FIG. 30 shows two pieces of playlist information which differently define the left-view image, right-view image, and center image. The lower-right corner of FIG. 30 shows a stereoscopic image that is aimed to produce a screen effect that makes the viewer feel as if the dinosaur is approaching right in front of his/her eyes. This stereoscopic image is composed of L and R images shown thereabove in FIG. 30. A stereoscopic image constituted from L and R images that each show an object (the dinosaur in FIG. 30) as viewed from the side looks as if it is largely extending out of the front of the screen (hereafter, "extending effect"). Here, when the left-view video stream is used as a 2D video stream, the viewer would visually recognize the object as a long, odd object that is lying horizontally. To avoid this problem, a piece of playlist information that specifies a video stream representing center images is selected as the current playlist during 2D playback.

In FIG. 30, the "00005.mpls" specifies the left- and right-view video streams that provide a large extending effect as the main path information and the subpath information, respectively.

The "00003.mpls" specifies the video stream representing center images, using the main path. The movie object in the upper-left corner of FIG. 30 is described so that either 00005.mpls or 00003.mpls is selected for playback depending on the 3D playback capability (3D-Capability) of the playback device (the "if' statement in FIG. 30).

This concludes the description of implementation of the recording medium and recording method. The following describes the playback device in detail.

FIG. 31 shows the structure of a 2D/3D playback device. The 2D/3D playback device includes a BD-ROM drive 1, a read buffer 2a, a read buffer 2b, a switch 3, a system target decoder 4, a plane memory set 5a, a plane composition unit 5b, an HDMI transmission/reception unit 6, a playback control unit 7, a management information memory 9, a register set 10, a program execution unit 11, a program memory 12, an HDMV module 13, a BD-J platform 14, a middleware 15, a mode management module 16, a user event processing unit 17, a local storage 18, and a nonvolatile memory 19.

As with a 2D playback device, the BD-ROM drive 1 reads out data from a BD-ROM disc based on a request from the playback control unit 7. An AV stream file read out from the BD-ROM disc is transferred to the read buffer 2a or 2b.

When playing back 3D video, the playback control unit 7 issues a read request that instructs the BD-ROM drive 1 to read out the 2D/left-view AV stream and the right-view AV stream alternately on a per-extent basis. The BD-ROM drive 1 reads out extents constituting the 2D/left-view AV stream into the read buffer 2a, and reads out extents constituting the right-view AV stream into the read buffer 2b. When playing back 3D video, the BD-ROM drive 1 should have a higher reading speed than when playing back 2D video, since it is necessary to read out both the 2D/left-view AV stream and the right-view AV stream simultaneously.

The read buffer 2a is a buffer that may be realized by, for example, a dual-port memory, and stores data of the 2D/left-view AV stream read out by the BD-ROM drive 1.

The read buffer 2b is a buffer that may be realized by, for example, a dual-port memory, and stores data of the right-view AV stream read out by the BD-ROM drive 1.

The switch 3 is used to switch the source of data to be input into the read buffers, between the BD-ROM drive 1 and the local storage 18.

The system target decoder 4 decodes the streams by performing demultiplexing processing on the source packets read out into the read buffers 2a and 2b.

The plane memory set 5a is composed of a plurality of plane memories. The plane memories include a left-view video plane, a right-view video plane, a secondary video plane, an interactive graphics plane (IG plane), and a presentation graphics plane (PG plane).

The plane composition unit 5b instantaneously superimposes images in the left-view video plane, right-view video plane, secondary video plane, IG plane, PG plane, and GFX plane, and displays the superimposed images onto a screen such as a TV screen. In displaying such superimposed images, the plane composition unit 5b crops the images in a set of the secondary video plane, PG plane, and IG plane for the left view and the right view alternately, and composites the cropped images with the left-or right-view video plane. The composited images are transferred to the GFX plane for superimposition processing.

The plane composition unit 5b crops graphics in the IG plane for the left view and the right view alternately, by using the offset information specified by the API, and outputs, to the television, an image generated by superimposing the images in the left- or right-view video plane, the secondary video plane, the PG plane, and the IG plane.

The superimposed image is output to the television or the like in compliance with the 3D method. When it is necessary to play back the left-view images and the right-view images alternately by using the shutter glasses, the images are output as they are. When the superimposed images are output to, for example, a television with a lenticular lens, left- and right-view images are transferred and stored into a temporary buffer in this order; once the two images have been stored, they are output simultaneously.

The HDMI transmission/reception unit 6 includes an interface conforming to, for example, the HDMI standard. The HDMI transmission/reception unit 6 performs data transmission/reception so that the playback device and a device (in the present embodiment, the television 300) connected to the playback device using the HDMI connection conform to the HDMI standard. The picture data stored in the video and the uncompressed audio data decoded by the audio decoder are transferred to the television 300 via the HDMI transmission/reception unit 6. The television 300 holds, for example, (i) information indicating whether or not it supports the stereoscopic display, (ii) information regarding resolution with which the 2D display can be performed, and (iii) information regarding resolution with which the stereoscopic display can be performed. Upon receiving a request from the playback device via the HDMI transmission/reception unit 6, the television 300 returns the requested necessary information (e.g., the above pieces of information (i), (ii) and (iii)) to the playback device. In this way, the playback device can obtain information indicating whether or not the television 300 supports the stereoscopic display from the television 300 via the HDMI transmission/reception unit 6.

When the program execution unit 11 or the like instructs the playback control unit 7 to play back a 3D playlist, the playback control unit 7 identifies a 2D/left-view AV stream of a playitem that is the playback target among the 3D playlist, and identifies a right-view AV stream of a sub-playitem in the 3D subpath that should be played back in synchronization with the playitem. Thereafter, the playback control unit 7 interprets the entry map of the corresponding clip information file, and requests the BD-ROM drive 1 to alternately read out extents of the 2D/left-view AV stream and the right-view AV stream, starting with the playback start point, based on the extent start type that indicates which one of the extents of the 2D/left-view AV stream and the right-view AV stream is disposed first. When the playback is started, the first extent is read out into the read buffer 2a or 2b. Once this readout has been completed, the first extent is transferred from the read buffer 2a or 2b to the system target decoder 4. When playing back the 3D playlist, the playback control unit 7 notifies the plane composition unit 5b of the 3D metadata included in the clip information file that corresponds to the 3D/left-view AV stream.

In performing the aforementioned control, the playback control unit 7 can read out a file into the memory by performing a system call for a file open.

The file open denotes a process in which the file system (i) searches for a directory using a file name that is given upon performing the system call, (ii) secures a File Control Block (FCB) if the file is found, and (iii) returns the number of the file handle. The FCB is generated by copying, into the memory, the contents of the directory entry of the target file. Afterward, the playback control unit 7 can transfer the target file from the BD-ROM to the memory by presenting this file handle to the BD-ROM drive 1.

The playback engine 7a executes AV playback functions. The AV playback functions denote a group of traditional functions succeeded from CD and DVD players. Here, the AV playback functions are processing such as starting playback, stopping playback, pausing, canceling pausing, canceling still image function, fast forward performed by specifying a value indicating the playback speed, rewind performed by specifying a value indicating the playback speed, switching audio, switching picture data for secondary video, switching angle, etc.

The playback control engine 7b executes playlist playback functions in response to a function call from a command interpreter (operator of the HDMV mode) and a Java® platform (operator of the BD-J mode). The playlist playback functions are processing of performing, from among the aforementioned AV playback functions, the playback start and the playback stop in accordance with the current playlist information constituting the current playlist and the current clip information.

The management information memory 9 is a memory for storing the current playlist information and the current clip information. The current playlist information is a piece of playlist information that is currently being the processing target, from among a plurality of pieces of playlist information that can be accessed from the BD-ROM, built-in medium drive, or removable medium drive. The current clip information is a piece of clip information that is currently being the processing target, from among a plurality of pieces of clip information that can be accessed from the BD-ROM, built-in medium drive, or removable medium drive.

The register set 10 (a player status/setting register set) is a set of registers including: a player status register for storing a playlist playback status; a player setting register for storing configuration information indicating the configuration of the playback device; and a general-purpose register for storing arbitrary information that is to be used by contents. Here, the playlist playback status indicates, for example, the AV data that is being used from among various pieces of AV data information described in the playlist, and a position (time) at which a portion of the playlist which is currently being played back exists.

When the playlist playback status has changed, the playback control engine 7b stores the changed playlist playback status into the register set 10. Also, in accordance with an instruction issued from an application run by the command interpreter (operator of the HDMV mode) and the Java® platform (operator of the BD-J mode), a value specified by the application may be stored, and the stored value may be transferred to the application.

The program execution unit 11 is a processor for executing a program stored in a BD program file. The program executing unit 11 performs the following controls by operating in accordance with the stored program: (1) instructing the playback control unit 7 to play back a playlist; and (2) transferring, to the system target decoder, PNGs and JPEGs for a menu or graphics for a game, so that they can be displayed on the screen. These controls can be performed freely in accordance with construction of the program, and how the controls are performed is determined by the process of programming the BD-J application in the authoring process.

The program memory 12 stores a current dynamic scenario, and is used for processing performed by the HDMV module (operator of the HDMV mode) and the Java@ platform (operator of the BD-J mode). The current dynamic scenario is one of the Index.bdmv, BD-J object, and movie object recorded on the BD-ROM which is currently being targeted for execution. The program memory 12 includes a heap memory.

The heap memory is a stack region for storing byte codes of the system application, byte codes of the BD-J application, system parameters used by the system application, and application parameters used by the BD-J application.

The HDMV module 13 is a DVD virtual player that is an operator of the HDMV mode. The HDMV module 13 is also an executor of the HDMV mode. The HDMV module 13 has a command interpreter, and performs the control in the HDMV mode by interpreting and executing the navigation command constituting the movie object. The navigation command is described in a syntax that resembles a syntax used in the DVD-Video. Accordingly, it is possible to realize a DVD-Video-like playback control by executing the navigation command.

The BD-J platform 14 is a Java® platform that is an operator of the BD-J mode, and is fully implemented with Java 2 Platform, Micro Edition (J2ME) Personal Basis Profile (PBP 1.0) and Globally Executable MHP specification (GEM 1.0.2) for package media targets. The BD-J platform 14 is composed of a class loader, a byte code interpreter, and an application manager.

The class loader is one of system applications, and loads a BD-J application by reading out byte codes from the class file existing in the JAR archive file, and storing the byte codes into the heap memory.

The byte code interpreter is what is called a Java@ virtual machine. The byte code interpreter converts (i) the byte codes constituting the BD-J application stored in the heap memory and (ii) the byte codes constituting the system application, into native codes, and causes the MPU to execute the native codes.

The application manager is one of system applications, and performs application signaling for the BD-J application (e.g., starts or ends the BD-J application) based on the application management table in the BD-J object. This concludes the internal structure of the BD-J platform.

The middleware 15 is an operating system for the embedded software, and is composed of a kernel and a device driver. The kernel provides the BD-J application with a function unique to the playback device, in response to a call for the Application Programming Interface (API) from the BD-J application. The middleware 15 also realizes control of the hardware, such as starting the interruption handler by sending an interruption signal.

The mode management module 16 holds Index.bdmv that was read out from the BD-ROM, built-in medium drive, or removable medium drive, and performs mode management and branch control. The mode management by the mode management module is module assignment to cause either the BD-J platform or the HDMV module to execute the dynamic scenario.

The user event processing unit 17 receive a user operation via a remote control, and causes the program execution unit 11 or the playback control unit 7 to perform processing as instructed by the received user operation. For example, when the user presses a button on the remote control, the user event processing unit 17 instructs the program execution unit 11 to execute a command included in the button. For example, when the user presses a fast forward or rewind button on the remote control, the user event processing unit 17 instructs the playback control unit 7 to execute the fast forward or rewind processing on the AV stream of the playlist currently being played back.

The local storage 18 includes the built-in medium drive for accessing a hard disk and the removable medium drive for accessing a semiconductor memory card, and stores downloaded additional contents, data to be used by applications, and the like. An area for storing the additional contents is divided into small areas that are in one to one correspondence with BD-ROMs. Also, an area for storing data used by applications is divided into small areas that are in one to one correspondence with applications.

The nonvolatile memory 19 is a recording medium that is, for example, a readable/writable memory, and is a medium such as flash memory or FeRAM that can preserve the recorded data even if power is not supplied thereto. The nonvolatile memory 19 is used to store a backup of data stored in the register set 10.

Next, the internal structures of the system target decoder 4 and the plane memory set 5a will be described. FIG. 32 shows the internal structures of the system target decoder 4 and the plane memory set 5a. As shown in FIG. 32, the system target decoder 4 and the plane memory set 5a include an ATC counter 21, a source depacketizer 22, a PID filter 23, an STC counter 24, an ATC counter 25, a source depacketizer 26, a PID filter 27, a primary video decoder 31, a left-view video plane 32, a right-view video plane 33, a secondary video decoder 34, a secondary video plane 35, a PG decoder 36, a PG plane 37, an IG decoder 38, an IG plane 39, a primary audio decoder 40, a secondary audio decoder 41, a mixer 42, a rendering engine 43, and a GFX plane 44.

The ATC counter 21 generates an Arrival Time Clock (ATC) for adjusting the operation timing within the playback device.

After a source packet is stored in the read buffer 2a, the source depacketizer 22 transfers a TS packet of the source packet to the PID filter. More specifically, the source depacketizer 22 transfers the TS packet to the PID filer according to the recording rate of the AV stream file the moment the value of the ATC generated by the ATC counter and the value of the ATS of the source packet become identical. In transferring the TS packet, the source depacketizer 22 adjusts the time of input into the decoder in accordance with the ATS of the source packet.

The PID filter 23 transfers, from among the TS packets output from the source depacketizer 22, TS packets having a PID that matches a PID required for playback, to the primary video decoder 31, the secondary video decoder 34, the IG decoder 38, the PG decoder 36, the primary audio decoder 40, or the secondary audio decoder 41.

The STC counter 24 generates a System Time Clock (STC) for adjusting the operation timing of each decoder.

The ATC counter 25 generates an Arrival Time Clock (ATC) for adjusting the operation timing within the playback device.

After a source packet is stored in the read buffer 2b, the source depacketizer 26 transfers a TS packet of the source packet to the PID filter. More specifically, the source depacketizer 26 transfers the TS packet to the PID filer according to the system rate of the AV stream the moment the value of the ATC generated by the ATC counter and the value of the ATS of the source packet become identical. In transferring the TS packet, the source depacketizer 26 adjusts the time of input into the decoder in accordance with the ATS of the source packet.

The PID filter 27 transfers, from among the TS packets output from the source depacketizer 26, TS packets having a PID that matches a PID written in the stream selection table of the current playitem, to the primary video decoder, in accordance with the PID.

The primary video decoder 31 decodes the left-view video stream, and writes the decoding results, namely uncompressed video frames, into the left-view video plane 32.

The left-view video plane 32 is a plane memory that can store picture data with a resolution of, for example, 1920 × 2160 (1280 × 1440).

The right-view video plane 33 is a plane memory that can store picture data with a resolution of, for example, 1920 × 2160 (1280 × 1440).

The secondary video decoder 34 has the same structure as the primary video decoder, decodes an secondary video stream input thereto, and writes resultant pictures to the secondary video plane in accordance with respective display times (PTSs).

The secondary video plane 35 stores picture data for the secondary video that is output from the system target decoder 4 as a result of decoding the secondary video stream.

The PG decoder 36 extracts a presentation graphics stream from the TS packets input from the source depacketizer, decodes the extracted presentation graphics stream, and writes the resultant uncompressed graphics data to the PG plane in accordance with respective display times (PTSs).

The PG plane 37 stores an uncompressed graphics object obtained by decoding the presentation graphics stream.

The IG decoder 38 extracts an interactive graphics stream from the TS packets input from the source depacketizer, decodes the extracted interactive graphics stream, and writes the resultant uncompressed graphics object to the IG plane in accordance with respective display times (PTSs).

The IG plane 39 stores graphics data obtained by decoding the interactive graphics stream.

The primary audio decoder 40 decodes the primary audio stream.

The secondary audio decoder 41 decodes the secondary audio stream.

The mixer 42 mixes the decoding result of the primary audio decoder 40 with the decoding result of the secondary audio decoder 41.

The rendering engine 43 decodes graphics data (e.g., JPEG and PNG) used by the BD-J application when rendering a menu.

The GFX plane 44 is a plane memory into which graphics data (e.g., JPEG and PNG) is written after it is decoded.

Next, the internal structure of the primary video decoder 31 will be explained. The primary video decoder 31 is composed of a TB 51, an MB 52, an EB 53, a TB 54, an MB 55, an EB 56, a video decoder 57, a buffer switch 58, a DPB 59, and a picture switch 60.

The Transport Buffer (TB) 51 is a buffer for temporarily storing TS packets containing the left-view video stream as they are, after they are output from the PID filter 23.

The Multiplexed Buffer (MB) 52 is a buffer for temporarily storing PES packets when the video stream is output from the TB to the EB. When the data is transferred from the TB to the MB, the TS headers are removed from the TS packets.

The Elementary Buffer (EB) 53 is a buffer for storing video access units in the encoded state. When the data is transferred from the MB to the EB, the PES headers are removed.

The Transport Buffer (TB) 54 is a buffer for temporarily storing TS packets containing the right-view video stream as they are, after they are output from the PID filter.

The Multiplexed Buffer (MB) 55 is a buffer for temporarily storing PES packets when the video stream is output from the TB to the EB. When the data is transferred from the TB to the MB, the TS headers are removed from the TS packets.

The Elementary Buffer (EB) 56 is a buffer for storing video access units in the encoded state. When the data is transferred from the MB to the EB, the PES headers are removed.

The video decoder 57 generates a frame/field image by decoding each access unit constituting the video elementary stream at predetermined decoding times (DTSs). Since there are various compression encoding methods (e.g., MPEG-2, MPEG-4 AVC, and VC-1) that can be used to compression encode the video stream to be multiplexed on the AV stream file, the decoding method used by the video decoder 57 is selected in accordance with the stream attribute of each stream. When decoding picture data constituting the base-view video stream, the video decoder 57 performs motion compensation using pieces of picture data, which exist in the future and past directions, as reference pictures. When decoding picture data constituting the dependent-view video stream, the video decoder 57 performs motion compensation using pieces of picture data that constitute the base-view video stream as reference pictures. After each picture data is decoded in this way, the video decoder 57 transfers the decoded frame/field image to the DPB 59, and transfers the corresponding frame/field image to the picture switch at the display time (PTS) assigned thereto.

The buffer switch 58 determines from which one of the EB 53 and the EB 56 the next access unit should be extracted, by using the decode switch information obtained when the video decoder 57 decoded the video access units, and transfers a picture from the EB 53 or the EB 56 to the video decoder 57 at the decoding time (DTS) assigned to the video access unit. Since the DTSs of the left- and right-view video streams are set to alternate on the time axis on a per-picture basis, it is preferable that the video access units are transferred to the video decoder 57 on a per-picture basis when, for example, decoding is performed ahead of schedule regardless of the DTSs.

The Decoded Picture Buffer (DPB) 59 is a buffer for temporarily storing the decoded frame/field image. The DPB 59 is used by the video decoder 57 to refer to the decoded pictures when the video decoder 57 decodes a video access unit such as the P-picture or the B-picture having been encoded by the inter-picture predictive encoding.

When the decoded frame/field image transferred from the video decoder 57 is to be written into a video plane, the picture switch 60 switches the writing destination between the left-view video plane and the right-view video plane. When the left-view stream is being processed, uncompressed picture data is instantaneously written into the left-view video plane. When the right-view stream is being processed, uncompressed picture data is instantaneously written into the right-view video plane.

FIG. 33 shows the internal structure of the plane composition unit 5b. The plane composition unit 5b includes: cropping units 61a, 61b, and 61c for cropping uncompressed picture data and graphics data stored in the planes based on the 3D metadata; a cropping unit 61d for cropping uncompressed graphics data stored in a plane based on the program API; a switch 62 for switching between the left-view video plane 32 and the right-view video plane 33 to receive an output therefrom; and composition units 63, 64, 65, and 66 for compositing the planes.

The plane memory set 5a includes a left-view video plane, a right-view video plane, a secondary video plane, a PG plane, an IG plane, and a GFX plane, which are arranged in the stated order. The system target decoder 4 writes image data into the left- or right-view video plane at the timings the corresponding PTS.

Based on the value set to the PSR 22 and the duplicate flag assigned to the playitem currently being played back, the switch 62 connects to the left- or right-view video plane, and establishes a connection path with the connected plane so as to receive data via the connection path. Once the switch 62 has selected one of the planes that is connected thereto along the connection path, the switch 62 transfers data received from the selected plane. The transferred data is superimposed with data in the secondary video plane, the PG plane and the IG plane.

In this method, different contents are stored into the left- and right-view video planes to realize the stereoscopic view. However, even if the same content is stored into the left- and right-view video planes, it is possible to realize pseudo stereoscopic view by assigning different coordinates to the pixels in the left- and right-view video planes. Among the above-described plane memories, the PG plane realizes stereoscopic view by changing the coordinates of pixels in the plane memory. The following describes how the stereoscopic view is realized by the PG plane.

FIG. 34 shows how the PG plane is composited.

A description is now given of a method of compositing planes, by taking an example of the PG plane shown in FIG. 34. The plane composition unit 5b obtains an offset value that corresponds to the current display time, from among the offset entries existing in the 3D metadata and corresponding to the PIDs of the presentation graphics currently being played back. When the image plane to be superimposed is the left-view video plane, the plane composition unit 5b shifts the coordinates of the image data stored in the PG plane towards the positive direction along the X-axis by the offset value. The plane composition unit 5b then crops the PG plane in such a manner that the cropped PG plane would fit within the left-view video plane, and provides the PG plane so that the PG plane can be composited with the other planes (see the upper row of FIG. 34).

When the image plane to be superimposed is the right-view video plane, the plane composition unit 5b shifts the coordinates of the image data stored in the PG plane towards the negative direction along the X-axis by the offset value. The plane composition unit 5b then crops the PG plane in such a manner that the cropped PG plane would fit within the right-view video plane, and superimposes the cropped PG plane (see the lower row of FIG. 34). The IG plane and the secondary video plane are processed in the same manner.

FIG. 35 schematically shows how a plane is displayed to the user after being cropped and superimposed with use of the offset values. By shifting and cropping the plane with use of the offset values, it is possible to create parallax images for the left and right eyes. This makes it possible to give depth to a 2D image. By giving depth to a 2D image, the viewer recognizes that the 2D image looks as if it is extending out of the front of the screen of the display image.

This concludes the description of plane composition. The following describes an internal structure of the register set 10 and the detail of the playback control engine 7b.

FIG. 36 shows the internal structures of the register set 10 and the playback control engine 7b.

The left-hand side of FIG. 36 shows the internal structure of the register set 10, and the right-hand side shows the internal structure of the playback control engine 7b.

The values stored in the PSRs (see FIG. 36) are referenced and updated by the movie object and the BD-J application as necessary. As shown in FIG. 36, the values stored in the PSRs are parameters referenced by the movie object and the BD-J application, and thus are also called system parameters.

First, representative PSRs will be described.

PSR 1 is a stream number register for the audio stream, and stores a current audio stream number.

PSR 2 is a stream number register for the PG stream, and stores a current PG stream number.

PSR 4 is set to a value ranging from "1" to "100" to indicate a current title number.

PSR 5 is set to a value ranging from "1" to "999" to indicate a current chapter number; and is set to a value "0xFFFF" to indicate that the chapter number is invalid in the playback device.

PSR 6 is set to a value ranging from "0" to "999" to indicate a current playlist number.

PSR 7 is set to a value ranging from "0" to "255" to indicate a current playitem number.

PSR 8 is set to a value ranging from "0" to "0xFFFFFFFF" to indicate a current playback time point (current PTM) with the time accuracy of 45 KHz.

PSR 10 is a stream number register for the IG stream, and stores a current IG stream number.

PSR 21 indicates whether or not the user intends to perform stereoscopic playback. A value is set to the PSR 21 via the navigation of the BD program file, API, or the OSD of the player. The remote control 500 has a "2D/3D switch button". When the user event processing unit 17 notifies that the 2D/3D switch button is held down at an arbitrary timing (e.g., during playback of a 3D playlist), the value of the PSR 21 is reset-i.e., changed from a value indicating stereoscopic playback to a value indicating 2D playback, or vice versa. This way, the user's preference can be taken into consideration.

PSR 22 indicates a display type value.

PSR 23 is used to set "Display Capability for 3D". This indicates whether or not the display device connected to the playback device is capable of performing stereoscopic playback.

PSR 24 is used to set "Player Capability for 3D". This indicates whether or not the playback device is capable of performing stereoscopic playback. The "Player Capability for 3D" stored in the PSR 24 means 3D playback capability of the playback device as a whole, and thus may be simply referred to as "3D-Capability".

On the other hand, the playback control engine 7b includes a procedure execution unit 8 for uniquely determining the display type of the current playlist by referring to the PSR 4, PSR 6, PSR 21, PSR 23, and PSR 24 in the register set 10, and the stream selection table of the current playlist information in the management information memory 9.

When the value of the PSR 21 is changed during playback of a 3D playlist, the procedure execution unit 8 resets the display type value of the PSR 22 by following the processing procedure shown in FIG. 37. To be more specific, the procedure execution unit 8 sets the PSR 22 to indicate the "L-R display type" (Step S114) when the following conditions are all met: (i) the PSR 24 for indicating "Player Capability for 3D" stores a value "1", i.e., the playback device has the stereoscopic playback capability (Step S111: YES); (ii) the PSR 21 for indicating the display type set by the user stores a value indicating the "stereoscopic playback" (Step S112: YES); and (iii) the PSR 23 for indicating "Display Capability for 3D" stores a value "1", i.e., the display device connected to the playback device is capable of performing stereoscopic playback (Step S113: YES). On the other hand, the procedure execution unit 8 sets the PSR 22 to indicate the "L-L display type" when the PSR 21, PSR 23 and PSR 24 are set to values other than the values described above (Step S 115).

This concludes the description of the register set 10.

Note, the playback device 200 of the present embodiment is a 3D/2D playback device capable of playing back 3D video. However, a 2D playback device plays back 2D video by referring only to a 2D playlist describing a playback path along which 2D video is played back.

A description is now given of a mechanism of a 2D playback device to play back a 2D playlist.

FIG. 38 shows a relationship between the index file (Index.bdmv) and the BD program file (AAA.PRG). 2D and 3D playlists are recorded on a BD-ROM having recorded thereon 3D video. Here, the 2D and 3D playlists describe playback paths along which the 2D and 3D videos are played back, respectively. When the user has selected and executed a title from the BD program file, the program of the BD program file checks (i) whether the playback device supports video playback, and (ii) if the playback device does support video playback, whether the user has selected 3D video playback. The playback device accordingly switches to a playlist to be played back.

FIG. 39 is a flowchart according to which a 2D or 3D playlist is selected by the program of the BD program file.

In S1, the value of the PST 24 is checked. When the value of the PST 24 is "0", it means that the playback device is a 2D playback device, and therefore 2D video is played back. When the value of the PST 24 is "1", processing moves to S2.

In S2, the program displays a menu screen and makes an inquiry to the user as to whether he/she desires playback of 2D video or 3D video. The user selects one of the 2D and 3D videos via, for example, a remote control. When the user desires playback of the 2D video, the 2D playlist is played back. When the user desires playback of the 3D video, processing moves to S3.

In S3, the program checks whether the display supports playback of the 3D video. For example, the program connects the playback device to the display using the HDMI connection, so that the playback device can make an inquiry to the display as to whether the display supports playback of the 3D video. When the display does not support playback of the 3D video, the 2D playlist is played back. Here, alternatively, the program may present, on the menu screen or the like, a notification for notifying the user that the television does not support playback of the 3D video. When the display supports playback of the 3D video, the 3D playlist is played back.

Note, the prefix numbers (e.g., XXX in the case of XXX.mpls) given to the file names of the 2D and 3D playlists may be consecutive. This makes it easy to identify the 3D playlist corresponding to the 2D playlist. This concludes the description of selection of 2D and 3D playlists.

<How to Seamlessly Switch between Stereoscopic Playback and 2D Playback>

When the user selects 2D video playback during 3D video playback (stereoscopic playback), it is necessary to switch to 2D playback at an arbitrary timing. Similarly, when the user selects 3D (stereoscopic) video playback during 2D video playback, it is necessary to switch from 2D playback to stereoscopic playback smoothly. One example of the latter case is when the user desires to switch from stereoscopic playback to 2D playback due to eye strain.

One method of switching from 3D video playback to 2D video playback is to switch from playback of a 3D playlist, which stores the playback path along which the 3D video is played back, to playback of a 2D playlist, which stores the playback along which the 2D video is played back. According to this method, for example, while playing back the 3D video from the 3D playlist, the user issues an instruction to switch from the 3D video playback to the 2D video playback via a menu or the like displayed by the BD program file. In response to this instruction, the BD program file halts the playback of the 3D playlist, and specifies/selects the 2D playlist corresponding to this 3D playlist. Then, the BD program file specifies the playback start point of the specified/selected 2D playlist, which corresponds to the time at which the playback of the 3D playlist is halted, and performs jump playback from this specified playback start point. In the above manner, the playback device transitions from the 3D video playback to the 2D video playback. However, use of this method requires processing of (i) halting the playback of the 3D playlist and (ii) executing the BD program file. In other words, use of this method gives rise to the problem that the playback device cannot switch from the 3D video playback to the 2D video playback seamlessly.

Furthermore, when switching to 2D video playback during 3D video playback, the playback device needs to transition from the processing of alternately outputting pictures of the left- and right-view video streams to the processing of only outputting pictures of the left-view video stream. More specifically, the frame rate at which the pictures are output has to change from a 48 Hz frame rate to a 24 Hz frame rate. As a result, the playback device and the television must re-establish synchronization with each other (i.e., reset the HDMI connection therebetween). That is, delay is caused when switching from the 3D video playback to the 2D video playback. In view of this problem, there needs to be a mechanism that does not make the playback device change the frame rate.

Described below is a method of seamlessly switching between 3D (stereoscopic) playback and 2D playback.

As shown in FIG. 40, this method allows the playback device to change video to be output to the television according to the setting of the PSR 22, even when the left- and right-view video streams for playing back the 3D video are being referenced by the 3D playlist. To be more specific, when the PSR 22 is set to the "L-R display type", the display device alternately outputs pictures of the 24 Hz left-view video stream and pictures of the 24 Hz right-view video stream both at a 48 Hz frame rate. When the PSR 22 is set to the "L-L display type", the display device performs duplicate playback of only the left-view video stream, which is the base-view video stream (in other words, the display device outputs each picture of the left-view video stream twice, at a 48 Hz frame rate). This way, pictures are output at the same frame rate both before and after the display type is changed.

The value of the PSR 22 is changed when the PSR 21 indicating the display type set by the user is changed via, for example, the navigation command of the BD program file, API, OSD of the player, or button operations of the remote control 500. This enables a status change during playback. In the example of FIG. 40, an output status is changed during playback of the 3D playlist. That is to say, although the 3D video is displayed on the television until the time t1 (i.e., while the display type is the "L-R display type"), the 2D video is displayed in a time period between the times t1 and t2, during which the display type the "L-L display type". At the time t2 onward, the display type is again set to the "L-R display type" and the 3D video is displayed on the television. Nonetheless, as pictures are output to the television at a 48 Hz frame rate at any time, there will be no need to re-establish synchronization, or reset the HDMI connection, between the playback device and the television. This makes it possible to seamlessly switch between 3D (stereoscopic) playback and 2D playback.

With the above structure, there is no need to switch from one playlist to another upon switching from 3D video playback to 2D video playback. During the 3D video playback, the user can dynamically switch to the 2D video playback. Furthermore, as pictures of the 2D video are played back in duplicate, it is required to neither play back pictures of the 3D video, nor switch change the frame rate. This makes it possible to seamlessly switch between 3D video playback and 2D video playback without causing any delay.

Operations of the plane composition unit 5b make it possible to seamlessly switch between 3D (stereoscopic) playback and 2D playback as shown in FIG. 40. At this time, the video decoder alternately decodes, in an ordinary manner, pictures of the left- and right-view video streams referenced by the 3D playlist in accordance with the timings shown by the DTSs. The decoded pictures are stored into the corresponding plane memories in accordance with the timings shown by the PTSs.

Meanwhile, the switch 62 of the plane composition unit 5b follows the procedure shown in FIG. 41 to switch between plane memories from which picture data is obtained. FIG. 41 is a flowchart of the switch control performed by the switch 62. When the value of the PSR 22 indicates the L-R display type (Step S101: Yes), the switch 62 connects to the current-view plane memory (Step S102). When the value of the PSR 22 indicates the L-L display type (Step S101: NO), the switch 62 connects to the left-view video plane 32 (Step S103).

After the switch 62 has performed the switch control, data stored in each plane of the plane memory set 5a is read and transferred and subjected to the superimposition processing. Subsequently, the current view is changed (Step S104), and processing moves to Step S101. The plane composition unit 5b repeats the sequence of processing of Steps S101 through S105 at 48 Hz. Note, the current view is a left view at the start of playback of a video stream. Each time processing of Step S105 is executed, the current view is changed alternately, i.e., the left view is changed to the right view, and vice versa.

The above switch control performed by the switch 62 allows (i) outputting 3D video at a 48 Hz frame rate when the PSR 22 indicates the "L-R display type", and (ii) outputting 2D video at a 48 Hz frame rate when the PSR 22 indicates the "L-L display type".

Note that it is possible to seamlessly switch between the 3D (stereoscopic) playback and the 2D playback as shown in FIG. 40 by changing the processing performed by the primary video decoder 31, instead of by changing the processing performed by the plane composition unit 5b. FIG. 42 shows the structure of the primary video decoder 31 that realizes the seamless switching between 3D video playback and 2D video playback.

The playback control unit 7 notifies the primary video decoder 31 of a notification indicating the display type set to the PSR 22. When the display type is the L-R display type, the picture switch 60 outputs each of the decoded pictures of the left- and right-view video streams, which have been transferred from the decoder 57, to the corresponding video plane at the timing shown by the corresponding PTS. When the display type is the L-L display type, the picture switch 60 outputs (i) the decoded picture of the left-view video stream, which has been transferred from the decoder 57, to the left-view video plane at the timing shown by the corresponding PTS, and (ii) this decoded picture of the left-view video stream to the right-view video plane at the timing obtained by adding the 3D display delay to said PTS.

The above structure enables the seamless switching between the 3D (stereoscopic) playback and the 2D playback.

As set forth above, when the playback device is of the L-R display type, the present embodiment allows alternately outputting pieces of picture data obtained from the left- and right-video video streams. On the other hand, when the playback device is of the L-L display type, the present embodiment allows outputting each picture data obtained from the left-view video stream twice in succession. This way, the 3D video, which is output when the display type is the L-R display type, and the 2D video, which is output when the display type is the L-L display type, are output at the same frame rate. Consequently, there is no need to re-establish synchronization, or reset the HDMI connection, between the playback device and the display device upon switching between the 3D video and the 2D video, thus enabling seamless playback of the 3D video and the 2D video.

It has been described in the present embodiment that the 2D playback device is configured to play back the left-eye video as 2D video. However, it goes without saying that the present embodiment can still achieve the same effects when the 2D playback device is configured to play back the right-eye video as 2D video.

It has been described above that the present invention is a method of recording 3D video. The present invention may also be utilized when recording high frame rate video. The high frame rate video is composed of (i) odd-numbered frame video, which stores odd-numbered frames extracted from the high frame rate video, and (ii) an even-numbered frame video, which stores even-numbered frames extracted from the high frame rate video. By recording the odd-numbered frame video and the even-numbered frame video respectively as the 2D/left-eye video and the right-eye video by using the data structure described in the present embodiment, it is possible to obtain the same effects as when the 3D video is recorded. More specifically, with use of a BD-ROM on which the above high frame rate video has been recorded in accordance with the present embodiment, the 2D playback device can play back the odd-numbered frame video, whereas the 2D/3D playback device can playback either the odd-numbered frame video or the high frame rate video. Therefore, such a BD-ROM is compatible with and playable on both the 2D playback device and the 2D/3D playback device.

<Modification 1 of First Embodiment>

As shown in FIG. 43, the PSR 22 may indicate three display types, namely the "L-R display type", "L-L display type", and "2D normal display type". Here, the "L-R display type" and "L-L display type" are identical to the "L-R display type" and "L-L display type" illustrated in FIG. 40. The "2D normal display type" indicates that pieces of picture data of only the left-view video stream are each played back once.

According to the structure shown in FIG. 43, pictures are output at a 48 Hz frame rate in a playback section in which the display type is the "L-R display type" or "the L-L display type", whereas pictures are output at a slower frame rate, namely at a 24 Hz frame rate, in a playback section in which the display type is the "2D normal display type". Accordingly, it becomes necessary to reset the HDMI connection and switch from one frame rate to another at the boundary between (i) the playback section in which the display type is the "L-R display type" or "L-L display type" and (ii) the playback section in which the display type is the "2D normal display type". This causes delay, and therefore cannot realize seamless switching between 3D video playback and 2D video playback. However, the structure shown in FIG. 43 is still beneficial in that, when the television suffers processing load (e.g., consumers a large amount of power) in performing playback at a high frame rate, the structure can reduce such processing load especially during 2D video playback.

As shown in FIG. 44, the display type set to the PSR 22 may be utilized not only during a playback section in which 3D video storing left- and right-view video streams is played back, but also during a playback section in which 2D video storing only a left-view video stream is played back. In this case also, there are three display types that have been mentioned above, namely the "L-R display type", "L-L display type", and "2D normal display type"; however, during the playback section in which the 2D video storing only the left-view video stream is played back, the "L-R display type" status is not applicable. The 2D/3D playback device performs playback processing according to the display type. Each playback section includes different playitems and the like. The playitems are configured such that they are seamlessly connected to one another according to the corresponding connection conditions. The structure shown in FIG. 44 enables the user to freely switch between 3D video playback and 2D video playback, even when a playback section in which the 3D video is played back and a playback section in which the 2D video is played back coexist in a 3D playlist.

Note, when the playback device transitions into a playback section in which 2D video storing only the left-view video stream is played back while the display type is set to the "L-R display type", the PSR 22 is changed to the "L-L display type". This way, the 2D video can be played back at a frame rate at which the 3D video was played back. Consequently, the 3D video playback can be succeeded by the 2D video playback without changing a frame rate.

Also, when the playback device transitions into a playback section in which 2D video storing only the left-view video stream is played back while the display type is set to the "L-R display type", the duplicate flag assigned to this playback section may be prioritized. For example, the display type may be changed while giving priority to information (e.g., the aforementioned duplicate flag) assigned to the playback section. When the duplicate flag shows "duplicate playback", the PSR 22 is changed to indicate the "L-L display type". When the duplicate flag shows "normal playback", the PSR 22 is changed to indicate the "2D normal playback type".

<Modification 2 of First Embodiment>

An entry map may be configured such that, as shown in FIG. 45, an extent start flag (EXTSTART) is added to information on each entry point. The extent start flag is set to "1" when the SPN indicated by the corresponding entry point is at the start of an extent constituting an AV stream file, and "0" when the SPN indicated by the corresponding entry point is not at the start of an extent constituting an AV stream file. This allows obtaining the size of each extent from information of the corresponding entry map, thus making it easy for the 2D/3D playback device to perform processing of alternately playing back the AV streams on a per-extent basis. FIG. 46 schematically shows relationships between entry points and AV streams. For example, the AV stream file shown in FIG. 46 can be played back from the beginning as 3D video as follows. Firstly, a read size of the first extent in the left-view AV stream is calculated based on a difference between (i) the SPN of the entry point #1 whose extent start flag shows "1" and (ii) the SPN of the next entry point #2 whose extent start flag shows "1". Thereafter, the BD-ROM drive is requested to read the first extent in the left-view AV stream. Then, a read size of the first extent in the right-view AV stream is calculated based on a difference between (i) the SPN of the entry point #3 whose extent start flag shows "1" and (ii) the SPN of the next entry point #4 whose extent start flag shows "1". Thereafter, the BD-ROM drive is requested to read the first extent in the right-view AV stream. By thus performing the read processing alternately for the left- and right-view AV streams, extents of the left- and right-view AV streams can be read alternately one by one, even when there is no information on extents of the file system. Consequently, the BD-ROM drive can perform playback consecutively without any jumps.

In a case where an extent starts with a TS packet including the head of the I-picture that is located at the start of a GOP constituting a left-view video stream of a left-view AV stream, an entry point must also be created. Similarly, in a case where an extent starts with a TS packet including the head of the picture that is located at the start of a right-eye GOP constituting a right-view video stream of a right-view AV stream, an entry point must also be created.

It has been described above that an extent start flag is added to each entry point of an entry map. However, an entry map is provided with a one-bit flag called an angle switch flag, which indicates a timing to switch to a different angle during multi-angle playback. In order to reduce the bit size, the extent start flags may be combined with the angle switch flag. In this case, the entry map header information may be provided with a flag indicating whether this one-bit field is the "extent start flag" or the "angle switch flag". Here, the 2D/3D playback device interprets the meaning of this one-bit field in the entry map by checking said flag provided to the entry map header information, and switch to proper processing according to the result of this check.

It has been described above that an extent start flag is added to each entry point of an entry map. The present invention, however, is not limited to this. The extent start flag may be replaced by any information that can identify the extent sizes of the corresponding AV stream. For example, the extent sizes of the corresponding AV stream may be listed and stored in a clip information file as metadata. Alternatively, a sequence of bits may be reserved in one to one correspondence with entry points of an entry map, so as to indicate that (i) each entry point is at the start of an extent when the corresponding bit shows "1", and (ii) each entry point is not at the start of an extent when the corresponding bit shows "0" .

**[Second Embodiment]**

This Second Embodiment section discusses a playback method and a playback device to be utilized in a case where a picture cannot be decoded due to damage during playback of 3D video recorded on a BD-ROM.

The upper row of FIG. 48 exemplarily shows pictures of left- and right-view video streams to be played back as 3D video, in the order in which they are displayed. The upper row of FIG. 48 indicates that there are pictures that cannot be decoded due to occurrence of some error (e.g., a syntax error) during playback. These pictures that cannot be decoded due to occurrence of such an error are referred to as damaged pictures 6501. Displaying the damaged pictures 6501, which are included in the right-view video stream, would bring discomfort to the viewer.

In light of the above problem, a playback device pertaining to Second Embodiment displays pictures during 3D video playback as shown in the lower row of FIG. 48. To be more specific, when the right-view video stream includes the damaged pictures 6501, the playback device displays, in replacement of the damaged pictures 6501, pictures of the left-view video stream that are each to be displayed paired with a corresponding one of the damaged pictures 6501. These pictures of the left-view video streams are hereafter referred to as "damaged picture counterparts 6502".

The following describes a playback device that has been modified to execute the above method. The playback device pertaining to the present embodiment comprises a modified version of the primary video decoder included in the playback device 200 described in First Embodiment. FIG. 47 shows the structure of a primary video decoder included in the playback device pertaining to Second Embodiment. The PTSs of the damaged picture counterparts 6502 of the left-view video stream, which are supposed to be displayed paired with the damaged pictures 6501, are each obtained by subtracting a 3D display delay from the PTS of a corresponding one of the damaged pictures 6501. Accordingly, when the video decoder 57 notifies the picture switch 60 that the right-view video stream includes the damaged pictures 6501, the system target decoder 4 (i) searches for pictures of the left-view video stream that are assigned PTSs whose values are respectively obtained by subtracting the 3D display delay from values of PTSs assigned to the damaged pictures 6501, then (ii) outputs, to the right-view video plane, the pictures that have been found as a result of the search. The above structure can prevent presentation of the damaged pictures to the viewer, thus reducing the level of discomfort that the viewer would have to feel.

As one modification of the present embodiment, the playback device may display pictures during 3D video playback as shown in the lower row of FIG. 49. To be more specific, when the right-view video stream includes the damaged pictures 6501, the display device may display, in replacement of the damaged pictures 6501, pictures of the right-view video stream that each immediately precede the corresponding damaged picture 6501. The following describes a display device whose functions have been extended to execute the above method. When the video decoder 57 notifies the picture switch 60 that the right-view video stream includes the damaged pictures 6501, the system target decoder 4 discards the damaged pictures 6501 without outputting them to the right-view video plane. This leaves, in the right-view video plane, pictures of the right-view video stream that each immediately precede the corresponding damaged picture 6501. As a result, these pictures that are left in the right-view video plane in replacement of the damaged pictures 6501 are subjected to the superimposition processing performed by the plane composition unit 5b. The above structure can prevent presentation of the damaged pictures to the viewer, thus reducing the level of discomfort that the viewer would have to feel.

As another modification, the 2D/3D playback device may display pictures during 3D video playback as shown in the lower row of FIG. 50. To be more specific, when the right-view video stream includes the damaged pictures 6501, the 2D/3D display device may (i) display, in replacement of the damaged pictures 6501, pictures of the right-view video stream that each immediately precede the corresponding damaged picture 6501, and (ii) display, in replacement of the damaged picture counterparts 6502 that are each supposed to be displayed paired with the corresponding damaged picture 6501, pictures of the left-view video stream that each immediately precede the corresponding damaged picture counterpart 6502. The following describes a 2D/3D display device whose functions have been extended to execute the above method. When the video decoder 57 notifies the picture switch 60 that the right-view video stream includes the damaged pictures 6501, the system target decoder 4 discards the damaged pictures 6501 without outputting them to the right-view video plane. This leaves, in the right-view video plane, pictures of the right-view video stream that each immediately precede the corresponding damaged picture 6501. As a result, these pictures that are left in the right-view video plane in replacement of the damaged pictures 6501 are subjected to the superimposition processing performed by the plane composition unit 5b. Similarly, when the video decoder 57 notifies the picture switch 60 that the right-view video stream includes the damaged pictures 6501, the system target decoder 4 identifies the damaged picture counterparts 6502 that (i) are each supposed to be displayed paired with the corresponding damaged picture 6501, and (ii) each have the same PTS as the corresponding damaged picture 6501. Then, the system target decoder 4 discards these damaged picture counterparts 6502 without outputting them to the left-view video plane. This leaves, in the left-view video plane, pictures of the left-view video stream that each immediately precede the corresponding damaged picture counterpart 6502. As a result, these pictures that are left in the left-view video plane in replacement of the damaged picture counterparts 6502 are subjected to the superimposition processing performed by the plane composition unit 5b. The above structure can prevent presentation of the damaged pictures to the viewer, thus reducing the level of discomfort that the viewer would have to feel.

As yet another modification, the 2D/3D playback device may display pictures during 3D video playback as shown in the lower row of FIG. 51. To be more specific, when the right-view video stream includes the damaged pictures 6501, the 2D/3D display device may display, in replacement of the damaged pictures 6501, a pre-prepared supplementary picture 6801 having a single black color. The following describes a 2D/3D display device whose functions have been extended to execute the above method. When the video decoder 57 notifies the picture switch 60 that the right-view video stream includes the damaged pictures 6501, the system target decoder 4 outputs, to the right-view video plane, the supplementary picture 6801 at the timings shown by the PTSs of the damaged pictures 6501. The above structure can prevent presentation of the damaged pictures to the viewer, thus reducing the level of discomfort that the viewer would have to feel.

As yet another modification, the 2D/3D playback device may display pictures during 3D video playback as shown in the lower row of FIG. 52. To be more specific, when the right-view video stream includes the damaged pictures 6501, the 2D/3D display device may display the supplementary picture 6801 in replacement of the damaged pictures 6501 and the damaged picture counterparts 6502. The following describes a 2D/3D display device whose functions have been extended to execute the above method. When the right-view video stream includes the damaged pictures 6501, the system target decoder 4 outputs, to the right-view video plane, the supplementary picture 6801 at the timings shown by the PTSs of the damaged pictures 6501. Similarly, when the right-view video stream includes the damaged pictures 6501, the system target decoder 4 (i) identifies the damaged picture counterparts 6502 that are each supposed to be displayed paired with the corresponding damaged picture 6501, and (ii) outputs, to the left-view video plane, the supplementary picture 6801 at the timings shown by the PTSs of the damaged picture counterparts 6502. The above structure can prevent presentation of the damaged pictures to the viewer, thus reducing the level of discomfort that the viewer would have to feel.

As yet another modification, the 2D/3D playback device may display pictures during 3D video playback as shown in the lower row of FIG. 53. To be more specific, when the right-view video stream includes the damaged pictures 6501, the 2D/3D display device may (i) generate supplementary pictures 6801 from (a) pictures of the right-view video stream that each immediately precede the corresponding damaged picture 6501 and (b) the damaged picture counterparts 6502, and (ii) display the supplementary pictures 6801 in replacement of the damaged pictures 6501. The following describes a 2D/3D display device whose functions have been extended to execute the above method. When the right-view video stream includes the damaged pictures 6501, the system target decoder 4 (i) generates supplementary pictures 6801 from (a) pictures of the right-view video stream that each immediately precede the corresponding damaged picture 6501 and (ii) the damaged picture counterparts 6502, and (ii) outputs, to the right-view video plane, the supplementary pictures 6801 at the timings shown by the PTSs of this damaged pictures 6501. The above structure can prevent presentation of the damaged pictures to the viewer, thus reducing the level of discomfort that the viewer would have to feel.

The above has discussed the playback method and the playback device to be utilized in a case where pictures cannot be decoded due to damage. Although it has been described that the damaged pictures 6501 are included in the right-view video stream, it goes without saying that the above-described structures are also applicable in a case where the damaged pictures 6501 are included in the left-view video stream (in this case, the processing performed with respect to the left-view video stream and the processing performed with respect to the right-view video stream are interchanged). It should be noted that as has been described in the present embodiment, in a case where the pictures of the right-view video stream are configured to refer to the pictures of the left-view video stream, a damaged picture counterpart of the right-view video stream that corresponds to a damaged picture of the left-view video stream would also become a damaged picture. For this reason, when the left-view video stream includes one or more damaged pictures, it is effective to use methods of replacing both of the damaged picture(s) and the damaged picture counterpart(s) with other pictures-i.e., it is effective to use the methods explained with reference to FIGs. 50 and 52.

## [Third Embodiment]

This Third Embodiment section discusses pause processing of pausing 3D video recorded on a BD-ROM.

As shown in FIG. 54, when the user issues an instruction to pause playback of 2D video, a playback device decodes a picture of the 2D video that is displayed at the time of issuance of the pause instruction, and keeps outputting the decoded picture at a frame rate to which the video stream conforms until an instruction to cancel the pause is issued. On the other hand, there are two methods to be executed by a playback device when the user issues an instruction to pause playback of 3D video: the first method, which is shown in FIG. 55A, is to decode a picture of a left- or right-view video that is displayed at the time of issuance of the pause instruction, and keep outputting the decoded picture until an instruction to cancel the pause is issued; the second method, which is shown in FIG. 55B, is to decode a pair of pictures of the left- and right-view videos that are displayed at the time of issuance of the pause instruction and keep outputting the decoded pair of pictures until the instruction to cancel the pause is issued. Note, there may be two types of commands for issuing a pause instruction and two types of APIs, so that the above two methods can be distinguished from each other based on the BD program file or the like.

The following describes a 2D/3D playback device whose functions have been extended to execute the above methods of performing pause processing during 3D video playback.

Firstly, below is a description of a 2D/3D playback device whose functions have been extended to execute the first method of displaying a picture of one of the 2D/left-eye video and the right-eye video at the time of issuance of the pause instruction. Upon receiving the pause instruction from the user event processing unit 17 or the program execution unit 11, the playback control unit 7 of the 2D/3D playback device 200 issues a decode cease instruction to the BD-ROM drive 1 and the system target decoder 4. Upon receiving the decode cease instruction, the BD-ROM drive 1 ceases read-out of data from the BD-ROM disc. Upon receiving the decode cease instruction, the system target decoder 4 ceases decoding as well as outputting of audio to the speaker. Here, if a picture is being written into the left- or right-view video plane at the time of receiving the decode cease instruction, the system target decoder 4 waits until writing of this picture is completed, and notifies the plane composition unit 5b of the pause status. As shown in FIG. 56, the plane composition unit 5b receives the pause status from the system target decoder. The pause status includes a flag indicating into which one of the left- and right-view video planes the last picture output by the system target decoder has been written. When the last picture decoded and output by the system target decoder has been written into the left-view video plane, the switch 62 of the plane composition unit 5b selects the left-view video plane as a video plane targeted for superimposition processing. On the other hand, when the last picture decoded and output by the system target decoder has been written into the right-view video plane, the switch 62 of the plane composition unit 5b selects the right-view video plane as a video plane targeted for superimposition processing. The plane composition unit 5b performs processing of superimposing the selected video plane with other planes at intervals equivalent to the frame rate at which 3D video is played back (double the frame rate at which 2D video is played back).
Secondly, below is a description of a 2D/3D playback device whose functions have been extended to execute the second method of displaying a pair of pictures of the 2D/left-eye video and the right-eye video displayed at the time of issuance of the pause instruction. Upon receiving the pause instruction from the user event processing unit 17 or the program execution unit 11, the playback control unit 7 of the 2D/3D playback device 200 issues a decode cease instruction to the BD-ROM drive 1 and the system target decoder 4. Upon receiving the decode cease instruction, the BD-ROM drive 1 ceases read-out of data from the BD-ROM disc. Upon receiving the decode cease instruction, the system target decoder 4 ceases decoding as well as outputting of audio to the speaker. Here, if a picture is being written to the left- or right-view video plane at the time of receiving the decode cease instruction, the system target decoder 4 waits until writing of this picture is completed. Also, if the last picture has been output to the left-view video plane (i.e., the last picture that has been output is of the left-view video stream), the system target decoder 4 further waits until a picture of the right-view video stream, which is to be displayed paired with the last picture output to the left-view video plane, is decoded and output to the right-view video plane. The system target decoder 4 then notifies the plane composition unit 5b of the pause status. Upon receiving the pause status from the system target decoder, the plane composition unit 5b alternately performs (i) processing of superimposing the left-view video plane with other planes and (ii) processing of superimposing the right-view video plane with other planes, at intervals equivalent to the frame rate at which 3D video is played back.

This concludes the description of the pause processing of pausing the 3D video.

## [Fourth Embodiment]

This Fourth Embodiment section discusses the data structure of still images constituting 3D video and a playback method and a playback device for playing back the still images.

First, the following describes the data structure of still images constituting 3D video and a playback method for playing back the still images.

FIG. 57 shows GOP structures of still images. A GOP of a left-view video stream stores a video access unit of an I-picture. Stored at the end of the video access unit of the I-picture is a sequence end code 6401 for notifying the primary video decoder 31 of the end of the video sequence (note, the sequence end code 6401 is Sequence_end_code in the case of MPEG-2, and EndOfSequence in the case of MPEG-4 AVC). A right-eye GOP of a right-view video stream stores a video access unit of a picture to be displayed paired with the first I-picture of the corresponding GOP of the left-view video stream. A PTS assigned to this picture shows the same time as a PTS assigned to the first I-picture of the corresponding GOP of the left-view video stream. Stored at the end of the first picture of the right-eye GOP is a sequence end code 6402 for notifying the primary video decoder 31 of the end of the video sequence.
Below is a description of a 2D/3D playback device whose functions have been extended to play back still images constituting 3D video. Assume a case where the 2D/3D playback device attempts to play back the left-view video stream including the still images shown in FIG. 57 as 2D video. In this case, if the video access unit of this still image stores the sequence end code 6401, the primary video decoder 31 of the 2D/3D playback device ceases decode processing after having decoded this video access unit. This way, the decode processing is not performed even if the next video access unit is input to the primary video decoder 31, thus realizing playback of the still image. The next still image is played back when the decode processing is resumed by the playback control unit or the like issuing a decode start instruction.

On the other hand, in a case where the 2D/3D playback device attempts to play back the left-and right-view video streams including the still images shown in FIG. 57 as 3D video, the primary video decoder 31 ignores the sequence end code 6401 stored in the video access unit of the left-view video stream, and only refers to the sequence end code 6402 stored in the video access unit of the right-view video stream. That is to say, if the sequence end code 6402 is stored in the video access unit of the right-view video stream, the primary video decoder 31 ceases decode processing after having decoded this video access unit. This structure enables playback of both still images constituting the 2D video and still images constituting the 3D video.

It has been described above that the sequence end code 6402, which is identical to the sequence end code 6401 of the left-view video stream, is stored at the end of the first picture of the right-eye GOP of the right-view video stream. Alternatively, the sequence end code 6402 may have a unique format designed only for the right-view video stream. For example, the sequence end code 6402 may be newly defined, or the sequence end code 6402 may be defined exclusively for the right-view video stream by the supplementary data of the right-view video stream. Alternatively, the sequence end code 6402 may be replaced by the decode switch information illustrated in FIG. 8 to which a flag has been added, the flag indicating whether the corresponding video access unit is the last video access unit of the GOP. This structure clearly distinguishes the sequence end code 6401 of the left-view video stream from the sequence end code 6402 of the right-view video stream, and makes it easy for the primary video decoder 31 to perform processing of playing back the still images as 3D video.

**[Fifth Embodiment]**

This Fifth Embodiment section discusses a playback method and a playback device for performing special playback of 3D video recorded on a BD-ROM.

Blocks shown in FIG. 58A represent interleaved extents of the left- and right-view AV streams. White blocks represent extents of the left-view AV stream, and shaded blocks represent extents of the right-view AV stream. Reverse triangles indicate positions of entry points. 7109A, 7109C and 7109E are entry points of a left-view video stream included in the left-view AV stream. 7109B and 7109D are entry points of a right-view video stream included in the right-view AV stream. Arrows 7101, 7102, 7103, 7104 and 7105 each show an area of TS packets storing the picture indicated by the corresponding entry point. Once the TS packets in these areas have been read, the pictures indicated by the entry points can be decoded. These areas are referred to as entry picture TS sizes. The entry picture TS sizes are each stored as information on the corresponding entry point, together with SPNs and PTSs.

In order to perform fast forward playback the 3D video, it is necessary to play back pairs of (i) I-pictures indicated by the entry points of the left-view video stream and (ii) pictures indicated by the entry points of the right-view video stream. At this time, as shown by a playback path of the 3D video in FIG. 58A, a jump must be performed every time the picture indicated by each entry point is played back. This degrades the playback performance of the 2D/3D playback device.

In view of the above problem, as shown in FIG. 58B, the picture indicated by each entry point of the right-view video stream is additionally disposed in a position adjacent to the position of the I-picture indicated by the corresponding entry point of the left-view stream (i.e., the I-picture to be displayed paired with the picture of the right-view video stream as the 3D video). Further, the entry picture TS size stored in each entry point of the left-view video stream shows an area of TS packets included in the corresponding extent of the left-view AV stream, the TS packets storing (i) the equivalent of the picture indicated by the corresponding entry point of the right-view video stream and (ii) the I-picture indicated by the entry point of the left-view video stream.

Taking an example of the first I-picture shown in FIG. 58B, the equivalent of the picture indicated by the corresponding entry point of the right-view video stream (the picture stored in the entry picture TS size 7102) is disposed in a position that is contiguous with the position of this I-picture indicated by the first entry point of the left-view video stream, which is to be displayed paired with the picture stored in the entry picture TS size 7102 as the 3D video. The entry picture TS size stored in the first entry point of the left-view video stream shows an area of TS packets included in the left-view AV stream, the TS packets storing (i) the equivalent of the picture indicated by the corresponding entry point of the right-view video stream and (ii) the picture indicated by the first entry point of the left-view video stream. That is, the entry picture TS size stored in the first entry point of the left-view video stream is indicated by an arrow 7106 shown in FIG. 58B. When performing fast forward playback of the 3D video, the above structure allows simultaneously reading out the I-pictures of the left- and right-view video streams, thus reducing the number of jumps performed during the playback.

In order to realize the above structure, the left-view AV stream may be assigned PIDs for special playback and store I-pictures of the right-view video stream in correspondence with these PIDs, as shown in FIG. 59A. In this case, when playing back only the pictures indicated by entry points (e.g., fast forward and rewind), the 2D/3D playback device only reads out the left-view AV stream. When the pictures of the right-view video stream read from the left-view AV stream have been input to the PID filter 23, the system target decoder 4 of the 2D/3D playback device transfers data of these pictures to the TB 54 and performs decode processing on the right-view video stream.

Also, in order to realize the above structure, the left-view AV stream may store pictures indicated by the entry points of the right-view video stream for special playback, as shown in FIG. 59B. In this case, each of these pictures is stored in the right-eye video access unit 7201 of the first I-picture in the corresponding GOP of the left-view video stream (i.e., the right-eye video access unit 7201 of the picture to be displayed paired with each picture of the right-view video stream). The right-eye video access units 7201 are each stored in an area that can be defined as a reserve of the corresponding video access unit, so that the 2D playback device cannot play back the right-eye video access units 7201. When playing back only the pictures indicated by entry points (e.g., fast forward and rewind), the 2D/3D playback device only reads out the left-view AV stream. When the right-eye video access units 7201 of the right-view video stream have been input to the PID filter 23, the system target decoder 4 of the 2D/3D playback device transfers data of these right-eye video access units 7201 to the TB 54 and performs decode processing on the right-view video stream.

**[Sixth Embodiment]**

This Sixth Embodiment section discusses a recording device for performing the recording method described in First Embodiment.

When the recording method is to be realized by the real-time recording technology, the recording device for performing the recording method creates an AV stream file in real time and records the AV stream file on the BD-RE, BD-R, hard disk, or semiconductor memory card.

In this case, the AV stream file may be a transport stream obtained by the recording device encoding an analog input signal in real time, or a transport stream obtained by the recording device partializing a digitally-input transport stream.

The recording device for performing the real-time recording includes: a video encoder for obtaining a video stream by encoding a video signal; an audio encoder for obtaining an audio stream by encoding an audio signal; a multiplexer for obtaining a digital stream in the MPEG-2 TS format by multiplexing the video stream, audio stream, and the like; and a source packetizer for converting TS packets constituting the digital stream in the MPEG-2 TS format into source packets. The recording device stores an MPEG-2 digital stream having been converted into the source packet format into an AV stream file, and writes the AV stream file onto the BD-RE, BD-R, or the like. When the digital stream is written, the control unit of the recording device performs processing of generating the clip information and the playlist information in the memory. More specifically, when the user requests the recording processing, the control unit creates an AV stream file and a clip information file onto the BD-RE or the BD-R.

After this, when the starting position of a GOP in the video stream is detected from the transport stream input from outside the device, or when the GOP of the video stream is created by the encoder, the control unit of the recording device obtains (i) the PTS of the intra picture positioned at the start of the GOP and (ii) the packet number of the source packet that stores the starting portion of the GOP, and additionally writes the pair of the PTS and the packet number into the entry map of the clip information file as a pair of EP_PTS entry and EP_SPN entry. Thereafter, each time a GOP is generated, a pair of EP_PTS entry and EP_SPN entry is additionally written into the entry map of the clip information file. Here, when the starting portion of a GOP is an IDR picture, an "is_angle_change" flag having been set to "ON" is added to a pair of EP_PTS entry and EP_SPN entry. Also, when the starting portion of a GOP is not an IDR picture, an "is_angle_change" flag having been set to "OFF" is added to a pair of EP_PTS entry and EP_SPN entry.

Further, the attribute information of a stream in the clip information file is set in accordance with the attribute of the stream to be recorded. After the AV stream file and the clip information have been generated and written onto the BD-RE or the BD-R in the above manner, the playlist information defining the playback path via the entry map in the clip information is generated and written onto the BD-RE or the BD-R. When this process is executed with the real-time recording technology, a hierarchical structure composed of the AV stream clip information and the playlist information is obtained on the BD-RE or the BD-R.

This concludes the description of the recording device for performing the recording method by the real-time recording. Next is a description of the recording device for performing the recording method by the pre-format recording.

The recording device described here is used by the authoring staff in a production studio for distributing movie contents. The recording device of the present invention is used as follows. First, according to the operations of the authoring staff, a digital stream that has been compression encoded in compliance with the MPEG standard, and a scenario describing how a movie title should be played back, are generated. Then, a volume bit stream for a BD-ROM including these data is generated.

FIG. 60 shows the internal structure of the recording device. As shown in FIG. 60, the recording device includes a video encoder 501, a material creation unit 502, a scenario generation unit 503, a BD program creation unit 504, a multiplex processing unit 505, and a format processing unit 506.

The video encoder 501 generates left- and right-view video streams by encoding left- and right-view uncompressed bit map images in accordance with a compression method such as MPEG-4 AVC or MPEG-2. At this time, the right-view video stream is generated by encoding frames of the left-view video stream by the inter-picture predictive encoding. In the process of the inter-picture predictive encoding, the depth information for 3D video is extracted from motion vectors of the left-and right-view images, and the depth information is written into a frame depth information storage unit 501a. The video encoder 501 extracts motion vectors in units of 8 × 8 or 16 × 16 macroblocks, so as to perform image compression with use of correlated characteristics of pictures.

Assume a case where motion vectors are extracted in units of macroblocks from video that shows a house in the background and a circle in the foreground, as shown in FIG. 61. In this case, inter-picture prediction is performed between left- and right-eye images. As a result, no motion vector is detected from the portion of the image corresponding to the "house", but motion vectors are detected from the portion of the image corresponding to the "house".

The detected motion vectors are extracted, and the depth information is generated on a per-frame basis when the 3D video is displayed. The depth information is, for example, an image having the same resolution as a frame having the depth of eight bits.

The material creation unit 502 generates streams such as an audio stream, a presentation graphics stream, and an interactive graphics stream, and writes these generated streams into an audio stream storage unit 502a, a presentation graphics stream storage unit 502b, and an interactive graphics stream storage unit 502c, respectively.

The material creation unit 502 creates the audio stream by encoding uncompressed Linear PCM audio and the like by a compression method such as AC3. Other than this, the material creation unit 502 creates a presentation graphics stream in a PG stream format conforming to the BD-ROM standard, based on the subtitle information file including a subtitle image, a display timing, and subtitle effects such as fade-in and fade-out. The material creation unit 502 also creates an interactive graphics stream in a format for the menu screen conforming to the BD-ROM standard, based on the menu file describing bit-map images to be used for the menu, transition of the buttons arranged on the menu, and the display effects.

The scenario generation unit 503 generates a scenario in the BD-ROM format, in accordance with information on each stream generated by the material creation unit 502 and the operations of the authoring staff via the GUI. Here, the scenario means files such as an index file, a movie object file and a playlist file. The scenario generation unit 503 also generates a parameter file describing which stream(s) constitutes each AV stream for realizing the multiplex processing. The data structures of the generated files, namely the index file, the movie object file and the playlist file, are the same as the data structure described in First Embodiment.

The BD program creation unit 504 creates a source code for a BD program file and a BD program in accordance with a request from the user received via a user interface such as the GUI. At this time, the program of the BD program file can use the depth information output from the video encoder 501 to set the depth of the GFX plane.

The multiplex processing unit 505 generates an AV stream file in the MPEG-2 TS format by multiplexing a plurality of streams described in the BD-ROM scenario data, such as the left-view video stream, right-view video stream, video, audio, subtitles, and buttons. When generating the AV stream file, the multiplex processing unit 505 also generates a clip information file that makes a pair with the AV stream file.

The multiplex processing unit 505 generates the clip information file by associating, as a pair, (i) the entry map generated by the multiplex processing unit 505 itself and (ii) attribute information that indicates audio attribute, image attribute and the like for each stream included in the AV stream file. The structure of the clip information file is the same as the structure that has been described in the above embodiments.

The format processing unit 506 generates a disc image in the UDF format (a file system conforming to the BD-ROM standard) by arranging, in the format conforming to the BD-ROM standard, files and directories including the BD-ROM scenario data generated by the scenario generation unit 503, the BD program file created by the BD program creation unit 504, and the AV stream file and the clip information file generated by the multiplex processing unit 505.

At this time, the format processing unit 506 generates 3D metadata for the PG stream, ID stream, and secondary video stream by using the depth information output from the video encoder 501. The format processing unit 506 also (i) sets arrangement of images on the screen automatically, so that they do not overlap with objects of the 3D video, and (ii) adjusts offset values so that depths do not overlap each other. The file layout of the disc image generated in this way is set to have the data structure of the file layout described in Embodiments 1 and 2. The file layout of the generated disc image is set according to the data structure of the file layout described in First and Second embodiments. The BD-ROM can be manufactured by converting the generated disc image into data suited for the BD-ROM press processing, and performing the BD-ROM pressing processing on this data.

(Embodiment as Recording Device for Realizing Managed Copy)

The recording device may have a function to write a digital stream by managed copy.

Managed copy is technology for communicating with a server and enabling execution of copy only if the copy is authenticated and permitted. The managed copy is utilized when the digital stream, playlist information, clip information and application program recorded on a read-only recording medium (e.g., a BD-ROM) are to be copied to another optical disc (e.g., BD-R, BD-RE, DVD-R, DVD-RW and DVD-RAM), hard disk, and removable medium (e.g., an SD memory card, Memory Stick, CompactFlash, SmartMedia, MultiMediaCard). This technology makes it possible to perform various controls, such as limiting the number of backups and permitting the backup only when there is a charge on the backup.

When performing a copy from the BD-ROM to the BD-R or BD-RE, if the copy source and the copy destination have the same recording capacity, the managed copy only requires a sequential copy of the bit stream on the BD-ROM from the innermost circumference to the outermost circumference of the BD-ROM.

When the managed copy technology is used to copy from/to media of different types, transcoding is required. Here, "transcoding" denotes processing of adapting the digital stream recorded on the BD-ROM to the application format of the copy-destination medium by converting the format of the digital stream from the MPEG-2 transport stream format to the MPEG-2 program stream format and the like, or by performing re-encoding after lowering the bit rates assigned to video and audio streams. In order to perform transcoding, it is necessary to obtain the AV stream file, clip information and playlist information by performing the above-described real-time recording processing.

(Additional Notes)

The present invention has been described above through the best embodiments that the Applicant acknowledges as of now. However, further improvements or changes can be added regarding the following technical topics. It is to be noted that whether or not to implement the present invention exactly as indicated by the above embodiments, or whether or not to add further improvements of changes to the above embodiments, is optional and may be determined by the subjectivity of a person who implements the present invention.

(Stereoscopic Viewing Methods)

The parallax image method used in First Embodiment displays left- and right-eye images alternately in the time axis direction. Thus, unlike an ordinary 2D movie that is displayed at 24 frames-per-second, this method needs to display a total of 48 left- and right-eye images per second. Therefore, this method is suitable for use in a display device that can rewrite the screen at relatively high speed. This stereoscopic viewing technique utilizing the parallax image method has been commonly used for attractions of amusement parks and the like-i.e., has already been technically established. Hence, this technique may be the closest form of technology that could be practically implemented for home use. It should be mentioned that many other methods/techniques have been suggested to realize such stereoscopic viewing utilizing the parallax images, such as a two-color separation method. Although the alternate-frame sequencing and the polarization glass technique are explained in the present embodiment as examples of methods/techniques to realize the stereoscopic viewing, the stereoscopic viewing may be realized using other methods/techniques other than the aforementioned two techniques, as long as it is realized using parallax images.

The lenticular lens in the display device 300 may be replaced with another device (e.g., liquid crystal elements) that has the same function as the lenticular lens. Alternatively, a vertical polarizing filter and a horizontal polarizing filter may be provided for left-eye pixels and right-eye pixels, respectively. Here, stereoscopic viewing can be realized by the viewer viewing the screen of the display device through polarizing glasses including a vertical polarizing filter for the left eye and a horizontal polarizing filter for the right eye.

(Data Structure of Index.bdmv for Storing 3D Video)

It is also possible to provide different types of index files to a 2D playback device and a 3D playback device, instead of providing different types of playlists thereto. In this case, the 2D playback device refers to "Index.bdmv" whereas the 3D playback device selects "Index.3dmv" upon starting the playback.

(Data Structure Used When Dealing with Plurality of Streams)

When there is a plurality of streams, the subpath information may be used as described above, or multi_clip_entries for multi-angle may be used. When the "multi_clip_entries" is used, it is preferable that the UO for changing the angle be prohibited after a proper stream is chosen according to the screen size of the display device, so as not to mistakenly switch to another stream that is dedicated for a different screen size.

(Targets of Application of Left and Right Views)

Not only video streams relating to the main content of the disc but also thumbnail images may be provided separately for the left and right images. Here, as is the case with the video stream, a 2D playback device displays conventional 2D thumbnails, but a 3D playback device outputs left-eye thumbnails and right-eye thumbnails, which have been prepared for 3D playback, according to the corresponding 3D display method.

The same rule applies to the following items: menu images; thumbnail images showing different scenes for chapter search; and reduced images showing different scenes.

(Creating Program of Each Embodiment)

The application program described in each embodiment of the present invention can be created as follows. First, the software developer writes, using a programming language, a source program that achieves each flowchart and functional component. Here, the software developer writes the source program that achieves each functional component by using the class structure, variables, array variables and calls to external functions in accordance with the sentence structure of the programming language.

The written source program is sent to the compiler as files. The compiler translates the source program and generates an object program.

The translation performed by the compiler includes processes such as syntax analysis, optimization, resource allocation, and code generation. In the syntax analysis, the characters, phrases, sentence structure and meaning of the source program are analyzed. The source program is then converted into an intermediate program. In the optimization, the intermediate program is subjected to processing such as the basic block setting, control flow analysis, and data flow analysis. In the resource allocation, to adapt to the instruction sets of the target processor, the variables in the intermediate program are allocated to the register or memory of the target processor. In the code generation, each intermediate instruction in the intermediate program is converted into a program code, and an object program is obtained.

The generated object program is composed of one or more program codes that cause the computer to execute each step of the flowcharts and each procedure of the functional components explained in the above embodiments. There are various types of program codes, such as the native code of the processor and the Java® byte code. There are also various forms in which the steps of the program codes are realized. For example, when the steps can be realized by using external functions, the call statements for calling the external functions are used as the program codes. Program codes that realize one step may belong to different object programs. In the RISC processor in which the types of instructions are limited, each step of the flowcharts may be realized by combining arithmetic operation instructions, logical operation instructions, branch instructions, and the like.

After the object program is generated, the programmer activates a linker. The linker allocates the memory spaces to the object programs and the related library programs, and links them together to generate a load module. The load module is generated under the assumption that it is read by the computer and causes the computer to execute the processing procedures of the flowcharts and the processing procedures of the functional components. The program described here may be recorded on a computer-readable recording medium to be provided to the user.

(How to Describe Data Structure)

Among the above-described data structures, a repetitive structure that has a plurality of pieces of predetermined type of information can be defined by setting (i) an initial value for the control variable and (ii) a repeat condition, into the "for" statement. The "Do While" statement may be used as well.

Also, an arbitrary data structure, in which predetermined information is defined when a predetermined condition is satisfied, can be defined by describing, into the "if" statement, (i) the condition to be satisfied and (ii) a variable to be set when the condition is satisfied. The "switch" statement or the "case" statement may be used as well.

As described above, the data structure of each Embodiment can be described in compliance with the grammar of a high-level programming language. Therefore, the data structure of each Embodiment is subjected to the translation processes performed by the compiler, including the syntax analysis, optimization, resource allocation, and code generation. In an object-oriented language, the data structure described in a high-level programming language is treated as a portion other than the method of the class structure, i.e., as an array-type member variable in the class structure, and constitutes a part of the program. That is to say, the data structure of each Embodiment is converted into computer code, then recorded into a computer-readable recording medium, and becomes a member variable of the program. Since it can be treated in this way, the data structure described up to now is substantially a program.

(Playback of Optical Disc)

The BD-ROM drive is equipped with an optical head that includes a semiconductor laser, a collimated lens, a beam splitter, an objective lens, a collecting lens, and a light detector. The light beams emitted from the semiconductor laser pass through the collimated lens, beam splitter, and objective lens, and are collected on the information surface of the optical disc.

The collected light beams are reflected/diffracted on the optical disc, pass through the objective lens, beam splitter, and collimated lens, and are collected in the light detector. A playback signal is generated depending on the amount of light collected in the light detector.

(Variations of Recording Medium)

The recording medium described in each Embodiment indicates a general package medium as a whole, including the optical disc and the semiconductor memory card. In each Embodiment, it is presumed, as one example, that the recording medium is an optical disc on which necessary data is preliminarily recorded (for example, an existing read-only optical disc such as the BD-ROM or DVD-ROM). However, the present invention is not limited to this. For example, the present invention may be implemented as follows: (i) obtain 3D content that includes the data necessary for implementing the present invention and is distributed by a broadcast or via a network; (ii) record the 3D content onto a writable optical disc (for example, an existing writable optical disc such as the BD-Re and DVD-RAM) by using a terminal device having the function of writing onto an optical disc (the function may be embedded in a playback device, or the device may not necessarily be a playback device); and (iii) apply the optical disc having recorded thereon the 3D content to the playback device of the present invention.

(Embodiments of Semiconductor Memory Card Recording Device and Playback Device)

The following describes embodiments of the recording device for recording the data structure of each Embodiment into a semiconductor memory, and the playback device for playing back the semiconductor memory.
First, the mechanism for protecting the copyright of data recorded on the BD-ROM will be explained, as background technology.
Some of the data recorded on the BD-ROM may have been encrypted as necessary in view of the confidentiality of the data.
For example, the BD-ROM may contain, as encrypted data, the data corresponding to a video stream, an audio stream, or a stream including these.
The following describes decryption of the encrypted data among the data recorded on the BD-ROM.
The semiconductor memory card playback device preliminarily stores data (for example, a device key) that corresponds to a key that is necessary for decrypting the encrypted data recorded on the BD-ROM.
On the other hand, the BD-ROM has preliminarily recorded thereon (i) data (for example, a medium key block (MKB) corresponding to the above-mentioned device key) that corresponds to a key that is necessary for decrypting the encrypted data, and (ii) encrypted data (for example, an encrypted title key corresponding to the above-mentioned device key and MKB) that is generated by encrypting the key itself that is necessary for decrypting the encrypted data. Note here that the device key, MKB, and encrypted title key are treated as a set, and are further associated with an identifier (for example, a volume ID) written in an area (called BCA) of the BD-ROM that cannot be copied in general. Here, encrypted data cannot be decrypted if these elements are combined incorrectly. Only if the combination is correct, a key (for example, a title key that is obtained by decrypting the encrypted title key by using the above-mentioned device key, MKB, and volume ID) that is necessary for decrypting the encrypted data can be derived. The encrypted data can be decrypted by using the derived key.
When a playback device attempts to play back a BD-ROM loaded therein, it cannot play back the encrypted data unless the device itself has a device key that makes a pair with (or corresponds to) the encrypted title key and the MKB recorded on the BD-ROM. This is because the key (title key) that is necessary for decrypting the encrypted data has been encrypted, and is recorded on the BD-ROM as the encrypted title key and the key that is necessary for decrypting the encrypted data cannot be derived if the combination of the MKB and the device key is not correct.
Conversely, when the combination of the encrypted title key, MKB, device key, and volume ID is correct, the video and audio streams are decoded by the decoder with use of the above-mentioned key (for example, a title key that is obtained by decrypting the encrypted title key by using the device key, MKB, and volume ID) that is necessary for decrypting the encrypted data. The playback device is structured in this way.
This concludes the description of the mechanism for protecting the copyright of data recorded on the BD-ROM. It should be noted here that this mechanism is not limited to being applied to the BD-ROM, but may be applicable to, for example, a readable/writable semiconductor memory (e.g., a portable semiconductor memory such as the SD card) for the implementation.
Described blow is the playback procedure to be followed by the semiconductor memory card playback device. In a case where the playback device plays back an optical disc, the playback device is structured to read out data via an optical disc drive, for example. On the other hand, in a case where the playback device plays back a semiconductor memory card, the playback device is structured to read out data via an interface for reading out the data from the semiconductor memory card.
More specifically, the playback device may be structured such that, when a semiconductor memory card is inserted into a slot (not illustrated) provided therein, the playback device and the semiconductor memory card are electrically connected with each other via the semiconductor memory card interface, and the playback device reads out data from the semiconductor memory card via the semiconductor memory card interface.

(Embodiments of Receiving Device)

The playback device explained in each Embodiment may be realized as a terminal device that receives data (distribution data) that corresponds to the data explained in each Embodiment from a distribution server for an electronic distribution service, and records the received data into a semiconductor memory card.
Such a terminal device may be realized by structuring the playback device explained in each Embodiment so as to perform such operations, or may be realized as a dedicated terminal device that is different from the playback device explained in each Embodiment and stores the distribution data into a semiconductor memory card. The following describes a case where the playback device is used. Also, in the following description, an SD card is used as the recording-destination semiconductor memory.
When the playback device is to record distribution data into an SD memory card inserted in a slot provided therein, the playback device first requests a distribution server (not illustrated) that stores distribution data to transmit the distribution data. At this time, the playback device reads out identification information for uniquely identifying the inserted SD memory card (for example, identification information uniquely assigned to each SD memory card, or more specifically, the serial number or the like of the SD memory card), from the SD memory card, and transmits the read-out identification information to the distribution server together with the distribution request.
The identification information for uniquely identifying the SD memory card corresponds to, for example, the volume ID described earlier.
On the other hand, the distribution server stores necessary data (for example, the video stream, the audio stream and the like) in an encrypted state such that the necessary data can be decrypted by using a predetermined key (for example, a title key).
The distribution server holds, for example, a private key so that it can dynamically generate different pieces of public key information respectively in correspondence with identification numbers uniquely assigned to each semiconductor memory card.
Also, the distribution server is structured to be able to encrypt the key (title key) itself that is necessary for decrypting the encrypted data (that is to say, the distribution server is structured to be able to generate an encrypted title key).
The generated public key information includes, for example, information corresponding to the above-described MKB, volume ID, and encrypted title key. With this structure, when, for example, a combination of the identification number of the semiconductor memory card, the public key contained in the public key information which will be explained later, and the device key that is preliminarily recorded in the playback device, is correct, a key (for example, a title key obtained by decrypting the encrypted title key by using the device key, the MKB, and the identification number of the semiconductor memory) necessary for decrypting the encrypted data is obtained, and the encrypted data is decrypted by using the obtained necessary key (title key).
Subsequently, the playback device records the received piece of public key information and distribution data into a recording area of the semiconductor memory card being inserted in the slot thereof.
A description is now given of an example of the method for decrypting and playing back the encrypted data among the data contained in the public key information and distribution data recorded in the recording area of the semiconductor memory card.
The received public key information stores, for example, a public key (for example, the above-described MKB and encrypted title key), signature information, identification number of the semiconductor memory card, and device list being information regarding devices to be invalidated.
The signature information includes, for example, a hash value of the public key information.
The device list is, for example, information for identifying the devices that might be played back in an unauthorized manner. The information, for example, is used to uniquely identify the devices, parts of the devices, and functions (programs) that might be played back in an unauthorized manner, and is composed of, for example, the device key and the identification number of the playback device that are preliminarily recorded in the playback device, and the identification number of the decoder provided in the playback device.
The following describes playback of the encrypted data from among the distribution data recorded in the recording area of the semiconductor memory card.
First, whether or not the decryption key itself can be used before decrypting the encrypted data using the decryption key is checked.
More specifically, the following checks are conducted.

(1) A check on whether the identification information of the semiconductor memory card contained in the public key information matches the identification number of the semiconductor memory card preliminarily stored in the semiconductor memory card.

(2) A check on whether the hash value of the public key information calculated in the playback device matches the hash value included in the signature information.

(3) A check, based on the information included in the device list, on whether the playback device to perform the playback is authentic (for example, the device key shown in the device list included in the public key information matches the device key preliminarily stored in the playback device).

These checks may be performed in any order.

After the above described checks (1) through (3) are conducted, the playback device performs a control not to decrypt the encrypted data when any of the following conditions is satisfied: (i) the identification information of the semiconductor memory card contained in the public key information does not match the identification number of the semiconductor memory card preliminarily stored in the semiconductor memory card; (ii) the hash value of the public key information calculated in the playback device does not match the hash value included in the signature information; and (iii) the playback device to perform the playback is not authentic.

On the other hand, when all of the conditions: (i) the identification information of the semiconductor memory card contained in the public key information matches the identification number of the semiconductor memory card preliminarily stored in the semiconductor memory card; (ii) the hash value of the public key information calculated in the playback device matches the hash value included in the signature information; and (iii) the playback device to perform the playback is authentic, are satisfied, it is judged that the combination of the identification number of the semiconductor memory, the public key contained in the public key information, and the device key that is preliminarily recorded in the playback device, is correct, and the encrypted data is decrypted by using the key necessary for the decryption (the title key that is obtained by decrypting the encrypted title key by using the device key, the MKB, and the identification number of the semiconductor memory).

When the encrypted data is, for example, a video stream and an audio stream, the video decoder decrypts (decodes) the video stream by using the above-described key necessary for the decryption (the title key that is obtained by decrypting the encrypted title key), and the audio decoder decrypts (decodes) the audio stream by using the above-described key necessary for the decryption.

With such a structure, when devices, parts of the devices, and functions (programs) that might be used in an unauthorized manner are known at the time of the electronic distribution, a device list showing such devices and the like may be distributed. This enables the playback device having received the list to inhibit the decryption with use of the public key information (public key itself) when the playback device includes anything shown in the list. Therefore, even if the combination of the identification number of the semiconductor memory, the public key itself contained in the public key information, and the device key that is preliminarily recorded in the playback device, is correct, a control is performed not to decrypt the encrypted data. This makes it possible to prevent use of the distribution data by an unauthorized device.

It is preferable that the identifier of the semiconductor memory card that is preliminarily recorded in the semiconductor memory card be stored in a highly secure recording area. This is because, when the identification number (for example, the serial number of the SD memory card) that is preliminarily recorded in the semiconductor memory card is tampered with, unauthorized copying can be easily done. More specifically, unique, although different identification numbers are respectively assigned to semiconductor memory cards, if the identification numbers are tampered with to be the same, the above-described judgment in (1) does not make sense, and as many semiconductor memory cards as tamperings may be copied in an unauthorized manner.

For this reason, it is preferable that information such as the identification number of the semiconductor memory card be stored in a highly secure recording area.

To realize this, the semiconductor memory card, for example, may have a structure in which a recording area for recording highly confidential data such as the identifier of the semiconductor memory card (hereinafter, the recording area is referred to as a second recording area) is provided separately from a recording area for recording regular data (hereinafter, the recording area is referred to as a first recording area), a control circuit for controlling accesses to the second recording area is provided, and the second recording area is accessible only through the control circuit.

For example, data may be encrypted so that the encrypted data is recorded in the second recording area, and the control circuit may be embedded with a circuit for decrypting the encrypted data. In this structure, when an access is made to the second recording area, the control circuit decrypts the encrypted data and returns the decrypted data. As another example, the control circuit may hold information indicating the location where the data is stored in the second recording area, and when an access is made to the second recording area, the control circuit identifies the corresponding storage location of the data, and returns data that is read out from the identified storage location.

An application, which is running on the playback device and is to record data onto the semiconductor memory card with use of the electronic distribution, issues, to the control circuit via a memory card interface, an access request requesting to access the data (for example, the identification number of the semiconductor memory card) recorded in the second recording area. Upon receiving the request, the control circuit reads out the data from the second recording area and returns the data to the application running on the playback device. It sends the identification number of the semiconductor memory card and requests the distribution server to distribute the data such as the public key information, and corresponding distribution data. The public key information and corresponding distribution data that are sent from the distribution server are recorded into the first recording area.

Also, it is preferable that the application, which is running on the playback device and is to record data onto the semiconductor memory card with use of the electronic distribution, preliminarily checks whether or not the application is tampered with before it issues, to the control circuit via a memory card interface, an access request requesting to access the data (for example, the identification number of the semiconductor memory card) recorded in the second recording area. For checking this, an existing digital certificate conforming to the X.509 standard, for example, may be used.

Also, the distribution data recorded in the first recording area of the semiconductor memory card may not necessarily be accessed via the control circuit provided in the semiconductor memory card.

(System LSI)

It is desirable that part of the components of the playback device that is mainly composed of logic devices, such as the system target decoder, playback control unit 7, and program executing unit, be realized as a system LSI.

The system LSI is obtained by implementing a bare chip on a high-density substrate and packaging them. The system LSI is also obtained by implementing a plurality of bare chips on a high-density substrate and packaging them, so that the plurality of bare chips have an outer appearance of one LSI (such a system LSI is called a multi-chip module).

The system LSI has a QFP (Quad Flat Package) type and a PGA (Pin Grid Array) type. In the QFP-type system LSI, pins are attached to the four sides of the package. In the PGA-type system LSI, a large number of pins are attached to the entire bottom.

These pins function as an interface with other circuits. The system LSI, which is connected with other circuits through such pins as an interface, plays a role as the core of the playback device 200.

Such a system LSI can be embedded into various types of devices that can play back images, such as a television, a game console, a personal computer, a one-segment mobile phone, as well as into the playback device 200. The system LSI thus greatly broadens the use of the present invention.

It is desirable that the system LSI conforms to the UniPhier architecture.

A system LSI conforming to the UniPhier architecture includes the following circuit blocks.

- Data Parallel Processor (DPP)

The DPP is an SIMD-type processor where a plurality of elemental processors perform a same operation. The DPP achieves parallel decoding of a plurality of pixels constituting a picture by causing operating units, respectively embedded in the elemental processors, to operate simultaneously by one instruction.

- Instruction Parallel Processor (IPP)

The IPP includes: a local memory controller that is composed of instruction RAM, instruction cache, data RAM, and data cache; processing unit that is composed of instruction fetch unit, decoder, execution unit, and register file; and virtual multi processing unit that causes the processing unit to execute parallel execution of a plurality of applications.

- MPU Block

The MPU block is composed of: peripheral circuits such as ARM core, external bus interface (Bus Control Unit: BCU), DMA controller, timer, vector interrupt controller; and peripheral interfaces such as UART, GPIO (General Purpose Input Output), and sync serial interface.

- Stream I/O Block

The stream I/O block performs data input/output with the drive device, hard disk drive device, and SD memory card drive device which are connected onto the external busses via the USB interface and the ATA packet interface.

- AV I/O Block

The AV I/O block, which is composed of audio input/output, video input/output, and OSD controller, performs data input/output with the television and the AV amplifier.

- Memory Control Block

The memory control block performs reading and writing from/to the SD-RAM connected therewith via the external buses. The memory control block is composed of internal bus connection unit for controlling internal connection between blocks, access control unit for transferring data with the SD-RAM connected to outside of the system LSI, and access schedule unit for adjusting requests from the blocks to access the SD-RAM.

The following describes a detailed production procedure. First, a circuit diagram of a part to be the system LSI is drawn, based on the drawings that show structures of the embodiments. And then the constituent elements of the target structure are realized using circuit elements, ICs, or LSIs.

While realizing the constituent elements in the above manner, buses connecting between the circuit elements, ICs, or LSIs, peripheral circuits, interfaces with external entities and the like are defined. Further, the connection lines, power lines, ground lines, clock signals and the like are defined. For these definitions, the operation timings of the constituent elements are adjusted by taking into consideration the LSI specifications, and band widths necessary for the constituent elements are secured. With other necessary adjustments, the circuit diagram is completed.

After the circuit diagram is completed, the implementation design is performed. The implementation design is a work for creating a board layout by determining how to arrange the parts (circuit elements, ICs, LSIs) of the circuit and the connection lines onto the board.

After the implementation design is performed and the board layout is created, the results of the implementation design are converted into CAM data, and the CAM data is output to equipment such as a Numerical Control (NC) machine tool. The NC machine tool performs the System on Chip (SoC) implementation or the System in Package (SiP) implementation. The SoC implementation is technology for printing a plurality of circuits onto a chip. The SiP implementation is technology for packaging a plurality of circuits by resin or the like. Through these processes, a system LSI of the present invention can be produced based on the internal structure of the playback device 200 described in each embodiment above.

It should be noted here that the integrated circuit generated as described above may be called IC, LSI, ultra LSI, super LSI or the like, depending on the level of integration.

It is also possible to achieve the system LSI by using the Field Programmable Gate Array (FPGA). In this case, a large number of logic elements are to be arranged lattice-like, and vertical and horizontal wires are connected based on the input/output combinations described in a Look-Up Table (LUT), so that the hardware structure described in each embodiment can be realized. The LUT is stored in the SRAM. Since the contents of the SRAM are erased when the power is off, when the FPGA is used, it is necessary to define the Config information so as to write, onto the SRAM, the LUT for realizing the hardware structure described in each embodiment.

The present embodiment is realized by middleware and hardware part corresponding to the system LSI, hardware part other than the part corresponding to the system LSI, interface part for the middleware, interface part for the middleware and system LSI, interface with the hardware part other than the part corresponding to the system LSI, and the user interface part, and when these are embedded in a playback device, these operate in cooperation with each other to provide unique functions.

By appropriately defining the interface part for the middleware, and the interface part for the middleware and system LSI, it is possible to develop, independently in parallel, the user interface part, middleware part, and system LSI part of the playback device. This makes it possible to develop the product more efficiently. Note that the interface can be segmented in various ways.

**[Industrial Applicability]**

A playback device of the present invention does not require a change in an output frame rate when switching between 3D video playback and 2D video playback. The playback device of the present invention is therefore beneficial when connected to a monitor using the HDMI connection that necessitates synchronization between the output frame rate of the playback device and the output frame rate of the monitor.

**[Reference Signs List]**

| | |
|---|---|
| 100 | BD-ROM |
| 200 | playback device |
| 300 | television |

| | |
|---|---|
| 400 | 3D glasses |
| 500 | remote control |
| 1 | BD drive |
| 2a, 2b | read buffer |
| 4 | system target decoder |
| 5b | plane composition unit |
| 6 | HDMI transmission/reception unit |
| 7 | playback control unit |
| 9 | management information memory |
| 10 | register set |
| 11 | program execution unit |
| 12 | program memory |
| 13 | HDMV module |
| 14 | BD-J platform |
| 15 | middleware |
| 16 | mode management module |
| 17 | user event processing unit |
| 18 | local storage |
| 19 | nonvolatile memory |
| 23, 27 PID | filter |
| 31 | primary video decoder |
| 32 | left-view video plane |
| 33 | right-view video plane |
| 34 | secondary video decoder |
| 35 | secondary video plane |
| 36 | PG decoder |
| 37 | PG plane |
| 38 | IG decoder |
| 39 | IG plane |
| 40 | primary audio decoder |
| 41 | secondary audio decoder |
| 42 | mixer |

## Claims

**1.** A playback device for playing back 3D video streams including a base-view video stream and a dependent-view video stream, wherein
when performing stereoscopic playback using the 3D video streams, the playback device outputs first picture data pieces and second picture data pieces to a display device, the first picture data pieces and the second picture data pieces being obtained by decoding the base-view video stream and the dependent-view video stream, respectively, and
when performing 2D playback using the 3D video streams, the playback device outputs each of the first picture data pieces to the display device at least twice in succession.

**2.** The playback device of Claim 1, wherein
when performing the 2D playback using the 3D video streams, the playback device outputs each of the first picture data pieces to the display device twice in succession, and
by thus outputting each of the first picture data pieces twice in succession, an output frame rate at which the 2D playback is performed matches an output frame rate at which the stereoscopic playback is performed.

**3.** The playback device of Claim 1, comprising
a reception unit operable to receive a change instruction during the playback of the 3D video streams, the change instruction causing the playback device to switch from one of the stereoscopic playback and the 2D playback to the other.

**4.** The playback device of Claim 1, comprising:

a base-view video plane memory;
a dependent-view video plane memory;
a decoder operable to decode the base-view video stream and the dependent-view video stream; and
a switch operable to connect to the base-view video plane memory or the dependent-view video plane memory, so as to (i) direct the first picture data pieces into the base-view video plane memory, and (ii) direct the second picture data pieces into the dependent-view video plane memory, wherein
when performing the stereoscopic playback using the 3D video streams, the playback device outputs the first picture data pieces and the second picture data pieces, which are respectively stored in the base-view video plane memory and the dependent-view video plane memory, to the display device, and
when performing the 2D playback using the 3D video streams, the playback device outputs each of the first picture data pieces, which are stored in the base-view video plane memory, to the display device at least twice in succession.

**5.** The playback device of Claim 1, comprising:

a base-view video plane memory;
a dependent-view video plane memory;
a decoder operable to decode the base-view video stream and the dependent-view video stream; and
a switch operable to connect to the base-view video plane memory or the dependent-view video plane memory, so as to (i) when performing the stereoscopic playback using the 3D video streams, (a) direct the first picture data pieces into the base-view video plane memory, and (b) direct the second picture data pieces into the dependent-view video plane memory, and (ii) when performing the 2D playback using the 3D video streams, direct the first picture data pieces into both of the base-view video plane memory and the dependent-view video plane memory, wherein
the playback device outputs the picture data pieces stored in the base-view video plane memory and the dependent-view video plane memory to the display device.

**6.** An integrated circuit used in a playback device for playing back 3D video streams including a base-view video stream and a dependent-view video stream, wherein
when performing stereoscopic playback using the 3D video streams, the integrated circuit outputs first picture data pieces and second picture data pieces, which are obtained by decoding the base-view video stream and the dependent-view video stream, respectively, and
when performing 2D playback using the 3D video streams, the integrated circuit outputs each of the first picture data pieces at least twice in succession.

**7.** A playback device for playing back one or more video streams recorded on a recording medium in accordance with playback section information pieces, wherein
the playback section information pieces include (i) playback section information pieces defining 3D playback sections that realize stereoscopic playback, and (ii) playback section information pieces defining 2D playback sections that realize 2D playback, and
when seamlessly connecting the 3D playback sections and the 2D playback sections with one another, the playback device outputs each of 2D picture data pieces to a display device at least twice in succession, the 2D picture data pieces being obtained by decoding compressed picture data pieces belonging to the 2D playback sections.

**8.** The playback device of Claim 7, wherein
during playback of the 2D playback sections, the playback device outputs each of the 2D picture data pieces to the display device twice in succession, and
by thus outputting each of the 2D picture data pieces twice in succession, an output frame rate at which the 2D playback is performed matches an output frame rate at which the stereoscopic playback is performed.

**9.** The playback device of Claim 7, comprising:

a base-view video plane memory;
a dependent-view video plane memory;
a decoder operable to decode a base-view video stream and a dependent-view video stream, which are included in said one or more video streams; and
a switch operable to connect to the base-view video plane memory or the dependent-view video plane memory, so as to (i) direct first picture data pieces obtained by decoding the base-view video stream into the base-view video plane memory, and (ii) direct second picture data pieces obtained by decoding the dependent-view video stream into the dependent-view video plane memory, wherein
during playback of the 3D playback sections, the playback device outputs the first picture data pieces and the second picture data pieces, which are respectively stored in the base-view video plane memory and the dependent-view video plane memory, to the display device, and
during the playback of the 2D playback sections, the playback device outputs each of the first picture data pieces, which are stored in the base-view video plane memory, to the display device at least twice in succession.

**10.** The playback device of Claim 7, comprising:

a base-view video plane memory;
a dependent-view video plane memory;
a decoder operable to decode a base-view video stream and a dependent-view video stream, which are included in said one or more video streams; and
a switch operable to connect to the base-view video plane memory or the dependent-view video plane memory, so as to (i) during playback of the 3D playback sections, (a) direct first picture data pieces obtained by decoding the base-view video stream into the base-view video plane memory, and (b) direct second picture data pieces obtained by decoding the dependent-view video stream into the dependent-view video plane memory, and (ii) during playback of the 2D playback sections, direct the first picture data pieces into both of the base-view video plane memory and the dependent-view video plane memory, wherein
the playback device outputs the picture data pieces stored in the base-view video plane memory and the dependent-view video plane memory to the display device.

**11.** An integrated circuit used in a playback device for playing back one or more video streams recorded on a recording medium in accordance with playback section information pieces, wherein
the playback section information pieces include (i) playback section information pieces defining 3D playback sections that realize stereoscopic playback, and (ii) playback section information pieces defining 2D playback sections that realize 2D playback, and
when seamlessly connecting the 3D playback sections and the 2D playback sections with one another, the integrated circuit outputs each of 2D picture data pieces at least twice in succession, the 2D picture data pieces being obtained by decoding compressed picture data pieces belonging to the 2D playback sections.

**12.** A recording medium having recorded thereon (i) 3D video streams including a base-view video stream and a dependent-view video stream and (ii) playlist information, wherein
the playlist information includes playback section information pieces that define, in one to one correspondence, a plurality of playback sections, each of the playback section information pieces showing a playback start time and a playback end time of a corresponding one of the playback sections on a playback time axis of the base-view video stream and the dependent-view video stream,
the playback section information pieces include (i) playback section information pieces defining 3D playback sections that realize stereoscopic playback, and (ii) playback section information pieces defining 2D playback sections that realize 2D playback, and
each of the playback section information pieces defining the 2D playback sections includes a flag indicating that each of 2D picture data pieces should be output to a display device at least twice in succession, the 2D picture data pieces being obtained by decoding compressed picture data pieces belonging to a corresponding one of the 2D playback sections.

**13.** A playback device for playing back 3D video streams including a base-view video stream and a dependent-view video stream, the playback device comprising:

a base-view video plane memory;
a dependent-view video plane memory;
a decoder operable to decode the base-view video stream and the dependent-view video stream; and
a switch operable to connect to the base-view video plane memory or the dependent-view video plane memory, so as to (i) direct first picture data pieces obtained by decoding the base-view video stream into the base-view video plane memory, and (ii) direct second picture data pieces obtained by decoding the dependent-view video stream into the dependent-view video plane memory, wherein
when at least one of the picture data pieces of one of the base-view video stream and the dependent-view video stream is damaged due to occurrence of an error while decoding said one of the streams, the switch connects to the base-view video plane memory or the dependent-view video plane memory so as to direct at least one of the picture data pieces of the other stream, which corresponds to said at least one damaged picture data piece, into both of the base-view video plane memory and the dependent-view video plane memory.

**14.** A playback device for playing back 3D video streams including a base-view video stream and a dependent-view video stream, the playback device comprising:

a base-view video plane memory;
a dependent-view video plane memory;
a decoder operable to decode the base-view video stream and the dependent-view video stream; and
a switch operable to connect to the base-view video plane memory or the dependent-view video plane memory, so as to (i) direct first picture data pieces obtained by decoding the base-view video stream into the base-view video plane memory, and (ii) direct second picture data pieces obtained by decoding the dependent-view video stream into the dependent-view video plane memory, wherein
when at least one of the picture data pieces of one of the base-view video stream and the dependent-view video stream is damaged due to occurrence of an error while decoding said one of the streams, the playback device outputs, as a pair, (i) at least one of the picture data pieces of said one of the streams, which is stored into a corresponding one of the video plane memories immediately before the occurrence of the error, and (ii) at least one of the picture data pieces of the other stream, which is stored in the other video plane memory and corresponds to said at least one damaged picture data piece.

**15.** A recording medium having recorded thereon (i) 3D video streams including a base-view video stream and a dependent-view video stream and (ii) stream information, wherein
the base-view video stream and the dependent-view video stream share the same playback time axis,
the stream information includes (i) a first entry map showing, in one to one correspondence, (a) entry points of the base-view video stream and (b) playback times on the playback time axis, and (ii) a second entry map showing, in one to one correspondence, (a) entry points of the dependent-view video stream and (b) playback times on the playback time axis, and
each of the entry points registered in the first entry map is located on the playback time on which a corresponding one of the entry points registered in the second entry map is located.

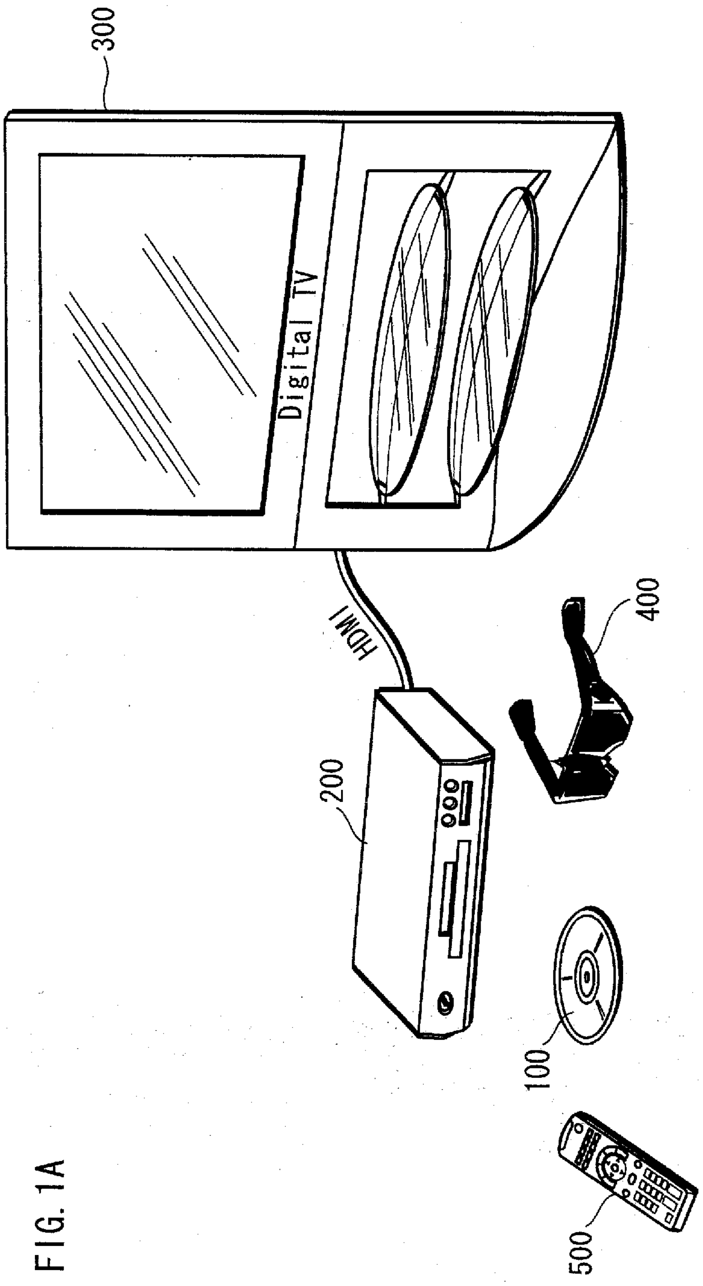


FIG. 1A

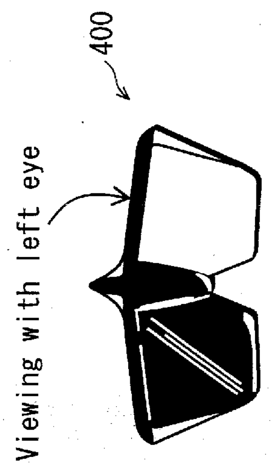


FIG. 1B

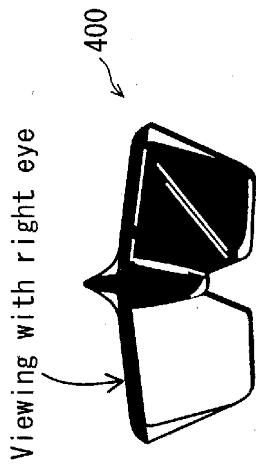


FIG. 1C

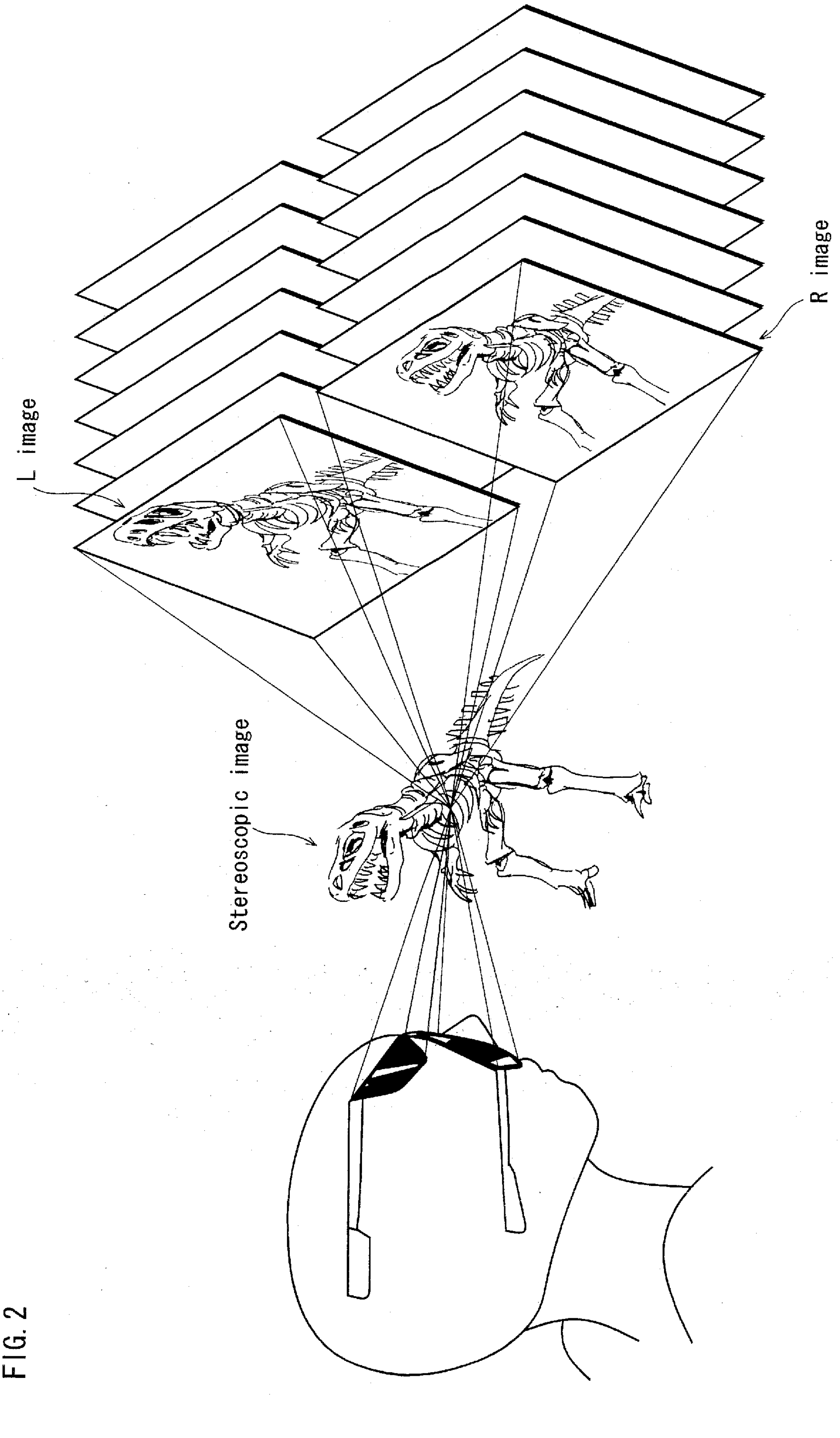


FIG. 2

FIG. 3

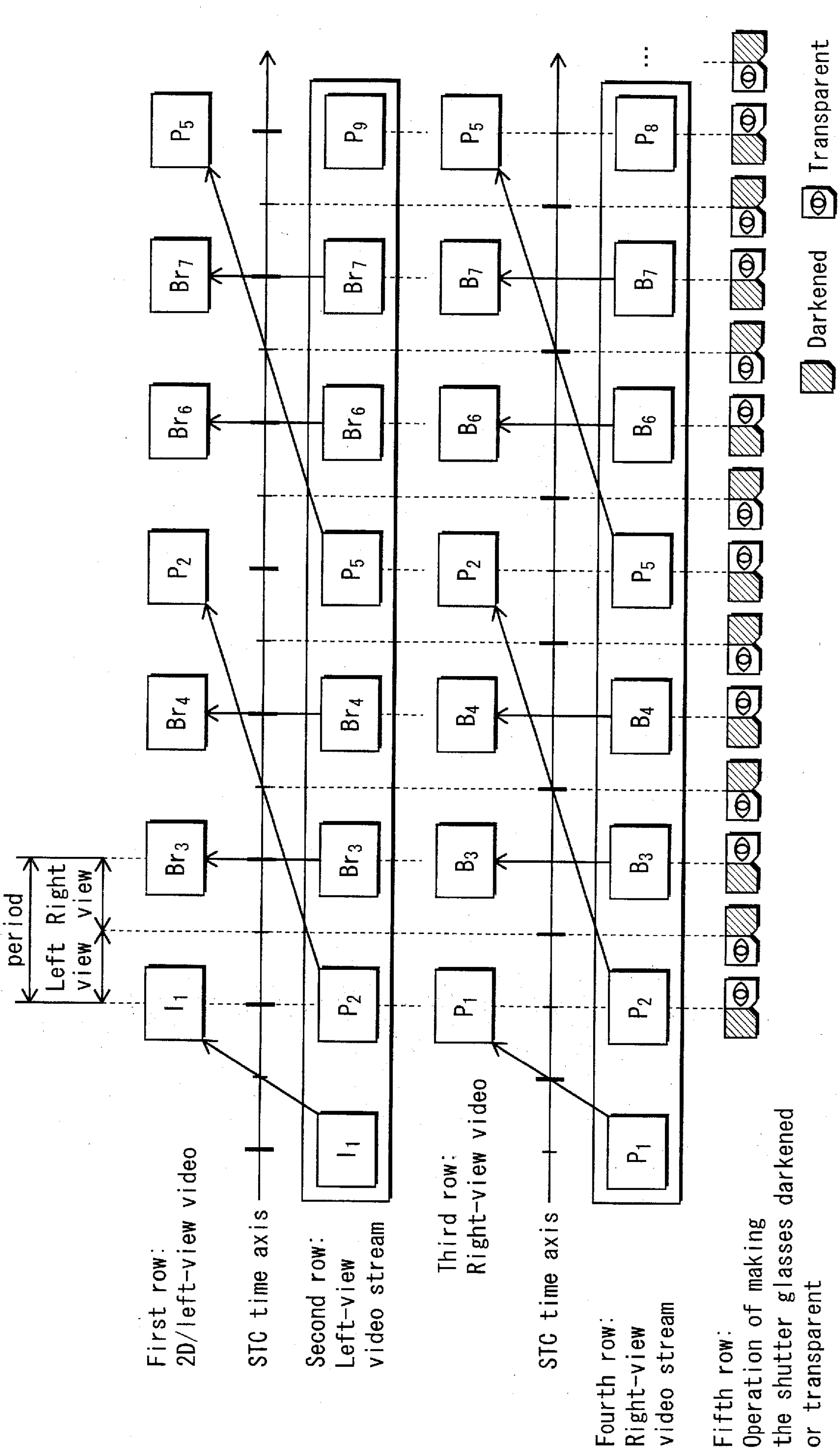
First row:
2D/left-view video
STC time axis
Second row:
Left-view
video stream
Third row:
Right-view video
STC time axis
Fourth row:
Right-view
video stream
Fifth row:
Operation of making
the shutter glasses darkened
or transparent
Frame display
period
Left
view
Right
view
I1
Br3
Br4
P2
Br6
Br7
P5
P2
P5
P9
P1
B3
B4
B6
B7
P8
Darkened
Transparent

FIG. 4

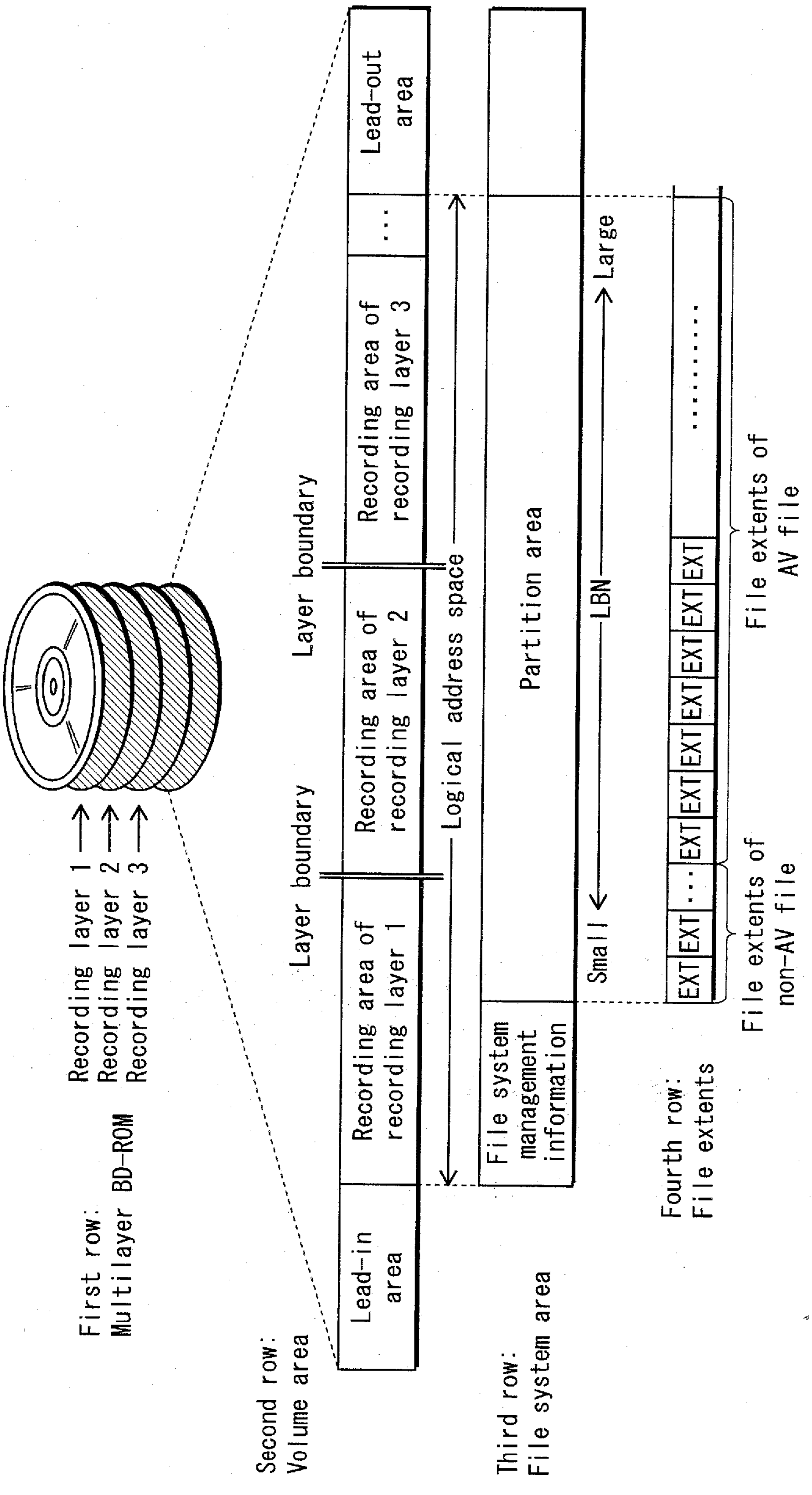
First row:
Multilayer BD-ROM
Recording layer 1
Recording layer 2
Recording layer 3
Second row:
Volume area
Lead-in area
Recording area of recording layer 1
Layer boundary
Recording area of recording layer 2
Layer boundary
Recording area of recording layer 3
...
Lead-out area
Logical address space
Third row:
File system area
File system management information
Partition area
Small
LBN
Large
Fourth row:
File extents
EXT
EXT
...
EXT
File extents of non-AV file
File extents of AV file

FIG. 5

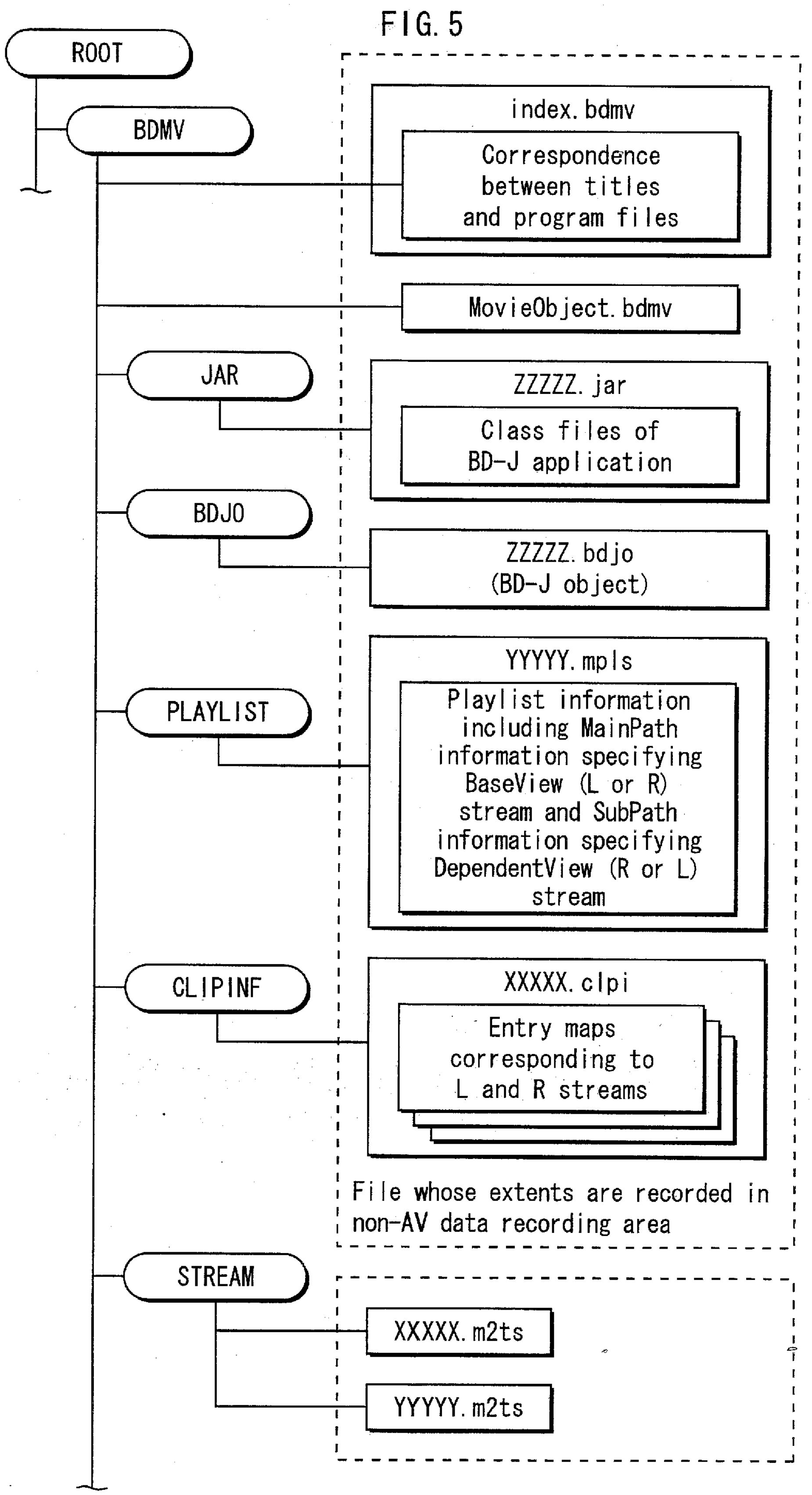
ROOT
BDMV
index. bdmv
Correspondence between titles and program files
MovieObject. bdmv
JAR
ZZZZZ. jar
Class files of BD-J application
BDJO
ZZZZZ. bdjo (BD-J object)
PLAYLIST
YYYYY. mpls
Playlist information including MainPath information specifying BaseView (L or R) stream and SubPath information specifying DependentView (R or L) stream
CLIPINF
XXXXX. clpi
Entry maps corresponding to L and R streams
File whose extents are recorded in non-AV data recording area
STREAM
XXXXX. m2ts
YYYYY. m2ts

FIG. 6

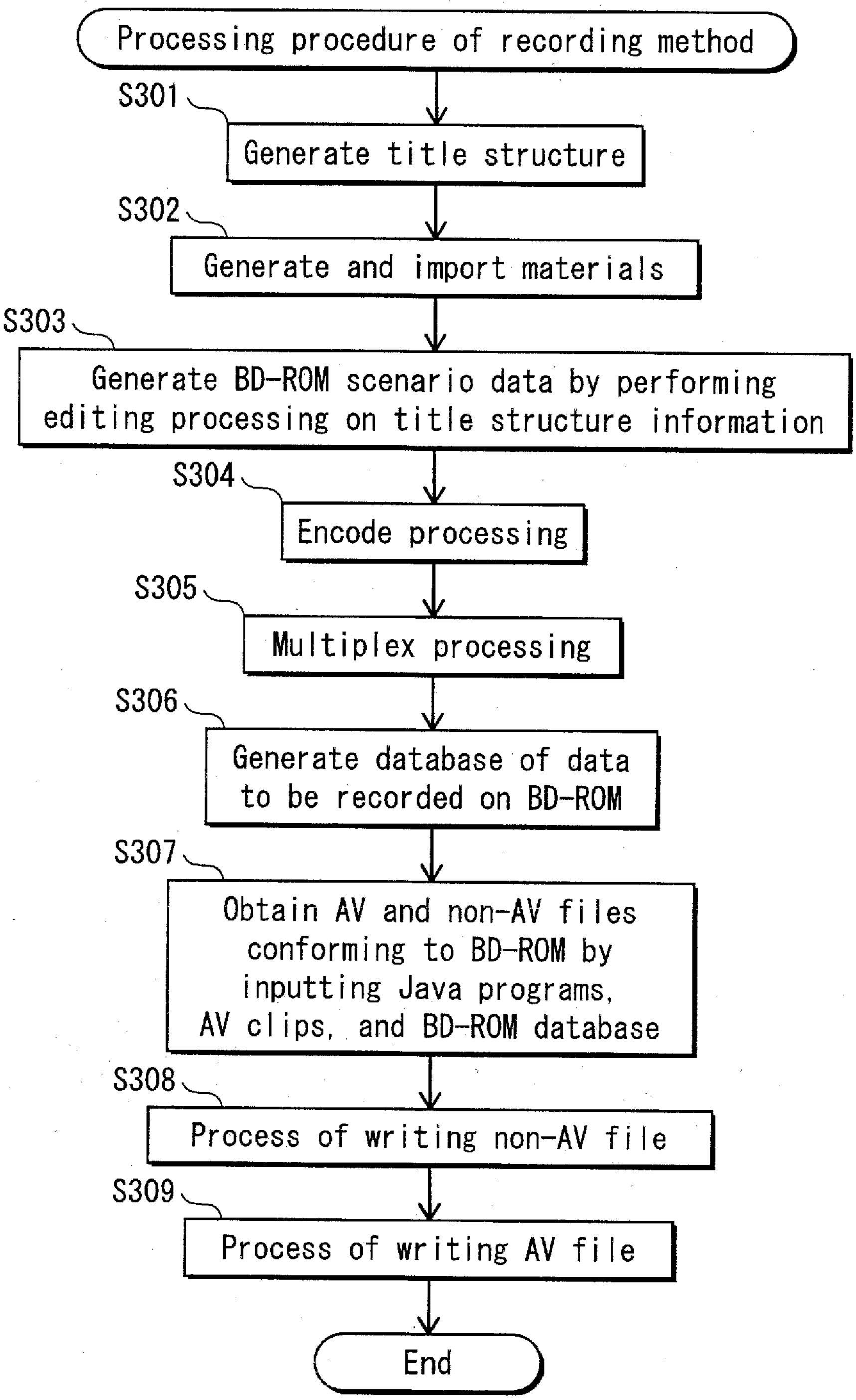
Processing procedure of recording method
S301
Generate title structure
S302
Generate and import materials
S303
Generate BD-ROM scenario data by performing editing processing on title structure information
S304
Encode processing
S305
Multiplex processing
S306
Generate database of data to be recorded on BD-ROM
S307
Obtain AV and non-AV files conforming to BD-ROM by inputting Java programs, AV clips, and BD-ROM database
S308
Process of writing non-AV file
S309
Process of writing AV file
End

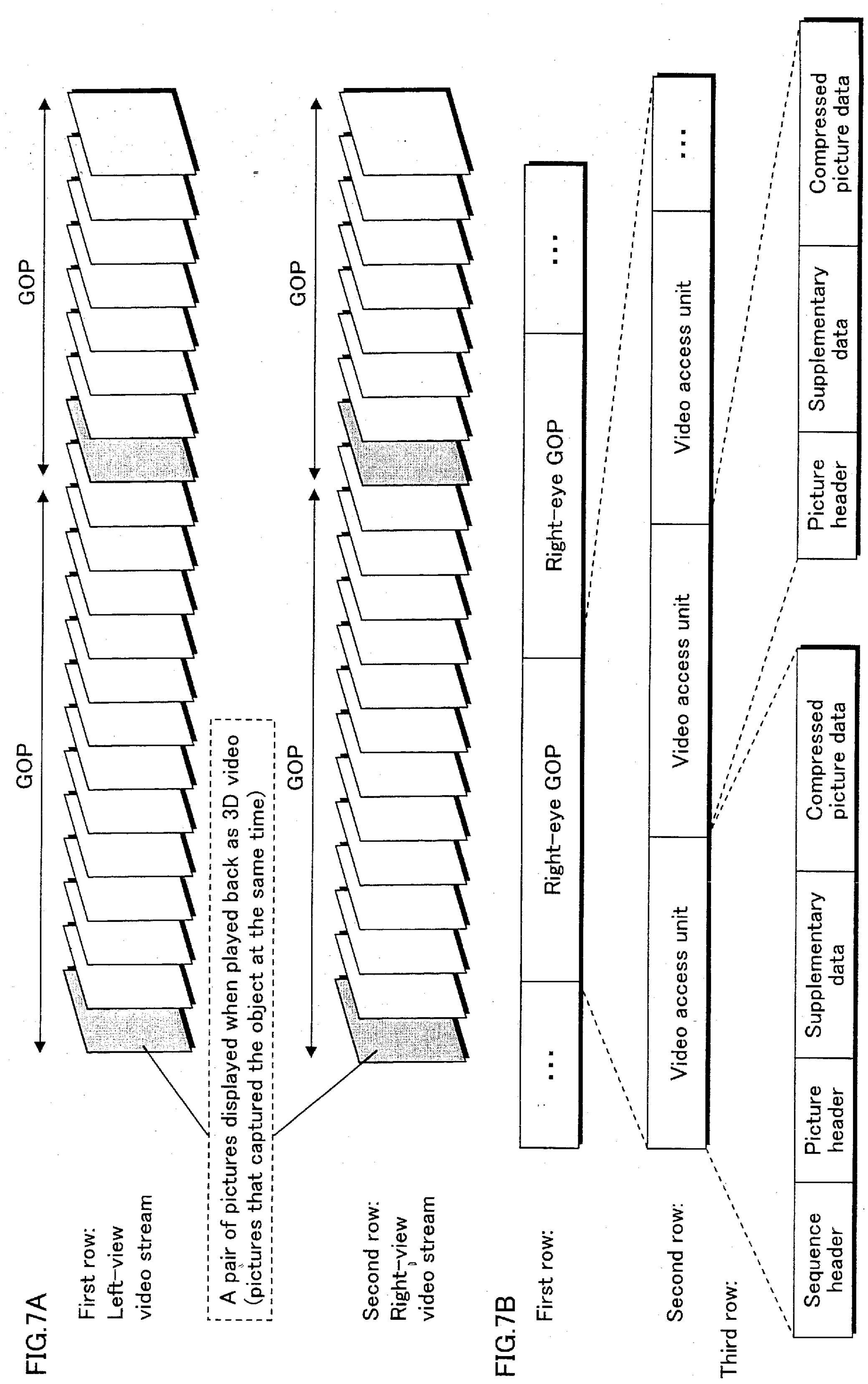
FIG.7A
First row: Left-view video stream
GOP
GOP
A pair of pictures displayed when played back as 3D video (pictures that captured the object at the same time)
Second row: Right-view video stream
GOP
GOP
FIG.7B
First row:
...
Right-eye GOP
Right-eye GOP
...
Second row:
Video access unit
Video access unit
Video access unit
...
Third row:
Sequence header
Picture header
Supplementary data
Compressed picture data
Picture header
Supplementary data
Compressed picture data

FIG.8

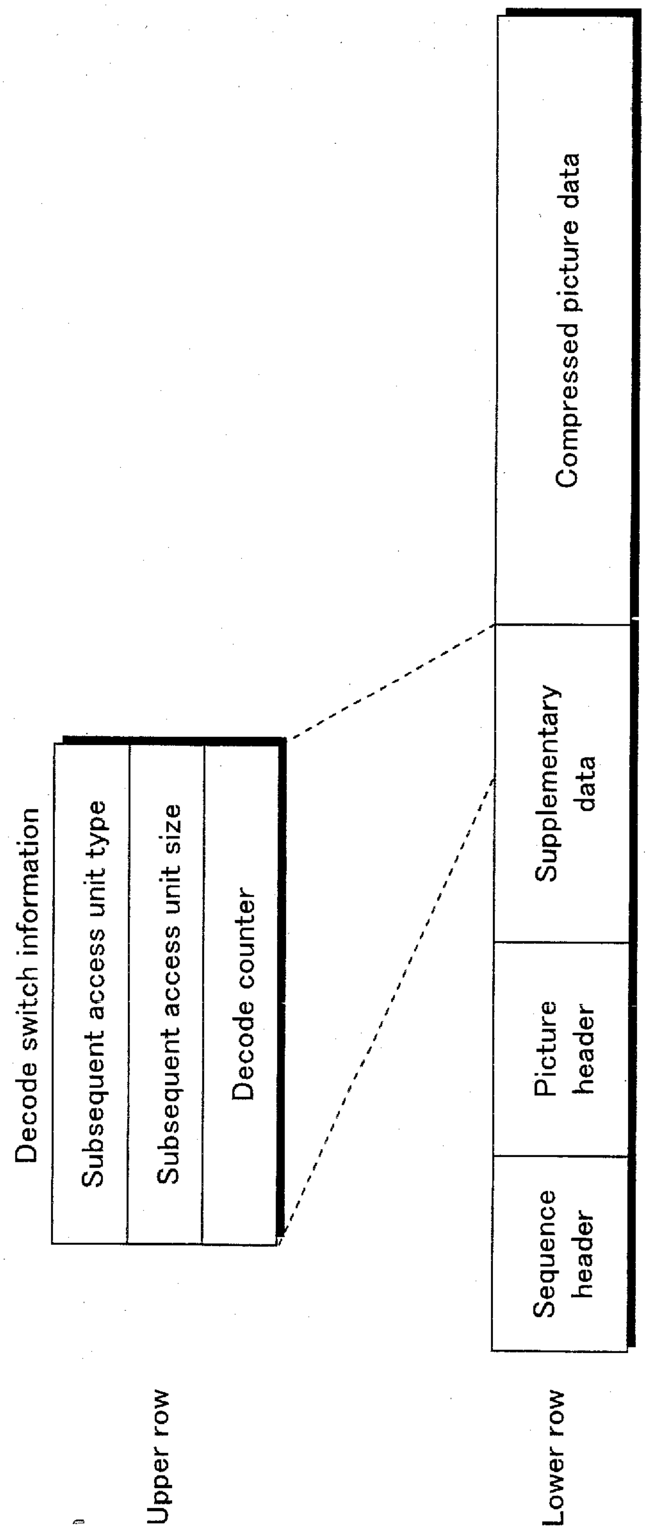
Decode switch information
Subsequent access unit type
Subsequent access unit size
Decode counter
Sequence header
Picture header
Supplementary data
Compressed picture data
Upper row
Lower row

FIG.9A

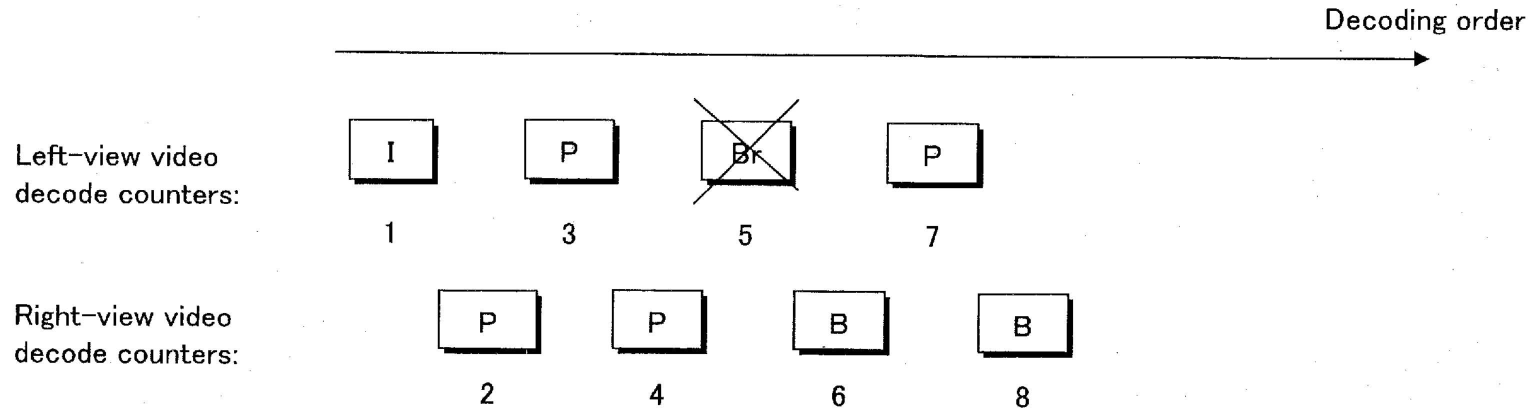
Decoding order
Left-view video decode counters:
I
P
Br
P
1
3
5
7
Right-view video decode counters:
P
P
B
B
2
4
6
8

FIG.9A

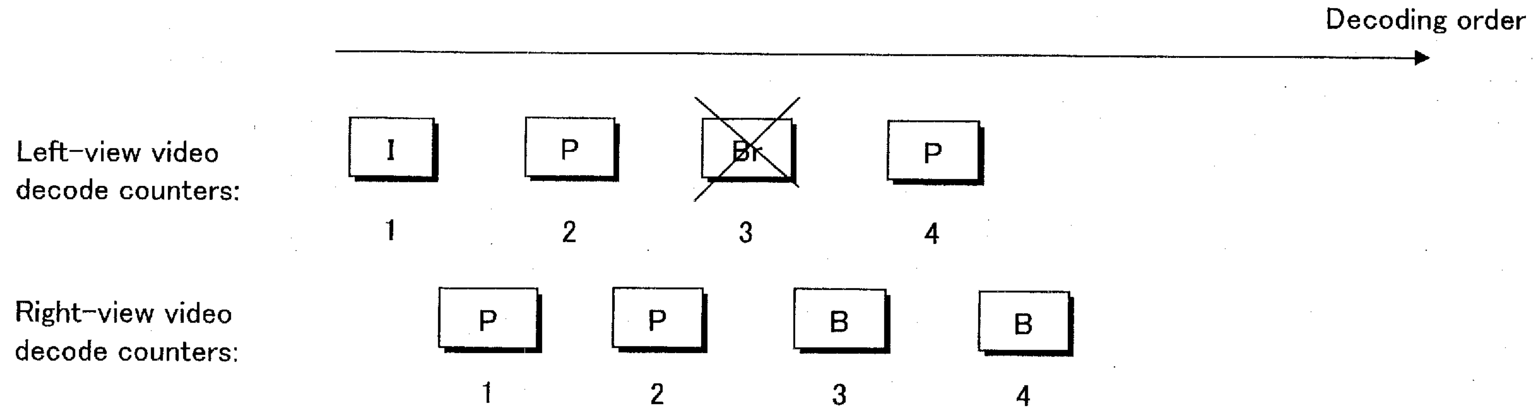
Decoding order
Left-view video decode counters:
I
P
Br
P
1
2
3
4
Right-view video decode counters:
P
P
B
B
1
2
3
4

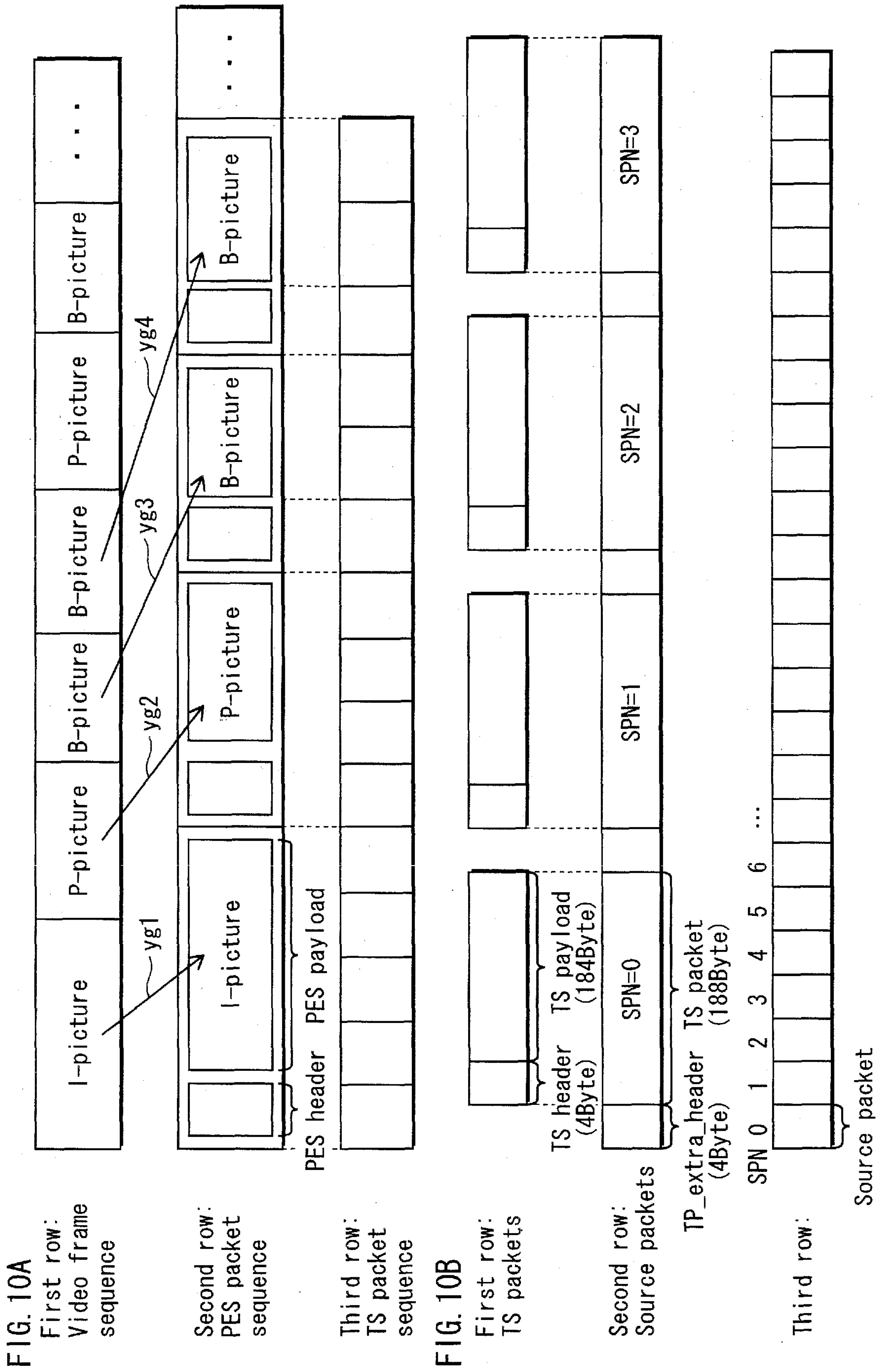


FIG. 10A

FIG. 10B

FIG.11

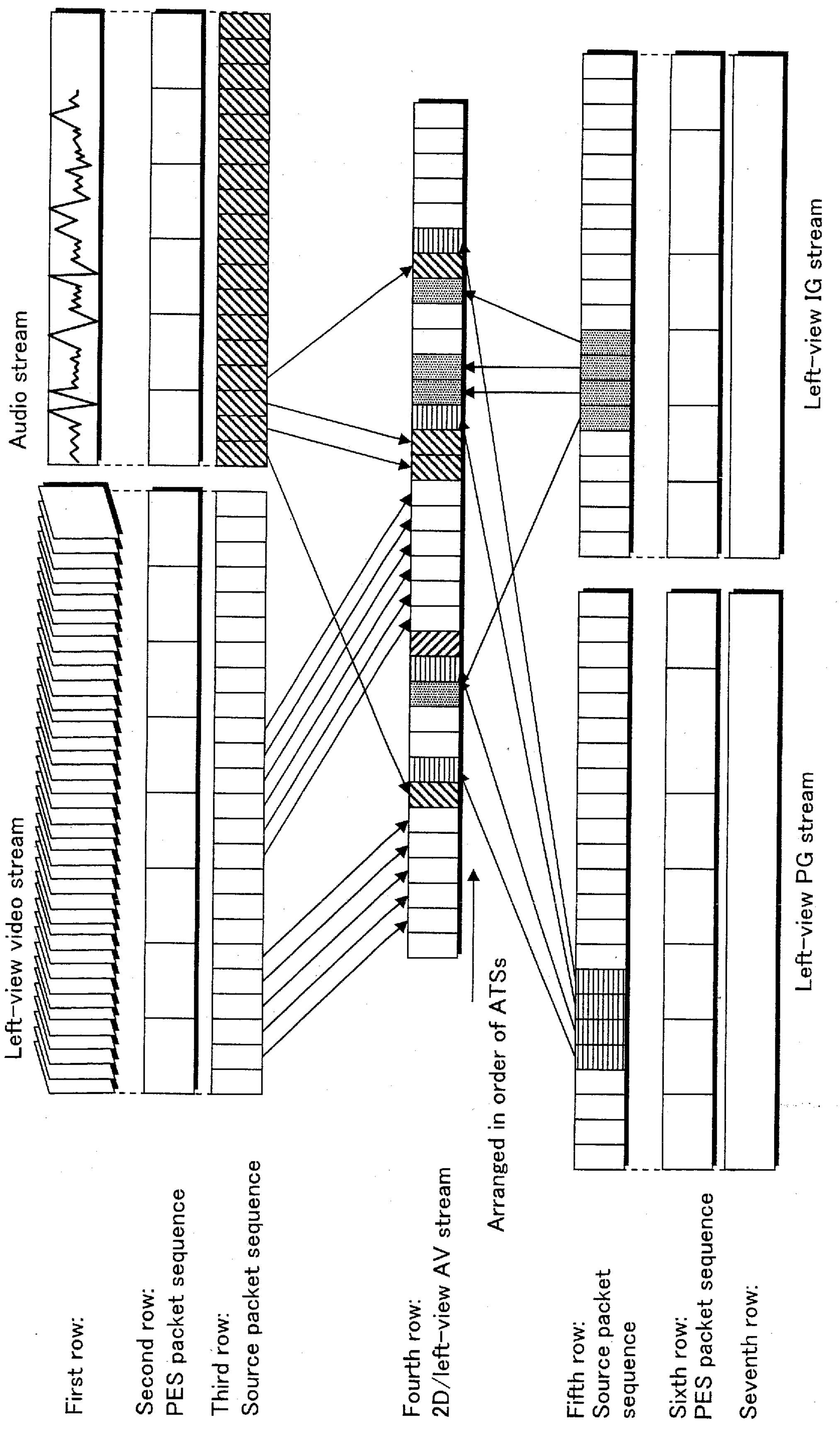
Left-view video stream
Audio stream
Left-view IG stream
Left-view PG stream
Arranged in order of ATSs
First row:
Second row:
PES packet sequence
Third row:
Source packet sequence
Fourth row:
2D/left-view AV stream
Fifth row:
Source packet
sequence
Sixth row:
PES packet sequence
Seventh row:

FIG. 12

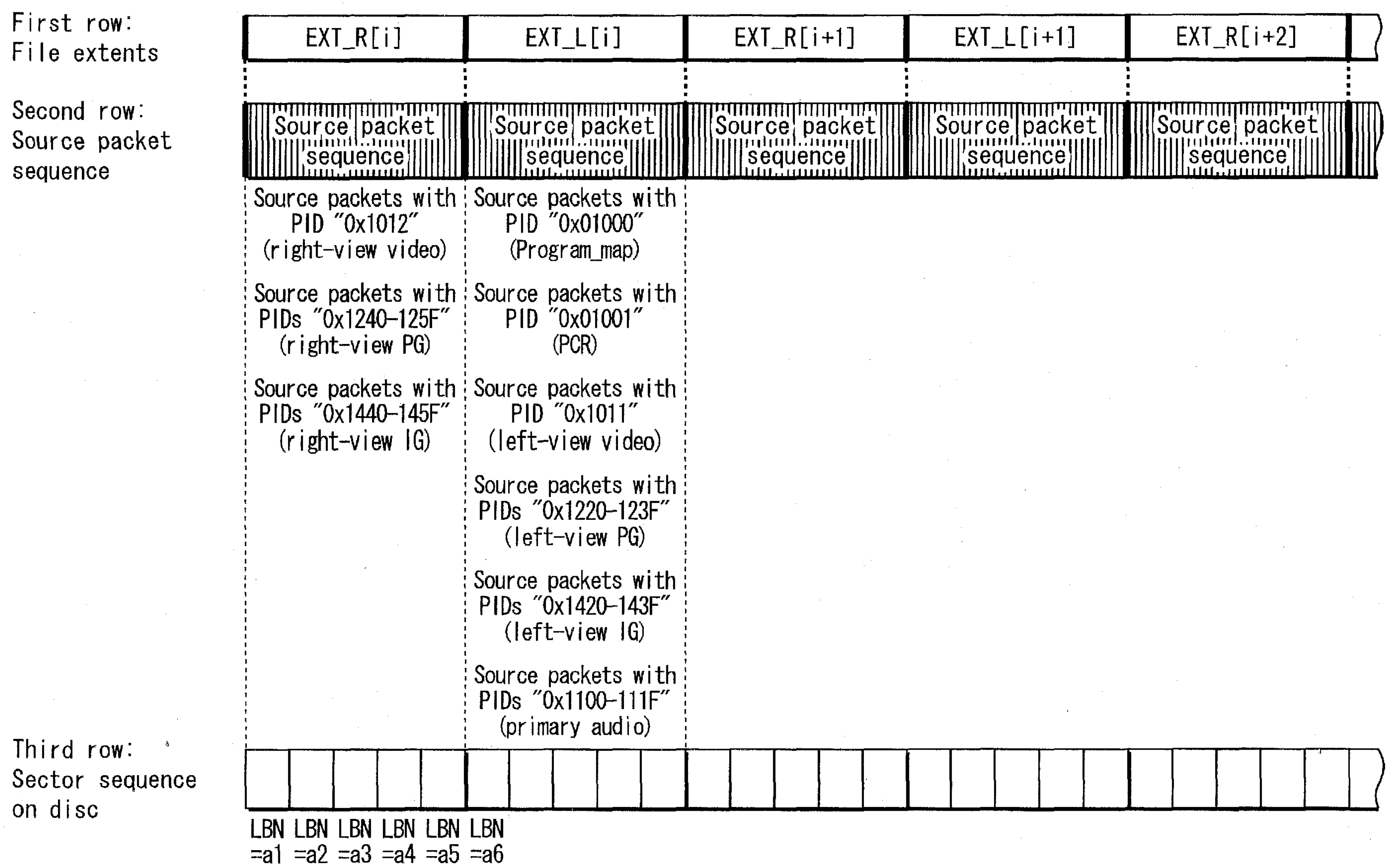
First row:
File extents
Second row:
Source packet
sequence
Third row:
Sector sequence
on disc
EXT_R[i]
EXT_L[i]
EXT_R[i+1]
EXT_L[i+1]
EXT_R[i+2]
Source packet sequence
Source packets with PID "0x1012" (right-view video)
Source packets with PIDs "0x1240-125F" (right-view PG)
Source packets with PIDs "0x1440-145F" (right-view IG)
Source packets with PID "0x01000" (Program_map)
Source packets with PID "0x01001" (PCR)
Source packets with PID "0x1011" (left-view video)
Source packets with PIDs "0x1220-123F" (left-view PG)
Source packets with PIDs "0x1420-143F" (left-view IG)
Source packets with PIDs "0x1100-111F" (primary audio)
LBN =a1
LBN =a2
LBN =a3
LBN =a4
LBN =a5
LBN =a6

FIG. 13

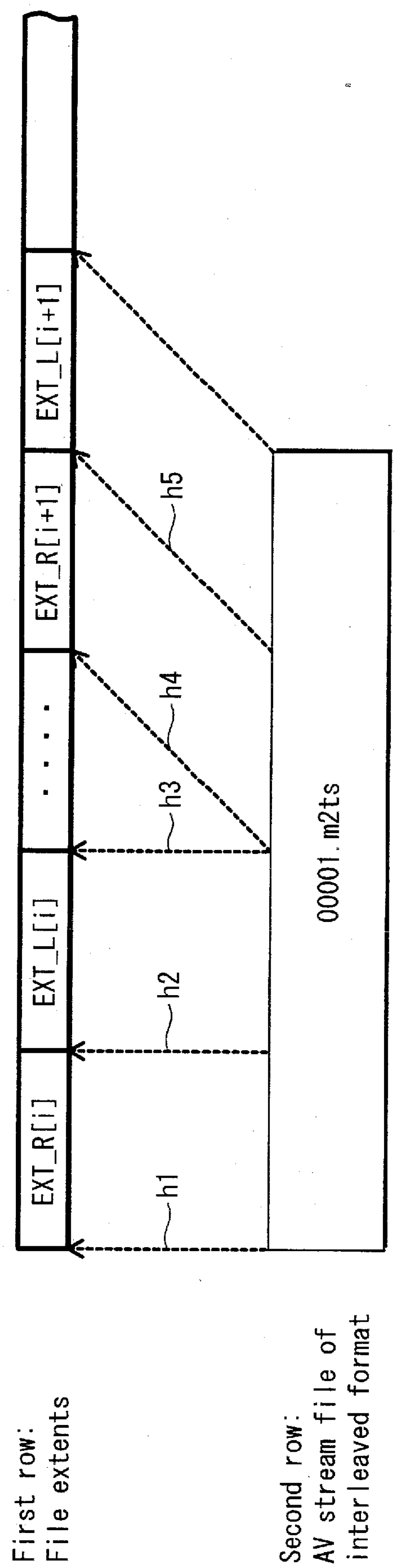
First row:
File extents
Second row:
AV stream file of
interleaved format
EXT_R[i]
EXT_L[i]
. . . .
EXT_R[i+1]
EXT_L[i+1]
h1
h2
h3
h4
h5
00001.m2ts

FIG. 14

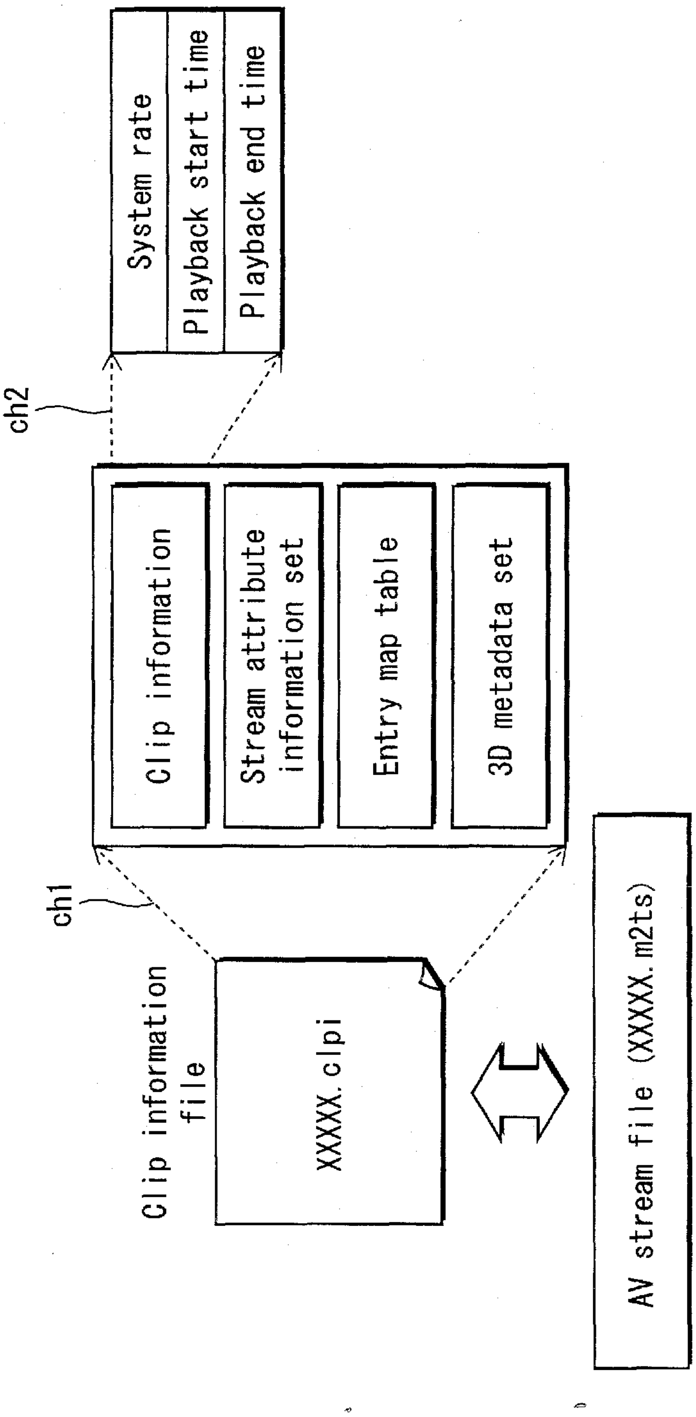

System rate
Playback start time
Playback end time
ch2
Clip information
Stream attribute information set
Entry map table
3D metadata set
ch1
Clip information file
XXXXX.clpi
AV stream file (XXXXX.m2ts)

FIG. 15

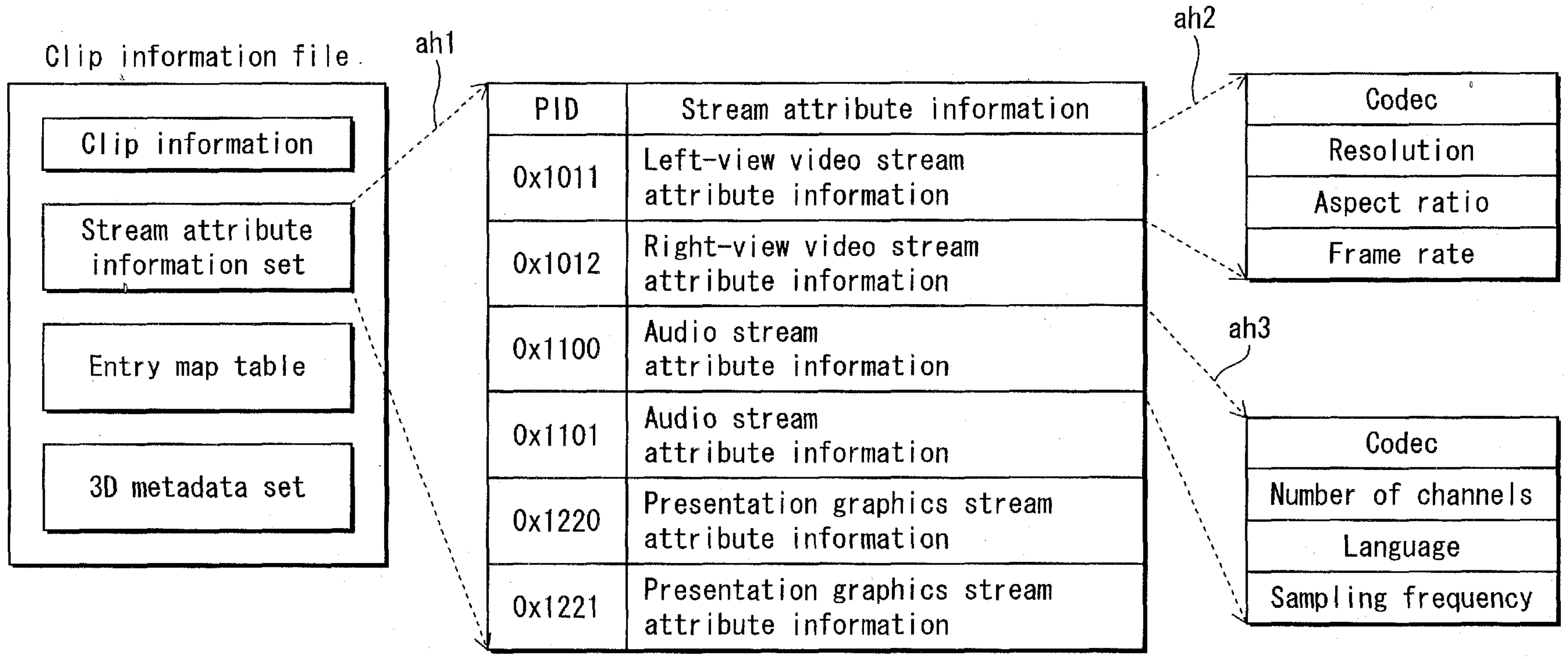
Clip information file
Clip information
Stream attribute information set
Entry map table
3D metadata set
ah1
PID
Stream attribute information
0x1011
Left-view video stream attribute information
0x1012
Right-view video stream attribute information
0x1100
Audio stream attribute information
0x1101
Audio stream attribute information
0x1220
Presentation graphics stream attribute information
0x1221
Presentation graphics stream attribute information
ah2
Codec
Resolution
Aspect ratio
Frame rate
ah3
Codec
Number of channels
Language
Sampling frequency

FIG. 16A

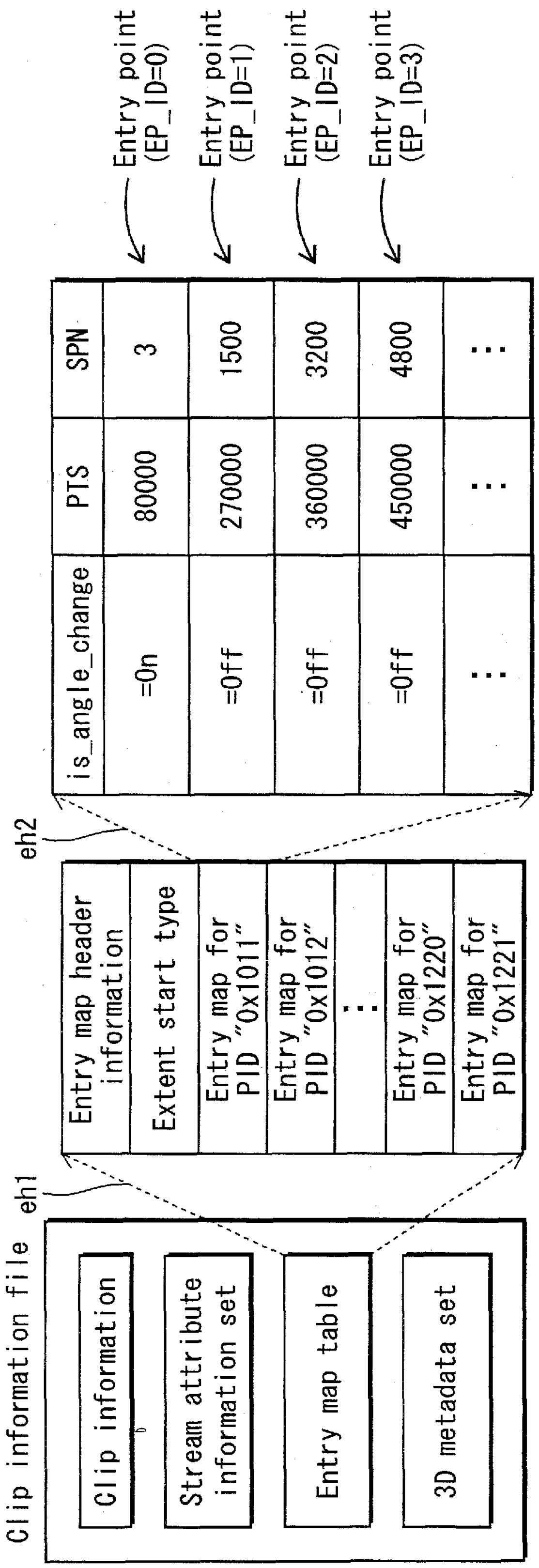


FIG. 16B

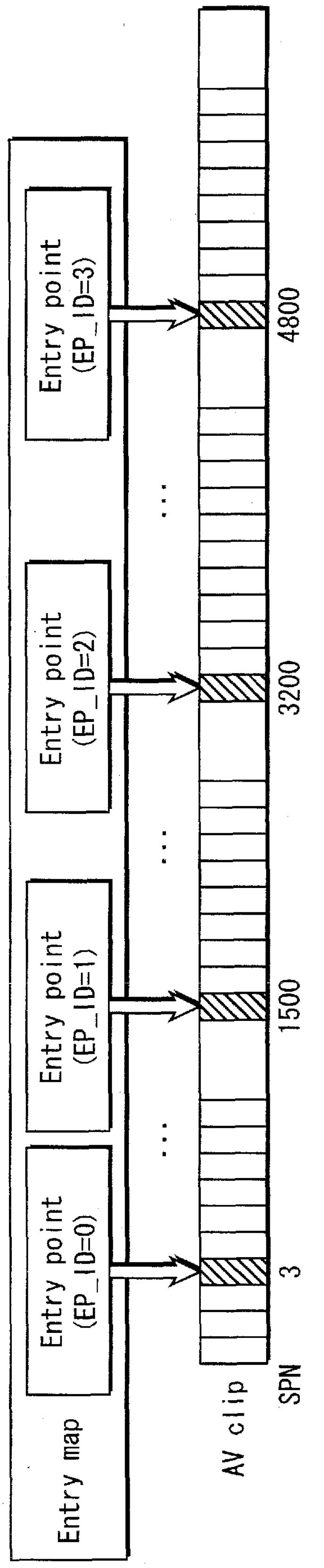

FIG. 17

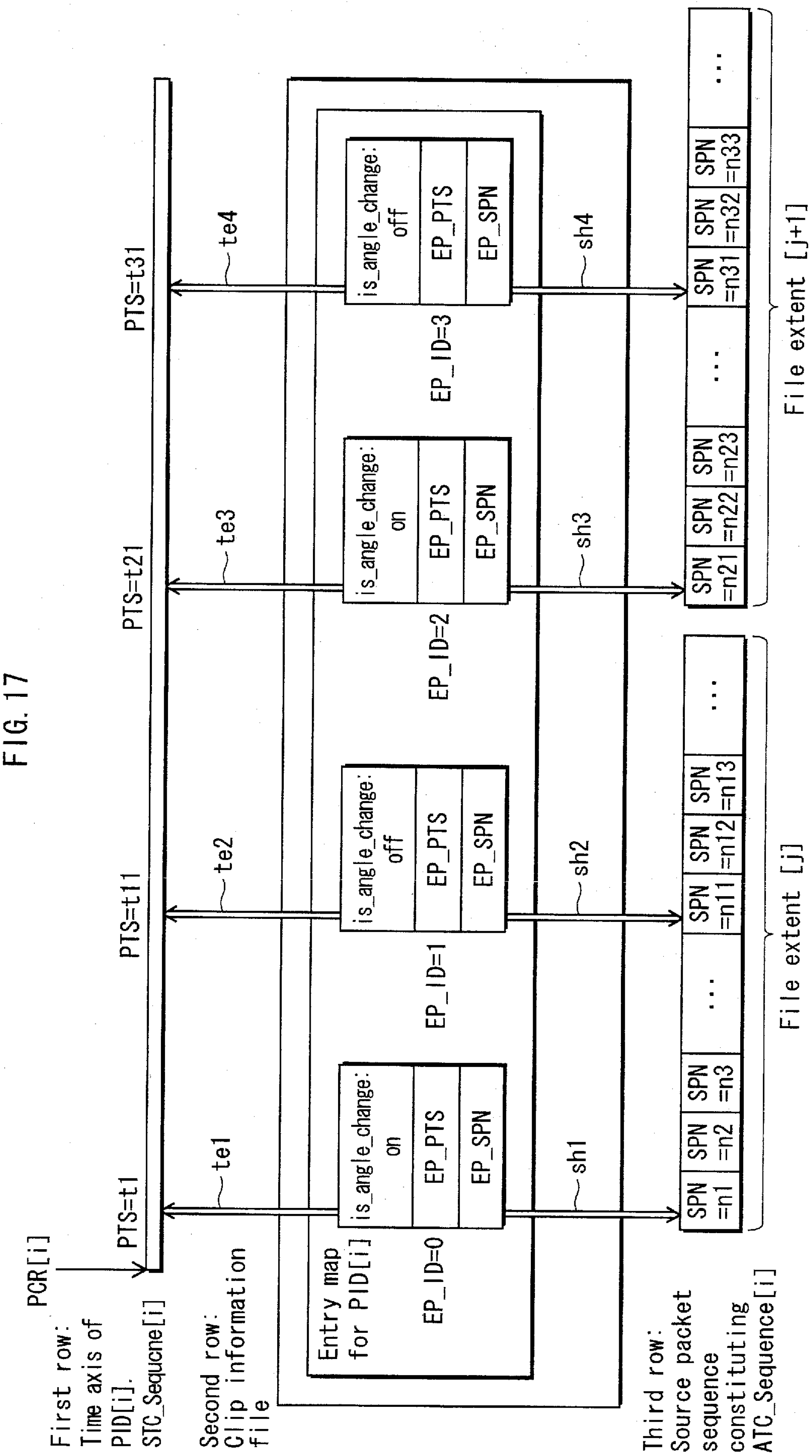
First row: Time axis of PID[i]. STC_Sequcne[i]
PCR[i]
PTS=t1
PTS=t11
PTS=t21
PTS=t31
te1
te2
te3
te4
Second row: Clip information file
Entry map for PID[i]
EP_ID=0
EP_ID=1
EP_ID=2
EP_ID=3
is_angle_change: on
is_angle_change: off
is_angle_change: on
is_angle_change: off
EP_PTS
EP_SPN
sh1
sh2
sh3
sh4
Third row: Source packet sequence constituting ATC_Sequence[i]
SPN =n1
SPN =n2
SPN =n3
SPN =n11
SPN =n12
SPN =n13
SPN =n21
SPN =n22
SPN =n23
SPN =n31
SPN =n32
SPN =n33
File extent [j]
File extent [j+1]

FIG.18A

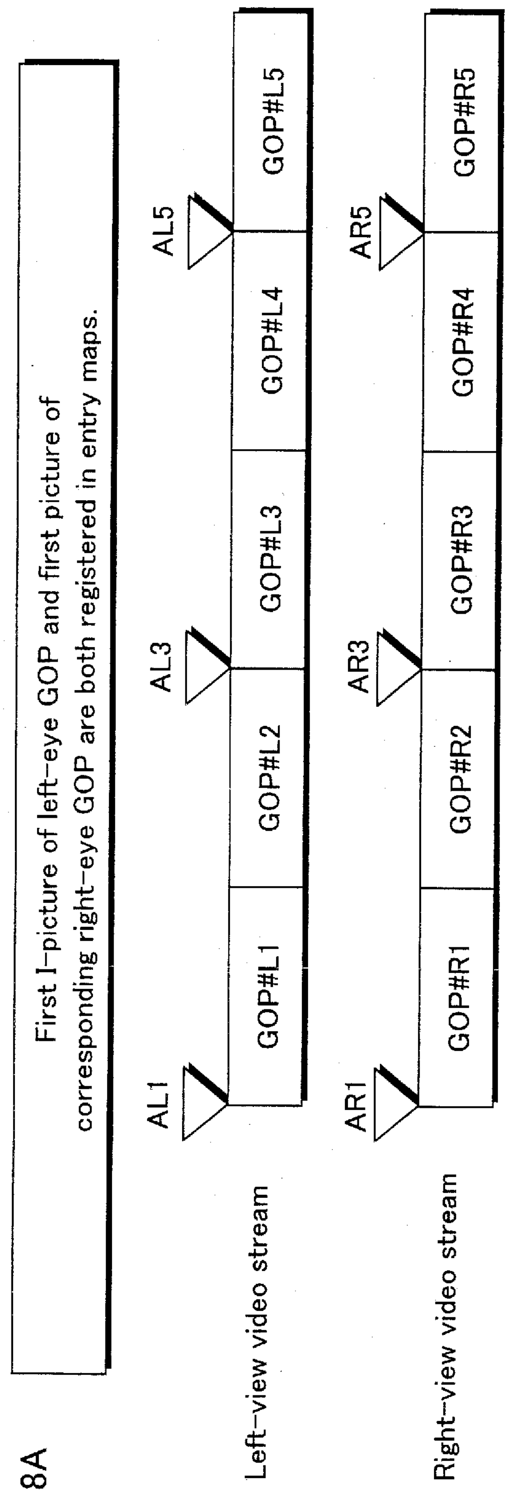


FIG.18B

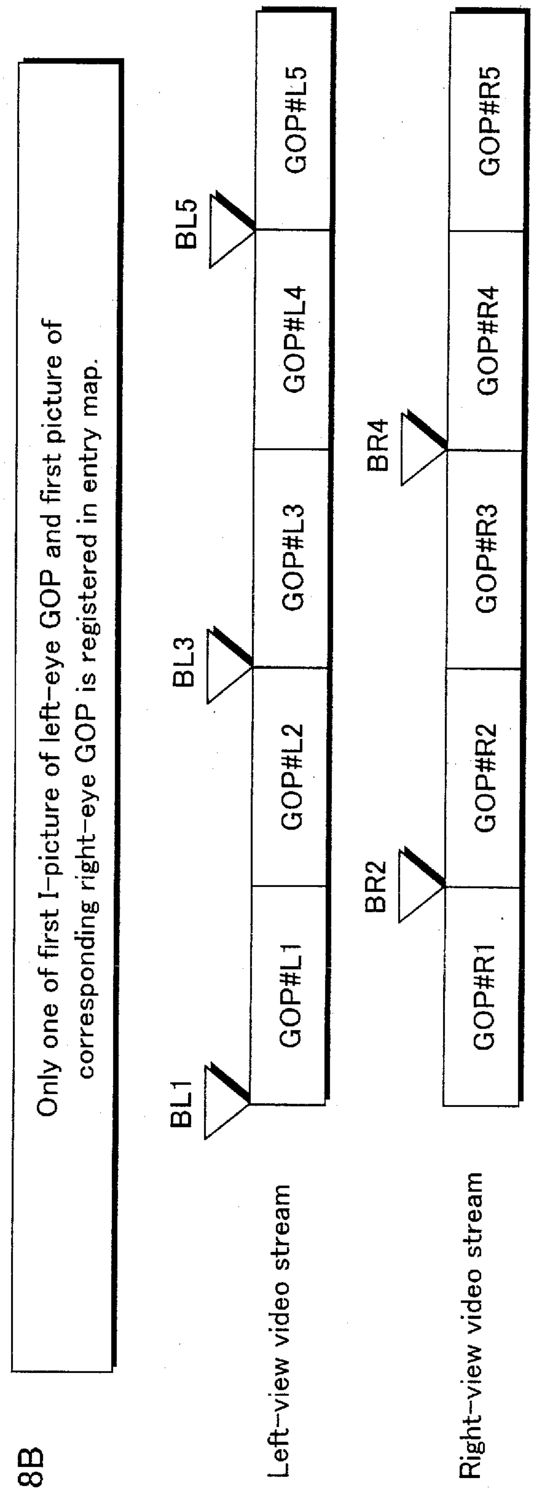

FIG.19

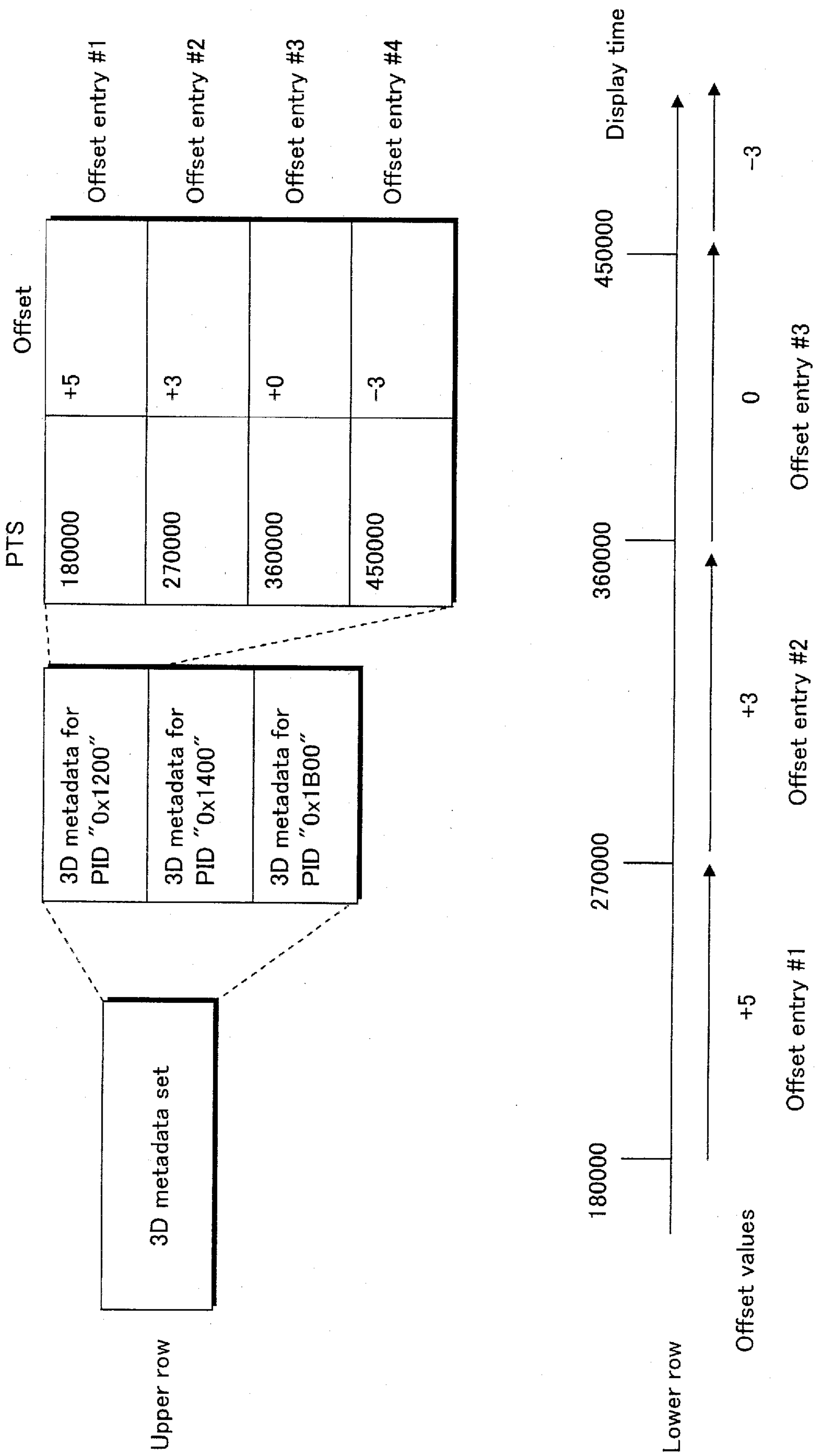
Upper row
3D metadata set
3D metadata for PID "0x1200"
3D metadata for PID "0x1400"
3D metadata for PID "0x1B00"
PTS
Offset
180000
+5
Offset entry #1
270000
+3
Offset entry #2
360000
+0
Offset entry #3
450000
-3
Offset entry #4
Lower row
180000
270000
360000
450000
Display time
Offset values
+5
Offset entry #1
+3
Offset entry #2
0
Offset entry #3
-3

FIG.20

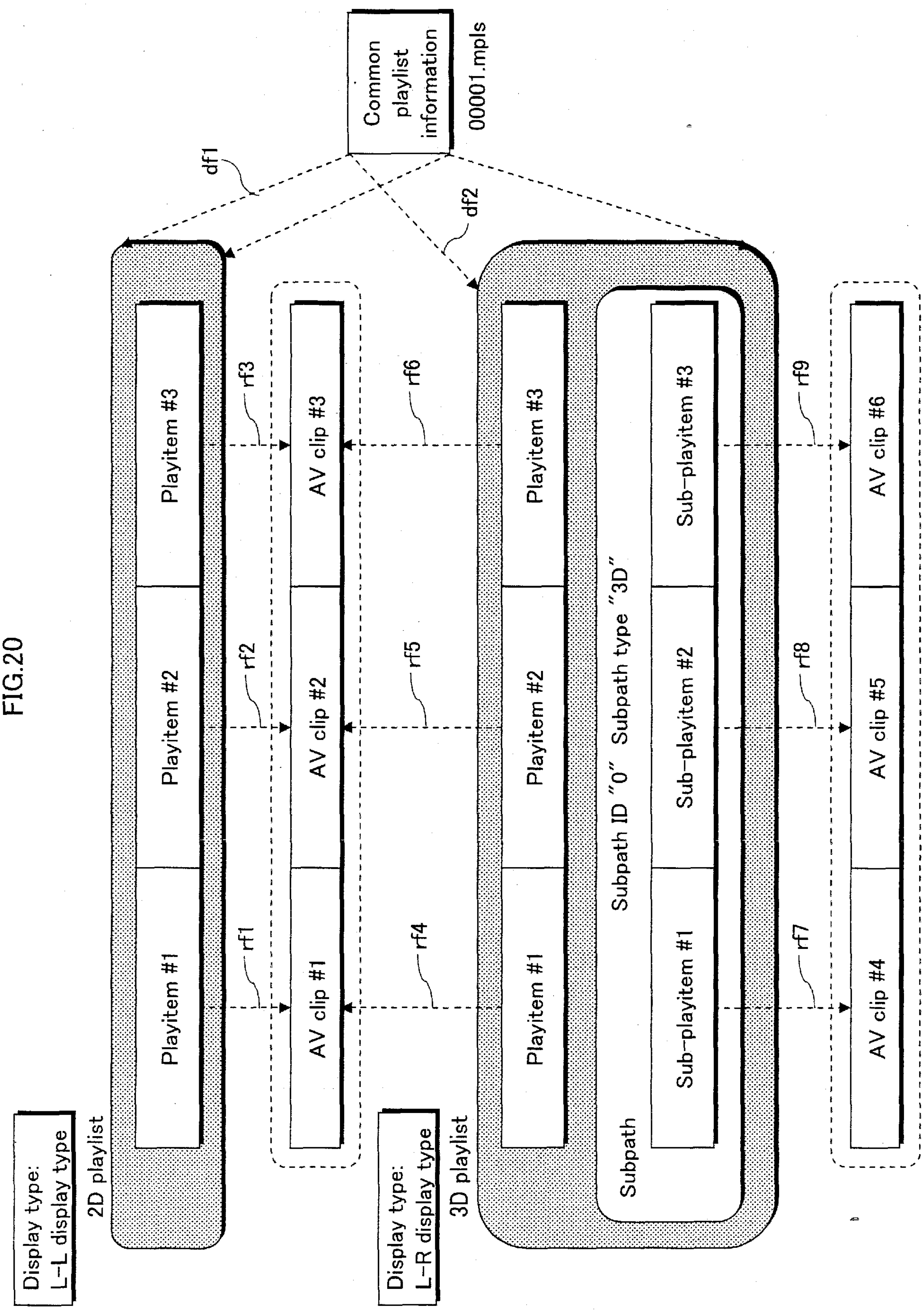
Common playlist information
00001.mpls
df1
df2
Display type: L-L display type
2D playlist
Playitem #1
Playitem #2
Playitem #3
rf1
rf2
rf3
AV clip #1
AV clip #2
AV clip #3
rf4
rf5
rf6
Display type: L-R display type
3D playlist
Playitem #1
Playitem #2
Playitem #3
Subpath
Subpath ID "0" Subpath type "3D"
Sub-playitem #1
Sub-playitem #2
Sub-playitem #3
rf7
rf8
rf9
AV clip #4
AV clip #5
AV clip #6

FIG.21

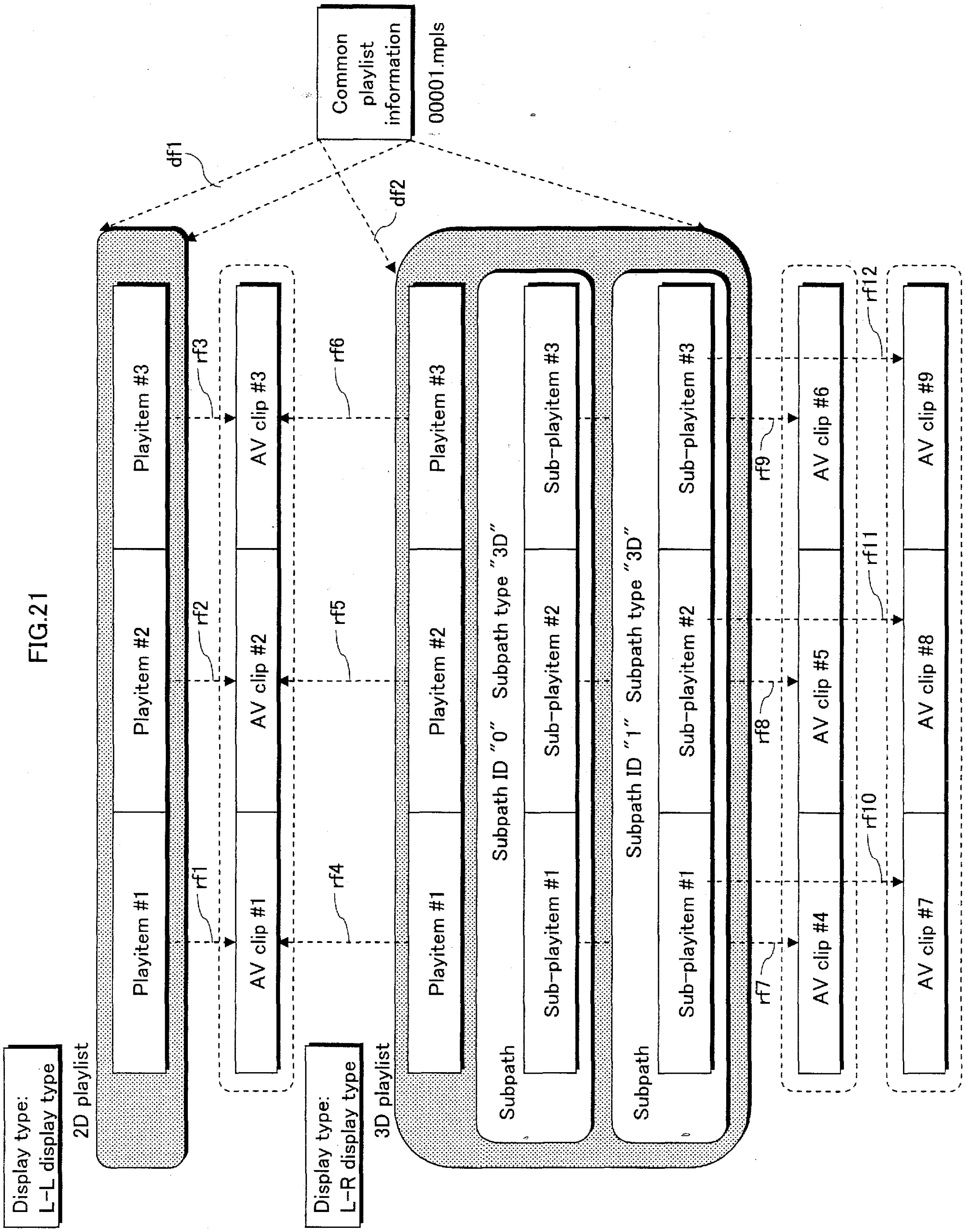
Common playlist information
00001.mpls
df1
df2
Display type: L-L display type
2D playlist
Playitem #1
Playitem #2
Playitem #3
rf1
rf2
rf3
AV clip #1
AV clip #2
AV clip #3
rf4
rf5
rf6
Display type: L-R display type
3D playlist
Playitem #1
Playitem #2
Playitem #3
Subpath
Subpath ID "0" Subpath type "3D"
Sub-playitem #1
Sub-playitem #2
Sub-playitem #3
Subpath
Subpath ID "1" Subpath type "3D"
Sub-playitem #1
Sub-playitem #2
Sub-playitem #3
rf7
rf8
rf9
AV clip #4
AV clip #5
AV clip #6
rf10
rf11
rf12
AV clip #7
AV clip #8
AV clip #9

FIG.22A

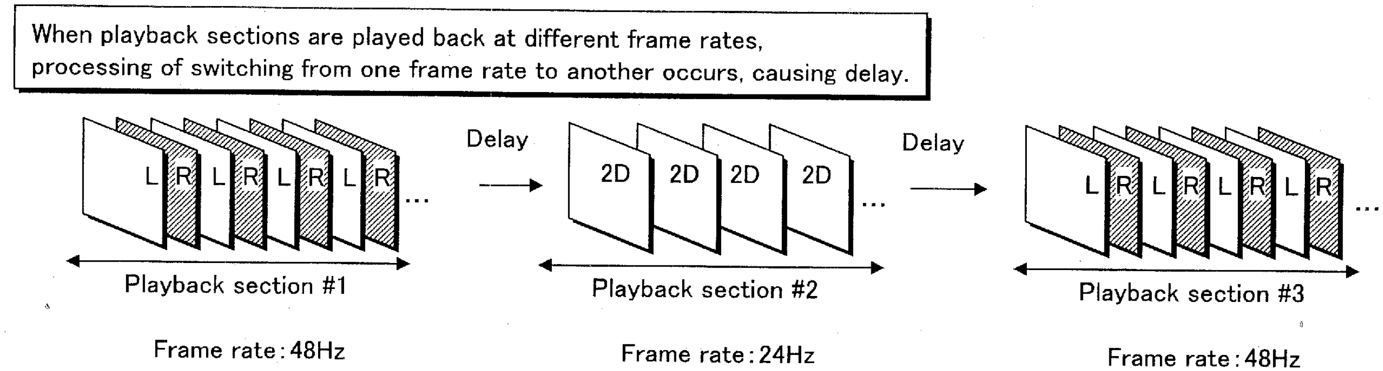


FIG.22B

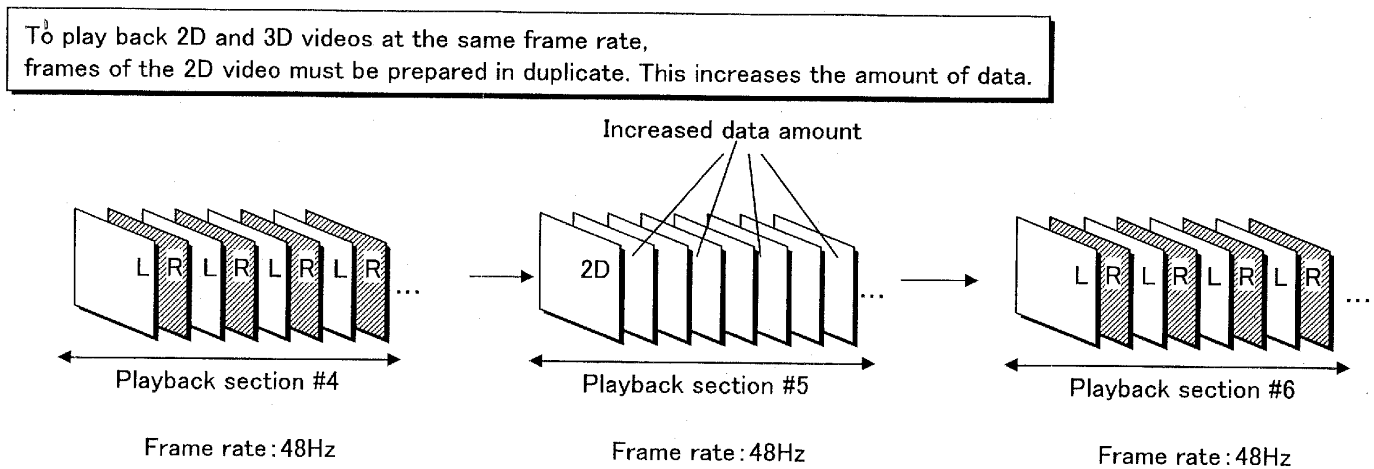

FIG.23

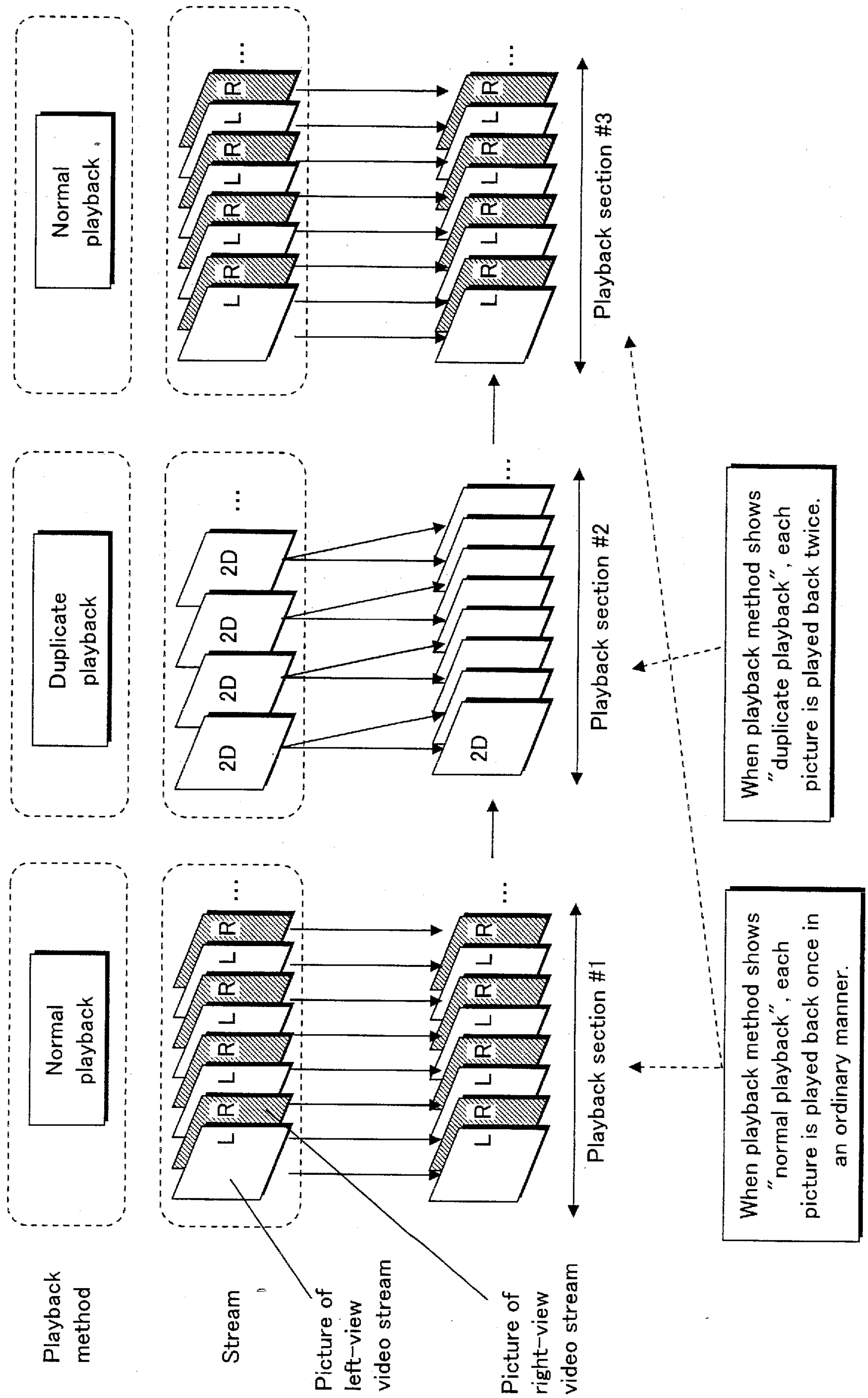
Playback method
Stream
Picture of left-view video stream
Picture of right-view video stream
Normal playback
Duplicate playback
Normal playback
L
R
2D
Playback section #1
Playback section #2
Playback section #3
When playback method shows "normal playback", each picture is played back once in an ordinary manner.
When playback method shows "duplicate playback", each picture is played back twice.

FIG.24

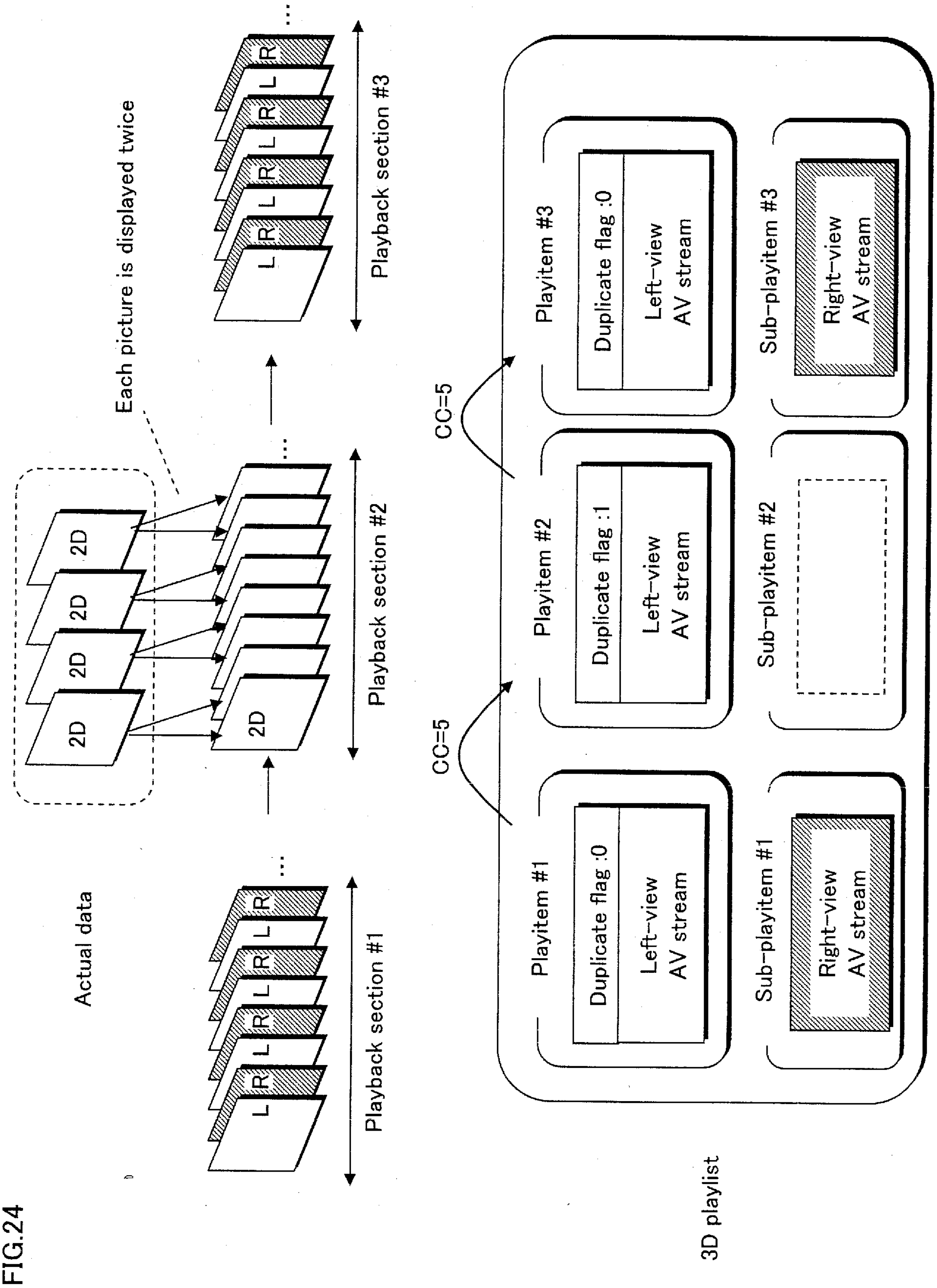
Actual data
Each picture is displayed twice
2D
L
R
Playback section #1
Playback section #2
Playback section #3
CC=5
CC=5
Playitem #1
Duplicate flag :0
Left-view AV stream
Playitem #2
Duplicate flag :1
Left-view AV stream
Playitem #3
Duplicate flag :0
Left-view AV stream
Sub-playitem #1
Right-view AV stream
Sub-playitem #2
Sub-playitem #3
Right-view AV stream
3D playlist

FIG. 25

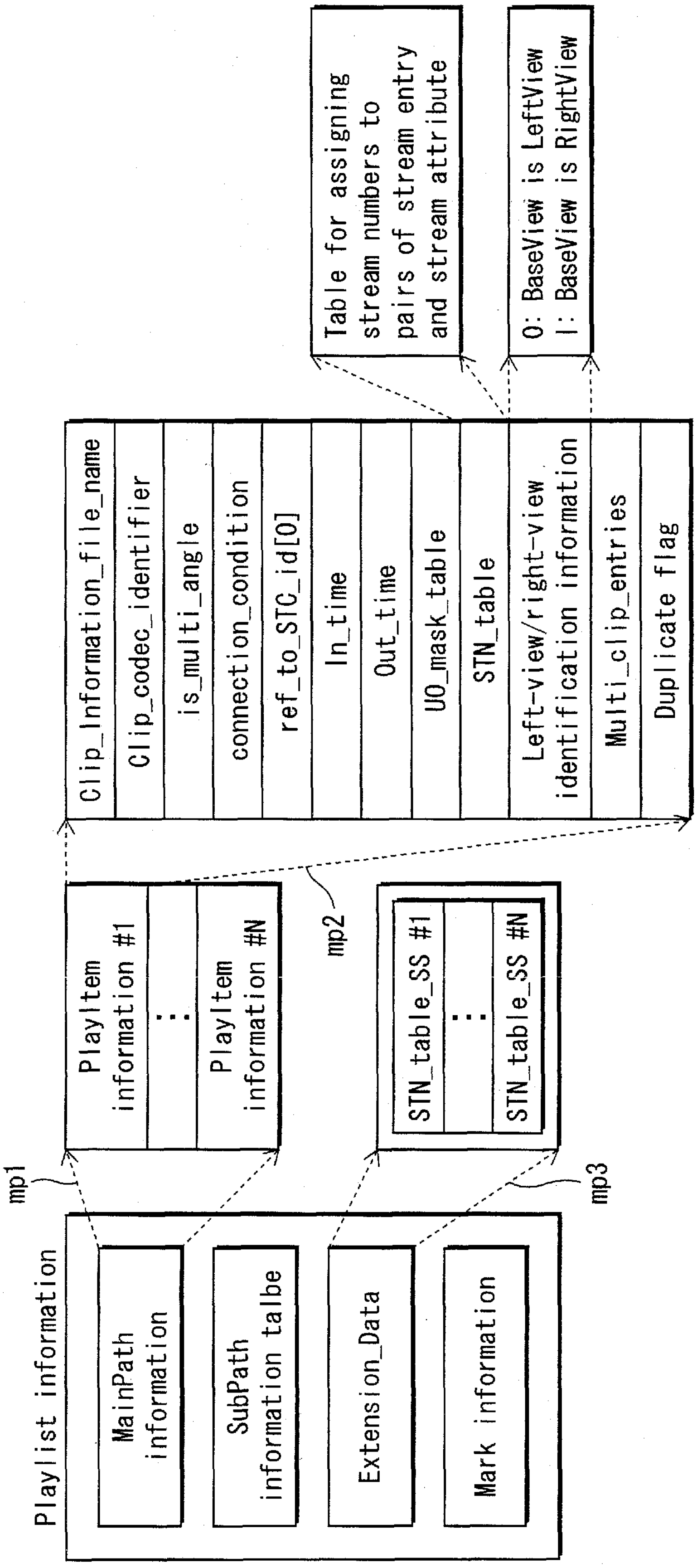
Playlist information
MainPath information
SubPath information talbe
Extension_Data
Mark information
mp1
mp2
mp3
PlayItem information #1
...
PlayItem information #N
STN_table_SS #1
...
STN_table_SS #N
Clip_Information_file_name
Clip_codec_identifier
is_multi_angle
connection_condition
ref_to_STC_id[0]
In_time
Out_time
UO_mask_table
STN_table
Left-view/right-view identification information
Multi_clip_entries
Duplicate flag
Table for assigning stream numbers to pairs of stream entry and stream attribute
0: BaseView is LeftView
1: BaseView is RightView

FIG. 26

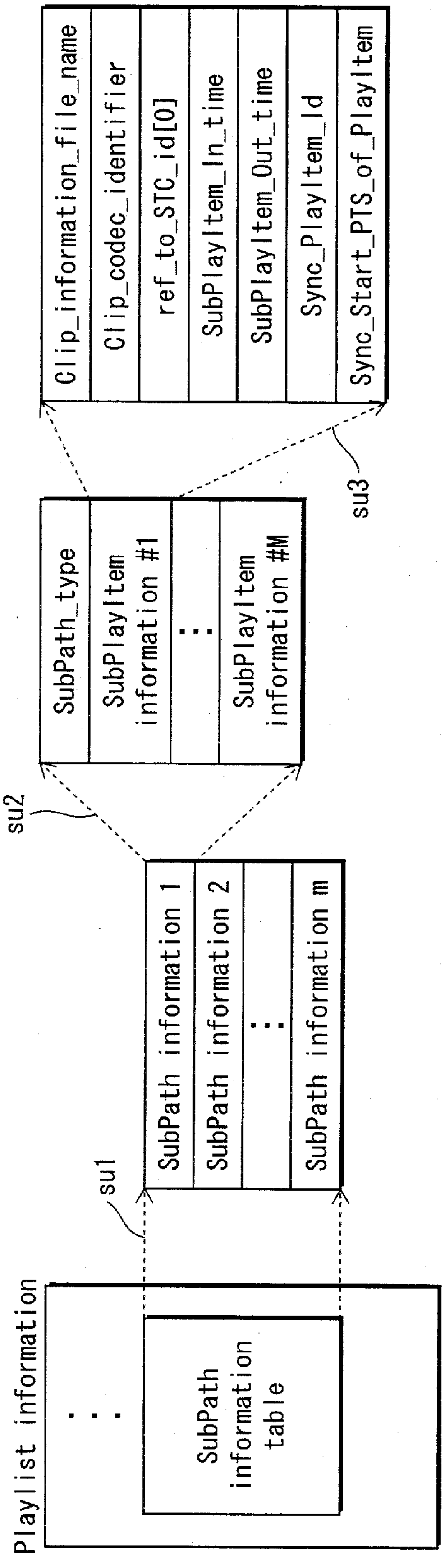
Playlist information
SubPath information table
su1
SubPath information 1
SubPath information 2
SubPath information m
su2
SubPath_type
SubPlayItem information #1
SubPlayItem information #M
su3
Clip_information_file_name
Clip_codec_identifier
ref_to_STC_id[0]
SubPlayItem_In_time
SubPlayItem_Out_time
Sync_PlayItem_Id
Sync_Start_PTS_of_PlayItem

FIG. 27

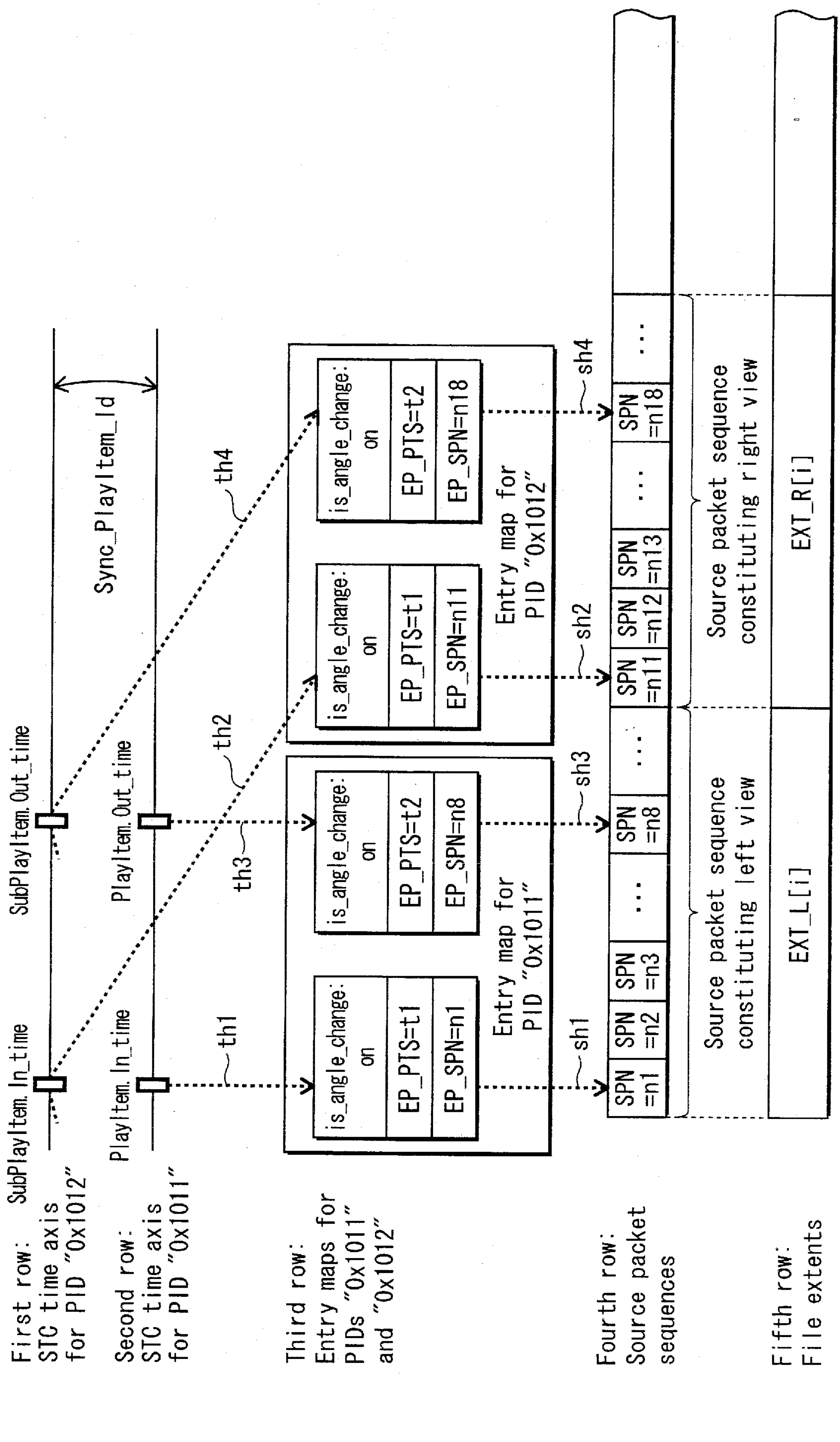
First row: STC time axis for PID "0x1012"
Second row: STC time axis for PID "0x1011"
Third row: Entry maps for PIDs "0x1011" and "0x1012"
Fourth row: Source packet sequences
Fifth row: File extents
SubPath. SubPlayItem. In_time
SubPath. SubPlayItem. Out_time
PlayItem. In_time
PlayItem. Out_time
Sync_PlayItem_Id
th1
th2
th3
th4
is_angle_change: on
EP_PTS=t1
EP_SPN=n1
is_angle_change: on
EP_PTS=t2
EP_SPN=n8
Entry map for PID "0x1011"
is_angle_change: on
EP_PTS=t1
EP_SPN=n11
is_angle_change: on
EP_PTS=t2
EP_SPN=n18
Entry map for PID "0x1012"
sh1
sh2
sh3
sh4
SPN =n1
SPN =n2
SPN =n3
...
SPN =n8
...
SPN =n11
SPN =n12
SPN =n13
...
SPN =n18
...
Source packet sequence constituting left view
Source packet sequence constituting right view
EXT_L[i]
EXT_R[i]

FIG. 28A

Stream selection table

| |
|---|
| 2D video stream entry group |
| 2D audio stream entry group |
| 2D PG stream entry group |
| 2D IG stream entry group |
| 3D video stream entry group |
| 3D audio stream entry group |
| 3D PG stream entry group |
| 3D IG stream entry group |
| Stream combination information |

STN_table: Has entries of audio/PG/IG for 2D that are playable with setting of 2D output mode

STN_table_SS (stereoscopic): Has entries of audio/PG/IG for 3D that are playable with setting of stereoscopic output mode

FIG. 28B

Structural elements common to stream entries

| Stream selection no. | Stream path info | Stream ID info |
|---|---|---|

FIG. 28C

STN_table

| Stream selection no. | Stream path info | Stream ID info |
|---|---|---|
| 1 | Main path | Video |
| 2 | Main path | Audio 1 |
| 3 | Subpath ID "1" | Audio 2 |
| 4 | Main path | Presentation graphics 1 |
| 5 | Main path | Presentation graphics 2 |
| 6 | Main path | Interactive graphics 1 |
| 7 | Main path | Interactive graphics 2 |

STN_table_SS

| Stream selection no. | Stream path info | Stream ID info |
|---|---|---|
| 1 | Main path | Left-view video |
| 2 | Subpath | Right-view video |
| 3 | Main path | Audio 1 |
| 4 | Subpath ID "1" | Audio 2 |
| 5 | Main path | Presentation graphics 1 |
| 6 | Main path | Presentation graphics 2 |
| 7 | Subpath ID "2" | Presentation graphics 3 |
| 8 | Subpath ID "3" | Presentation graphics 4 |
| 9 | Main path | Interactive graphics 1 |

FIG.29

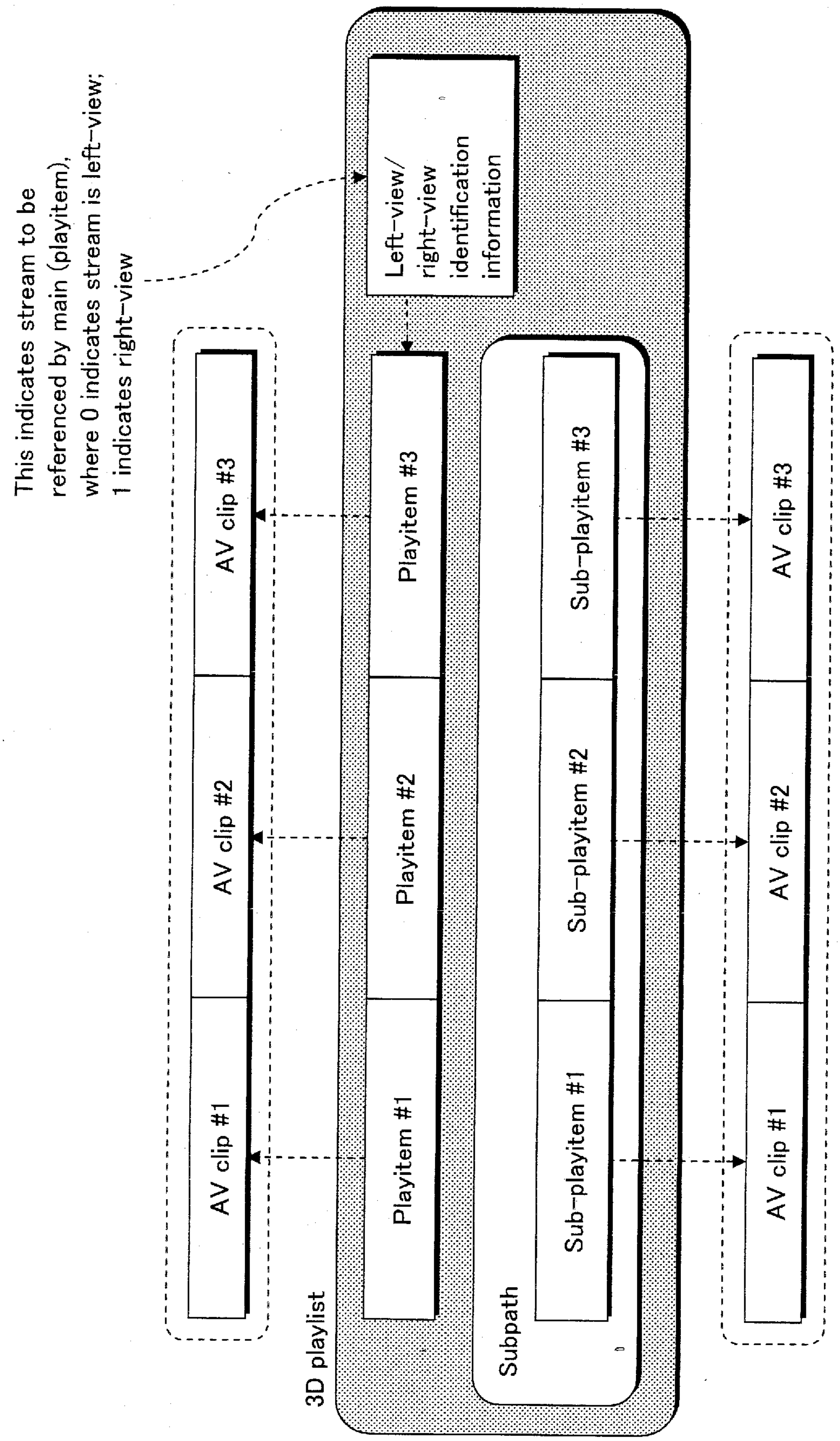
This indicates stream to be referenced by main (playitem), where 0 indicates stream is left-view; 1 indicates right-view
Left-view/ right-view identification information
3D playlist
Playitem #1
Playitem #2
Playitem #3
Subpath
Sub-playitem #1
Sub-playitem #2
Sub-playitem #3
AV clip #1
AV clip #2
AV clip #3
AV clip #1
AV clip #2
AV clip #3

FIG. 30

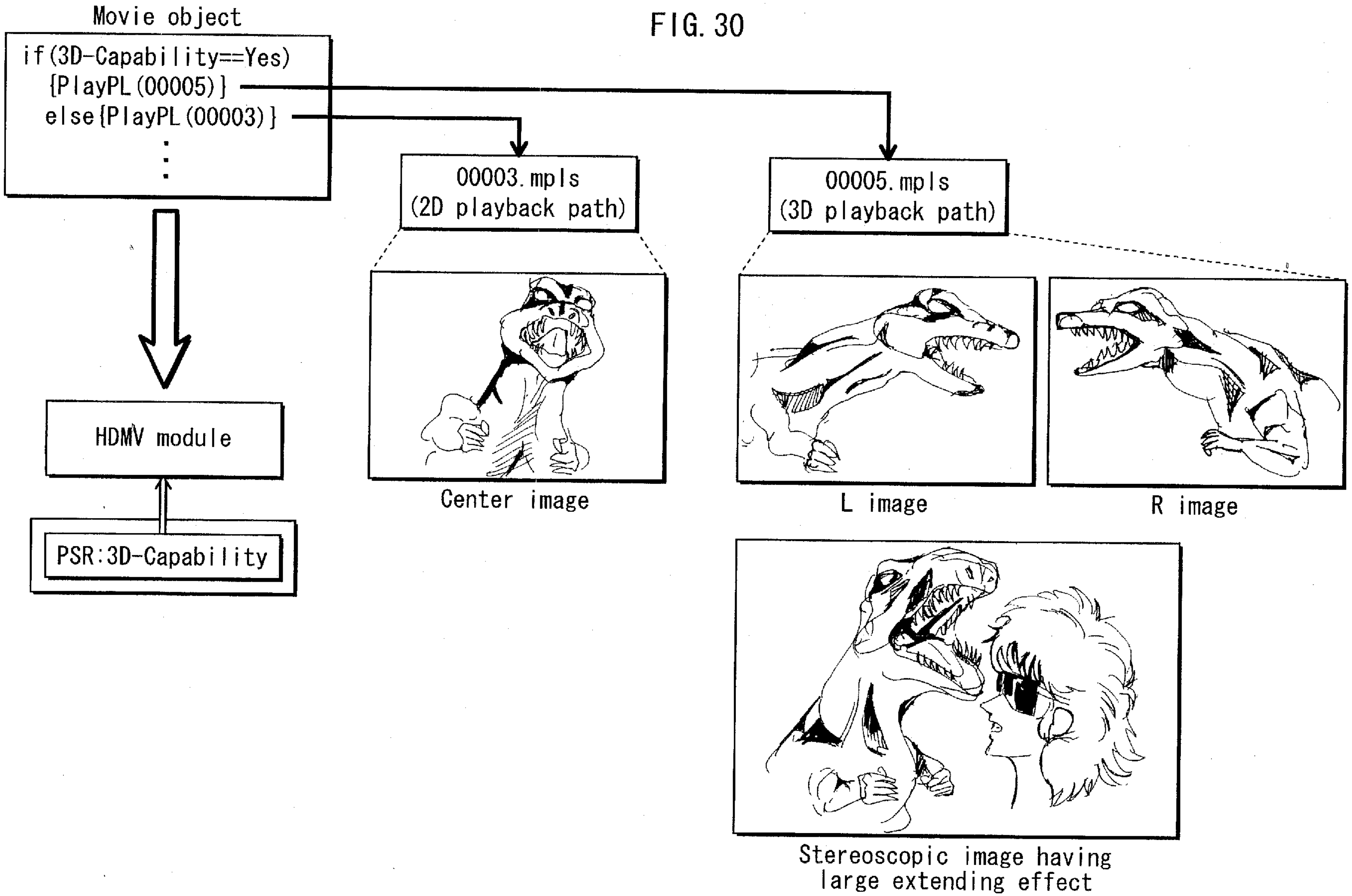
Movie object
if(3D-Capability==Yes)
{PlayPL(00005)}
else{PlayPL(00003)}
HDMV module
PSR:3D-Capability
00003.mpls
(2D playback path)
00005.mpls
(3D playback path)
Center image
L image
R image
Stereoscopic image having large extending effect

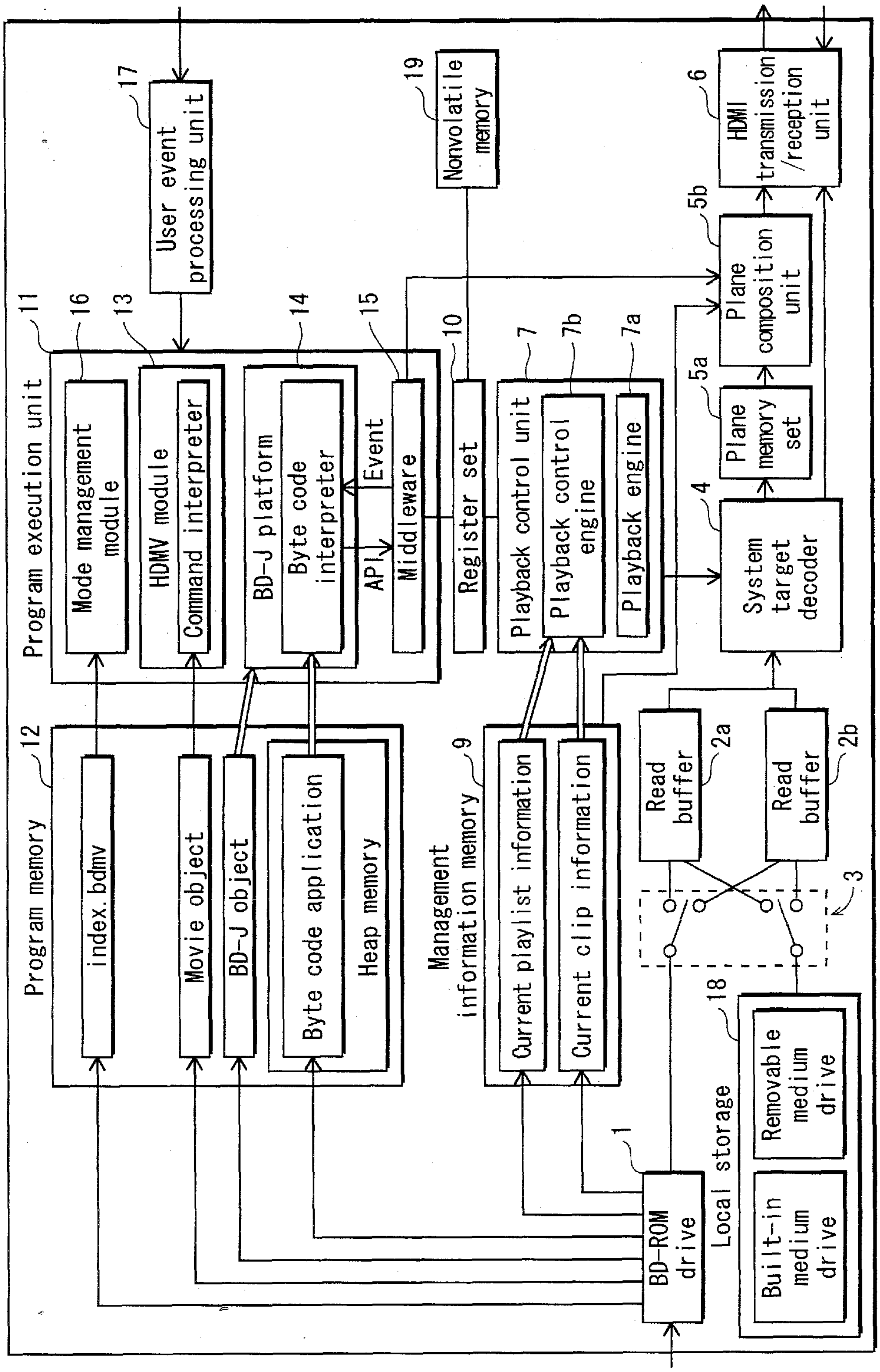
Program execution unit
11
Mode management module
16
HDMV module
13
Command interpreter
BD-J platform
14
Byte code interpreter
API
Event
Middleware
15
User event processing unit
17
Nonvolatile memory
19
Register set
10
Playback control unit
7
Playback control engine
7b
Playback engine
7a
Program memory
12
index.bdmv
Movie object
BD-J object
Byte code application
Heap memory
Management information memory
9
Current playlist information
Current clip information
Read buffer
2a
Read buffer
2b
3
System target decoder
4
Plane memory set
5a
Plane composition unit
5b
HDMI transmission /reception unit
6
BD-ROM drive
1
Local storage
18
Removable medium drive
Built-in medium drive
BD-ROM disc

FIG. 31

FIG.32

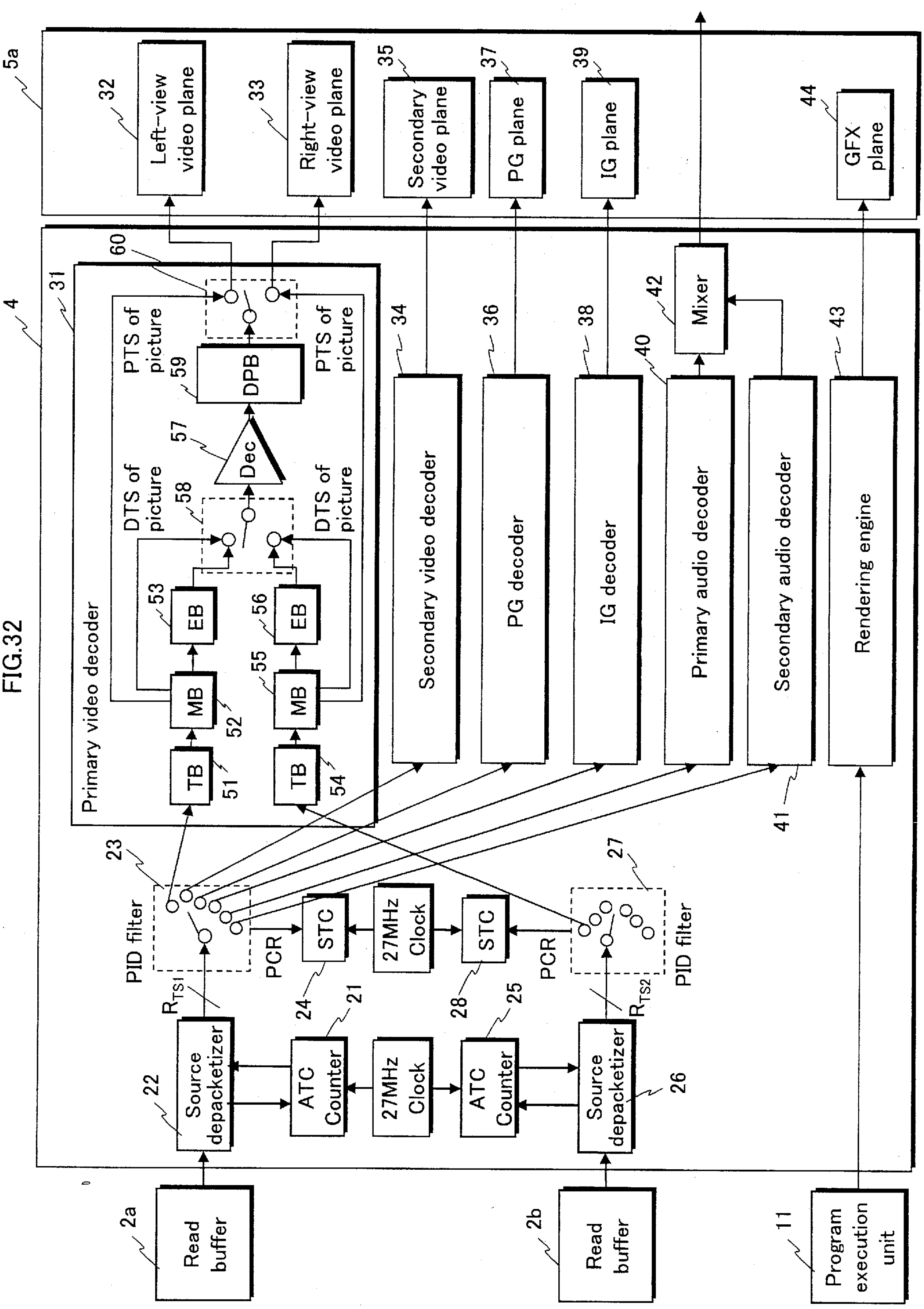
Left-view video plane
Right-view video plane
Secondary video plane
PG plane
IG plane
GFX plane
Primary video decoder
PTS of picture
DTS of picture
TB
MB
EB
Dec
DPB
Secondary video decoder
PG decoder
IG decoder
Primary audio decoder
Secondary audio decoder
Rendering engine
Mixer
PID filter
PCR
STC
27MHz Clock
ATC Counter
Source depacketizer
$R_{TS1}$
$R_{TS2}$
Read buffer
Program execution unit

FIG.33

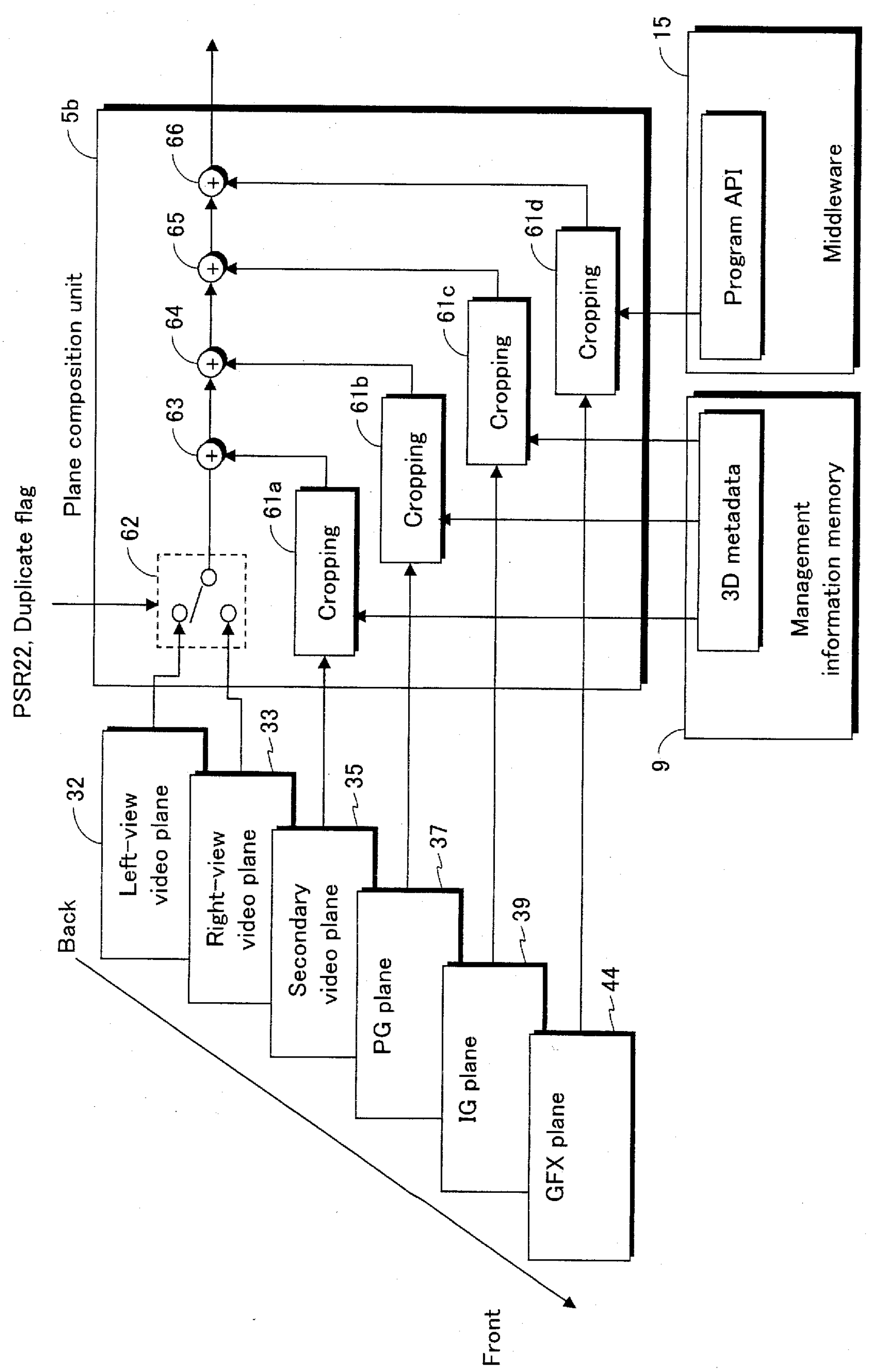
PSR22, Duplicate flag
Plane composition unit
5b
62
63
64
65
66
61a
61b
61c
61d
Cropping
Cropping
Cropping
Cropping
3D metadata
Management information memory
9
Program API
Middleware
15
Back
Front
Left-view video plane
32
Right-view video plane
33
Secondary video plane
35
PG plane
37
IG plane
39
GFX plane
44

FIG.34

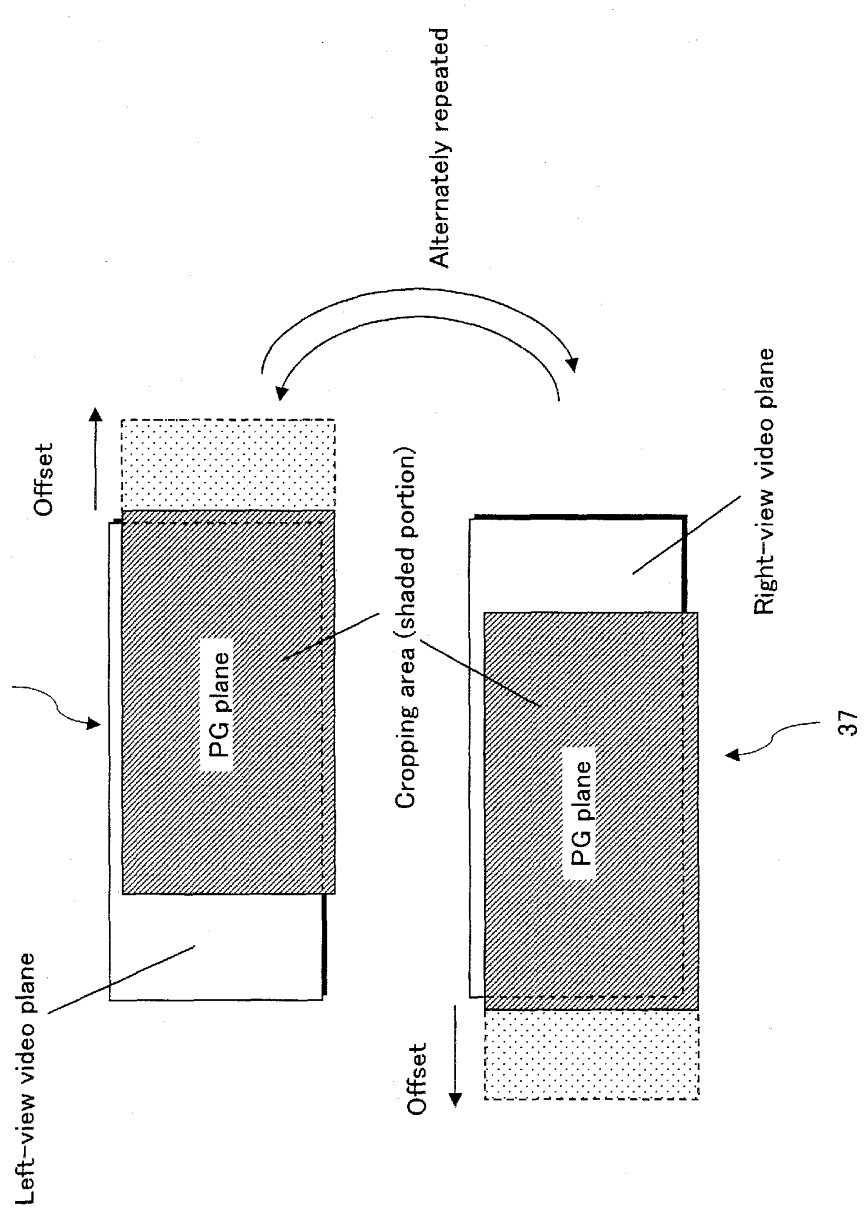
Alternately repeated
Offset
37
PG plane
Left-view video plane
Cropping area (shaded portion)
Right-view video plane
PG plane
37
Offset

FIG.35

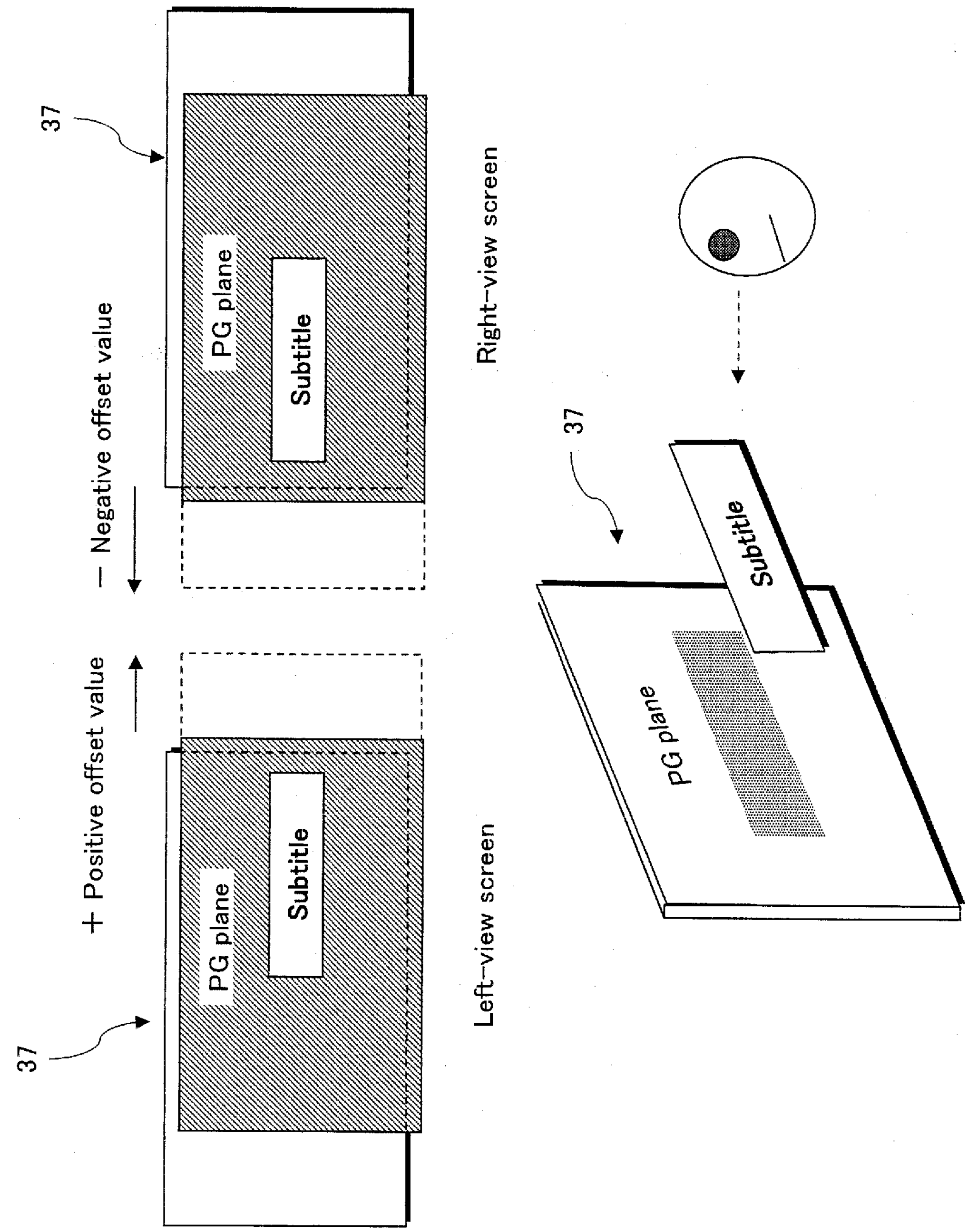
37
Negative offset value
PG plane
Subtitle
Right-view screen
+ Positive offset value
PG plane
Subtitle
Left-view screen
37
37
Subtitle
PG plane

FIG. 36

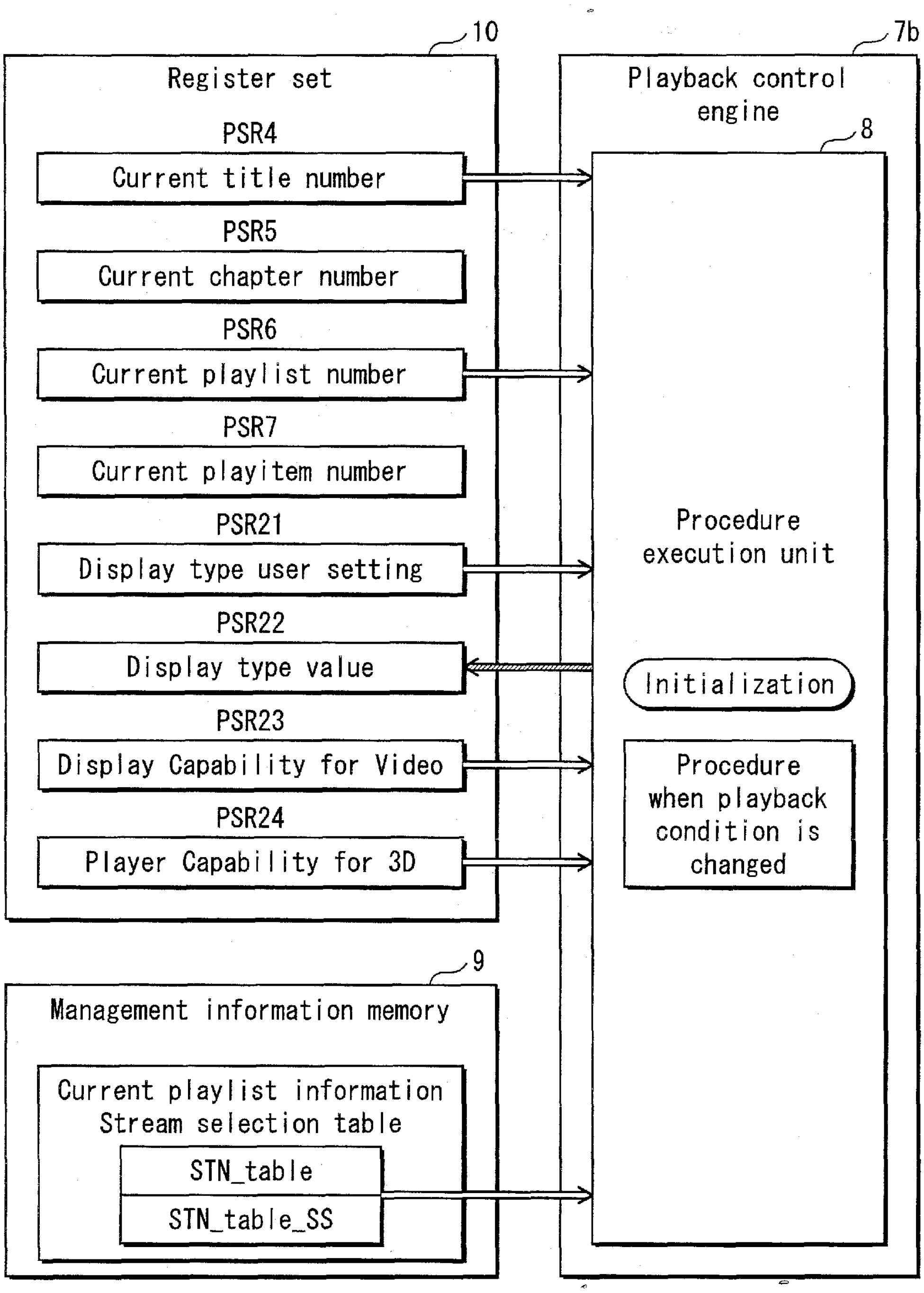
10
Register set
PSR4
Current title number
PSR5
Current chapter number
PSR6
Current playlist number
PSR7
Current playitem number
PSR21
Display type user setting
PSR22
Display type value
PSR23
Display Capability for Video
PSR24
Player Capability for 3D
7b
Playback control engine
8
Procedure execution unit
Initialization
Procedure when playback condition is changed
9
Management information memory
Current playlist information
Stream selection table
STN_table
STN_table_SS

FIG.37

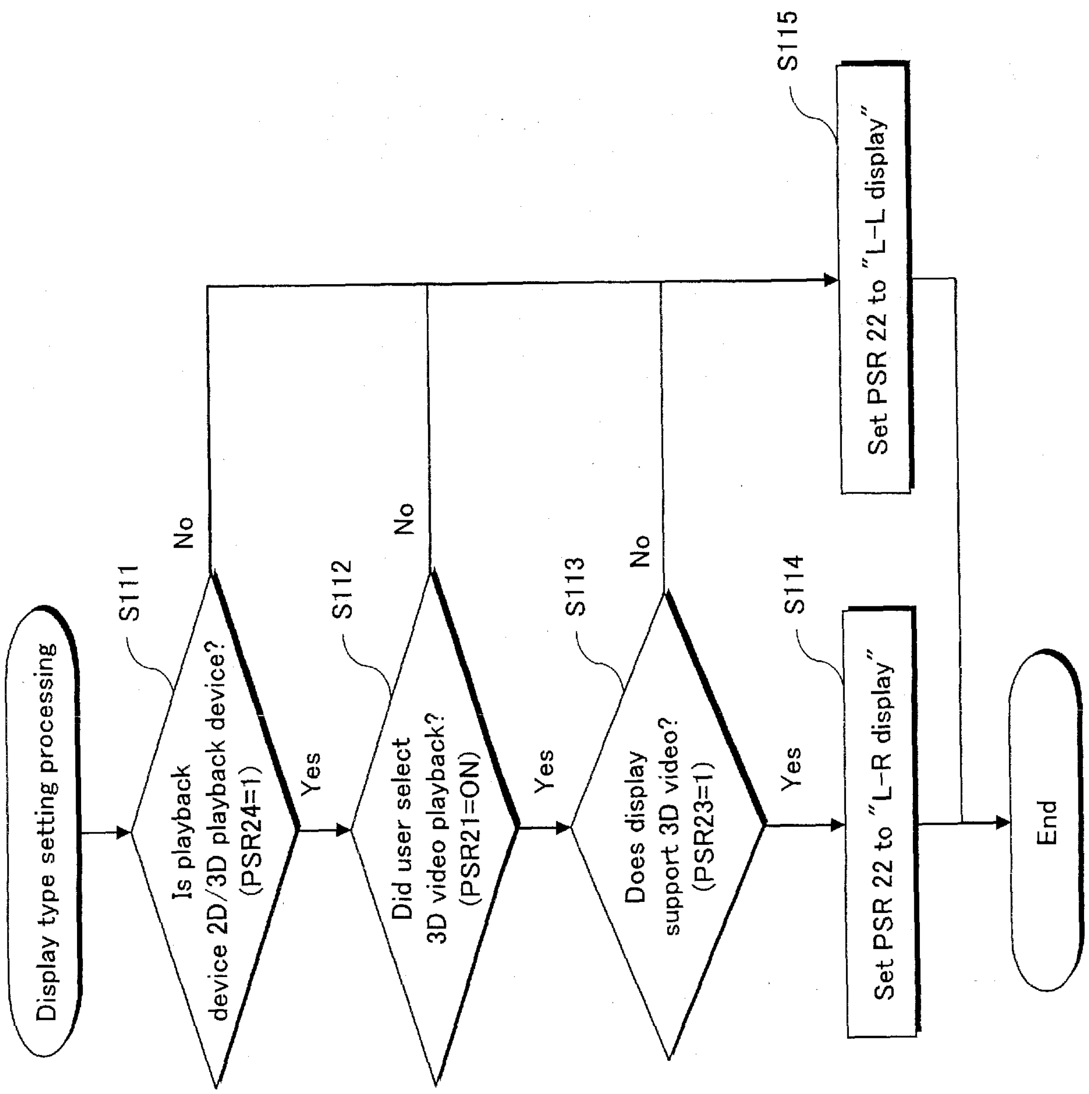
Display type setting processing
S111
Is playback device 2D/3D playback device? (PSR24=1)
Yes
No
S112
Did user select 3D video playback? (PSR21=ON)
Yes
No
S113
Does display support 3D video? (PSR23=1)
Yes
No
S114
Set PSR 22 to "L-R display"
S115
Set PSR 22 to "L-L display"
End

FIG.38

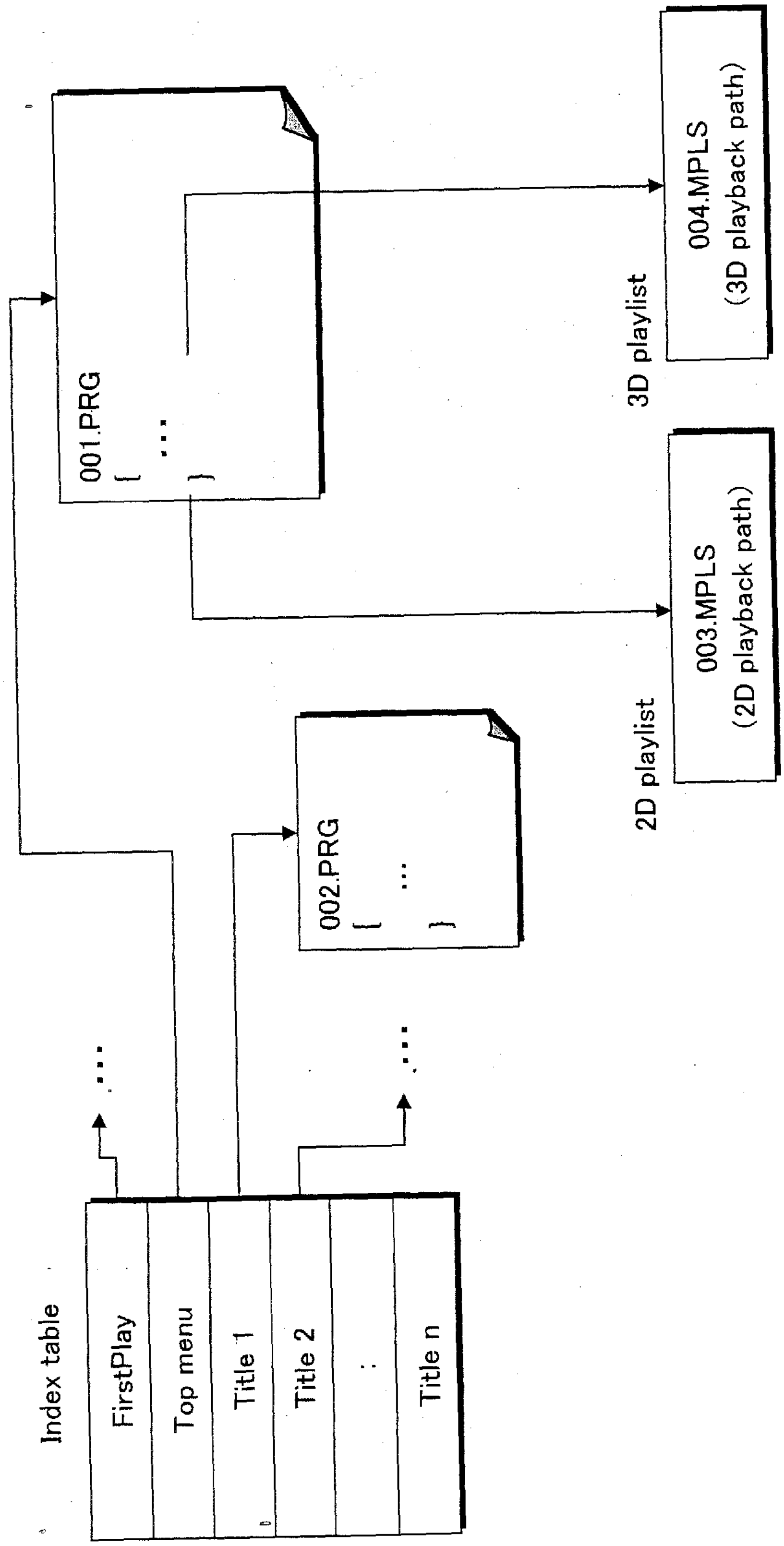
Index table
FirstPlay
Top menu
Title 1
Title 2
:
Title n
001.PRG
002.PRG
2D playlist
003.MPLS
(2D playback path)
3D playlist
004.MPLS
(3D playback path)

FIG.39

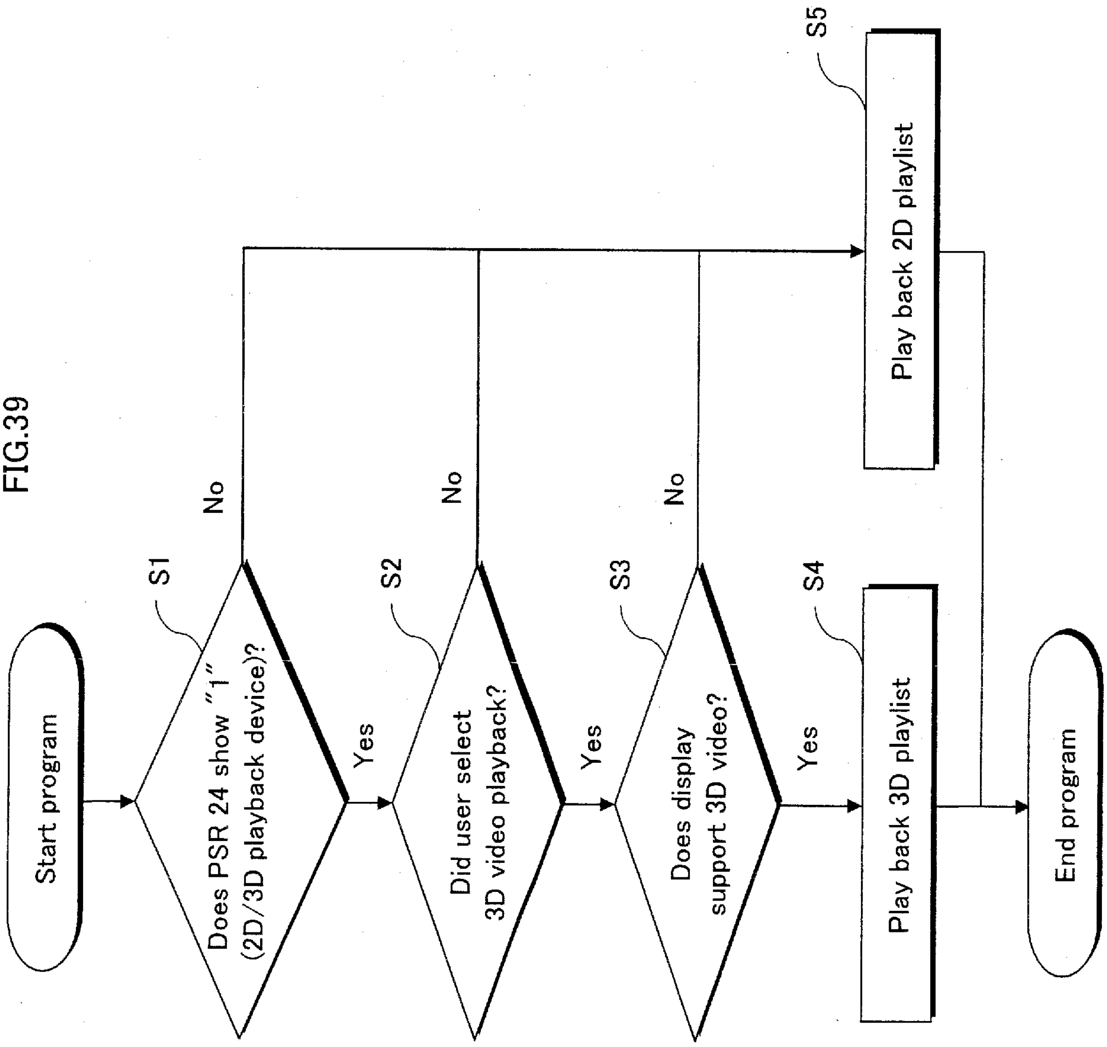
Start program
S1
Does PSR 24 show "1" (2D/3D playback device)?
Yes
No
S2
Did user select 3D video playback?
Yes
No
S3
Does display support 3D video?
Yes
No
S4
Play back 3D playlist
S5
Play back 2D playlist
End program

FIG.40

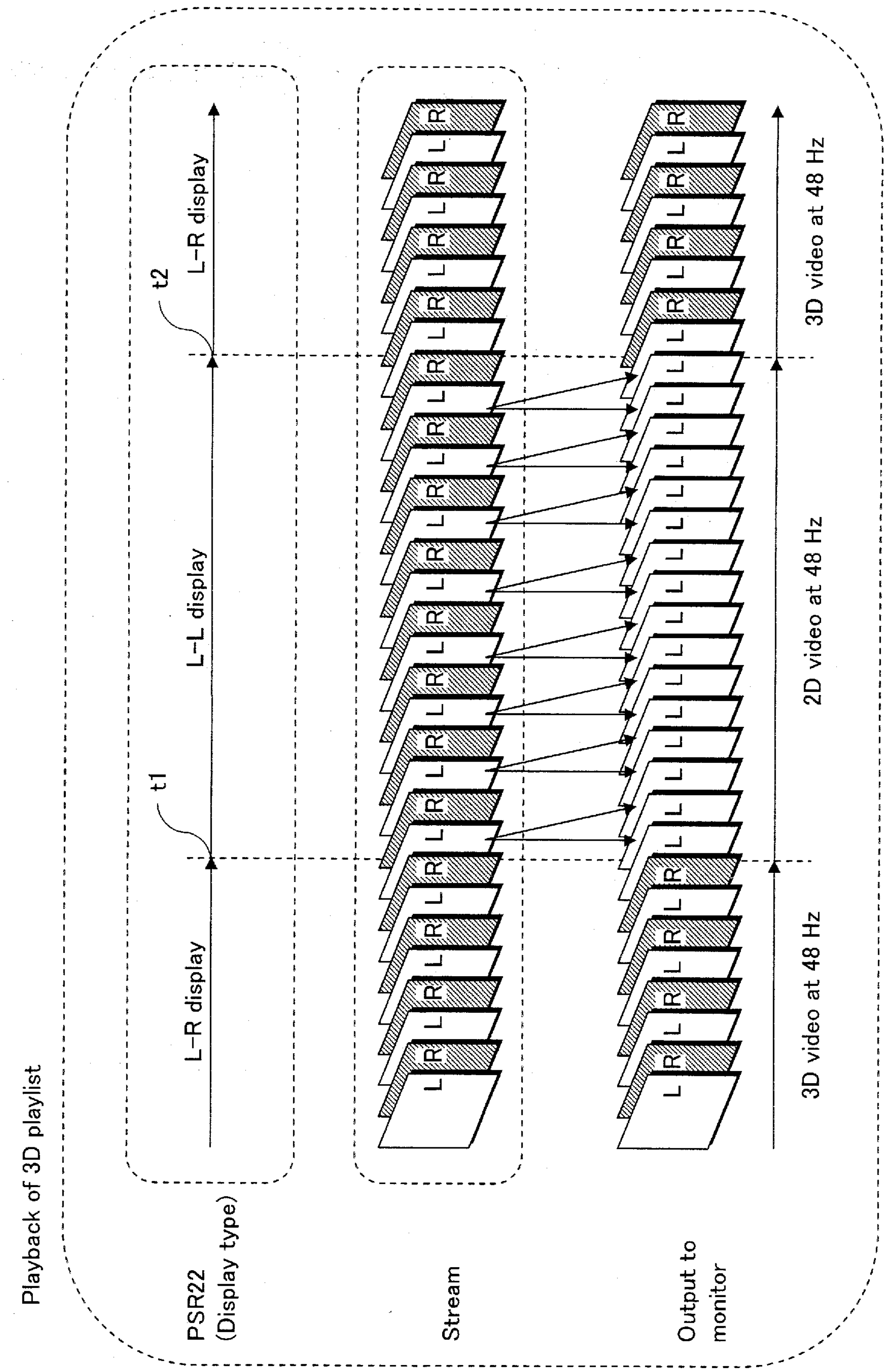
Playback of 3D playlist
PSR22
(Display type)
L-R display
t1
L-L display
t2
L-R display
Stream
Output to
monitor
3D video at 48 Hz
2D video at 48 Hz
3D video at 48 Hz

FIG. 41

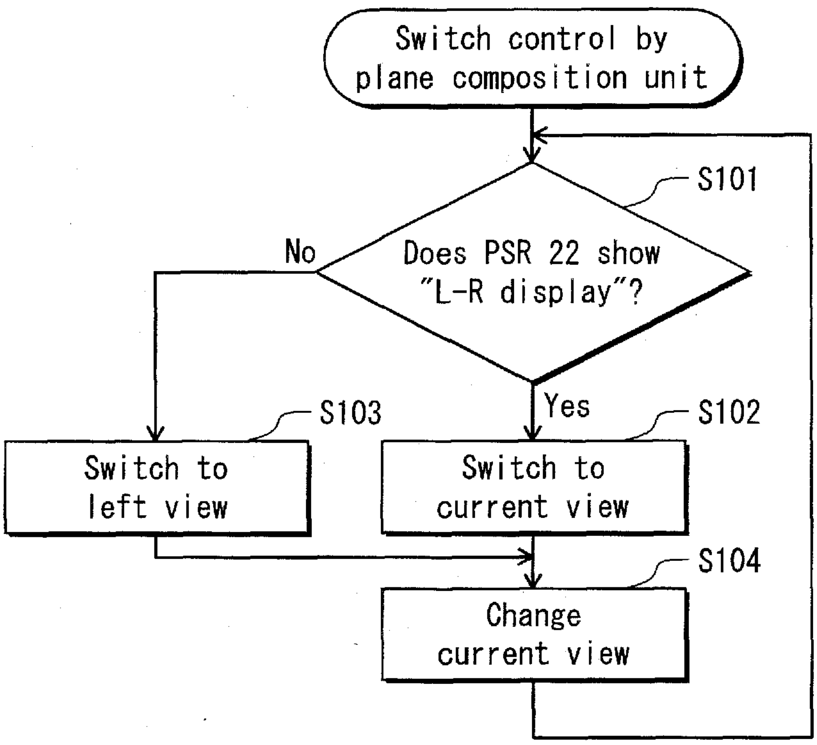
Switch control by plane composition unit
S101
Does PSR 22 show "L-R display"?
No
Yes
S103
Switch to left view
S102
Switch to current view
S104
Change current view

FIG.42

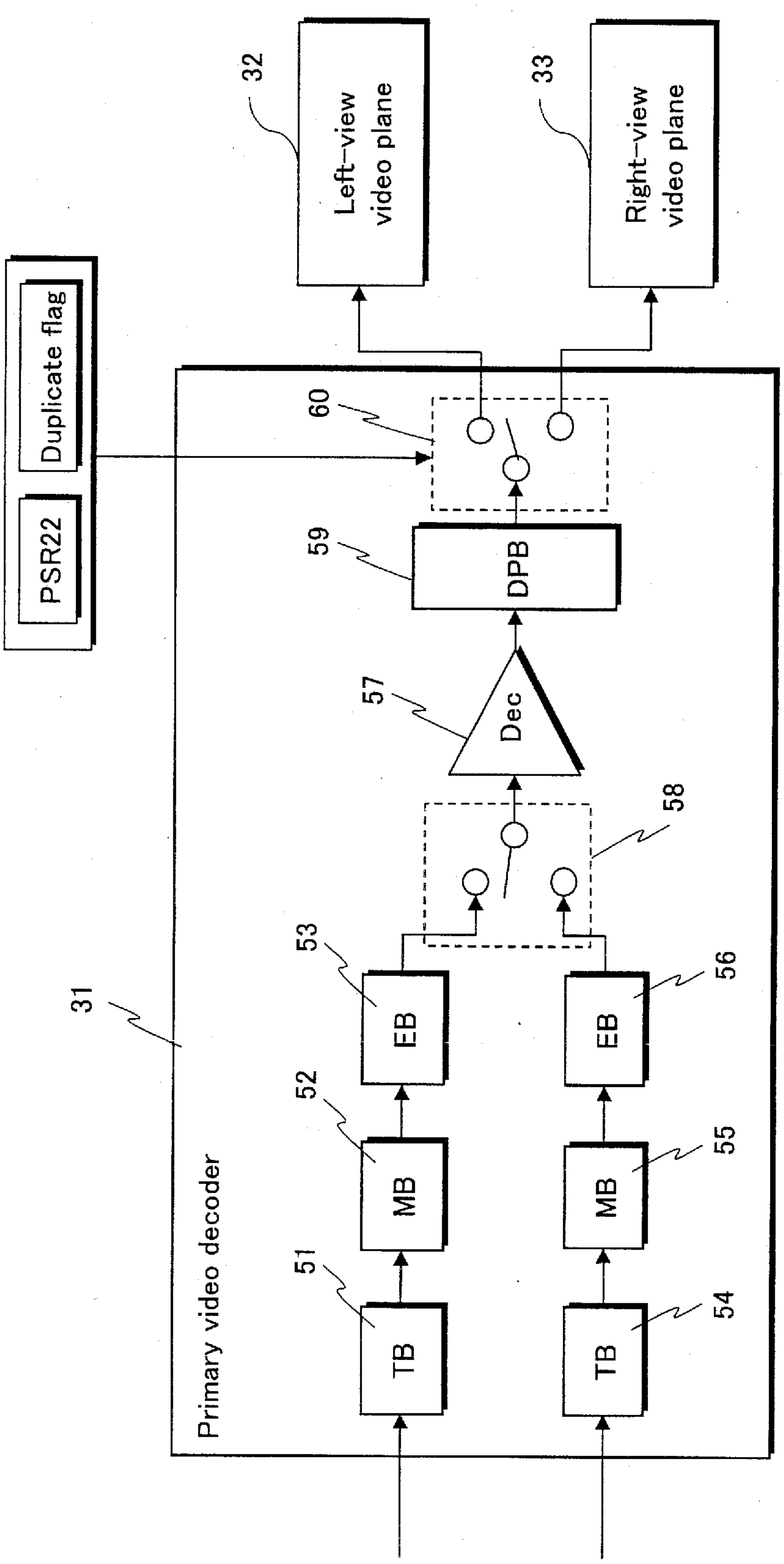
31
Primary video decoder
51
TB
52
MB
53
EB
54
TB
55
MB
56
EB
58
57
Dec
59
DPB
60
PSR22
Duplicate flag
32
Left-view video plane
33
Right-view video plane

FIG.43

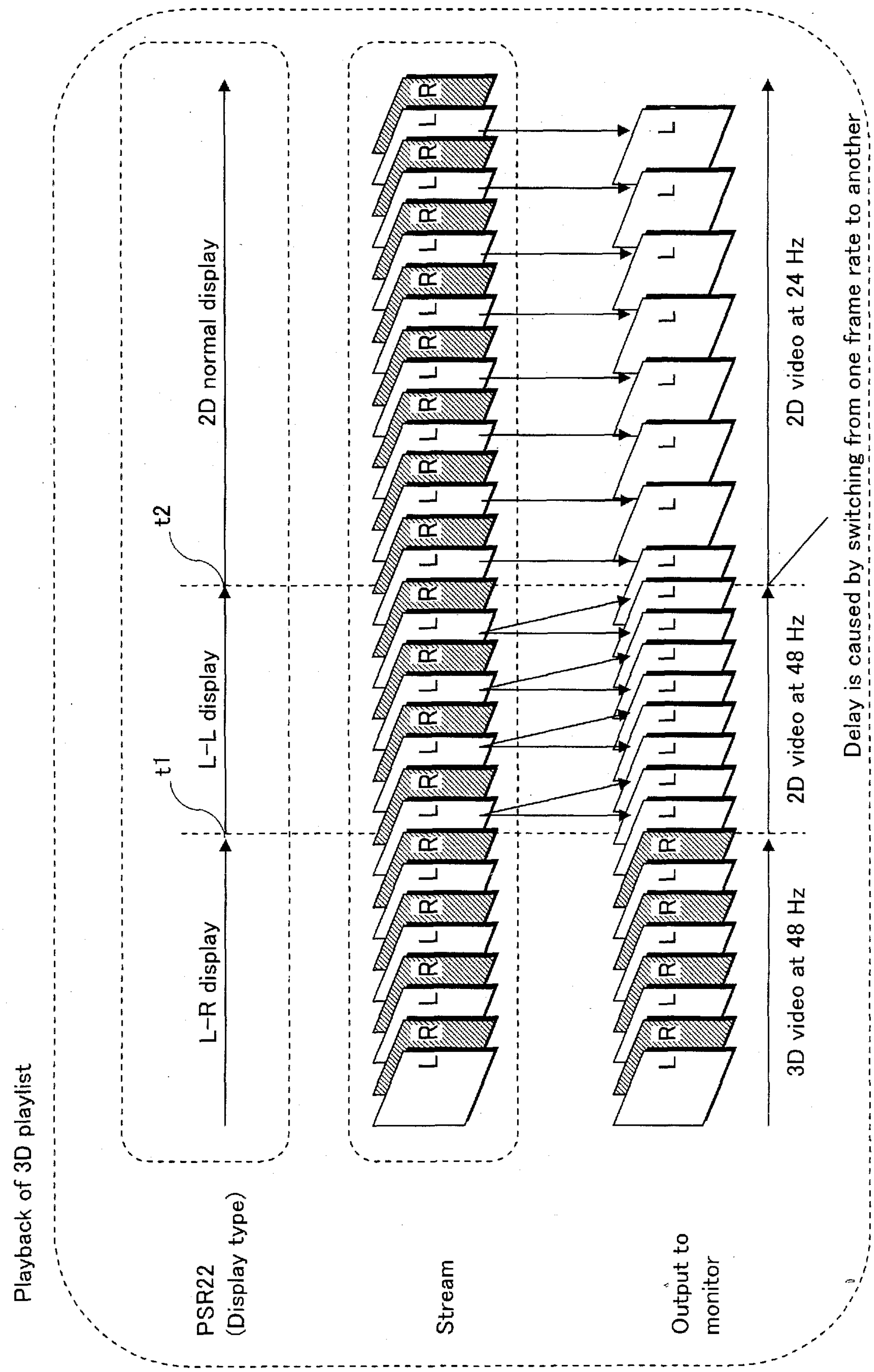
Playback of 3D playlist
PSR22
(Display type)
L-R display
L-L display
2D normal display
t1
t2
Stream
Output to
monitor
3D video at 48 Hz
2D video at 48 Hz
2D video at 24 Hz
Delay is caused by switching from one frame rate to another
L
R

FIG.44

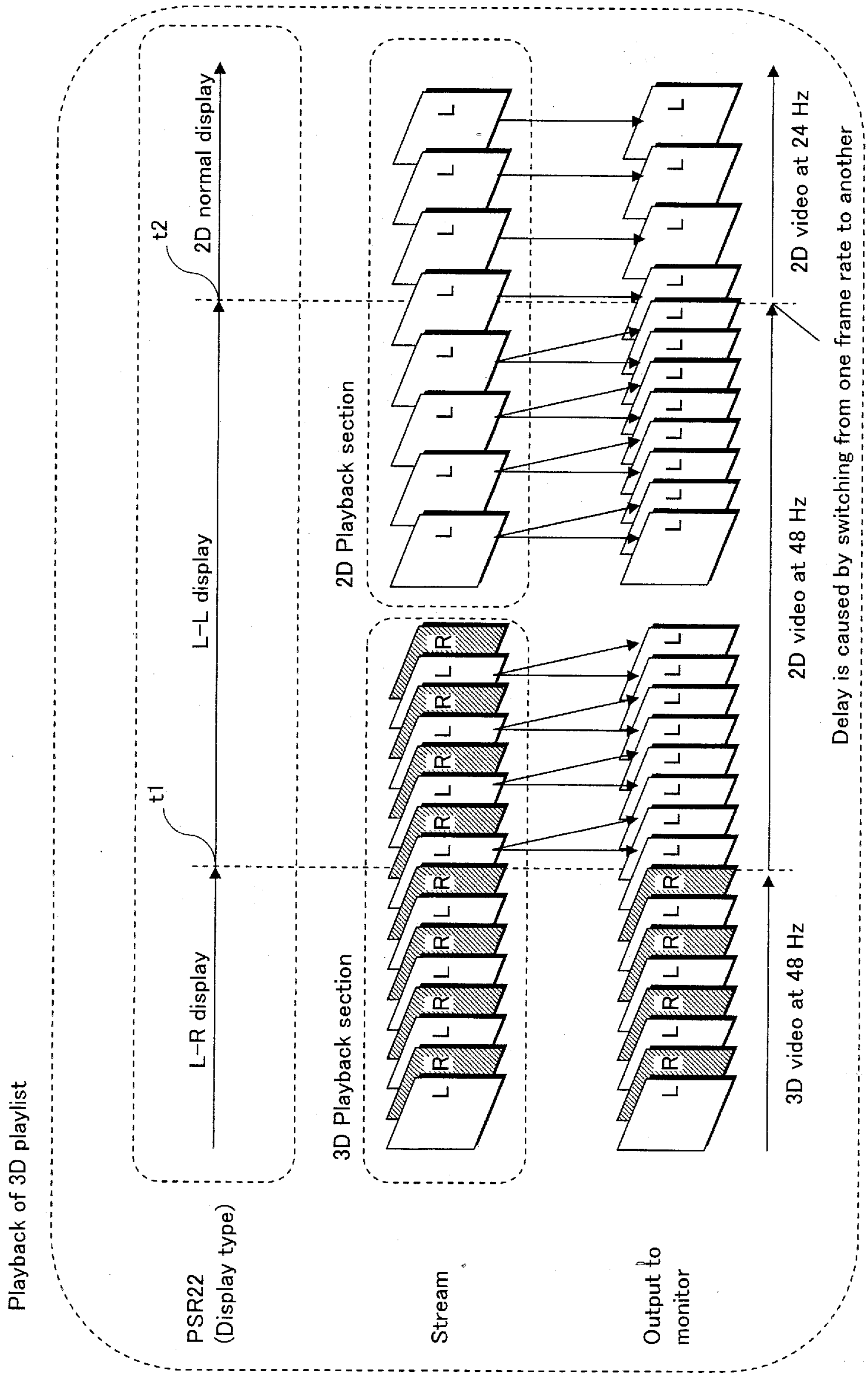
Playback of 3D playlist
PSR22
(Display type)
Stream
Output to
monitor
L-R display
L-L display
2D normal display
t1
t2
3D Playback section
2D Playback section
L
R
3D video at 48 Hz
2D video at 48 Hz
2D video at 24 Hz
Delay is caused by switching from one frame rate to another

FIG.45

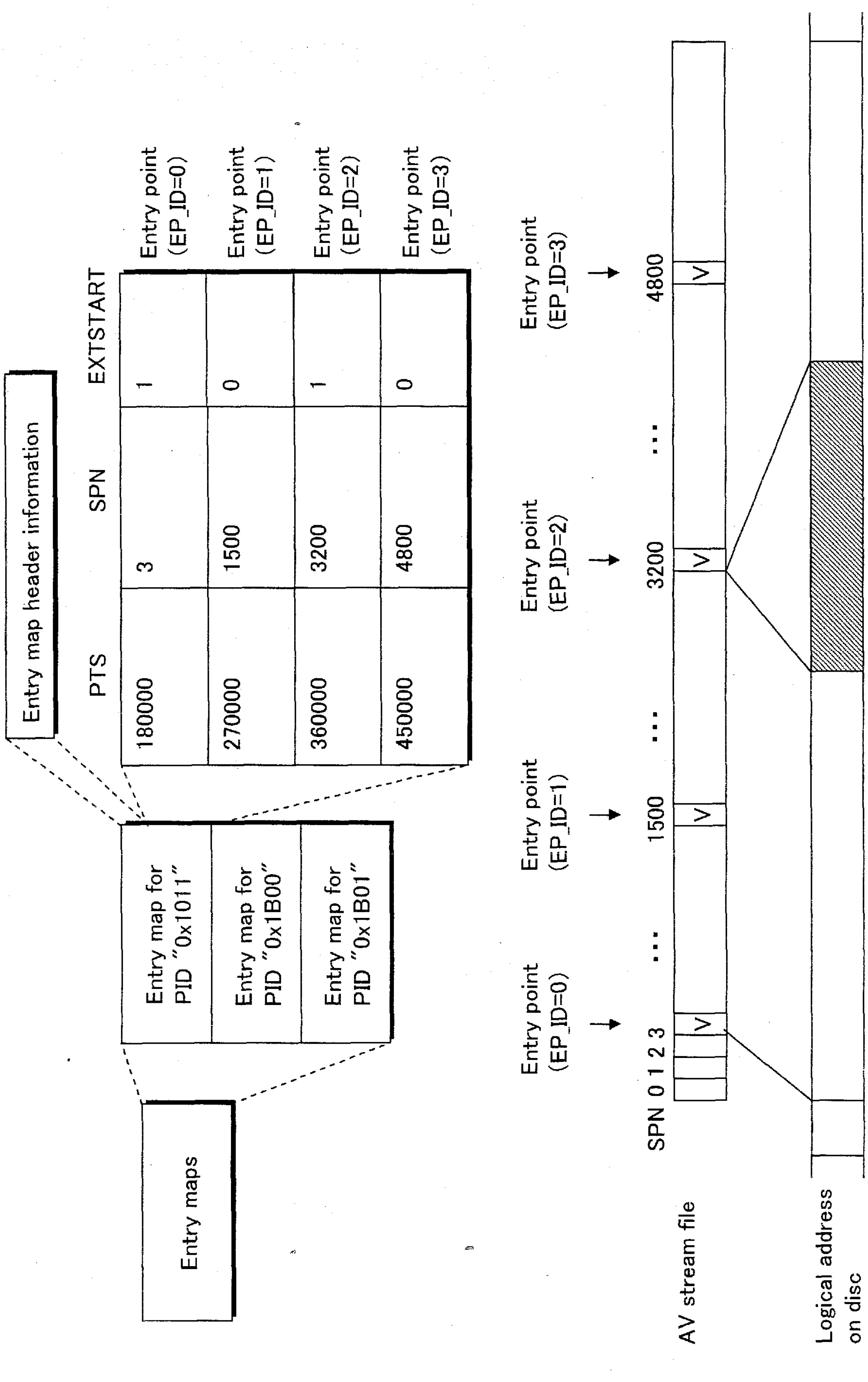
Entry maps
Entry map for PID "0x1011"
Entry map for PID "0x1B00"
Entry map for PID "0x1B01"
Entry map header information
PTS
SPN
EXTSTART
180000
3
1
270000
1500
0
360000
3200
1
450000
4800
0
Entry point (EP_ID=0)
Entry point (EP_ID=1)
Entry point (EP_ID=2)
Entry point (EP_ID=3)
SPN 0 1 2 3
1500
3200
4800
V
AV stream file
Logical address on disc

FIG.46

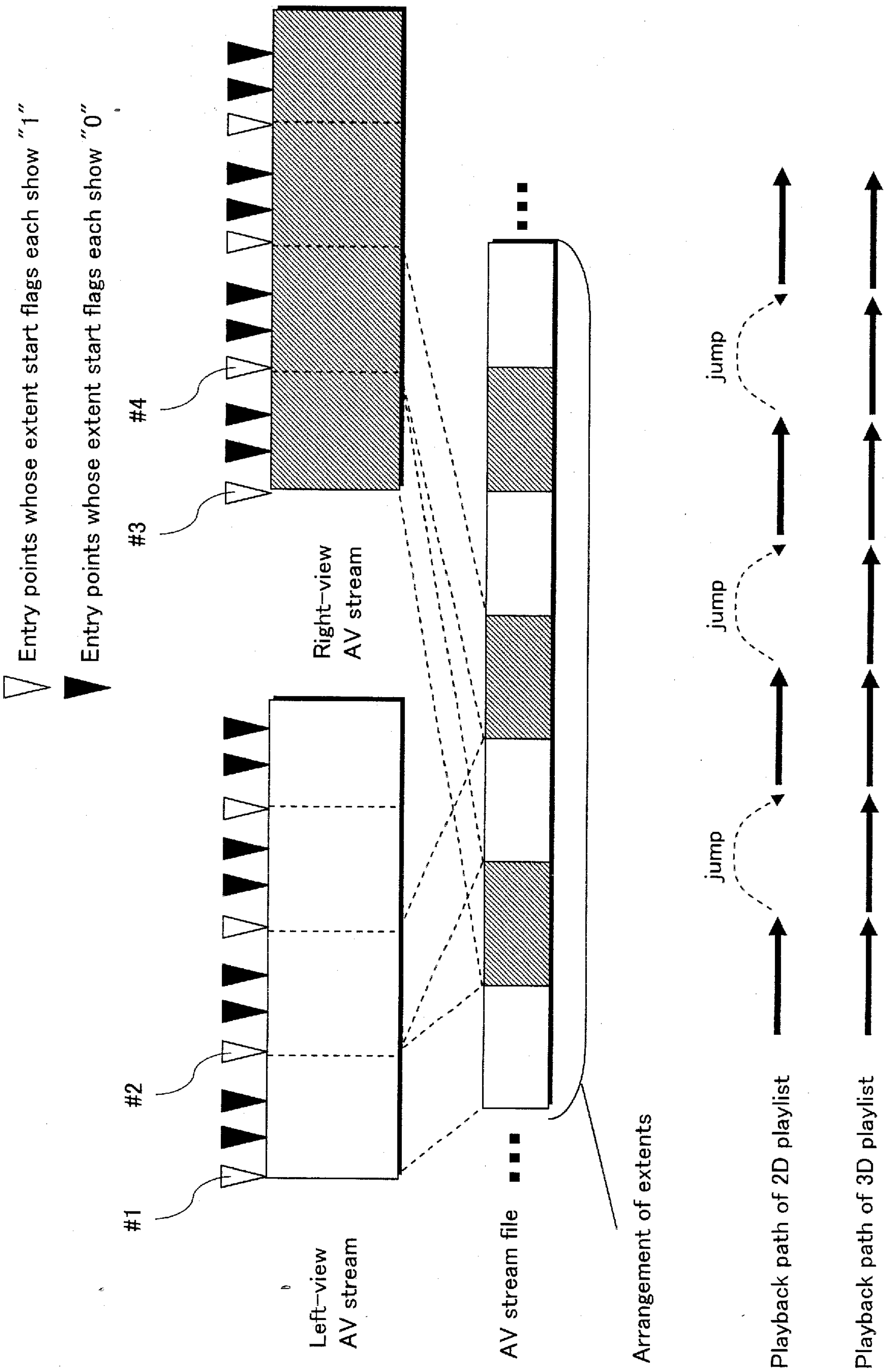
Entry points whose extent start flags each show "1"
Entry points whose extent start flags each show "0"
#1
#2
#3
#4
Left-view AV stream
Right-view AV stream
AV stream file
Arrangement of extents
jump
jump
jump
Playback path of 2D playlist
Playback path of 3D playlist

FIG.47

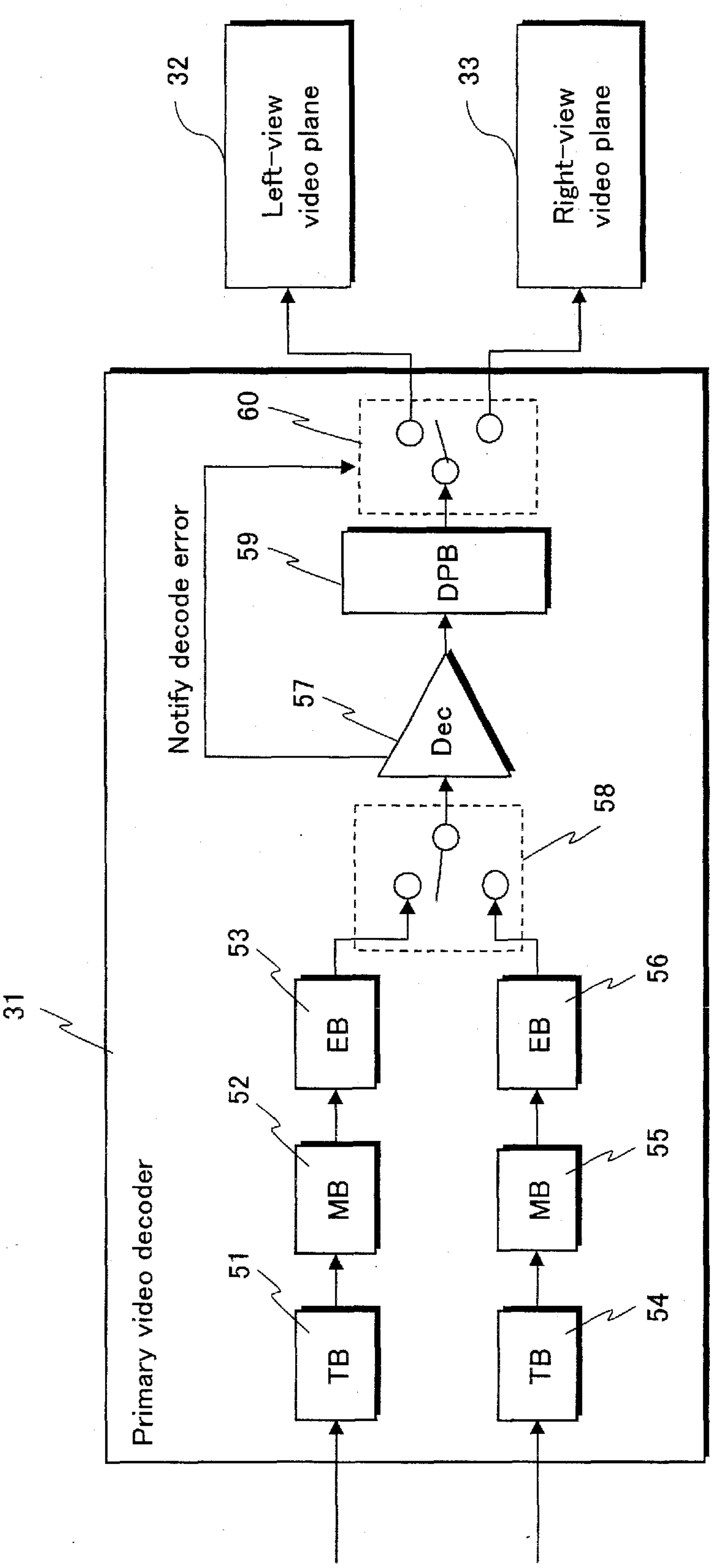

31
Primary video decoder
51
TB
52
MB
53
EB
54
TB
55
MB
56
EB
58
57
Dec
Notify decode error
59
DPB
60
32
Left-view video plane
33
Right-view video plane

FIG.48

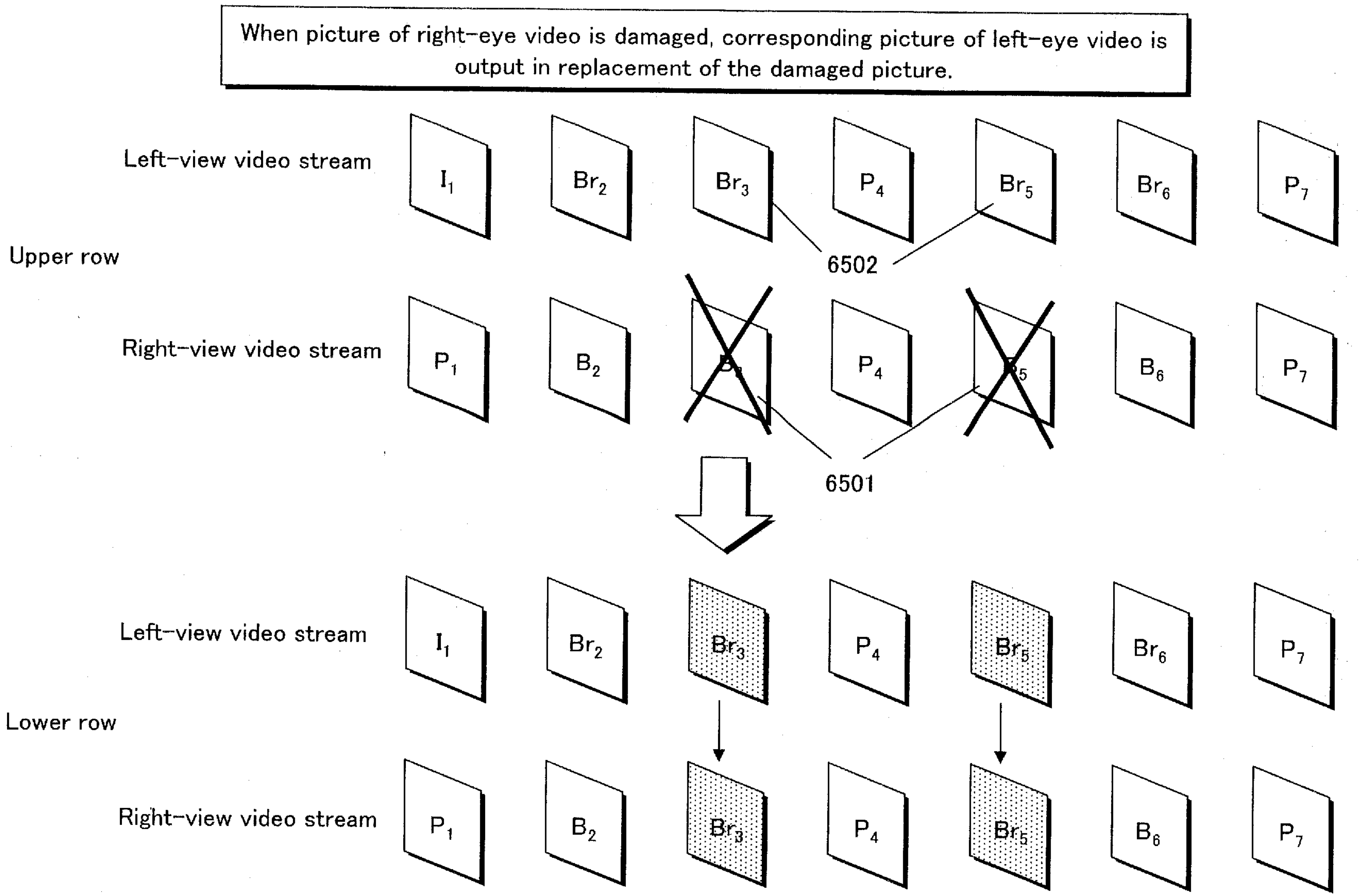
When picture of right-eye video is damaged, corresponding picture of left-eye video is output in replacement of the damaged picture.
Upper row
Left-view video stream
Right-view video stream
I1
Br2
Br3
P4
Br5
Br6
P7
P1
B2
B3
B5
B6
6502
6501
Lower row
Left-view video stream
Right-view video stream

FIG.49

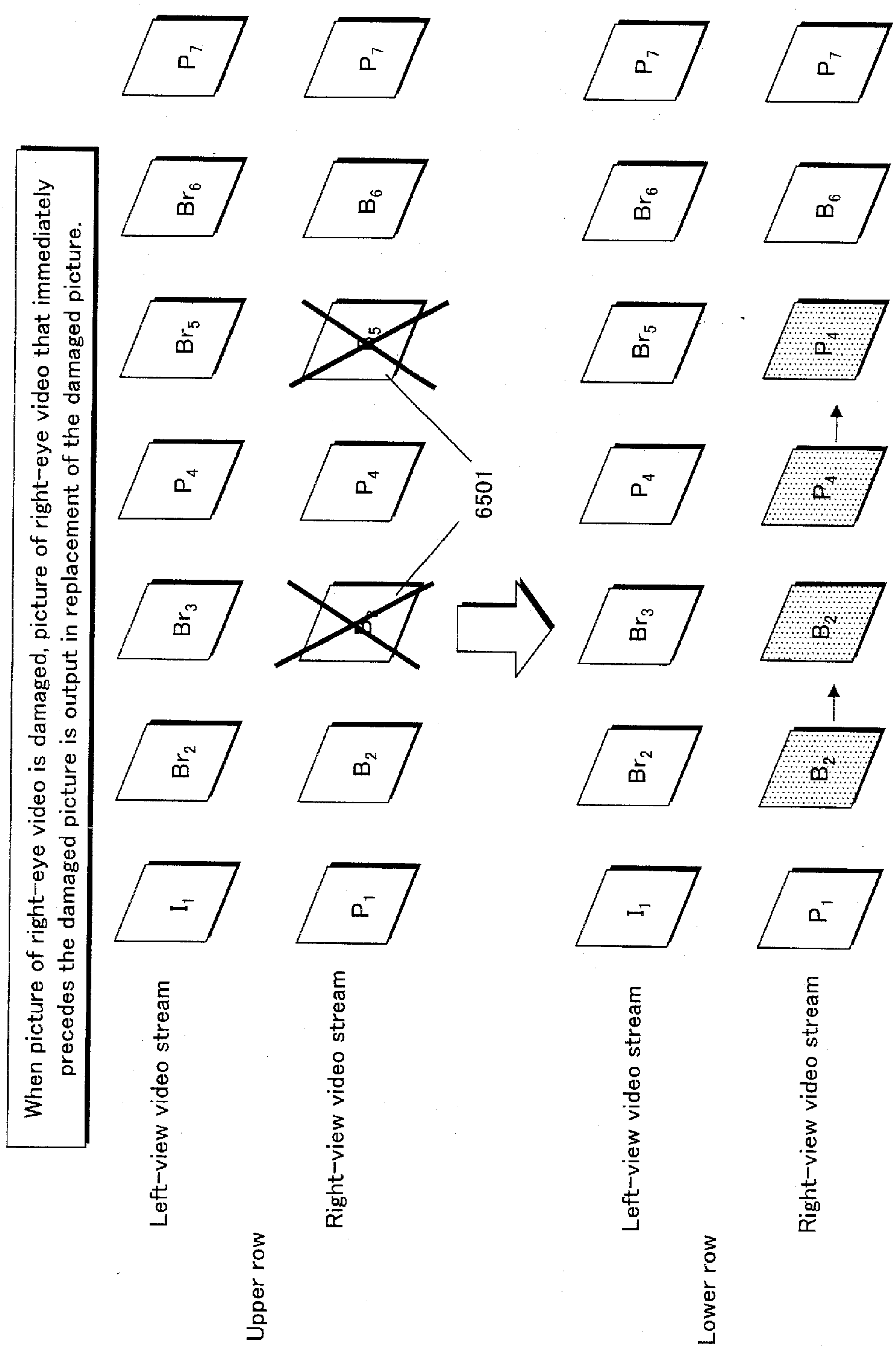
When picture of right-eye video is damaged, picture of right-eye video that immediately precedes the damaged picture is output in replacement of the damaged picture.
Upper row
Left-view video stream
Right-view video stream
Lower row
Left-view video stream
Right-view video stream
I1
Br2
Br3
P4
Br5
Br6
P7
P1
B2
B3
P4
B5
B6
P7
6501
I1
Br2
Br3
P4
Br5
Br6
P7
P1
B2
B2
P4
P4
B6
P7

FIG.50

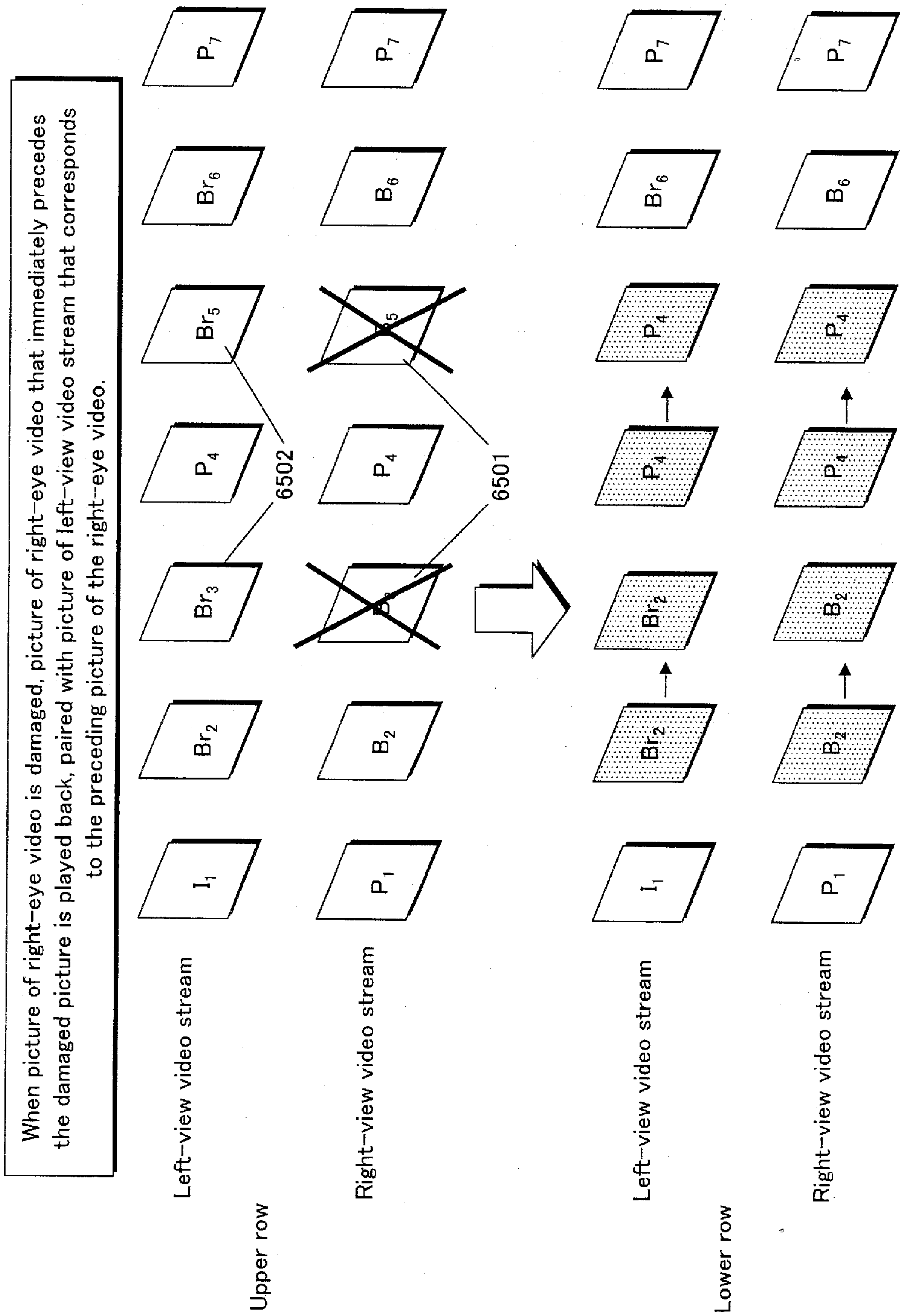
When picture of right-eye video is damaged, picture of right-eye video that immediately precedes the damaged picture is played back, paired with picture of left-view video stream that corresponds to the preceding picture of the right-eye video.
Upper row
Left-view video stream
Right-view video stream
Lower row
Left-view video stream
Right-view video stream
I1
Br2
Br3
P4
Br5
Br6
P7
P1
B2
P4
B6
P7
6502
6501
Br2
Br2
P4
P4
B2
B2

FIG.51

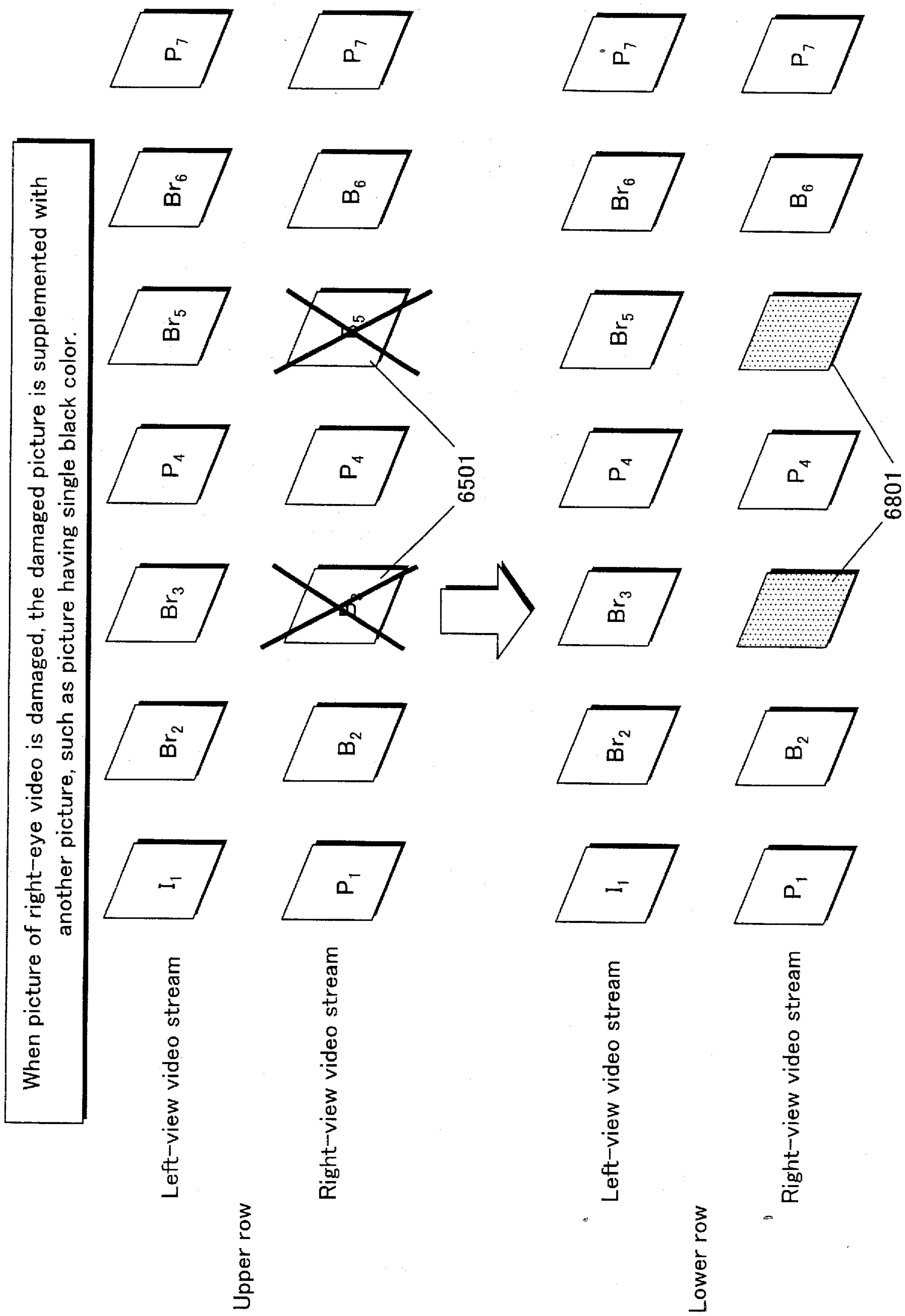
When picture of right-eye video is damaged, the damaged picture is supplemented with another picture, such as picture having single black color.
Upper row
Left-view video stream
I1
Br2
Br3
P4
Br5
Br6
P7
Right-view video stream
P1
B2
P4
B6
P7
6501
Lower row
Left-view video stream
I1
Br2
Br3
P4
Br5
Br6
P7
Right-view video stream
P1
B2
P4
B6
P7
6801

FIG.52

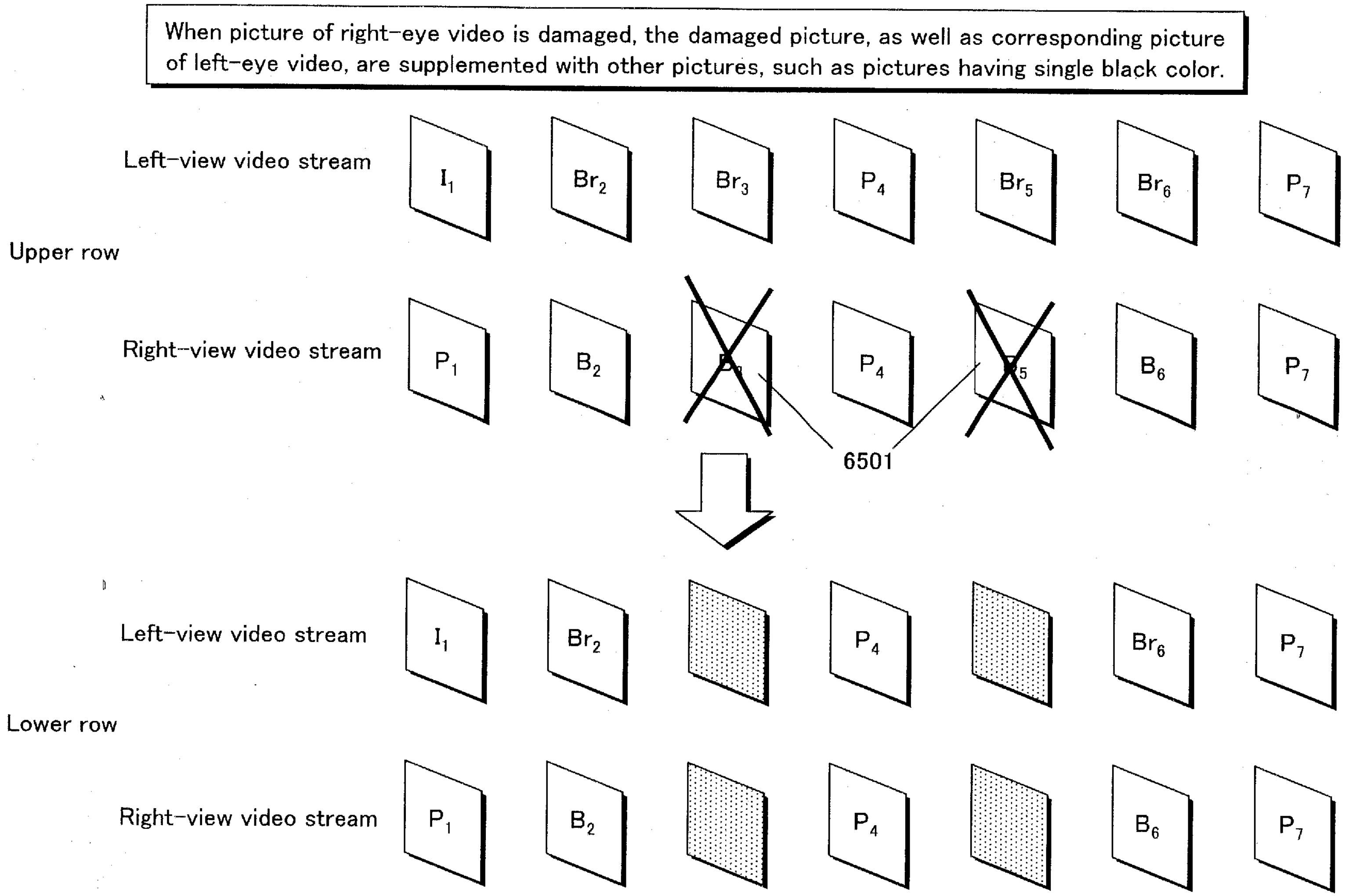
When picture of right-eye video is damaged, the damaged picture, as well as corresponding picture of left-eye video, are supplemented with other pictures, such as pictures having single black color.
Upper row
Left-view video stream
$I_1$
$Br_2$
$Br_3$
$P_4$
$Br_5$
$Br_6$
$P_7$
Right-view video stream
$P_1$
$B_2$
$P_4$
$B_6$
$P_7$
6501
Lower row
Left-view video stream
$I_1$
$Br_2$
$P_4$
$Br_6$
$P_7$
Right-view video stream
$P_1$
$B_2$
$P_4$
$B_6$
$P_7$

FIG.53

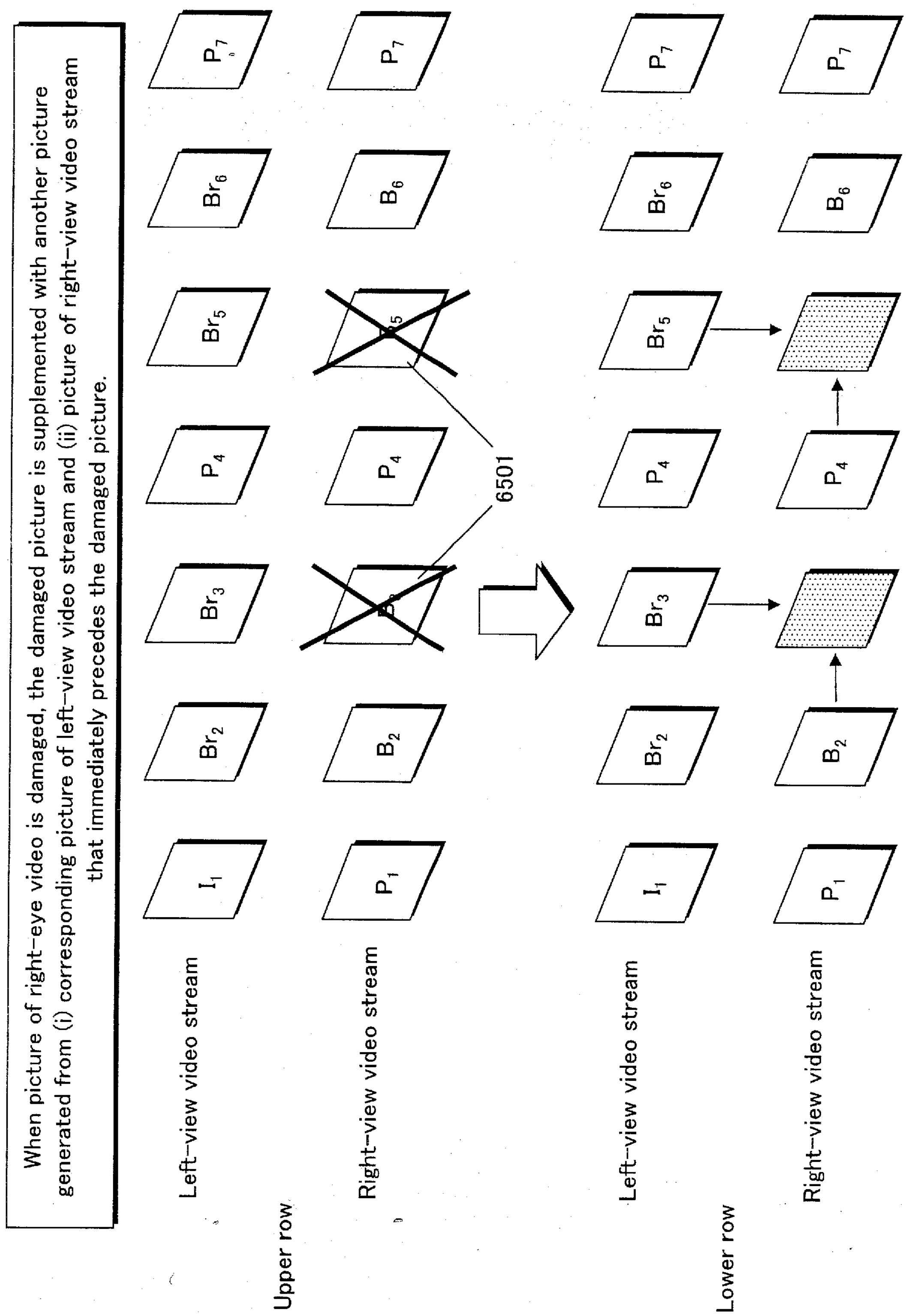
When picture of right-eye video is damaged, the damaged picture is supplemented with another picture generated from (i) corresponding picture of left-view video stream and (ii) picture of right-view video stream that immediately precedes the damaged picture.
Upper row
Left-view video stream
Right-view video stream
Lower row
Left-view video stream
Right-view video stream
I1
Br2
Br3
P4
Br5
Br6
P7
P1
B2
B3
P4
B5
B6
P7
6501

FIG.54

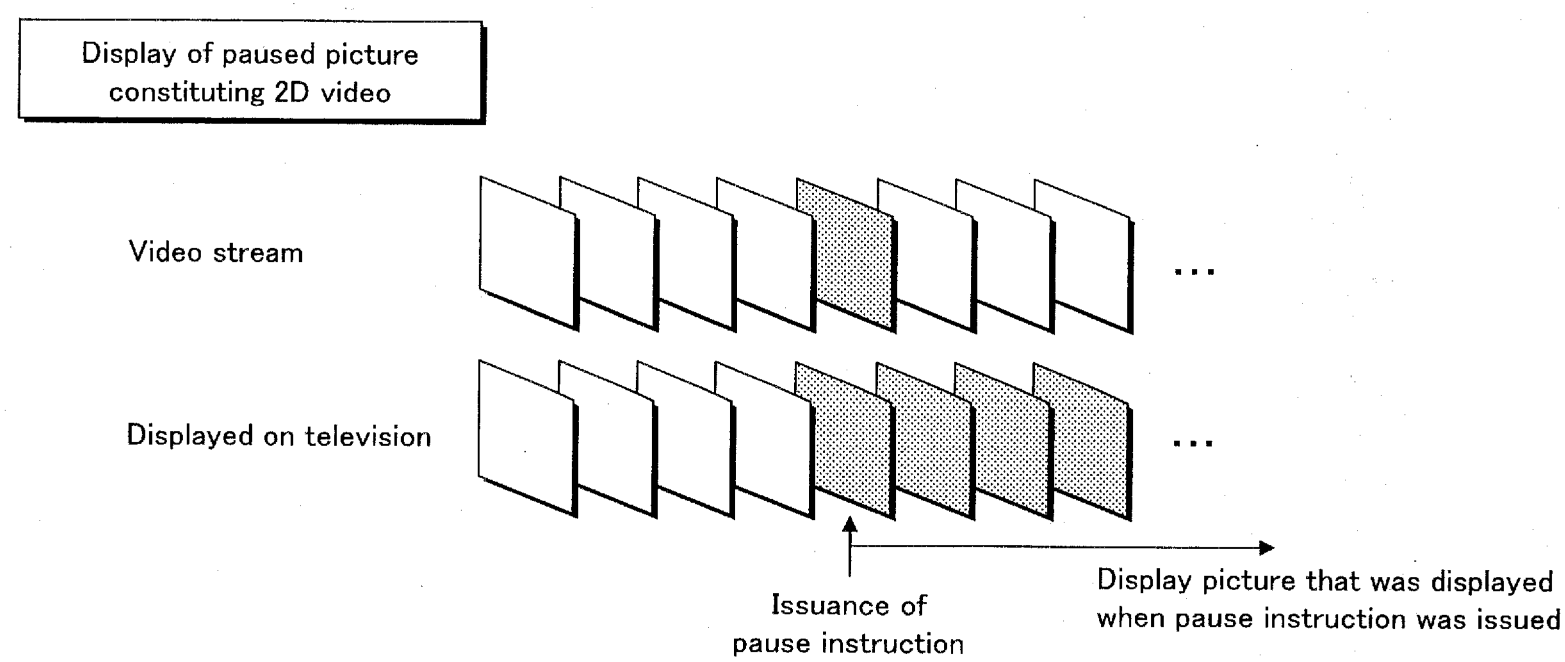
Display of paused picture constituting 2D video
Video stream
Displayed on television
Issuance of pause instruction
Display picture that was displayed when pause instruction was issued

FIG.55A

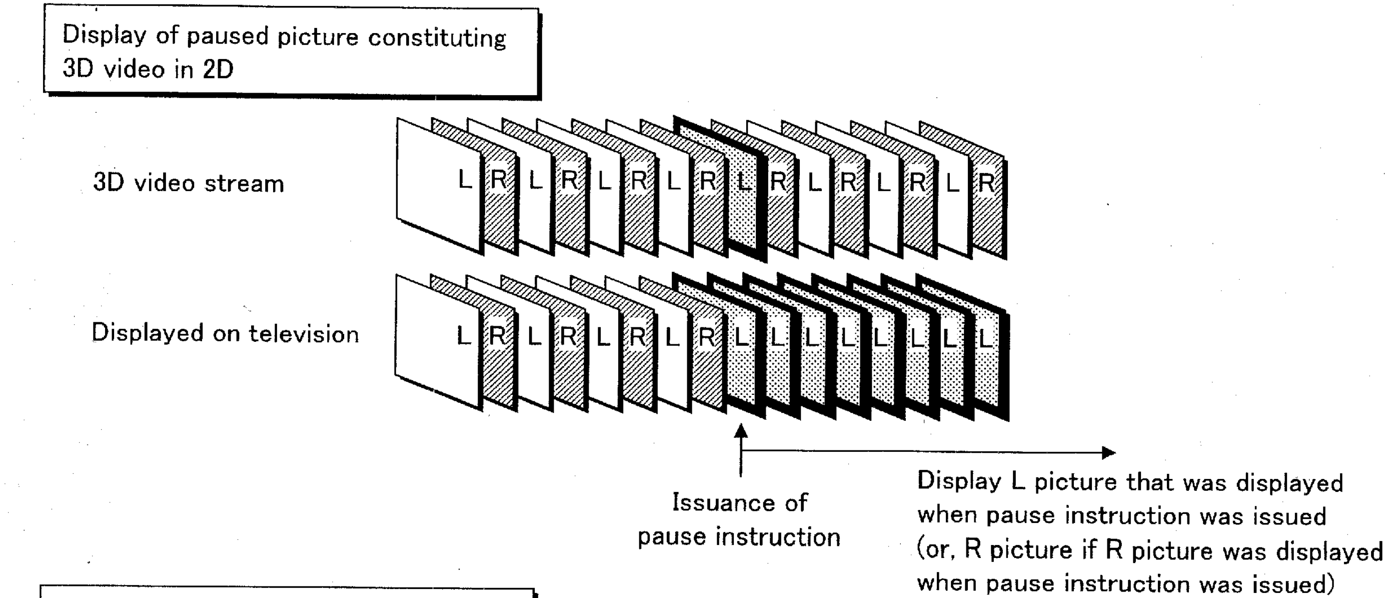


FIG.55B

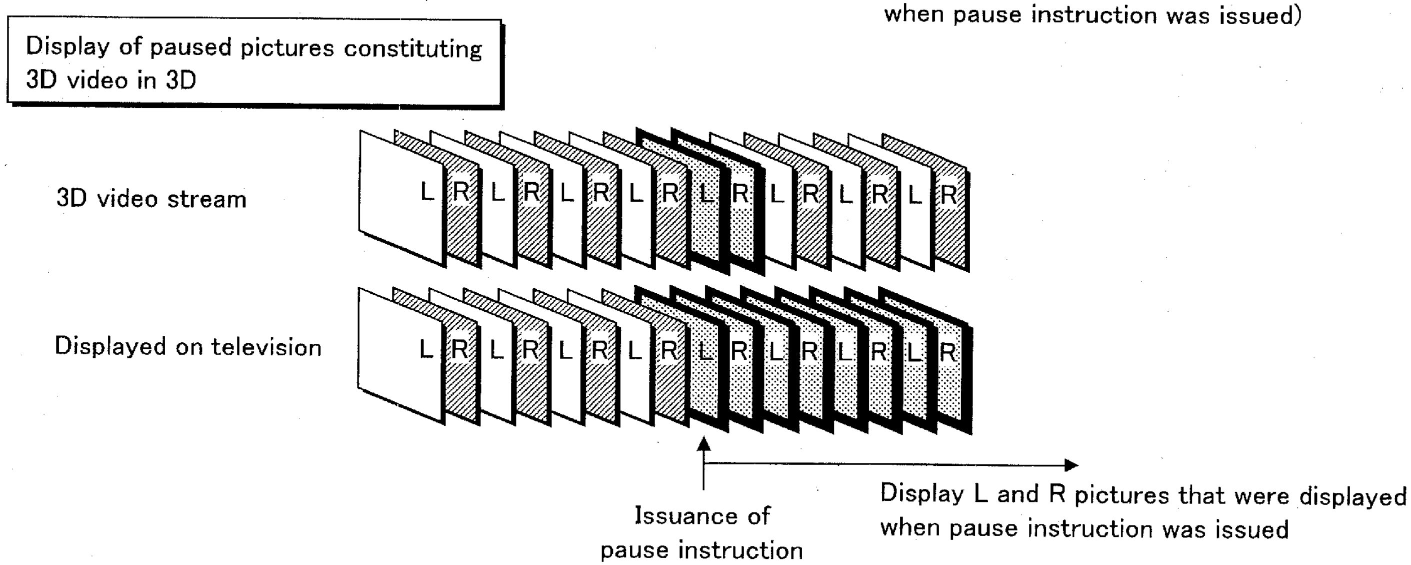

FIG.56

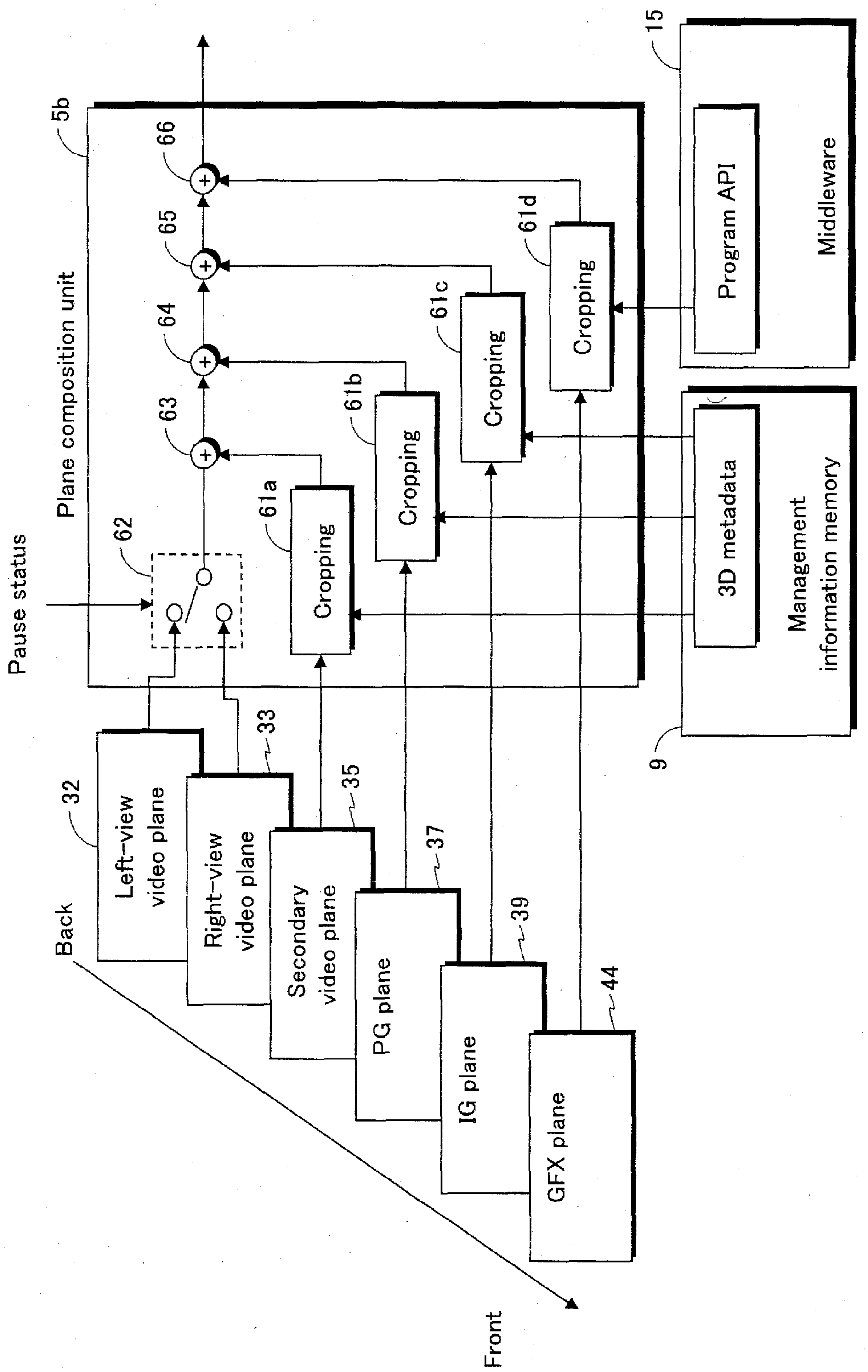
Pause status
Plane composition unit
5b
62
63
64
65
66
61a
61b
61c
61d
Cropping
Cropping
Cropping
Cropping
15
Program API
Middleware
3D metadata
Management information memory
9
Back
Front
32
Left-view video plane
33
Right-view video plane
35
Secondary video plane
37
PG plane
39
IG plane
44
GFX plane

FIG.57

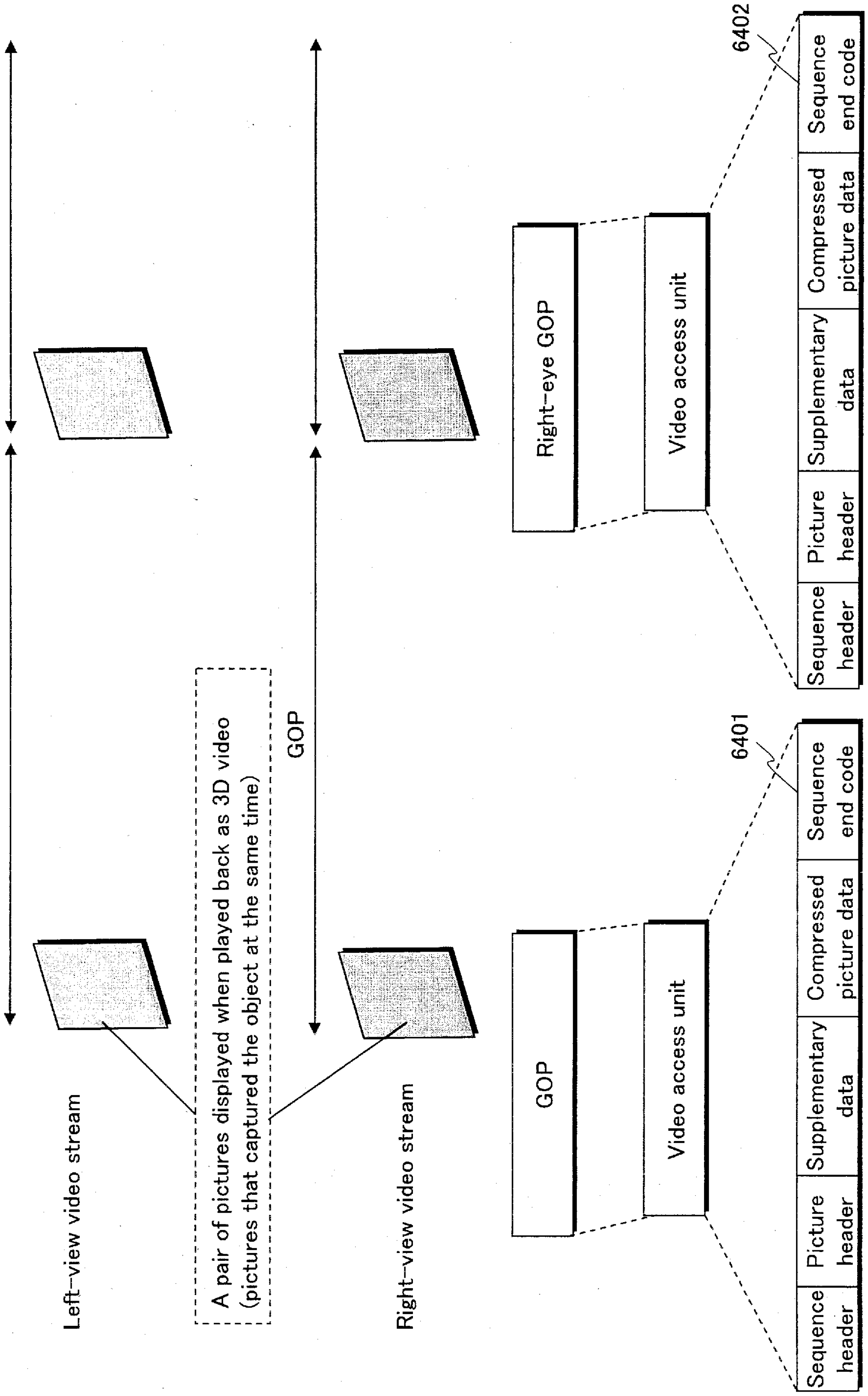
Left-view video stream
GOP
GOP
A pair of pictures displayed when played back as 3D video
(pictures that captured the object at the same time)
Right-view video stream
GOP
GOP
Right-eye GOP
Video access unit
Video access unit
6401
6402
Sequence header
Picture header
Supplementary data
Compressed picture data
Sequence end code
Sequence header
Picture header
Supplementary data
Compressed picture data
Sequence end code

FIG.58A

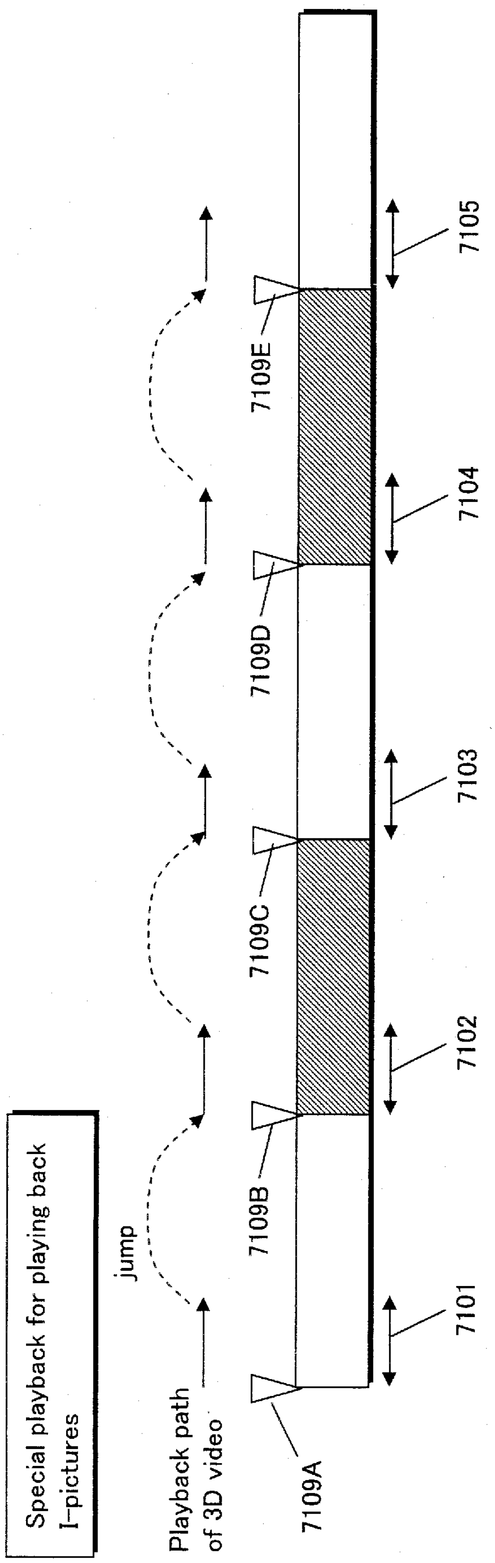


FIG.58B

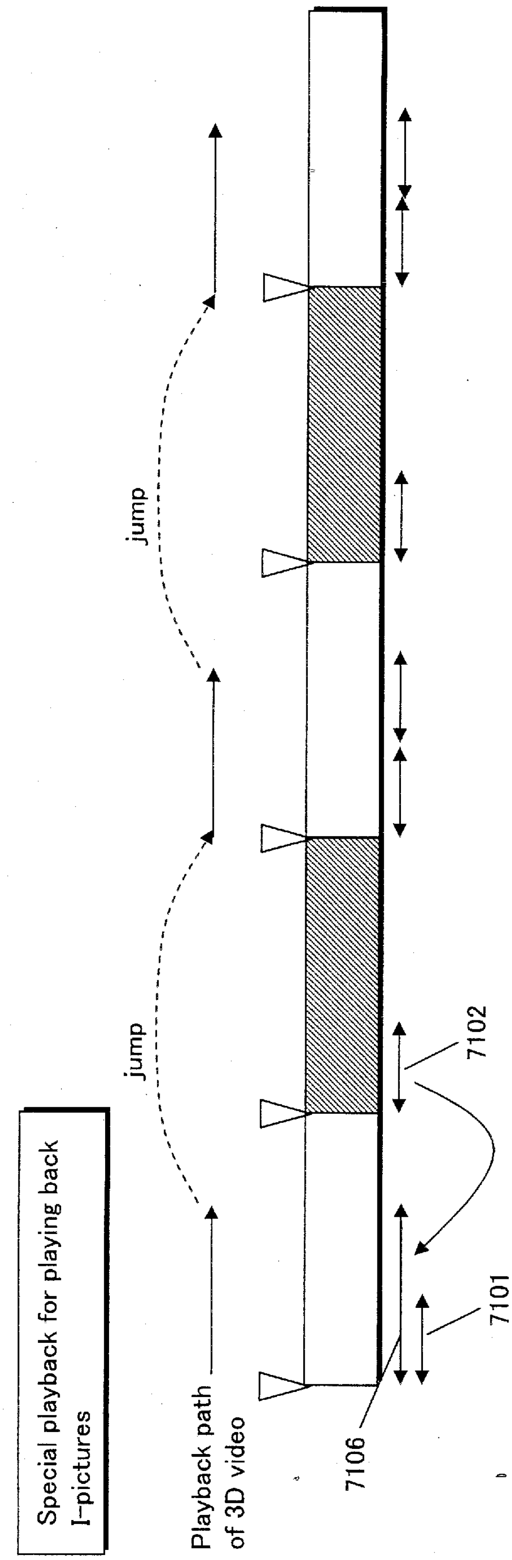

FIG.59A

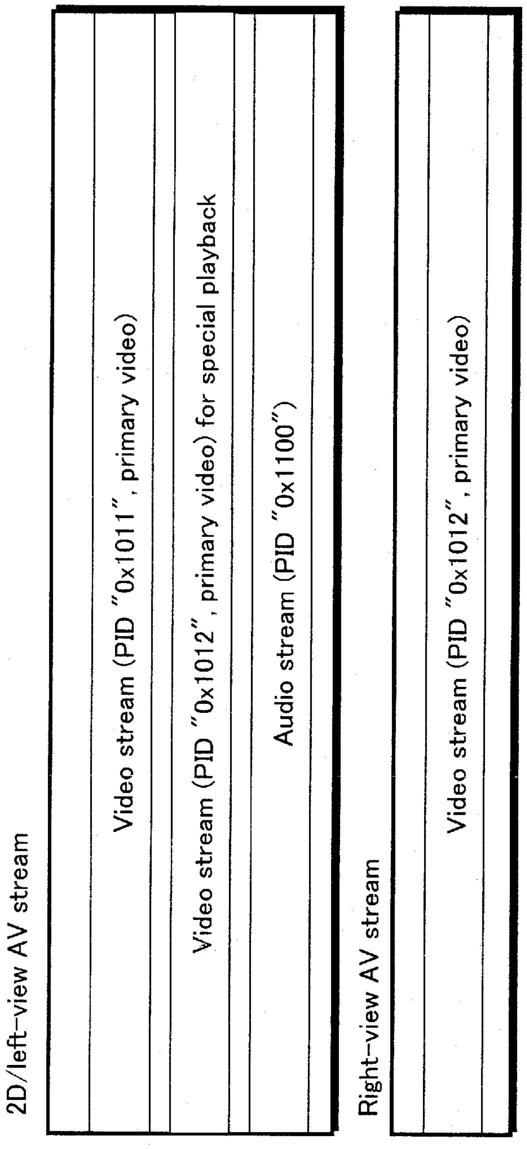


FIG.59B

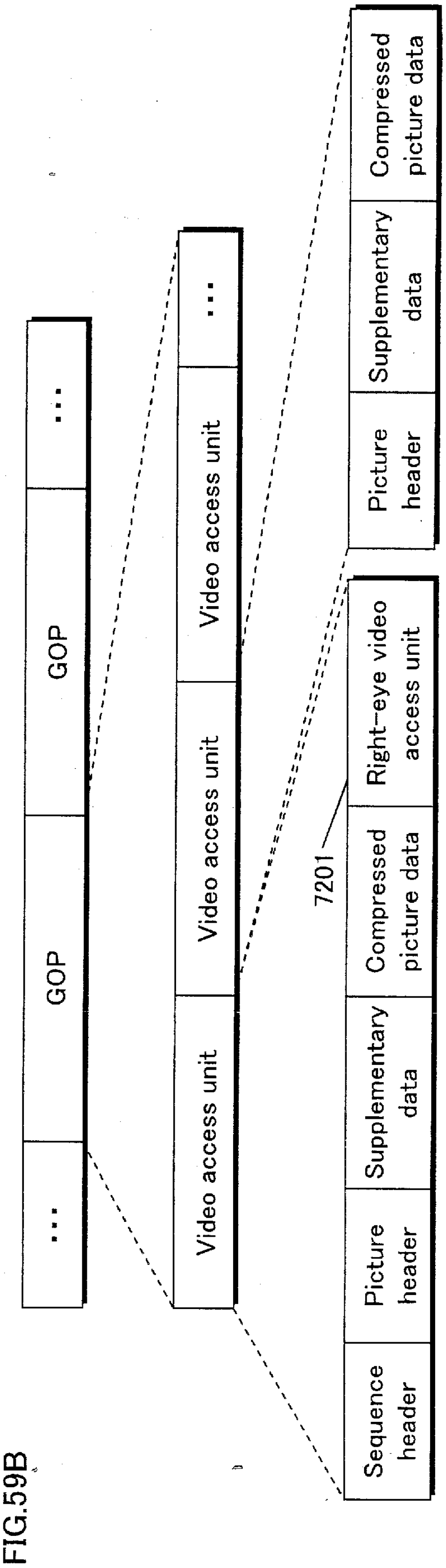

FIG.60

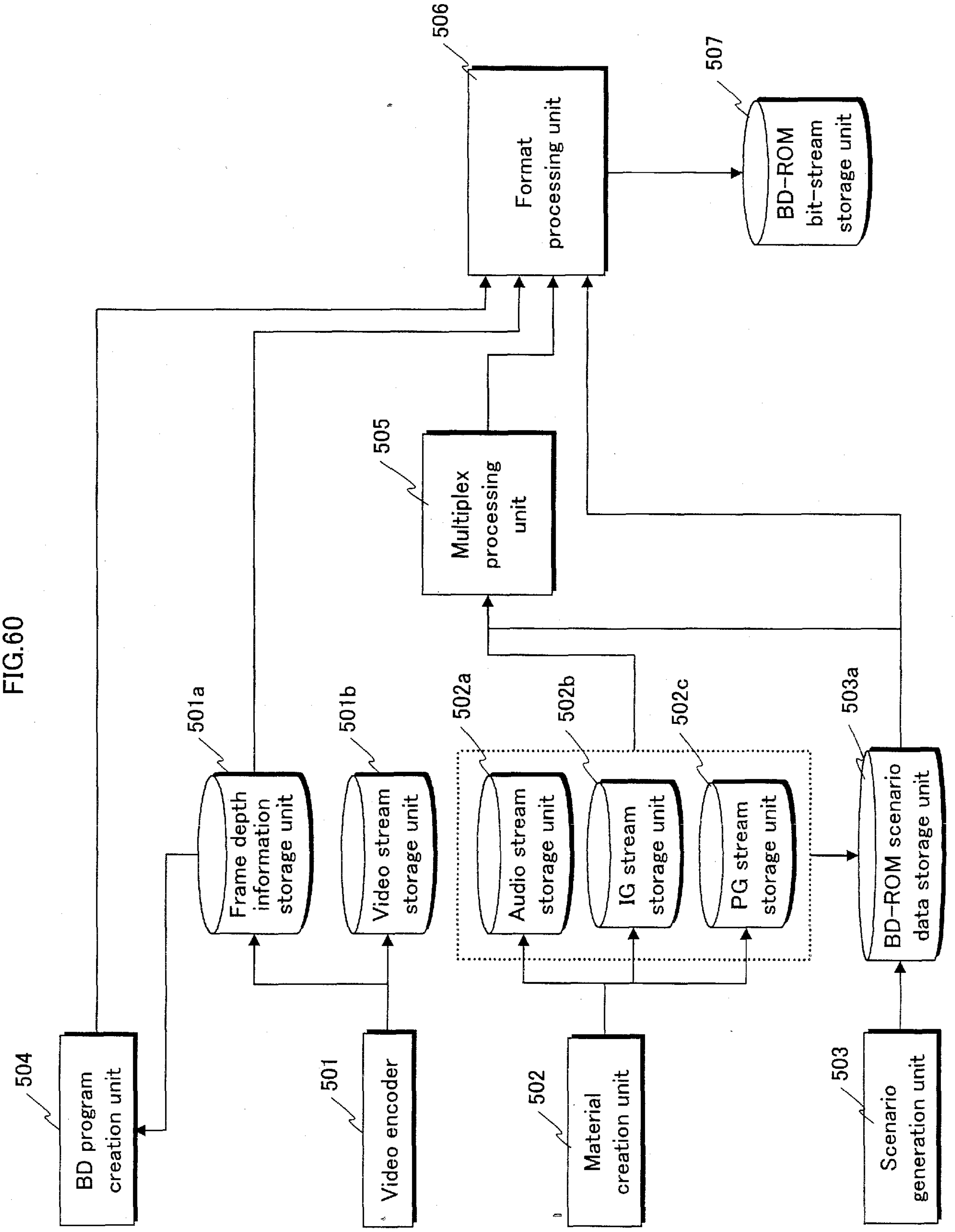
504
BD program creation unit
501
Video encoder
502
Material creation unit
503
Scenario generation unit
501a
Frame depth information storage unit
501b
Video stream storage unit
502a
Audio stream storage unit
502b
IG stream storage unit
502c
PG stream storage unit
503a
BD-ROM scenario data storage unit
505
Multiplex processing unit
506
Format processing unit
507
BD-ROM bit-stream storage unit

FIG.61

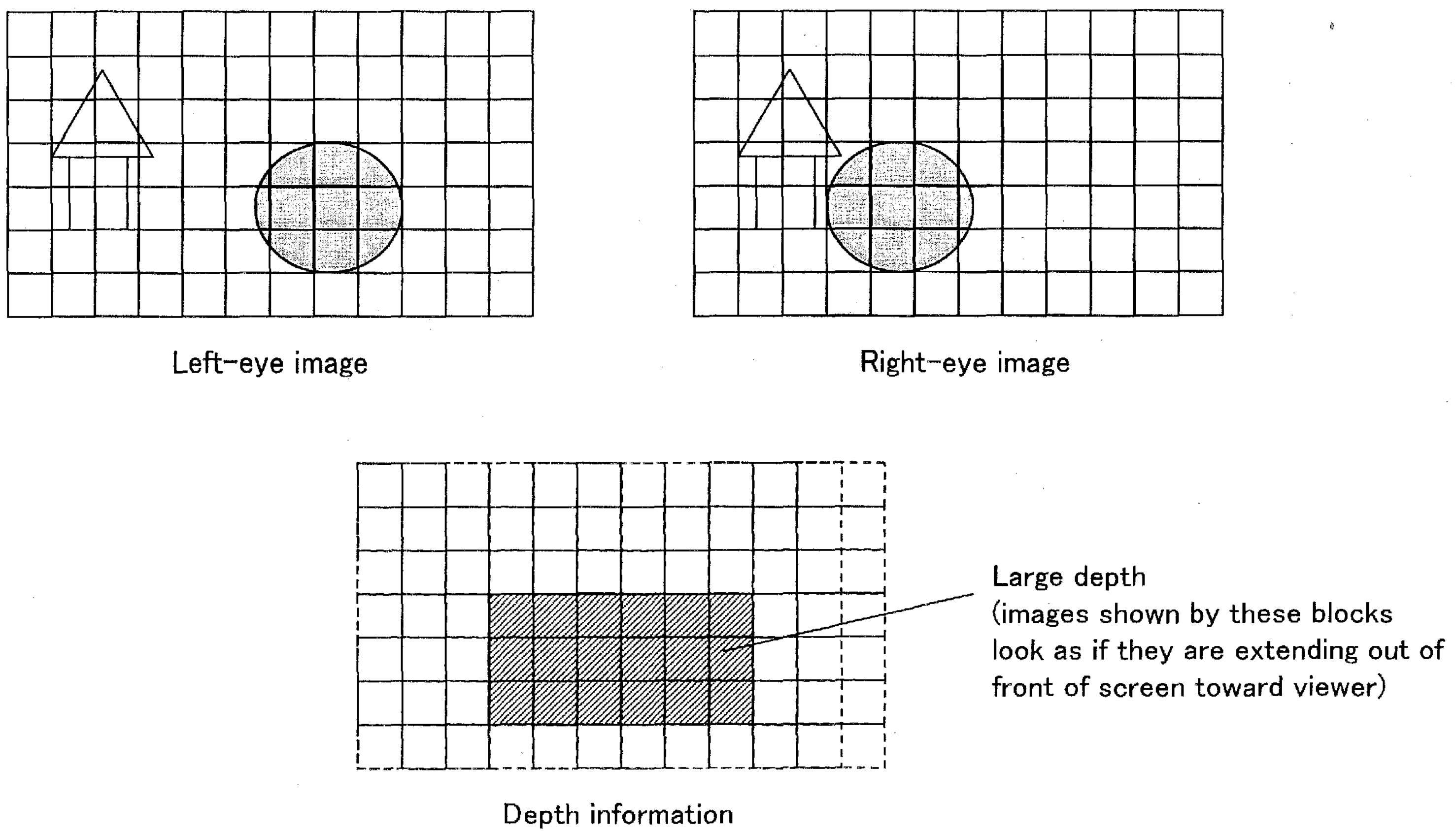
Left-eye image
Right-eye image
Large depth
(images shown by these blocks
look as if they are extending out of
front of screen toward viewer)
Depth information

**INTERNATIONAL SEARCH REPORT**

International application No.
PCT/JP2009/004950

A. CLASSIFICATION OF SUBJECT MATTER
*H04N13/04*(2006.01)i, *H04N5/91*(2006.01)i

According to International Patent Classification (IPC) or to both national classification and IPC

B. FIELDS SEARCHED

Minimum documentation searched (classification system followed by classification symbols)
H04N13/04, H04N5/91

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-191895 A (Matsushita Electric Industrial Co., Ltd.), 13 July 1999 (13.07.1999), paragraphs [0047] to [0064]; fig. 13 to 17 & US 6925250 B1 & EP 1011268 A1 & WO 99/012348 A1 & CN 1269941 A & KR 2000-0057426 A | 1-11 |
| Y | JP 2003-260028 A (Fuji Photo Optical Co., Ltd.), 16 September 2003 (16.09.2003), paragraphs [0019], [0020] (Family: none) | 1-11 |

☐ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 December, 2009 (04.12.09) | 15 December, 2009 (15.12.09) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2009/004950

**Box No. II Observations where certain claims were found unsearchable (Continuation of item 2 of first sheet)**

This international search report has not been established in respect of certain claims under Article 17(2)(a) for the following reasons:

1. ☒ Claims Nos.: 12, 15
because they relate to subject matter not required to be searched by this Authority, namely:
The inventions of claims 12, 15 relate to "a recording medium" characterized only by contents of information, which falls in the mere presentations of information.
(Continued to extra sheet)

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:
4. ☒ No required additional search fees were timely paid by the applicant. Consequently, this international search report is restricted to the invention first mentioned in the claims; it is covered by claims Nos.: 1-11

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.
PCT/JP2009/004950

Continuation of Box No.II-1 of continuation of first sheet(2)

Accordingly, the inventions of claims 12, 15 do not require search by the International Search Authority under the provisions of PCT Article 17 (2)(a)(i) and PCT Rule 39.1.

Continuation of Box No.III of continuation of first sheet(2)

The technical feature common to the inventions of claims 1-11 relates to that when performing 2D reproduction, each picture data is outputted repeatedly at least twice.

The technical feature common to the inventions of claims 13, 14 relate to that when one picture data is missing, path switching is performed to introduce to both video plane memories, picture data obtained by decoding other video stream.

Accordingly, there exists no technical feature common to all the inventions of claims 1-11, 13, 14.

Consequently, it is obvious that the inventions of claims 1-11, 13, 14 do not satisfy the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3935507 B